(19) Europäisches Patentamt / European Patent Office / Office européen des brevets

(11) **EP 4 196 263 B1**

(12) **EUROPÄISCHE PATENTSCHRIFT**

(45) Veröffentlichungstag und Bekanntmachung des Hinweises auf die Patenterteilung:
**19.02.2025   Patentblatt 2025/08**

(51) Internationale Patentklassifikation (IPC):
**B01J 35/61** $^{(2024.01)}$      **B01J 35/63** $^{(2024.01)}$
**B01J 35/64** $^{(2024.01)}$

(21) Anmeldenummer: **21731709.8**

(22) Anmeldetag: **01.06.2021**

(52) Gemeinsame Patentklassifikation (CPC):
**B01J 23/44; B01D 53/8678; B01J 20/02;
B01J 20/20; B01J 20/28019; B01J 20/28066;
B01J 20/28069; B01J 20/3078; B01J 20/3085;
B01J 21/18; B01J 35/394; B01J 35/618;
B01J 35/635; B01J 35/638; B01J 35/647;**   (Forts.)

(86) Internationale Anmeldenummer:
**PCT/EP2021/064599**

(87) Internationale Veröffentlichungsnummer:
**WO 2022/063447 (31.03.2022 Gazette 2022/13)**

(54) **VERFAHREN ZUR HERSTELLUNG VON GETRÄGERTEN METALL-KATALYSATOREN MIT EINER ALS KATALYSATORTRÄGER EINGESETZTEN KORNFÖRMIGEN AKTIVKOHLE**

METHOD FOR PRODUCING SUPPORTED METAL CATALYSTS WITH A GRANULAR ACTIVATED CARBON USED AS A CATALYST SUPPORT

PROCÉDÉ DE PRODUCTION DE CATALYSEURS MÉTALLIQUES SUPPORTÉS AVEC UN CHARBON ACTIF GRANULAIRE UTILISÉ COMME SUPPORT DE CATALYSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **25.09.2020  DE 102020125137
29.01.2021  DE 102021102078**

(43) Veröffentlichungstag der Anmeldung:
**21.06.2023   Patentblatt 2023/25**

(73) Patentinhaber: **Blücher GmbH
40699 Erkrath (DE)**

(72) Erfinder:
• **RICHTER, Dennis
  40699 Erkrath (DE)**
• **STEPHAN, Anastasia
  40699 Erkrath (DE)**
• **BERGMANN, Jens
  40699 Erkrath (DE)**

(74) Vertreter: **Strehlke, Ingo Kurt
Von Rohr
Patentanwälte Partnerschaft mbB
Rüttenscheider Straße 62
45130 Essen (DE)**

(56) Entgegenhaltungen:
**DE-U1- 202014 101 137    DE-U1- 202016 100 320
US-A- 3 736 266**

• **KANG MIN ET AL: "PALLADIUM CATALYSTS SUPPORTED ON ACTIVATED CARBON WITH DIFFERENT TEXTURAL AND SURFACE CHEMICAL PROPERTIES", REACT. KINET. CATAL. LETT., vol. 76, no. 2, 1 July 2002 (2002-07-01), pages 207 - 212, XP055839927, Retrieved from the Internet <URL:https://doi.org/10.1023/A:1016563323091> DOI: 10.1023/A:1016563323091**

• GELDER ELAINE A ET AL: "A Study of Nitrobenzene Hydrogenation Over Palladium/ Carbon Catalysts", CATALYSIS LETTERS, vol. 84, no. 3-4, 1 December 2002 (2002-12-01), New York, pages 205 - 208, XP055867070, ISSN: 1011-372X, DOI: 10.1023/A:1021432104496

Bemerkungen:
Die Akte enthält technische Angaben, die nach dem Eingang der Anmeldung eingereicht wurden und die nicht in dieser Patentschrift enthalten sind.

(52) Gemeinsame Patentklassifikation (CPC): (Forts.)
**B01J 35/66; B01J 35/77; B01J 37/0207; B01J 37/084; B01J 37/12; B01J 37/14; B01J 37/16; B01J 37/18; H01M 4/9083; H01M 4/926;** B01D 2253/102; B01D 2253/304; B01D 2253/306; B01D 2253/308; B01D 2253/311; B01D 2255/1023; B01D 2255/702; B01D 2255/9202; B01D 2255/9205; B01D 2255/9207; B01D 2257/90; B01D 2258/06; B01J 35/45; B01J 35/51; B01J 2235/00; Y02E 60/50

**Beschreibung**

Die vorliegende Erfindung betrifft das technische Gebiet katalytisch aktiver Systeme bzw. das technische Gebiet von auf Trägermaterialien aufgebrachten Katalysatoren bzw. katalytisch aktiven Komponenten und somit insbesondere das technische Gebiet geträgerter Katalysatoren, wie sie insbesondere für die heterogene Katalyse eingesetzt werden können.

Insbesondere betrifft die vorliegende Erfindung ein Verfahren zur Herstellung eines mindestens eine katalytisch aktive Komponente aufweisenden Katalysatorsystems in Form eines geträgerten Katalysators.

Darüber hinaus betrifft die vorliegende Erfindung ein auf Basis des erfindungsgemäßen Verfahrens erhältliches Katalysatorsystem sowie weiterhin ein Katalysatorsystem als solches, welches mindestens eine auf einem Katalysatorträger aufgebrachte katalytisch aktive Komponente, insbesondere mindestens eine an einem Katalysatorträger fixierte katalytisch aktive Komponente, aufweist.

Die vorliegende Erfindung betrifft zudem die Verwendung des Katalysatorsystems nach der Erfindung als Katalysator bzw. als Katalysatorträger. Weiterhin betrifft die vorliegende Erfindung die Verwendung des erfindungsgemäßen Katalysatorsystems für die chemische Katalyse. Weiterhin betrifft die vorliegende Erfindung gleichermaßen auch die Verwendung des Katalysatorsystems nach der Erfindung zur Katalyse chemischer Prozesse und Reaktionen, wie Hydrierungsreaktionen oder dergleichen.

Darüber hinaus betrifft die vorliegende Erfindung auch die Verwendung des erfindungsgemäßen Katalysatorsystems zur Herstellung von Filtern und Filtermaterialien sowie als Sorptionsspeicher für Gase oder Flüssigkeiten sowie die Verwendung in oder als Gassensoren oder in Brennstoffzellen. Weiterhin betrifft die vorliegende Erfindung auch die Verwendung des erfindungsgemäßen Katalysatorsystems für sorptive Anwendungen sowie für die Gasreinigung bzw. die Gasaufbereitung sowie weiterhin für die Entfernung von Schadstoffen oder von umweltschädlichen, gesundheitsschädlichen oder toxischen Substanzen oder Gasen. Die vorliegende Erfindung betrifft auch die Verwendung des Katalysatorsystems nach der Erfindung zur Aufbereitung bzw. Bereitstellung von Reinraumatmosphären oder dergleichen.

Die vorliegende Erfindung betrifft weiterhin auch Schutzmaterialien, welche unter Verwendung des Katalysatorsystems nach der Erfindung hergestellt sind bzw. welche das Katalysatorsystem nach der Erfindung aufweisen. Die vorliegende Erfindung betrifft weiterhin Filter, welche unter Verwendung des Katalysatorsystems nach der Erfindung hergestellt sind bzw. welche das erfindungsgemäße Katalysatorsystem aufweisen.

Unter einem Katalysator wird im Allgemeinen ein Material bzw. eine Substanz verstanden, welches bzw. welche die Reaktionsgeschwindigkeit einer chemischen Reaktion durch Absenkung der Aktivierungsenergie zu erhöhen imstande ist, ohne dabei selbst verbraucht zu werden.

Im Stand der Technik sind Katalysatoren dabei von großer technischer und kommerzieller Bedeutung, wie beispielsweise in wichtigen katalytischen Verfahren, wie dem sogenannten Kontaktverfahren zur Herstellung von Schwefelsäure, dem katalytischen Verfahren zur Methanolherstellung sowie dem sogenannten Haber-Bosch-Verfahren zur industriellen Herstellung von Ammoniak sowie dem sogenannten Ostwaldverfahren zur großtechnischen Herstellung von Salpetersäure durch Oxidation von Ammoniak. Weiterhin werden Katalysatoren im Rahmen der Feinchemikalien- bzw. Spezialchemikaliensynthese, zur Synthese von Naturstoffen sowie im Bereich der Herstellung pharmazeutischer Wirkstoffe eingesetzt. Insbesondere werden Katalysatoren auch in katalytischen Hydrierverfahren eingesetzt.

Auch vor diesem Hintergrund besteht im Stand der Technik ein hoher Bedarf an spezifischen und leistungsfähigen Katalysatoren zur Verwendung in der chemischen Katalyse, insbesondere da durch den gezielten Einsatz von Katalysatoren chemische Reaktionen schneller bzw. unter geringerem Energieeinsatz erfolgen können. Auch insofern ist die Verwendung von Katalysatoren bei chemischen Reaktionen von großer kommerzieller Bedeutung: So wird davon ausgegangen, dass etwa 80 % sämtlicher chemischer Erzeugnisse eine katalytische Stufe in der zugrundeliegenden Herstellungs- bzw. Wertschöpfungskette aufweisen. Darüber hinaus spielen Katalysatoren auch im Bereich des Umweltschutzes eine herausragende Rolle, insbesondere im Hinblick auf eine Abgasnachbehandlung in der Industrie, wie beispielsweise im Rahmen der industriellen Stromproduktion sowie in der Behandlung von Abgasen aus dem Bereich des (Personen-)Kraftverkehrs.

Grundsätzlich können Katalysatoren in Form von homogenen oder heterogenen Katalysatoren eingesetzt werden, wobei im Fall von homogenen Katalysatoren bzw. von in der homogenen Katalyse eingesetzten Katalysatoren die der zu katalysierenden Reaktion zugrundeliegenden Edukte bzw. Reaktanden einerseits und Katalysator andererseits in derselben Phase vorliegen, während im Fall von heterogenen Katalysatoren bzw. von in der heterogenen Katalyse eingesetzten Katalysatoren die umzusetzenden Edukte einerseits und der Katalysator andererseits in unterschiedlichen Phasen vorliegen, beispielsweise als Feststoff in Bezug auf den Katalysator und als Flüssigkeit oder Gas in Bezug auf die Edukte.

Grundsätzlich liegen die mit dem Einsatz heterogener Katalysatoren verbundenen Vorteile insbesondere darin, dass mitunter eine verbesserte Trennung bzw. Isolierung des Katalysators aus dem Reaktionsgemisch möglich ist, einhergehend mit der grundsätzlichen Möglichkeit der Rezyklierung des eingesetzten Katalysators bzw. der Aufarbeitung deaktivierter bzw. inaktiver Katalysatoren. Insbesondere bei industriellen Prozessen liegt ein heterogener Katalysator oftmals als Feststoff bzw. als sogenannter Kontakt(-katalysator) vor, während die Reaktionspartner bzw. Edukte in Form von Gasen oder Flüssigkeiten eingesetzt werden. Beispielsweise handelt es sich bei den vorgenannten industriell etablierten Verfahren um solche Verfahren, bei denen der Katalysator als Feststoff eingesetzt wird.

**In** Bezug auf heterogene Katalysatoren bzw. Katalysatoren in fester Form werden oftmals Metalle bzw. metallhaltige Verbindungen, wie Metallsalze bzw. Metalloxide, als Katalysatoren eingesetzt. Derartige Katalysatoren können dabei beispielsweise in Masse oder aber in einer solchen Form eingesetzt werden, wonach der Katalysator bzw. die zugrundeliegende katalytisch aktive Komponente auf einem Trägersystem vorliegt bzw. hieran gebunden bzw. fixiert ist. Derartige Katalysatorsysteme, bei denen die katalytisch aktive Komponente sich auf einem Träger befindet, werden dabei im Allgemeinen als sogenannte Trägerkatalysatoren bezeichnet.

Der Einsatz geträgerter Katalysatoren ist mit dem grundsätzlichen Vorteil verbunden, dass größere Oberflächen bzw. größere Kontaktflächen mit den umzusetzenden Edukten realisiert werden können, was im Allgemeinen zu einer Steigerung der Wirkeffizienz bzw. zu dem Einsatz verringerter Mengen an Katalysator mit einem einhergehenden Kostenvorteil führt.

Zudem ist der Einsatz von Trägersystemen bzw. geträgerten Katalysatoren grundsätzlich mit dem Vorteil verbunden, dass die zugrundeliegenden Katalysatoren besser aus dem Reaktionsmedium entfernt bzw. separiert sowie im Allgemeinen besser rezykliert werden können. Insbesondere bei in Masse bzw. in gleicher Phase wie die Reaktanden eingesetzten Katalysatoren ist eine Abtrennung nach erfolgter Reaktion bzw. Umsetzung der Edukte schwierig bzw. mit hohen Verlusten an Katalysatormasse verbunden, was die Wirtschaftlichkeit im Allgemeinen verschlechtert und eine Rezyklierung der eingesetzten Katalysatoren grundsätzlich erschwert.

Für geträgerte Katalysatorsysteme bzw. Trägerkatalysatoren kommt im Stand der Technik grundsätzlich der Einsatz von kompakten oder aber porösen Trägerstrukturen in Betracht. Der Einsatz von sogenannten kompakten Katalysatoren ist dabei insbesondere mit dem Nachteil verbunden, dass eine effiziente Oberflächenvergrößerung nicht realisiert und somit eine katalytische Aktivität nur an der relativ geringen geometrischen Oberfläche zur Verfügung gestellt werden kann. Demgegenüber weisen als Katalysatorträger eingesetzte poröse Feststoffe vergrößerte (innere) Oberflächen auf, was, wie zuvor angeführt, mit einer gesteigerten Wirkeffizienz bzw. einer höheren katalytischen Aktivität auch bei geringerer Beladung mit Aktivkomponenten (d.h. katalytisch aktiven Metallen, wie Edelmetallen) einhergeht.

Beispielsweise werden als Katalysatorträger kristalline poröse Feststoffe aus der Familie der Zeolithe eingesetzt, insbesondere im Bereich der Petrochemie bzw. Raffinerietechnik zur Verarbeitung bzw. Aufarbeitung von Rohöl bzw. Erdöl. Zeolithe weisen im Allgemeinen einheitliche Porenweiten bzw. -durchmesser auf, was eine gewisse selektive Reaktionssteuerung durch Größenabstimmung mit den umzusetzenden Substanzen ermöglicht. Darüber hinaus ist im Stand der Technik grundsätzlich der Einsatz von Silica, Molekularsieben, Metalloxiden, wie Aluminiumoxiden, oder aber von Keramiken sowie von Aktivkohlen als Trägersysteme für Katalysatoren bekannt.

Grundsätzlich werden derartige Trägersysteme auch vor dem Hintergrund eingesetzt, eine dauerhafte bzw. elutionsstabile Fixierung von insbesondere kostenintensiven Katalysatoren zu ermöglichen, um den diesbezüglichen Verlust während der Anwendung zu verringern bzw. um eine entsprechende Rezyklierbarkeit, wie zuvor angeführt, bzw. Zurückgewinnung des Katalysatorsystems insgesamt zu ermöglichen.

Was den Einsatz von Aktivkohle als Trägermaterial für Katalysatoren insbesondere zum Erhalt sogenannter aktivkohlegeträgerter Katalysatoren, insbesondere aktivkohlegeträgerter Edelmetallkatalysatoren, anbelangt, so werden im Stand der Technik entsprechende Aktivkohlen im Allgemeinen in feinteiliger bzw. pulverförmiger Form (Pulverkohlen) bzw. in Form eines feinvermahlenen Pulvers eingesetzt, wobei die entsprechenden Partikelgrößen im unteren μm-Bereich liegen. Durch den Einsatz feinteiliger Aktivkohle als Trägersystem wird im Allgemeinen versucht, Limitierungen beim zugrundeliegenden Stofftransport hinsichtlich der katalysierten Zielreaktion zu vermindern, insbesondere durch verkürzte Diffusions- bzw. Eindringstrecken in die Porenstruktur des aktivkohlebasierten Trägermaterials. Der Einsatz feinteiliger bzw. pulverförmiger Aktivkohle mit geringen Partikelgrößen als Katalysatorträger ist jedoch mit dem zentralen Nachteil verbunden, dass insgesamt keine optimalen Anwendungseigenschaften erzielt werden können. So führt beispielsweise der Einsatz feinteiliger Aktivkohle insbesondere in diskontinuierlichen Anwendungen aufgrund der geringen Schüttungsporosität des Filterkuchens bzw. aufgrund der hohen Dichte der Schüttung aus dem zugrundeliegenden Material zu verschlechterten Eigenschaften beispielsweise bei der Abtrennung bzw. Separierung des Katalysators bzw. des Katalysatorsystems nach dessen Verwendung. Hierzu ist auch herauszustellen, dass die Abtrennung bzw. das Abfiltern des Katalysators bzw. Katalysatorsystems im Rahmen diskontinuierlicher katalytischer Prozesse ein unabdingbarer bzw. zwingend erforderlicher Prozess- bzw. Verfahrensschritt ist.

Zudem weisen derartige Aktivkohlen oftmals ein im Hinblick auf die Anbindung des Katalysators sowie den Transportprozessen von Edukten und Produkten nicht optimal ausgebildetes Porensystem auf, was die katalytische Leistungsfähigkeit insgesamt verschlechtern kann.

Unter Einsatzbedingungen liegt insbesondere bei kontinuierlichen Katalyseprozessen (d.h. bei katalysierten Reaktionsprozessen) unter Verwendung pulverförmiger bzw. feinteiliger Aktivkohle bzw. von Pulverkohle im Reaktionsraum aufgrund der mitunter übermäßigen Verdichtung des Katalysatorsystems ein hoher Druckverlust vor. Dies geht oftmals mit einer verringerten Durchströmungsgeschwindigkeit für das an dem Katalysatorsystem vorbeizuführende Reaktionsgemisch mit den entsprechenden Edukten einher. Eine übermäßige Verdichtung kann auch bei zu geringen Abriebhärten der eingesetzten Katalysatoren bzw. der entsprechenden Trägermaterialien resultieren.

Darüber hinaus sind die Anwendungseigenschaften von aktivkohlegeträgerten Katalysatorsystemen auch dahingehend oftmals nicht optimal, dass das feinteilige Katalysatorsystem insbesondere in einem flüssigen Medium, welches die Edukte enthält, zur Schlammbildung bzw. zu einer übermäßigen Verdichtung neigt, einhergehend mit der Gefahr einer Verstopfung der Reaktionsvorrichtung bzw. einer übermäßigen Verringerung der Durchströmungs- bzw. Filtrationsgeschwindigkeit, was dem katalytischen Umsatz insgesamt abträglich ist. Durch eine übermäßige Verdichtung des Katalysatorsystems können dabei auch gewissermaßen "tote Bereiche" in der zugrundeliegenden Vorrichtung bzw. Apparatur resultieren, in welchen ein signifikant verringerter Umsatz an Edukten vorliegt.

In diesem Zusammenhang ist die Ausbildung von verschlammten Bereichen insbesondere bei diskontinuierlicher Verwendung von Relevanz. Bei kontinuierlichen katalytischen Anwendungen, bei welchen die Katalysatorsysteme beispielsweise in entsprechende Reaktionsräume, wie etwa auf Basis von Kartuschensystemen, gefüllt werden und wonach eine insbesondere kontinuierliche Durchströmung mit einem die Edukte bzw. Reaktanden enthaltenden Medium erfolgt, resultieren gleichermaßen hohe Druckverluste mit entsprechend geringeren Durchströmungsgeschwindigkeiten des Katalysatorsystems. Zudem sind oftmals aufwendige und zur Verstopfung neigende Filtrations- bzw. Rückhalteeinrichtungen erforderlich, um ein Austragen bzw. Ausschwemmen des Katalysators aus dem kontinuierlich durchströmten Reaktionssystem zu verhindern.

Im Ergebnis ist somit festzustellen, dass Katalysatorsysteme auf Basis von pulver- bzw. feinteiliger Aktivkohle als Trägermaterial insgesamt nicht immer ausreichende bzw. zufriedenstellende Eigenschaften hinsichtlich ihrer Anwendung aufweisen.

Um die mit einer geringen Partikelgröße einhergehenden Nachteile zu verringern, ist im Stand der Technik versucht worden, Katalysatorträger auf Basis von partikulärer Aktivkohle einzusetzen, wobei diesbezüglich grundsätzlich Ausgangsmaterialien für die Aktivkohle auf Basis von Kokosnussschalen, Holzkohle, Holz (z.B. Holzabfall, Torf, Steinkohle oder dergleichen) in Betracht gezogen werden. Diese als Katalysatorträger eingesetzten Aktivkohlen, welche im Allgemeinen in Splitter- bzw. Kornform vorliegen können, führen zwar grundsätzlich zu einer gewissen Verbesserung der Anwendungseigenschaften, insbesondere im Hinblick auf die Separationszeit in der diskontinuierlichen Anwendung, jedoch weisen derartige als Katalysatorträger eingesetzte Aktivkohlen oftmals eine zu geringe mechanische Stabilität auf, was zu einem hohen Abrieb des Trägermaterials unter Einsatzbedingungen, beispielsweise bedingt durch mitunter intensive Rührprozesse während der katalytischen Umsetzung, einhergeht. Die geringe Abriebfestigkeit derartiger Aktivkohlen führt dann wiederum über die entsprechenden Zerkleinerungs- bzw. Zermahlungsprozesse zu feinteiligen Partikeln, einhergehend mit einem hohen Verlust an katalytisch aktiver Substanz und mit den vorgenannten Nachteilen im Hinblick auf eine Systemverschlammung bzw. -verdichtung oder dergleichen. Zudem weisen auch derartige Aktivkohlen oftmals keine optimal ausgebildeten Porensysteme auf.

Darüber hinaus sind die zur Bereitstellung von Katalysatorsystemen auf Basis von Aktivkohle als Trägermaterial bekannten Konzepte des Standes der Technik auch insofern nachteilig, als oftmals keine optimale Beladung bzw. Fixierung des Katalysators auf dem Trägermaterial möglich ist, was zum einen dazu führt, dass die auf dem Träger aufgebrachten Katalysatormengen gering sind und dass zum anderen unter Anwendungsbedingungen oftmals eine Freisetzung bzw. Auswaschung (Elution) des Katalysators aus dem Trägermaterial zu beobachten ist, wobei die ausgewaschenen Katalysatormengen dadurch verloren gehen, was verfahrenstechnisch und nicht zuletzt aus Kostengründen nachteilig ist.

Insbesondere weisen die im Stand der Technik eingesetzten Aktivkohlen, z.B. auf Basis von Kokosnussschalen, oftmals eine nur geringe Affinität gegenüber dem aufzubringenden bzw. zu fixierenden Katalysator auf, was - ohne sich auf diese Theorie beschränken zu wollen - auch dadurch bedingt ist, dass die zugrundeliegenden Aktivkohlen hinsichtlich ihrer Porenoberfläche oftmals hydrophob ausgebildet sind bzw. oftmals keine ausreichende Menge an insbesondere polaren funktionellen Gruppen zur Anbindung des Katalysators aufweisen (was insbesondere auch bei polymerbasierten Aktivkohlen, insbesondere PBSACs, der Fall ist). Dies ist jedoch der Beladung bzw. Ausrüstung mit einem Katalysator insgesamt abträglich, und zwar auch im Hinblick auf eine dauerhafte Fixierung des Katalysators auf dem Trägersystem. Der hohe Verlust an Katalysator für das zugrundeliegende Katalysatorsystem geht dabei gleichermaßen mit einer Verringerung des Eduktumsatzes bei den zugrundeliegenden katalytischen Reaktionen einher, was auch die Wirtschaftlichkeit der eingesetzten Katalysatorsysteme verschlechtert.

Da herkömmliche Aktivkohle an ihrer Oberfläche unpolar bzw. hydrophob ausgebildet ist und folglich keine signifikante Affinität gegenüber aufzubringenden bzw. zu fixierenden Katalysatoren bzw. katalytisch aktiven Komponenten aufweist, welche zur reaktiven bzw. katalytischen Ausrüstung der Aktivkohle eingesetzt werden, ist es erforderlich, im Rahmen der Herstellung bzw. Ausrüstung der Aktivkohle mit dem Katalysator einen großen Überschuss an Katalysatorsubstanz einzusetzen, um überhaupt eine gewisse Beladung der Aktivkohle zu gewährleisten, bzw. ist es erforderlich, im Vorfeld Oberflächenzentren (d.h. Zentren zur Anbindung der katalytisch aktiven Komponenten) zu schaffen. Insbesondere haften die Katalysatoren im Allgemeinen nur über rein physikalische Wechselwirkungen und können auch von daher insbesondere bei Kontakt mit Flüssigkeiten zumindest zu einem Teil wieder entfernt bzw. ausgewaschen werden (z.B.

durch Elutionsprozesse oder dergleichen).

Grundsätzlich besteht im Hinblick auf heterogene Katalysatoren mit der Verwendung von Aktivkohle als Trägermaterial nach den bekannten Konzepten des Standes der Technik mitunter auch der Nachteil, dass insbesondere infolge eines nicht optimal ausgebildeten Porensystems des Trägermaterials, insbesondere im Hinblick auf die zugrundeliegende Porengrößen und deren Verteilung, bzw. deren Anteile am Gesamtporenvolumen die Transport- bzw. Diffusionsvorgänge für Edukte bzw. Produkte nicht optimal ist, was mit verringerten Umsätzen sowie einer nicht optimalen Raum/Zeit-Ausbeute einhergeht, beispielsweise da Edukte nicht optimal zu dem zugrundeliegenden katalytischen Zentrum transportiert bzw. resultierende Produkte nicht optimal aus dem Katalysatorsystem abtransportiert werden.

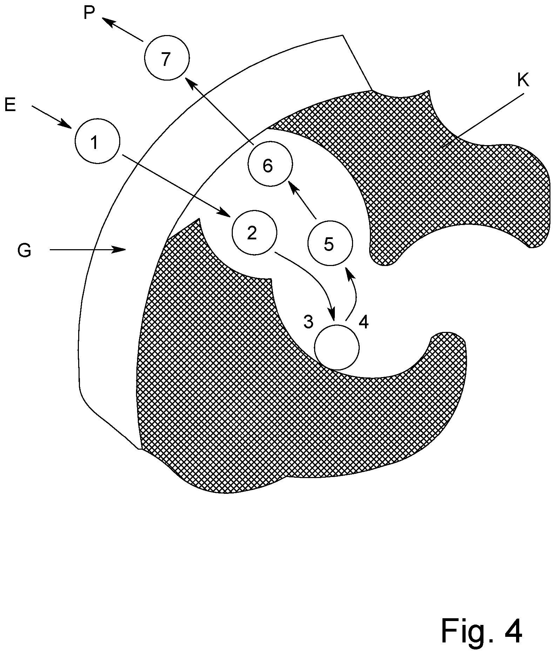

In diesem Zusammenhang kann die heterogene Katalyse in einer porösen Struktur als Katalysatorträger, wie Aktivkohle, grundsätzlich in sieben Teilschritte unterteilt werden, darunter auch entsprechende Transportschritte für Edukte bzw. Produkte, von denen jeder einzelne Schritt geschwindigkeitsbestimmend sein kann. Hierzu kann auch Fig. 4 und die nachfolgenden hierauf bezogenen Ausführungen verwiesen werden.

Eine nicht optimale Ausbildung des Porensystems des Trägermaterials verschlechtert somit den Umsatz bzw. die Raum/Zeit-Ausbeute mitunter nachhaltig, da Transportvorgänge innerhalb des Systems unzureichend und insgesamt im Hinblick auf die katalytische Aktivität limitierend sind.

Weiterhin kann der Umsatz bzw. die Raum/Zeit-Ausbeute auch dadurch vermindert sein, dass die katalytisch aktiven Zentren als solche nicht optimal ausgebildet sind bzw. eine nur unzureichende Ausrüstung des Trägermaterials mit einer katalytisch aktiven Komponente vorliegt, was gleichermaßen durch ein diesbezüglich nicht optimal ausgebildetes Porensystem des Katalysatorträgers hervorgerufen sein kann.

Zudem weisen die im Stand der Technik bekannten Katalysatorsysteme während der Anwendung insbesondere in einer Festbettschüttung oder dergleichen mitunter den Nachteil auf, dass hohe Druckverluste resultieren, wobei oftmals auch eine hohe Staubbildung mit einhergehendem Materialverlust vorliegt, insbesondere infolge einer nicht immer ausreichenden Härte bzw. Abriebbeständigkeit der zugrundeliegenden Katalysatorsysteme.

Die DE 20 2014 101 137 U1 betrifft ein Katalysatorsystem, wobei das Katalysatorsystem mindestens eine auf einen Katalysatorträger aufgebrachte katalytisch aktive Komponente aufweist. Das Katalysatorsystem soll durch ein Verfahren erhältlich sein, wobei zunächst eine als Katalysatorträger eingesetzte Aktivkohle einer Oxidation unterzogen wird. Nachfolgend soll die so erhaltene Aktivkohle mit der katalytisch aktiven Komponente ausgerüstet werden, gegebenenfalls gefolgt von einer Reduktion des auf diese Weise erhaltenen Katalysatorsystems.

Weiterhin betrifft die DE 20 2016 100 320 U1 eine Aktivkohle mit erhöhtem Meso- und/oder Makroporenvolumenanteil, vorzugsweise mit erhöhtem Mesoporenvolumenanteil, wobei die Aktivkohle durch ein Verfahren zu deren Herstellung erhältlich ist. Das Verfahren umfasst dabei eine Sulfonierung eines polymeren organischen Ausgangsmaterials durch Inkontaktbringen mit einem Sulfonierungsmittel und ein nachfolgendes Einwirkenlassen und Reagieren des Sulfonierungsmittels mit dem Ausgangsmaterial, wobei die Sulfonierung unter gleichzeitiger Volumenexpansion des Ausgangsmaterials erfolgen soll. Das Verfahren umfasst weiterhin eine Carbonisierung des erhaltenen sulfonierten Ausgangsmaterials sowie eine nachfolgende Aktivierung zum Erhalt der Aktivkohle.

Gelder et al., "A Study of Nitrobenzene Hydrogenation over Palladium/Carbon Catalysts", Catalysis Letters, Vol. 84, Nos. 3-4, Seiten 205 bis 208, Dezember 2002 betrifft Untersuchungen zur Nitrobenzol-Hydrierung bei Palladium/-Kohlenstoff-Katalysatoren, wobei als Träger Aktivkohlen eingesetzt werden.

Die DE 29 36 362 C2 betrifft ein Verfahren zur Herstellung eines Palladium-Kohlekatalysators, wobei das Palladium durch Reduktion auf in einem organischen Lösungsmittel suspendierten Kohlenstoff als Katalysatorträger abgeschieden wird. In diesem Zusammenhang soll das Palladium als Metall auf dem suspendierten Träger abgeschieden werden. Als Kohlenstoffträger wird dabei pulverförmige Aktivkohle, Ruß oder Graphit verwendet. Mit den beschriebenen Katalysatoren gehen jedoch mitunter die zuvor geschilderten Nachteile einher, insbesondere was die Abtrennung bzw. Rückgewinnung des Katalysators insbesondere in diskontinuierlichen katalytischen Verfahren als auch dessen Anwendungseigenschaften in kontinuierlichen katalytischen Verfahren, insbesondere im Hinblick auf Druckverlust bzw. Strömungsgeschwindigkeit, anbelangt.

Zusammenfassend ist somit festzustellen, dass die im Stand der Technik bekannten Katalysatorsysteme auf Basis von herkömmlichen Aktivkohlen bzw. pulverförmigen Aktivkohlen als eingesetztes Trägermaterial sowohl herstellungsals auch anwendungsspezifische Nachteile aufweisen, insbesondere im Hinblick auf die Beladung mit einer katalytisch aktiven Komponente sowie deren Fixierung auf dem Material einerseits als auch im Hinblick auf die Verwendung der zugrundeliegenden Systeme in kontinuierlichen sowie diskontinuierlichen Katalyseanwendungen andererseits.

Vor diesem Hintergrund ist daher eine Aufgabe der vorliegenden Erfindung darin zu sehen, Katalysatorsysteme bzw. geträgerte Katalysatoren, welche mindestens eine katalytisch aktive Komponente aufweisen, sowie ein entsprechendes Herstellungsverfahren bereitzustellen, wobei die zuvor geschilderten Nachteile des Standes der Technik zumindest weitgehend vermieden oder aber zumindest abgeschwächt werden sollen.

Insbesondere soll im Rahmen der vorliegenden Erfindung ein Katalysatorsystem mit mindestens einer katalytisch aktiven Komponente bzw. ein geträgerter Katalysator, welcher mindestens eine katalytisch aktive Komponente aufweist, bereitgestellt werden, welches bzw. welcher sowohl herstellungs- als auch anwendungsspezifische Vorteile aufweist. Diesbezüglich soll auch ein entsprechendes Verfahren zur Herstellung des Katalysatorsystems bereitgestellt werden.

Eine der vorliegenden Erfindung zugrundeliegende Aufgabe ist insbesondere auch darin zu sehen, dass im Rahmen der vorliegenden Erfindung ein insgesamt leistungsfähiges Katalysatorsystem bereitgestellt werden soll, welches bei hoher Beständigkeit bzw. Stabilität hohe Umsätze und damit einhergehende hohe Raum/Zeit-Ausbeuten ermöglicht, wobei gleichzeitig eine hohe Rezyklierfähigkeit und Stabilität des bereitgestellten Systems gegeben sein soll.

Insbesondere soll erfindungsgemäß ein solches Katalysatorsystem bereitgestellt werden, welches eine hohe bzw. effiziente Beladung mit der Katalysatorkomponente bzw. einer katalytisch aktiven Komponente ermöglicht, wobei gleichzeitig eine dauerhafte und beständige Beladung bzw. Ausrüstung mit der Katalysatorkomponente gewährleistet sein soll.

Darüber hinaus soll erfindungsgemäß auch ein solches Katalysatorsystem bereitgestellt werden, welches im Rahmen seiner Anwendung, insbesondere in der chemischen Katalyse, vorzugsweise im industriellen Maßstab, sowohl in diskontinuierlichen als auch kontinuierlichen katalytischen Anwendungen über verbesserte Eigenschaften insbesondere im Hinblick auf dessen katalytische Leistungsfähigkeit als auch die Abtrennung bzw. Rückgewinnung bzw. Rezyklierung des Systems (insbesondere bei diskontinuierlichen Prozessen) verfügt und darüber hinaus auch verbesserte Eigenschaften in Bezug auf die Gewährleistung eines geringen bzw. einstellbaren Druckverlusts und hoher bzw. einstellbarer Durchströmungsgeschwindigkeiten (insbesondere bei kontinuierlichen katalytischen Prozessen) aufweist, wobei insgesamt zudem optimierte Prozesszeiten bzw. eine erhöhte katalytische Aktivität bereitgestellt werden sollen.

Insbesondere soll im Rahmen der vorliegenden Erfindung auch ein solches Katalysatorsystem bereitgestellt werden, welches neben seiner hohen katalytischen Aktivität auch über hervorragende mechanische Eigenschaften verfügt, insbesondere im Hinblick auf die Abriebfestigkeit bzw. den Berstdruck der zugrundeliegenden teilchenförmigen Strukturen.

Gleichermaßen sollen die erfindungsgemäßen Systeme auch in Bezug auf den jeweiligen Anwendungs- bzw. Einsatzfall maßgeschneidert bzw. individuell ausgestaltet bzw. ausgerüstet werden können.

Zudem soll im Rahmen der vorliegenden Erfindung ein effizientes Verfahren bereitgestellt werden, auf dessen Basis das erfindungsgemäße Katalysatorsystem mit mindestens einer katalytisch aktiven Komponente erhalten werden kann.

Wie die Anmelderin nun in völlig überraschender Weise herausgefunden hat, kann die zuvor angeführte und der vorliegenden Erfindung zugrundeliegende Aufgabe in nicht erwarteter Weise dadurch gelöst werden, dass im Rahmen der vorliegenden Erfindung ein spezielles Verfahren zur Herstellung eines speziellen Katalysatorsystems sowie ein entsprechendes Katalysatorsystem als solches bereitgestellt wird.

In diesem Zusammenhang kommt erfindungsgemäß eine spezielle Aktivkohle als Katalysatorträger zum Einsatz, welche neben ihrer kugelförmigen Ausbildung bzw. Formgebung ein speziell ausgebildetes Porensystem aufweist, nämlich mit hohem Meso- und Makroporenvolumenanteil am Gesamtporenvolumen der Aktivkohle, so dass erfindungsgemäß eine Aktivkohle mit hoher Meso- und Makroporosität (bei gleichzeitig definiertem Anteil an Mikroporen) eingesetzt wird. Zudem weist die erfindungsgemäß eingesetzte Aktivkohle eine spezielle BET-Oberfläche mit gleichzeitig speziellem Verhältnis von Gesamtporenvolumen zu spezifischer BET-Oberfläche auf.

Zudem wird in dem erfindungsgemäßen Verfahren in zweckgerichteter Weise auf eine gezielte Oxidation, insbesondere Oberflächenoxidation (d.h. Oxidation insbesondere auch der inneren Oberfläche des Katalysatorträgers), der nachfolgend als Katalysatorträger eingesetzten Aktivkohle abgestellt bzw. abgezielt, und zwar zu Zwecken der Einstellung eines speziellen Sauerstoffgehalts, insbesondere Oberflächensauerstoffgehalts, und unter Ausbildung einer speziellen Hydrophilie, wobei eine derart spezielle Aktivkohle dann mit einer katalytisch aktiven Komponente bzw. einem diesbezüglichen Präkursor ausgerüstet wird, gefolgt von einer Reduktion zum Erhalt des erfindungsgemäßen Katalysatorsystems.

Mit anderen Worten wird erfindungsgemäß somit ein spezielles Katalysatorsystem bzw. ein geträgerter Katalysator mit mindestens einer auf einem Katalysatorträger aufgebrachten katalytisch aktiven Komponente bereitgestellt, wobei der Katalysatorträger in Form einer sehr speziell ausgebildeten korn- bzw. kugelförmigen Aktivkohle mit spezieller Porosität, insbesondere im Hinblick auf die Ausbildung einer hohen Meso- und Makroporosität (d.h. mit einem hohen Anteil an Meso- und Makroporen am Gesamtporenvolumen bei gleichzeitig definiertem Anteil an Mikroporen), vorliegt und wobei das Aufbringen der katalytisch aktiven Komponente auf die Aktivkohle in oxidierter Form der Aktivkohle (d.h. auf die oxidierte Aktivkohle) erfolgt, gefolgt von einer diesbezüglich weiterführenden Reduktion des zugrundeliegenden Systems (d.h. der aktiven Zentren bzw. der aktiven Komponenten) zum Erhalt des erfindungsgemäßen Katalysatorsystems. Neben der hohen Meso- und Makroporosität weist die als Katalysatorträger eingesetzte Aktivkohle zudem auch eine definierte Mikroporosität (d. h. einen definierten Anteil an Mikroporen am Gesamtporenvolumen) auf, wenn auch im Allgemeinen in einem gegenüber dem Meso- und Makroporenvolumen untergeordneten, aber für die Katalyse ausreichenden Maß.

In überraschender Weise wird auf dieser Basis ein Katalysatorsystem nach der Erfindung bzw. ein geträgerter Katalysator bereitgestellt, welcher aufgrund von durch das spezielle Porensystem bedingten verbesserten Transport- bzw. Diffusionseigenschaften für Edukte bzw. Produkte und einer verbesserten Beladung mit der katalytisch aktiven Komponente hervorragende katalytische Eigenschaften aufweist, einhergehend mit hohen katalytischen Umsätzen und hohen Raum/Zeit-Ausbeuten bei der Verwendung in katalytischen Prozessen. Dabei weist das erfindungsgemäße Katalysatorsystem auch einen hohen Dispersionsgrad und eine optimierte Kristallitgröße der katalytisch aktiven Komponente auf, was als eine Kenngröße bzw. Maß für die katalytische Leistungsfähigkeit herangezogen werden kann.

Das erfindungsgemäß bereitgestellte Katalysatorsystem eignet sich dabei insbesondere auch zur Verwendung im Bereich der chemischen Katalyse, und zwar insbesondere im (groß-)industriellen Maßstab. Zudem eignet sich das erfindungsgemäße Katalysatorsystem insbesondere auch für entsprechende Filteranwendungen zur Entfernung beispielsweise von Schad- und Giftstoffen aus einem diese Stoffe enthaltenden Medium. Insbesondere eignen sich die erfindungsgemäßen Katalysatorsysteme auch zur Anwendung in oder für Schutzmaterialien, insbesondere für den zivilen oder militärischen Bereich, insbesondere Schutzmaterialien für den ABC-Einsatz.

Insbesondere aufgrund der kugelförmigen Ausbildung bzw. sphärischen Form, den herausragenden mechanischen Eigenschaften des Katalysatorträgers sowie der regulierbaren bzw. speziell ausgebildeten Meso- und Makroporosität (bei gleichzeitig definierter Mikroporosität) sind die erfindungsgemäßen Katalysatorsysteme insbesondere auch für die kontinuierliche Katalyse von hoher Bedeutung, wobei auch hinsichtlich der diskontinuierlichen Katalyse Nachteile des Standes der Technik überwunden werden, welche beispielsweise mit konventionellen Pulverkatalysatoren oder dergleichen einhergehen, wie zuvor ausgeführt.

Zur Lösung der zuvor geschilderten Aufgabe schlägt die vorliegende Erfindung somit - gemäß einem **ersten** Aspekt der vorliegenden Erfindung - das erfindungsgemäße Verfahren zur Herstellung eines mindestens eine katalytisch aktive Komponente aufweisenden Katalysatorsystems nach der Erfindung gemäß Patentanspruch 1 vor. Weitere, insbesondere vorteilhafte Ausgestaltungen des erfindungsgemäßen Verfahrens sind Gegenstand der diesbezüglichen Verfahrensunteransprüche.

Weiterer Gegenstand der vorliegenden Erfindung - gemäß einem **zweiten** Aspekt der vorliegenden Erfindung - ist zudem das erfindungsgemäße Katalysatorsystem bzw. der erfindungsgemäße geträgerte Katalysator, wobei das Katalysatorsystem bzw. der geträgerte Katalysator mindestens eine katalytisch aktive Komponente aufweist und wobei als Katalysatorträger eine spezielle kornförmige Aktivkohle eingesetzt ist, gemäß den diesbezüglichen, das Katalysatorsystem nach der Erfindung betreffenden unabhängigen Patentanspruch. Weitere, insbesondere vorteilhafte Ausgestaltungen des Katalysatorsystems nach der Erfindung sind Gegenstand des diesbezüglichen Unteranspruchs.

Wiederum weiterer Gegenstand der vorliegenden Erfindung - gemäß einem **dritten** Aspekt der vorliegenden Erfindung - sind die erfindungsgemäßen Verwendungen, wie sie in den betreffenden unabhängigen Verwendungsansprüchen angeführt sind.

Darüber hinaus sind weiterer Gegenstand der vorliegenden Erfindung - gemäß einem **vierten** Aspekt der vorliegenden Erfindung - die erfindungsgemäßen Schutzmaterialien, insbesondere für den zivilen oder militärischen Bereich, insbesondere Schutzbekleidung, gemäß dem diesbezüglichen unabhängigen Anspruch.

Darüber hinaus sind weiterer Gegenstand der vorliegenden Erfindung - gemäß einem **fünften** Aspekt der vorliegenden Erfindung - auch Filter, insbesondere zur Entfernung von Schad-, Geruchs- und Giftstoffen aller Art, gemäß dem betreffenden unabhängigen Anspruch.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben.

Gemäß dem **ersten** Aspekt der vorliegenden Erfindung betrifft die vorliegende Erfindung somit ein Verfahren zur Herstellung eines mindestens eine katalytisch aktive Komponente aufweisenden Katalysatorsystems in Form eines geträgerten Katalysators, vorzugsweise zur Verwendung in der heterogenen Katalyse,

wobei mindestens eine katalytisch aktive Komponente an einem Katalysatorträger aufgebracht und/oder fixiert wird, wobei die katalytisch aktive Komponente mindestens ein Metall umfasst und/oder hieraus besteht, wobei das Metall ausgewählt wird aus der Gruppe von Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd und Pt,

wobei das Verfahren die folgenden Schritte in der nachstehend spezifizierten Abfolge (a) bis (d) umfasst:

(a) Bereitstellung und/oder Herstellung einer als Katalysatorträger eingesetzten kugelförmigen Aktivkohle (= Ausgangsaktivkohle),
wobei die Aktivkohle (d.h. die Ausgangsaktivkohle)

(i) ein Gesamtporenvolumen $V_{total}$ nach Gurvich im Bereich von 0,8 cm$^3$/g bis 3,9 cm$^3$/g, aufweist, wobei mindestens 50 % des Gesamtporenvolumens nach Gurvich der Aktivkohle durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind, und
(ii) eine spezifische BET-Oberfläche $S_{BET}$ im Bereich von 1.000 m$^2$/g bis 3.000 m$^2$/g aufweist, jedoch mit der Maßgabe, dass das Verhältnis Q von Gesamtporenvolumen $V_{total}$ nach Gurvich zu spezifischer BET-Oberfläche $S_{BET}$ entsprechend der Gleichung Q = $V_{total}$ / $S_{BET}$ mindestens 0,5 · 10$^{-9}$ m beträgt;
dann

(b) Oxidation, insbesondere Oberflächenoxidation, der in Verfahrensschritt (a) bereitgestellten und/oder hergestellten Aktivkohle, mit der Maßgabe, dass die oxidierte, insbesondere oberflächenoxidierte, Aktivkohle einen Sauerstoffgehalt, insbesondere Oberflächensauerstoffgehalt, bestimmt mittels Röntgenphotoelektronenspektroskopie (XPS bzw. ESCA), von mindestens 4 Atom-%, bezogen auf die Gesamtelementzusammensetzung der oxidierten Aktivkohle, aufweist, und/oder mit der Maßgabe, dass die oxidierte, insbesondere oberflächenoxidierte, Aktivkohle eine Hydrophilie, bestimmt als Wasserdampfadsorptionsverhalten, aufweist derart, dass bei einem Partialdruck p/p$_0$ von 0,6 mindestens 30 % der maximalen Wasserdampfsättigungsbeladung der Aktivkohle erreicht ist;
dann

(c) Ausrüstung, insbesondere Beladung und/oder Beschichtung und/oder Imprägnierung, der in Verfahrensschritt (b) oxidierten, insbesondere oberflächenoxidierten, Aktivkohle mit der katalytisch aktiven Komponente, insbesondere mit mindestens einem Präkursor der katalytisch aktiven Komponente;
dann

(d) Reduktion (d. h. einerseits Oberflächenreduktion insbesondere der zuvor oxidierten Aktivkohle und/oder andererseits insbesondere Reduktion der katalytisch aktiven Komponente bzw. des diesbezüglichen Präkursors, vorzugsweise des bzw. der der katalytisch aktiven Komponente zugrundeliegenden Metalls bzw. Metallverbindung, vorzugsweise zu Zwecken der Katalysatoraktivierung) der in Verfahrensschritt (c) erhaltenen, mit der katalytisch aktiven Komponente, insbesondere mit dem Präkursor der katalytisch aktiven Komponente, ausgerüsteten oxidierten, insbesondere oberflächenoxidierten, Aktivkohle, insbesondere zur Überführung des Präkursors der katalytisch aktiven Komponente in die katalytisch aktive Komponente, so dass das mindestens eine katalytisch aktive Komponente aufweisende Katalysatorsystem erhalten wird;

wobei in Verfahrensschritt (d) die Reduktion als Gasphasenreduktion durchgeführt wird, wobei in Verfahrensschritt (d) die Reduktion bei einer Temperatur im Bereich von 115 °C bis 160 °C durchgeführt wird;

wobei in Verfahrensschritt (d) das Katalysatorsystem erhalten wird, wobei das Katalysatorsystem mindestens eine an einem Katalysatorträger aufgebrachte und/oder fixierte katalytisch aktive Komponente aufweist, wobei die katalytisch aktive Komponente mindestens ein Metall umfasst und/oder hieraus besteht und wobei der Katalysatorträger in Form von Aktivkohle ausgebildet ist, wobei der Katalysatorträger in Form einer kugelförmigen Aktivkohle vorliegt; und

wobei das Katalysatorsystem eine Aktivität, bestimmt als prozentualer Dispersionsgrad der katalytisch aktiven Komponente auf dem Katalysatorträger, gemessen durch Chemisorption mittels dynamischem Strömungsverfahren gemäß DIN 66136-3:2007-01, im Bereich von 15 % bis 90 % aufweist; und

wobei das Katalysatorsystem die katalytisch aktive Komponente mit einer mittleren Kristallitgröße, bestimmt gemäß DIN 66136, von höchstens 80 Å (Angström), aufweist.

Eine grundlegende Idee der vorliegenden Erfindung ist somit, wie zuvor angeführt, insbesondere darin zu sehen, dass eine sehr spezielle Aktivkohle als Katalysatorträger zur Aufnahme bzw. zur Ausrüstung mit der katalytisch aktiven Komponente eingesetzt wird, wobei die erfindungsgemäß eingesetzte Aktivkohle zum einen in Korn- bzw. Kugelform sowie zum anderen mit definierter Porosität insbesondere im Hinblick auf eine hohe Meso- und Makroporosität bei gleichzeitig definiertem Anteil (d. h. in einem im Vergleich zu den Meso- und Makroporen untergeordneten, aber für die Katalyse ausreichendem Maß) an Mikroporen eingesetzt wird, wobei zudem in gezielter Weise vor Ausrüstung mit der katalytisch aktiven Komponente eine Oxidationsbehandlung bzw. eine Oberflächenoxidation der Aktivkohle durchgeführt wird. In diesem Zusammenhang hat die Anmelderin gleichermaßen völlig überraschend gefunden, dass unter Einsatz einer Aktivkohle mit definierter Porosität, wie zuvor angeführt, insgesamt verbesserte katalytische Eigenschaften des resultierenden Katalysatorsystems bereitgestellt werden, und zwar insbesondere im Hinblick auf hohe Umsätze bei gleichzeitig hoher katalytischer Aktivität und entsprechend hohen Raum/Zeit-Ausbeuten bei den zugrundeliegenden katalytischen Umsetzungen bzw. Reaktionen.

Ohne sich auf diese Theorie beschränken zu wollen, werden durch den Einsatz einer speziellen Aktivkohle mit hohem Meso- und Makroporenanteil bei gleichzeitig definiertem Anteil an Mikroporen insbesondere die Transport- bzw. Diffusionsvorgänge der der katalytischen Reaktion zugrundeliegenden Edukte bzw.

Produkte nachhaltig verbessert, und dies bei gleichzeitig hoher Zugänglichkeit und optimierter Ausbildung der in dem Katalysatorträger eingebrachten katalytisch aktiven Komponente.

In diesem Zusammenhang verhält es sich erfindungsgemäß somit insbesondere derart, dass die Kinetik der zugrundeliegenden Katalyse insgesamt verbessert ist, und zwar insbesondere im Hinblick auf verbesserte Transport- bzw. Diffusionsvorgänge innerhalb des Porensystems sowie im Bereich der Grenzschicht des Katalysatorträgers, wobei gleichzeitig für die umzusetzenden Edukte eine hohe Zugänglichkeit zu der katalytisch aktiven Komponente bzw. den katalytischen Zentren vorliegt.

Erfindungsgemäß wird somit auch aufgrund der speziellen Abstimmung und Ausbildung des Porensystems der als Katalysatorträger eingesetzten Aktivkohle ein insgesamt verbessertes Katalysatorsystem bereitgestellt, welches im Hinblick auf die katalytische Aktivität eine sehr gute Effizienz aufweist. Diesbezüglich kommt auch der ziel- und zweckgerichteten (Oberflächen-)Oxidation der als Katalysatorträger eingesetzten Aktivkohle vor Ausrüstung mit der katalytisch aktiven Komponente eine hohe Bedeutung zu, da hierdurch die Anbindung bzw. Beladung mit der katalytisch aktiven Komponente bzw. dem diesbezüglichen Präkursor verbessert wird, und zwar auch im Hinblick auf die Ausbildung katalytischer Zentren mit definierter (Metall-)Dispersion und Kristallitgröße, wie nachfolgend noch im Detail ausgeführt.

Ein weiterer zentraler Vorteil der vorliegenden Erfindung ist zudem darin zu sehen, dass die erfindungsgemäß eingesetzten Aktivkohlen eine hohe mechanische Stabilität bzw. Beständigkeit aufweisen, einhergehend mit geringen Abrieben bei ihrer Verwendung in katalytischen Prozessen, so dass bei gleichzeitig hoher Rezyklierfähigkeit eine entsprechend hohe Dauerhaftigkeit des katalytischen Systems nach der Erfindung gegeben ist.

Durch den gezielten Einsatz einer korn- bzw. kugelförmigen Aktivkohle, d. h. einer Aktivkohle mit spezieller Formgebung, werden die Anwendungseigenschaften des Katalysatorsystems nach der Erfindung weiterführend verbessert, und zwar auch was den Einsatz des erfindungsgemäß bereitgestellten Katalysatorsystems in diskontinuierlichen sowie kontinuierlichen katalytischen Anwendungen anbelangt. Denn durch die spezielle Formgebung insbesondere auf Basis diskreter Kugeln wird zum einen in Bezug auf diskontinuierliche Anwendungen eine verbesserte Schüttungsporosität erreicht, was sowohl eine Schlammbildung im Reaktionssystem verhindert als auch die Abtrennung bzw. Rückgewinnung des Katalysators aus dem Reaktionssystem signifikant verbessert. Zum anderen führen die verbesserten Schüttungseigenschaften des erfindungsgemäßen Katalysatorsystems zu geringeren Druckverlusten bei gleichzeitig hoher Zugänglichkeit des Katalysatorsystems für umzusetzende Edukte bzw. Reaktanden, so dass unter Einsatz des erfindungsgemäßen Katalysatorsystems auch hohe Durchströmungsgeschwindigkeiten in Bezug auf ein die umzusetzenden Edukte bzw. Reaktanden aufweisendes Medium realisiert werden können.

Die erfindungsgemäß in Kornform und insbesondere in Kugelform eingesetzte Aktivkohle (Kugelkohle) weist zudem insbesondere gegenüber anderen Formen von Aktivkohle, wie Pulver-, Splitter- und von Kohle oder dergleichen eine Reihe von Vorteilen auf, und zwar im Hinblick auf eine verbesserte Rieselfähigkeit, Abriebfestigkeit und Staubfreiheit, was nicht zuletzt auch zu einer hohen mechanischen Beständigkeit und Dauerhaftigkeit, einhergehend mit hohen Standzeiten der zugrundeliegenden Systeme, führt. Folglich ist auch der Verschließ während des Einsatzes verringert, was zu erhöhten Lebensdauern führt.

Wie nachfolgend noch angeführt, können darüber hinaus auch durch eine gezielte Einstellung der Partikelgrößen bzw. -durchmesser der zugrundeliegenden kugelförmigen Aktivkohle insgesamt maßgeschneiderte katalytische Systeme mit jeweils optimierten Anwendungseigenschaften, insbesondere im Hinblick auf die Rückgewinnung des Katalysatorsystems bzw. des Durchströmungsverhaltens bzw. des Druckverlustes bereitgestellt werden, wobei gleichzeitig die katalytische Aktivität des Katalysatorsystems nach der Erfindung weiterführend verbessert ist. Insbesondere kann durch Vorgabe der Partikelgröße der Druckverlust bzw. die Durchströmungsgeschwindigkeit eingestellt bzw. verändert werden, so dass auch vor dem jeweiligen Einsatz- bzw. Anwendungshintergrund optimierte Systeme bereitgestellt werden können.

Im Rahmen der vorliegenden Erfindung werden in zweckgerichteter Weise für den eingesetzten Katalysatorträger insbesondere äußerst abriebfeste bzw. mechanisch stabile kugelförmige Aktivkohlen eingesetzt, wie sie insbesondere durch die nachfolgend noch definierten speziellen Aktivkohlen auf Basis organischer Polymere, insbesondere auf Basis sulfonierter organischer Polymere, bereitgestellt werden. Dabei ist es im Rahmen der vorliegenden Erfindung völlig überraschend, dass ein gegebenenfalls in der Aktivkohle vorhandener Schwefelanteil, welcher beispielsweise bis zu 0,1 Gew.-%, bezogen auf die Aktivkohle, betragen kann, der katalytischen Funktion des erfindungsgemäßen Katalysatorsystems nicht abträglich ist bzw. zu keiner nachteiligen Beeinträchtigung der katalytischen Aktivität und insbesondere nicht zu einer sogenannten Katalysatorvergiftung führt.

Darüber hinaus ist es im Rahmen der vorliegenden Erfindung infolge der vor Ausrüstung mit der katalytisch aktiven Komponente durchgeführten (Oberflächen-) Oxidation der eingesetzten Aktivkohle in überraschender Weise gelungen, eine hohe und gleichzeitig dauerhafte bzw. stabile Beladung der als Trägermaterial eingesetzten Aktivkohle mit der katalytisch aktiven Komponente zu gewährleisten, was zu einer deutlich erhöhten katalytischen Aktivität bei gleichzeitig verbesserter Beständigkeit des erfindungsgemäßen Katalysatorsystems führt, insbesondere da auch eine Auswaschung bzw. Ablösung der katalytisch aktiven Komponente aus dem Trägermaterial im Anwendungsfall verringert bzw. vermieden wird.

Ohne sich auf diese Theorie festlegen zu wollen, führt die gezielte Oxidation bzw. Oberflächenoxidation der Aktivkohle zur Ausbildung spezieller sauerstoffhaltiger funktioneller Gruppen auf der erfindungsgemäß eingesetzten Aktivkohle bzw. in deren Porensystem, und zwar sowohl im Bereich der Mikro-, Meso- als auch der Makroporen, wobei hierdurch die Affinität der Aktivkohle zu der erfindungsgemäß eingesetzten katalytisch aktiven Komponente erhöht wird. Infolge der erfindungsgemäß vor Ausrüstung mit der katalytisch aktiven Komponente durchgeführten Oxidations- bzw. Oberflächenoxidationsbehandlung der Aktivkohle wird dabei eine weniger hydrophobe bzw. ein hydrophile Oberfläche der Aktivkohle bzw. werden spezielle funktionelle Gruppen auf der Oberfläche der Aktivkohle bzw. in dem Porensystem der Aktivkohle generiert bzw. bereitgestellt, was die Einlagerung der katalytisch aktiven Komponente in völlig überraschender Weise signifikant verbessert.

In diesem Zusammenhang ist es gleichermaßen völlig überraschend, dass das erfindungsgemäße Katalysatorsystem auf Basis der kugelförmigen Aktivkohle mit definierter Teilchenform bzw. Teilchengröße, welche vor Beladung mit der katalytisch aktiven Komponente einer Oxidation unterworfen wird, auch im Vergleich zu pulverförmigen Aktivkohlen eine signifikant verbesserte katalytische Aktivität aufweist. In diesem Zusammenhang ist es völlig überraschend, dass in Bezug auf das erfindungsgemäße Katalysatorsystem keine signifikanten Einschränkungen bzw. Limitierungen hinsichtlich des Stofftransports, insbesondere in Bezug auf die zugrundeliegenden Edukte bzw. Reaktanden, in dem Porensystem der Aktivkohle vorliegen, was insbesondere auch auf die definierte Porenstruktur, wie nachfolgend angeführt, der erfindungsgemäß eingesetzten Aktivkohlen zurückzuführen ist. In diesem Zusammenhang hat es sich erfindungsgemäß als besonders vorteilhaft herausgestellt, wenn eine meso- und makroporöse Aktivkohle, insbesondere mit definiertem, wenn auch untergeordnetem Anteil an Mikroporen, als Katalysatorträger für das erfindungsgemäße Katalysatorsystem eingesetzt wird.

Insbesondere ist es völlig überraschend, dass das erfindungsgemäß bereitgestellte Katalysatorsystem auch bei insbesondere im Vergleich zu Pulverkohle relativ großen Teilchen- bzw. Partikelgrößen eine hohe katalytische Aktivität aufweist. In diesem Zusammenhang ist es durch das Zusammenwirken der erfindungsgemäßen Maßnahmen - ohne sich auf diese Theorie beschränken zu wollen - gelungen, zum einen eine besonders gleichmäßige und hohe Beladung der Aktivkohle mit der katalytisch aktiven Komponente zu ermöglichen und zum anderen der katalytischen Aktivität abträgliche Stofftransport- bzw. Diffusionslimitierungen in dem Katalysatorsystem zu verringern.

Im Rahmen der erfindungsgemäßen Konzeption wird insbesondere aufgrund der speziellen Abstimmung des Trägersystems einerseits und der katalytisch aktiven Komponente andererseits auch eine Verstopfung des der Aktivkohle zugrundeliegenden Porensystems durch die katalytisch aktive Komponente - beispielsweise durch eine übermäßige Kristallgröße im Rahmen der Auskristallisation von Metallsalzen - zumindest im Wesentlichen verhindert, was die Leistungsfähigkeit des erfindungsgemäß bereitgestellten Katalysatorsystems noch weiter verbessert.

Erfindungsgemäß ist es somit erstmalig gelungen, auf Basis des erfindungsgemäßen Verfahrens ein sehr spezielles Katalysatorsystem mit einer sehr speziellen Aktivkohle als Trägermaterial, welche in gezielter Weise mit mindestens einer katalytisch aktiven Komponente ausgerüstet wird, bereitzustellen, wobei das Katalysatorsystem gegenüber Systemen des Standes der Technik über signifikante Vorteile und verbesserte Eigenschaften verfügt und sich sowohl für diskontinuierliche als auch kontinuierliche katalytische Anwendungen eignet.

Das durch das erfindungsgemäße Verfahren bereitgestellte Katalysatorsystem nach der Erfindung weist sowohl verbesserte mechanische als auch verbesserte katalytische Eigenschaften auf, einhergehend mit Prozesszeitverkürzungen und hoher Rückgewinnungsrate bei verringertem Zeitaufwand und hervorragender Rezyklierung des zugrundeliegenden Katalysators bzw. der katalytisch aktiven Komponente. Zudem weist das erfindungsgemäße Katalysatorsystem, wie zuvor ausgeführt, verbesserte Durchströmungseigenschaften bei geringem Druckverlust insbesondere beim Einsatz bzw. bei der Verwendung in Form von (losen) Schüttungen auf.

Darüber hinaus eignet sich das erfindungsgemäße Katalysatorsystem, welches auf Basis des erfindungsgemäßen Verfahrens bereitgestellt wird, auch zur Verwendung in bzw. als Filter(n) bzw. Filtermaterial(ein), insbesondere zur Unschädlichmachung von Schad- bzw. Giftstoffe oder dergleichen.

Das auf Basis des erfindungsgemäßen Verfahrens bereitgestellte Katalysatorsystem vereint somit hervorragende mechanische Eigenschaften einerseits mit hervorragenden katalytischen Eigenschaften anderseits.

Auf Basis des erfindungsgemäßen Verfahrens wird im Ergebnis eine effektive Ausrüstung der als Trägermaterial eingesetzten Aktivkohle mit mindestens einer katalytisch aktiven Komponente zum Erhalt des erfindungsgemäßen Katalysatorsystems erreicht.

Der Begriff "Katalysatorsystem", wie er erfindungsgemäß verwendet und synonym auch als "geträgerter Katalysator" bezeichnet wird, ist erfindungsgemäß sehr breit zu verstehen und bezieht sich insbesondere auf eine funktionelle Einheit auf Basis mindestens einer katalytisch aktiven Komponente einerseits und eines Trägermaterials andererseits, wobei die katalytischen Eigenschaften maßgeblich auf die katalytisch aktive Komponente zurückgeführt werden können, welche hierzu mindestens ein Metall umfasst bzw. hieraus besteht. In diesem Zusammenhang ist es erfindungsgemäß insbesondere vorgesehen, dass die eingesetzte Aktivkohle mit der katalytisch aktiven Komponente versehen wird, insbesondere in Form einer Ausrüstung bzw. Beladung bzw. Beschichtung bzw. Imprägnierung, insbesondere auf Basis einer Fixierung der katalytisch aktiven Komponente auf dem zugrundeliegenden Katalysatorträger, zum Erhalt des erfindungsgemäßen Katalysatorsystems.

Weiterhin beziehen sich die Begriffe "Ausrüstung" bzw. "Beladung" bzw. "Beschichtung" bzw. "Imprägnierung", wie sie erfindungsgemäß verwendet werden, insbesondere auf eine solche Ausrüstung der erfindungsgemäß als Trägermaterial eingesetzten Aktivkohle mit der katalytisch aktiven Komponente, wonach die äußere und/oder die innere Oberflächenstruktur der eingesetzten Aktivkohle mitsamt den diesbezüglichen Poren, insbesondere Mikro-, Meso- und/oder Makroporen, zumindest teilweise und/oder abschnittsweise mit der katalytisch aktiven Komponente in Kontakt stehen bzw. hiermit versehen bzw. ausgerüstet sind. Dabei bildet die katalytisch aktive Komponente - ohne sich auf diese Theorie beschränken zu wollen - auf der Aktivkohleoberfläche sozusagen eine katalytische Struktur bzw. chemisorptive Eigenschaften aus, welche die physisorptiven Eigenschaften der Aktivkohle funktional ergänzen, so dass das auf Basis des erfindungsgemäßen Verfahrens bereitgestellte Katalysatorsystem grundsätzlich sowohl chemisorptive als auch physisorptive Eigenschaften in ein und demselben Material vereint. Insbesondere kann die katalytisch aktive Komponente physisorptiv und/oder chemisorptiv auf der Aktivkohleoberfläche gebunden werden, insbesondere wobei die Eigenschaften der katalytisch aktiven Zentren bzw. der katalytisch aktiven Komponente insbesondere von der Oberflächenbeschaffenheit der Aktivkohle, der katalytisch aktiven Komponente selbst und/oder von den Reduktionsbedingungen abhängen kann. Dabei liegt die katalytisch aktive Komponente in bzw. auf der Aktivkohle insbesondere in partikulärer bzw. kristallförmiger Form vor.

Was weiterhin den Begriff "kugelförmig", synonym auch als "sphärisch" bezeichnet, wie er für die erfindungsgemäß als Trägermaterial eingesetzte Aktivkohle verwendet wird, anbelangt, so ist dieser Begriff sehr breit zu verstehen und betrifft gemäß einer bevorzugten Ausführungsform der vorliegenden Erfindung insbesondere eine zumindest im Wesentlichen ideale kugelförmige bzw. sphärische Form der Aktivkohle, aber auch solche Formgebungen bzw. körperliche Ausgestaltungen der eingesetzten Aktivkohle, welche von der Kugelform abweichen, wie eine Ausbildung der Aktivkohle in Form eines (Rotations-)Ellipsoids oder dergleichen. Zudem umfasst der Begriff "kugelförmig" auch solche kugelförmige bzw. ellipsoidartige Formen der Aktivkohle, bei welchen die Aktivkohle Aus- bzw. Einbuchtungen, Dellen, Vertiefungen, Risse oder dergleichen aufweisen kann. Erfindungsgemäß wird somit maßgeblich auf den Einsatz einer kugelförmigen Aktivkohle bzw. einer Kugelkohle bzw. einer sphärischen Aktivkohle abgestellt.

Was den Begriff "Oberflächenoxidation", wie er erfindungsgemäß verwendet wird, anbelangt, so ist hierunter insbesondere eine Oxidation solcher Oberflächen der als Ausgangsmaterial eingesetzten Aktivkohle zu verstehen, welche in Kontakt mit der insbesondere das Oxidationsmittel enthaltenden Umgebung stehen bzw. welche sozusagen von außen für das erfindungsgemäß eingesetzte Oxidationsmittel zugänglich sind. Hierbei handelt es sich insbesondere auch um das Porensystem der Aktivkohle in Form von Makro-, Meso- und Mikroporen.

Was weiterhin das erfindungsgemäß angeführte *Verhältnis (Quotient; Q) von Gesamtporenvolumen ($V_{total}$), insbesondere Gesamtporenvolumen nach Gurvich, zu spezifischer BET-Oberfläche ($S_{BET}$), insbesondere entsprechend der Gleichung $Q = V_{total} - S_{BET}$* anbelangt, so dient der diesbezüglich zugrundeliegende Wert der weiterführenden Charakterisierung des Porensystems der erfindungsgemäß als Katalysatorträger eingesetzten Aktivkohle, und zwar insbesondere dahingehend, dass auf Basis des Quotienten Q die Porosität bzw. das Porensystem der Aktivkohle weiterführend charakterisiert und definiert wird, nämlich insbesondere dahingehend, dass für die erfindungsgemäß als Katalysatorträger eingesetzte Aktivkohle insgesamt ein hoher Anteil an Meso- <u>und</u> Makroporen am Gesamtporenvolumen bei gleichzeitig definiertem Anteil an Mikroporen vorliegt. Insbesondere beschreibt der zugrundeliegende Quotient die hohe Meso- <u>und</u> Makroporosität der erfindungsgemäß eingesetzten Aktivkohle. In diesem Zusammenhang kann der Quotient Q darüber hinaus auch als Maß für die infolge der speziell ausgebildeten Aktivkohle verbesserte Kinetik bei der heterogenen Katalyse bei Verwendung des erfindungsgemäßen Katalysatorsystems bzw. für die verbesserte katalytische Aktivität herangezogen werden. So liegt infolge des durch den Quotienten weiterführend charakterisierten und speziell ausgebildeten Porensystems der Aktivkohle insgesamt eine Verbesserung hinsichtlich der geschwindigkeitsbestimmenden Schritte der einer heterogenen Katalyse zugrundeliegenden Kinetik vor, beispielsweise was das bessere Diffusionsverhalten von Edukten bzw. Produkten sowie die Zugänglichkeit der katalytisch aktiven Komponente anbelangt. Der Quotient Q reflektiert somit weiterführend auch die Eigenschaften des im Rahmen des erfindungsgemäßen Verfahrens bereitgestellten Katalysatorsystems nach der Erfindung insbesondere im Hinblick auf dessen verbesserte katalytische Leistungsfähigkeit.

Was die als Katalysatorträger eingesetzte Aktivkohle bzw. die diesbezüglichen Aktivkohlepartikel als solche anbelangt, so werden die hierzu aufgeführten Parameterangaben mit genormten oder explizit angegebenen Bestimmungsverfahren oder mit dem Fachmann an sich geläufigen Bestimmungsmethoden bestimmt. Insbesondere die Parameterangaben betreffend die Charakterisierung der Porosität bzw. Porengrößenverteilung und andere Adsorptionseigenschaften ergeben sich im Allgemeinen und sofern nicht anders angegeben jeweils aus den entsprechenden Stickstoffsorptionsisothermen der betreffenden Aktivkohle bzw. der vermessenen Produkte.

Im Rahmen der vorliegenden Erfindung bezeichnet der Begriff "Mikroporen" solche Poren mit Porendurchmessern von weniger als 2 nm, wohingegen der Begriff "Mesoporen" solche Poren mit Porendurchmessern im Bereich von 2 nm (d. h. 2 nm einschließlich) bis 50 nm einschließlich bezeichnet und der Begriff "Makroporen" solche Poren mit Porendurchmessern von mehr als 50 nm (d. h. > 50 nm) und insbesondere bis 500 nm einschließlich bezeichnet.

Im Nachfolgenden wird die in Verfahrensschritt (a) angeführte Bereitstellung bzw. Herstellung der als Katalysatorträger eingesetzten Aktivkohle weiterführend beschrieben:

So kann es erfindungsgemäß insbesondere vorgesehen sein, dass die in Verfahrensschritt (a) bereitgestellte bzw. hergestellte Aktivkohle (d.h. Ausgangsaktivkohle) ein Gesamtporenvolumen $V_{total}$ nach Gurvich im Bereich von 0,9 cm³/g bis 3,4 cm³/g, insbesondere im Bereich von 1 cm³/g bis 2,9 cm³/g, vorzugsweise im Bereich von 1,1 cm³/g bis 2,4 cm³/g, bevorzugt im Bereich von 1,2 cm³/g bis 1,9 cm³/g, besonders bevorzugt im Bereich von 1,5 cm³/g bis 1,9 cm³/g, aufweist.

Wie gleichermaßen zuvor angeführt, handelt es sich erfindungsgemäß insbesondere um eine solche als Katalysatorträger eingesetzte Aktivkohle, welche insgesamt eine hohe Meso- und Makroporosität aufweist. In diesem Zusammenhang kann es erfindungsgemäß vorgesehen sein, dass 50 % bis 90 %, insbesondere 52,5 % bis 87,5 %, vorzugsweise 55 % bis 85 %, bevorzugt 57,5 % bis 82,5 %, besonders bevorzugt 60 % bis 80 %, des Gesamtporenvolumens nach Gurvich der in Verfahrensschritt (a) bereitgestellten und/oder hergestellten Aktivkohle (d.h. Ausgangsaktivkohle) durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind.

Darüber hinaus kann die in Verfahrensschritt (a) bereitgestellte bzw. hergestellte Aktivkohle gleichermaßen über eine definierte, untergeordnete, aber für die Katalyse ausreichende Mikroporosität verfügen, wobei im Allgemeinen in Bezug auf die Mikroporen relativ geringe Anteile am Gesamtporenvolumen vorliegen (und zwar insbesondere in einem für die Katalyse ausreichendem Maß): So kann es erfindungsgemäß insbesondere vorgesehen sein, dass 2,5 bis 50 %, insbesondere 5 % bis 50 %, vorzugsweise 10 bis 50 %, besonders bevorzugt 12,5 % bis 47,5 %, besonders bevorzugt 15 % bis 45 %, ganz besonders bevorzugt 17,5 % bis 42,5 %, weiter bevorzugt 20 % bis 40 %, des Gesamtporenvolumens nach Gurvich der in Verfahrensschritt (a) bereitgestellten und/oder hergestellten Aktivkohle (d. h. Ausgangsaktivkohle) durch Poren mit Porendurchmessern von weniger als 2 nm, vorzugsweise durch Mikroporen, gebildet sind.

Darüber hinaus kann es erfindungsgemäß vorgesehen sein, dass die in Verfahrensschritt (a) bereitgestellte bzw. hergestellte Aktivkohle (d.h. Ausgangsaktivkohle) ein Gesamtporenvolumen $V_{total}$ nach Gurvich im Bereich von 0,8 cm³/g bis 3,9 cm³/g, insbesondere im Bereich von 0,9 cm³/g bis 3,4 cm³/g, vorzugsweise im Bereich von 1 cm³/g bis 2,9 cm³/g, bevorzugt im Bereich von 1,1 cm³/g bis 2,4 cm³/g, besonders bevorzugt im Bereich von 1,2 cm³/g bis 1,9 cm³/g, ganz besonders bevorzugt im Bereich von 1,5 cm³/g bis 1,9 cm³/g, aufweist, wobei 50 % bis 90 %, insbesondere 52,5 % bis 87,5 %, vorzugsweise 55 % bis 85 %, bevorzugt 57,5 % bis 82,5 %, besonders bevorzugt 60 % bis 80 %, des Gesamtporenvolumens nach Gurvich der Aktivkohle durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind.

Zudem kann es erfindungsgemäß vorgesehen sein, dass die in Verfahrensschritt (a) bereitgestellte bzw. hergestellte Aktivkohle (d.h. Ausgangsaktivkohle) ein Gesamtporenvolumen $V_{total}$ nach Gurvich im Bereich von 0,8 cm³/g bis 3,9 cm³/g, insbesondere im Bereich von 0,9 cm³/g bis 3,4 cm³/g, vorzugsweise im Bereich von 1 cm³/g bis 2,9 cm³/g, bevorzugt im Bereich von 1,1 cm³/g bis 2,4 cm³/g, besonders bevorzugt im Bereich von 1,2 cm³/g bis 1,9 cm³/g, ganz besonders bevorzugt im Bereich von 1,5 cm³/g bis 1,9 cm³/g, aufweist, wobei 2,5 bis 50 %, insbesondere 5 % bis 50 %, vorzugsweise 10 bis 50 %, besonders bevorzugt 12,5 % bis 47,5 %, besonders bevorzugt 15 % bis 45 %, ganz besonders bevorzugt 17,5 % bis 42,5 %, weiter bevorzugt 20 % bis 40 %, des Gesamtporenvolumens nach Gurvich der in Verfahrensschritt (a) bereitgestellten und/oder hergestellten Aktivkohle (d. h. Ausgangsaktivkohle) durch Poren mit Porendurchmessern von weniger als 2 nm, insbesondere durch Mikroporen, gebildet sind.

Was die Bestimmung des Gesamtporenvolumens nach Gurvich anbelangt, so handelt es sich um eine dem Fachmann auf diesem Gebiet an sich wohlbekannte Mess-/Bestimmungsmethode. Zu weitergehenden Einzelheiten bezüglich der Bestimmung des Gesamtporenvolumens nach Gurvich kann beispielsweise verwiesen werden auf *L. Gurvich* (1915), J. Phys. Chem. Soc. Russ. <u>47</u>, 805, sowie auf S. *Lowell et al.,* Characterization of Porous Solids and Powders: Surface Area Pore Size and Density, Kluwer Academic Publishers, Article Technology Series, Seiten 111 ff. Insbesondere kann das Porenvolumen der Aktivkohle auf Basis der Gurvich-Regel gemäß der Formel $V_P = W_a / \rho_l$ bestimmt werden, wobei $W_a$ die adsorbierte Menge eines zugrundeliegenden Adsorbats und $\rho_l$ die Dichte des eingesetzten Adsorbats darstellt (vgl. auch Formel (8.20) gemäß Seite 111, Kapitel 8.4.) von S. Lowell et al.).

Weiterhin kann die in Verfahrensschritt (a) bereitgestellte bzw. hergestellte Aktivkohle (d.h. Ausgangsaktivkohle) eine spezifische BET-Oberfläche $S_{BET}$ im Bereich von 1.100 m²/g bis 2.600 m²/g, insbesondere im Bereich von 1.200 m²/g bis 2.400 m²/g, vorzugsweise im Bereich von 1.300 m²/g bis 2.200 m²/g, bevorzugt im Bereich von 1.350 m²/g bis 1.950 m²/g, besonders bevorzugt im Bereich von 1.375 m²/g bis 1.900 m²/g, aufweisen.

Die Bestimmung der spezifischen Oberfläche gemäß BET ist dem Fachmann grundsätzlich als solche bekannt, so dass diesbezüglich keine weitergehenden Einzelheiten ausgeführt zu werden brauchen. Sämtliche BET-Oberflächenangaben beziehen sich auf die Bestimmung gemäß ASTM D6556-04. Im Rahmen der vorliegenden Erfindung wird zur Bestimmung der BET-Oberfläche - im Allgemeinen und sofern nachfolgend nicht ausdrücklich abweichend angegeben - die so genannte MultiPoint-BET-Bestimmungsmethode (MP-BET) in einem Partialdruckbereich $p/p_0$ von 0,05 bis 0,1 angewendet.

In Bezug auf weitergehende Einzelheiten zu der Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968), verwiesen werden.

Die Ausbildung eines definierten Porensystems mit hohem Meso- und Makroporenvolumen bzw. -Anteil führt, wie vorliegend beschrieben, auch zu verbesserten Transport- und Diffusionseigenschaften für die der katalytischen Reaktion zugrundeliegenden Edukte bzw. Produkte, und zwar insbesondere infolge des hohen Meso- und Makroporenanteils. Gleichzeitig liegen im Hinblick auf das bereitgestellte Katalysatorsystem verbesserte katalytische Eigenschaften auch von daher vor, dass sich insbesondere auch in kleineren Poren, wie Mikroporen, katalytische aktive Zentren bzw. Aktivzentren ausbilden können.

Infolge der ausgewogenen und aufeinander abgestimmten Porenverteilung mit dem zugrundeliegenden definierten hierarchischen Porensystem mit hohem Meso- und Makroporenvolumen und für die Katalyse bzw. katalytische Aktivität ausreichendem Mikroporenvolumen werden somit insgesamt verbesserte Eigenschaften im Hinblick auf die Kinetik der heterogenen Katalyse bereitgestellt. In diesem Zusammenhang finden die vorgenannten Eigenschaften der in Verfahrensschritt (a) eingesetzten Aktivkohle (d. h der Ausgangsaktivkohle) ihren unmittelbaren Niederschlag in dem in Verfahrensschritt (d) erhaltenen Katalysatorsystem nach der Erfindung.

In diesem Zusammenhang kann es erfindungsgemäß insbesondere vorgesehen sein, dass für die in Verfahrensschritt (a) bereitgestellte bzw. hergestellte Aktivkohle (d.h. Ausgangsaktivkohle) das Verhältnis Q von Gesamtporenvolumen $V_{total}$ nach Gurvich zu spezifischer BET-Oberfläche $S_{BET}$ entsprechend der Gleichung $Q = V_{total} / S_{BET}$ im Bereich von $0,5 \cdot 10^{-9}$ m bis $1,9 \cdot 10^{-9}$ m, insbesondere im Bereich von $0,55 \cdot 10^{-9}$ m bis $1,9 \cdot 10^{-9}$ m, vorzugsweise im Bereich von $0,6 \cdot 10^{-9}$ m bis $1,8 \cdot 10^{-9}$ m, bevorzugt im Bereich von $0,65 \cdot 10^{-9}$ m bis $1,7 \cdot 10^{-9}$ m, besonders bevorzugt im Bereich von $0,65 \cdot 10^{-9}$ m bis $1,6 \cdot 10^{-9}$ m, ganz besonders bevorzugt im Bereich von $0,7 \cdot 10^{-9}$ m bis $1,5 \cdot 10^{-9}$ m, weiter bevorzugt im Bereich von $0,75 \cdot 10^{-9}$ m bis $1,4 \cdot 10^{-9}$ m, noch weiter bevorzugt im Bereich von $0,8 \cdot 10^{-9}$ m bis $1,3 \cdot 10^{-9}$ m, liegt.

Dabei gewährleisten die vorgenannten Untergrenzen weiterhin noch eine gute Belegung der Aktivkohle mit der katalytisch aktiven Komponente bei gleichzeitig gutem Stoffaustausch und somit hohen Umsätzen bei der zugrundeliegenden Katalyse. Weiterhin gewährleisten die zuvor angeführten Obergrenzen noch ein ausreichendes Mikroporenvolumen, was insbesondere mit der Ausbildung einer entsprechend hohen Anzahl an aktiven Stellen bzw. Zentren im Hinblick auf die katalytische Aktivität unter Einbezug der katalytisch aktiven Komponente einhergeht.

Erfindungsgemäß kann es insbesondere vorgesehen sein, dass die in Verfahrensschritt (a) bereitgestellte bzw. hergestellte Aktivkohle (d.h. Ausgangsaktivkohle) eine spezifische BET-Oberfläche $S_{BET}$ im Bereich von 1.000 m²/g bis 3.000 m²/g, insbesondere im Bereich von 1.100 m²/g bis 2.600 m²/g, vorzugsweise im Bereich von 1.200 m²/g bis 2.400 m²/g, bevorzugt im Bereich von 1.300 m²/g bis 2.200 m²/g, besonders bevorzugt im Bereich von 1.350 m²/g bis 1.950 m²/g, ganz besonders bevorzugt im Bereich von 1.375 m²/g bis 1.900 m²/g, aufweist, wobei das Verhältnis (Quotient; Q) von Gesamtporenvolumen $V_{total}$ nach Gurvich zu spezifischer BET-Oberfläche $S_{BET}$ entsprechend der Gleichung $Q = V_{total} / S_{BET}$ im Bereich von $0,5 \cdot 10^{-9}$ m bis $1,9 \cdot 10^{-9}$ m, insbesondere im Bereich von $0,55 \cdot 10^{-9}$ m bis $1,9 \cdot 10^{-9}$ m, vorzugsweise im Bereich von $0,6 \cdot 10^{-9}$ m bis $1,8 \cdot 10^{-9}$ m, bevorzugt im Bereich von $0,65 \cdot 10^{-9}$ m bis $1,7 \cdot 10^{-9}$ m, besonders bevorzugt im Bereich von $0,65 \cdot 10^{-9}$ m bis $1,6 \cdot 10^{-9}$ m, ganz besonders bevorzugt im Bereich von $0,7 \cdot 10^{-9}$ m bis $1,5 \cdot 10^{-9}$ m, weiter bevorzugt im Bereich von $0,75 \cdot 10^{-9}$ m bis $1,4 \cdot 10^{-9}$ m, noch weiter bevorzugt im Bereich von $0,8 \cdot 10^{-9}$ m bis $1,3 \cdot 10^{-9}$ m, liegt.

Darüber hinaus hat es sich im Rahmen der vorliegenden Erfindung als vorteilhaft erwiesen, wenn die in Verfahrensschritt (a) bereitgestellte und/oder hergestellte Aktivkohle (d.h. Ausgangsaktivkohle) einen mittleren Porenduchmesser von mindestens 15 nm aufweist bzw. wenn die Aktivkohle einen mittleren Porendurchmesser von höchstens 100 nm aufweist.

Insbesondere kann die in Verfahrensschritt (a) bereitgestellte und/oder hergestellte Aktivkohle (d.h. Ausgangsaktivkohle) einen mittleren Porendurchmesser im Bereich von 15 nm bis 100 nm, insbesondere im Bereich von 16 nm bis 90 nm, vorzugsweise im Bereich von 17 nm bis 85 nm, bevorzugt im Bereich von 18 nm bis 80 nm, besonders bevorzugt im Bereich von 20 nm bis 70 nm, ganz besonders bevorzugt im Bereich von 22 nm bis 60 nm, weiter bevorzugt im Bereich von 25 nm bis 50 nm, aufweisen.

Die Bestimmung der texturellen Eigenschaften der erfindungsgemäß verwendeten meso- und makroporösen Aktivkohle bzw. die Bestimmung der texturellen Eigenschaften im Meso- bzw. Makroporenbereich kann dabei insbesondere im Hinblick auf den mittleren Porendurchmesser durch Quecksilberintrusion erfolgen. Methodenbedingt wird dabei im Hinblick auf den Porendurchmesser insbesondere ein Auswertebereich im Bereich von 0,01 $\mu$m bis 20 $\mu$m erfasst.

Der mittlere Porendurchmesser kann im Allgemeinen darüber hinaus auch aus dem Quotienten des vierfachen Volumenwertes einer durch die Aktivkohle aufgenommenen bzw. adsorbierten Flüssigkeit (Adsorbat) bei vollständig gefüllten Poren ($V_{gesamt}$) einerseits und der BET-Oberfläche (BET) andererseits bestimmt werden (Porendurchmesser d = 4 · $V_{gesamt}$ / BET). Diesbezüglich kann auf die entsprechenden Ausführungen gemäß *R.W. Magee* (loc. cit.) verwiesen werden, insbesondere auf die Formeldarstellung (15) auf Seite 71 der in Rede stehenden Literaturstelle.

Weiterhin ist es erfindungsgemäß von Vorteil, wenn die in Verfahrensschritt (a) bereitgestellte und/oder hergestellte Aktivkohle (d.h. Ausgangsaktivkohle) kugelförmig ist bzw. wenn die in Verfahrensschritt (a) bereitgestellte und/oder hergestellte Aktivkohle in Form einer kugelförmigen Aktivkohle eingesetzt wird.

Die spezielle Formgebung der Aktivkohle geht dabei im Rahmen ihrer katalytischen Anwendung auf Basis des erfindungsgemäßen Katalysatorsystems auch mit besseren Anströmeigenschaften einher, was den Transport von Edukten und Produkten weiter verbessert.

Was die kugelförmige Aktivkohle anbelangt, so geht dies insbesondere mit verbesserten Eigenschaften beispielsweise bei der Verwendung des Katalysatorsystems nach der Erfindung in Festbettreaktoren oder dergleichen einher.

Erfindungsgemäß kann die in Verfahrensschritt (a) bereitgestellte und/oder hergestellte Aktivkohle (d.h. Ausgangsaktivkohle) eine Partikelgröße, insbesondere einen Teilchendurchmesser, im Bereich von 60 $\mu$m bis 1.000 $\mu$m, insbesondere im Bereich von 70 $\mu$m bis 800 $\mu$m, vorzugsweise im Bereich von 80 $\mu$m bis 600 $\mu$m, bevorzugt im Bereich von 100 $\mu$m bis 400 $\mu$m, besonders bevorzugt im Bereich von 150 $\mu$m bis 375 $\mu$m, ganz besonders bevorzugt im Bereich von 175 $\mu$m bis 250 $\mu$m, aufweisen. In diesem Zusammenhang können mindestens 80 Gew.-%, insbesondere mindestens 90 Gew.-%, vorzugsweise mindestens 95 Gew.-%, der Aktivkohlepartikel, insbesondere Aktivkohleteilchen, Partikelgrößen, insbesondere Teilchendurchmesser, in den vorgenannten Bereichen aufweisen.

Im Allgemeinen kann die in Verfahrensschritt (a) bereitgestellte bzw. hergestellte Aktivkohle (d.h. Ausgangsaktivkohle) eine mittlere Partikelgröße (D50), insbesondere einen mittleren Teilchendurchmesser (D50), im Bereich von 60 $\mu$m bis 900 $\mu$m, insbesondere im Bereich von 75 $\mu$m bis 750 $\mu$m, vorzugsweise im Bereich von 85 $\mu$m bis 550 $\mu$m, bevorzugt im Bereich von 110 $\mu$m bis 375 $\mu$m, besonders bevorzugt im Bereich von 175 $\mu$m bis 350 $\mu$m, ganz besonders bevorzugt im Bereich von 185 $\mu$m bis 225 $\mu$m, aufweisen.

Die entsprechenden Teilchengrößen bzw. Durchmesser können insbesondere auf Basis der Methode nach ASTM D2862-97/04 bestimmt werden. Zudem können die vorgenannten Größen mit Bestimmungsmethoden auf Basis einer Siebanalyse, auf Basis von Röntgenbeugung, Laserdiffraktometrie oder dergleichen bestimmt werden. Die jeweiligen Bestimmungsmethoden sind dem Fachmann als solche wohlbekannt, so dass es diesbezüglich keiner weiteren Ausführungen bedarf.

Zudem kann die in Verfahrensschritt (a) bereitgestellte und/oder hergestellte Aktivkohle (d.h. Ausgangsaktivkohle) eine Abriebfestigkeit (*ball pan hardness*) und/oder Abriebhärte von mindestens 90 %, insbesondere mindestens 95 %, vorzugsweise mindestens 97 %, bevorzugt mindestens 98 %, besonders bevorzugt mindestens 99 %, ganz besonders bevorzugt mindestens 99,5 %, weiter bevorzugt mindestens 99,8 %, aufweisen. Die Abriebfestigkeit kann im Allgemeinen gemäß der ASTM D3802-05 bestimmt werden. Somit zeichnet sich die erfindungsgemäß eingesetzte Aktivkohle weiterhin durch hervorragende mechanische Eigenschaften aus, was sich auch in der hohen Abriebfestigkeit äußert. Die hohe mechanische Festigkeit der erfindungsgemäß eingesetzten Aktivkohle führt im Rahmen der Anwendung des resultierenden Katalysatorsystems nach der Erfindung zu geringen Abrieben, was insbesondere hinsichtlich der Einsatz- bzw. Standzeit von Vorteil ist. Durch die hervorragenden mechanischen Eigenschaften mit dem geringen Abrieb ergeben sich auch weitere Vorteile im Hinblick auf die Herstellung des Katalysatorsystems nach dem erfindungsgemäßen Verfahren, insbesondere was die Vermeidung von Abrieb oder dergleichen bei Durchführung der jeweiligen Verfahrensschritte anbelangt. Die hohe mechanische Festigkeit der Aktivkohle und somit auch des erfindungsgemäßen Katalysatorsystems führt im Rahmen der Anwendung in der Katalyse nur zu geringen Abrieben, was insbesondere hinsichtlich der Verwendungszeit sowie der Vermeidung von Schlammbildung durch Abrieb oder dergleichen von Vorteil ist.

Die hohe mechanische Stabilität der erfindungsgemäß eingesetzten Aktivkohle schlägt sich auch in einer hohen Druck- bzw. Berstfestigkeit (Gewichtsbelastbarkeit pro Akivkohlekorn) nieder. In diesem Zusammenhang kann die in Verfahrensschritt (a) bereitgestellte bzw. hergestellte Aktivkohle (d.h. Ausgangsaktivkohle) eine Druck- und/oder Berstfestigkeit (Gewichtsbelastbarkeit) pro Aktivkohlekorn, insbesondere pro Aktivkohlekügelchen, von mindestens 5 Newton, insbesondere mindestens 10 Newton, vorzugsweise mindestens 15 Newton, bevorzugt mindestens 20 Newton, besonders bevorzugt mindestens 22,5 Newton, aufweisen. Insbesondere kann die in Verfahrensschritt (a) bereitgestellte bzw. hergestellte Aktivkohle (d.h. Ausgangsaktivkohle) eine Druck- und/oder Berstfestigkeit (Gewichtsbelastbarkeit) pro Aktivkohlekorn, insbesondere pro Aktivkohlekügelchen, im Bereich von 5 bis 50 Newton, insbesondere 10 bis 45 Newton, vorzugsweise 15 bis 40 Newton, bevorzugt 17,5 bis 35 Newton, aufweisen. Die Bestimmung der Druck- bzw. Berstfestigkeit kann in einer dem Fachmann an sich bekannten Weise erfolgen, insbesondere anhand der Bestimmung der Druck- bzw. Berstfestigkeit an einzelnen Partikeln bzw. Teilchen über Krafteinwirkung mittels eines Stempels bis zum Bersten des jeweiligen Partikels bzw. Teilchens.

Die in Verfahrensschritt (a) bereitgestellte bzw. hergestellte Aktivkohle (d.h. Ausgangsaktivkohle) kann weiterhin eine Rüttel- bzw. Stampfdichte im Bereich von 100 g/l bis 1.500 g/l, insbesondere 125 g/l bis 1.000 g/l, vorzugsweise 150 g/l bis 800 g/l, bevorzugt 200 g/l bis 600 g/l, besonders bevorzugt 225 g/l bis 500 g/l, ganz besonders bevorzugt 250 g/l bis 400 g/l, weiter bevorzugt 255 g/l bis 395 g/l, aufweisen. Insbesondere kann die in Verfahrensschritt (a) bereitgestellte bzw. hergestellte Aktivkohle (d.h. Ausgangsaktivkohle) auch eine Schüttdichte (*bulk density*) im Bereich von 150 g/l bis 1.000 g/l, insbesondere von 250 g/l bis 700 g/l, vorzugsweise 300 g/l bis 600 g/l, bevorzugt 300 g/l bis 550 g/l, aufweisen. Die Rüttel- bzw. Stampfdichte kann insbesondere gemäß der DIN 53194 bestimmt werden. Die Schüttdichte kann insbesondere gemäß der ASTM B527-93/00 bestimmt werden.

Zudem kann die in Verfahrensschritt (a) bereitgestellte bzw. hergestellte Aktivkohle (d.h. Ausgangsaktivkohle) eine Butanadsorption von mindestens 35 %, insbesondere mindestens 40 %, vorzugsweise mindestens 45 %, bevorzugt mindestens 47,5 %, aufweist und/oder wobei die Aktivkohle eine Butanadsorption im Bereich von 35 % bis 90 %, insbesondere im Bereich von 40 % bis 85 %, vorzugsweise im Bereich von 45 % bis 80 %, bevorzugt im Bereich von 47,5 % bis 75 %, aufweisen. Die Butanadsorption kann insbesondere gemäß der ASTM D5742-95/00 bestimmt werden.

Weiterhin kann die in Verfahrensschritt (a) bereitgestellte und/oder hergestellte Aktivkohle (d.h. Ausgangsaktivkohle) eine Iodzahl von mindestens 1.250 mg/g, insbesondere mindestens 1.300 mg/g, vorzugsweise mindestens 1.400 mg/g, bevorzugt mindestens 1.425 mg/g, aufweist und/oder wobei die in Verfahrensschritt (a) bereitgestellte und/oder hergestellte Aktivkohle eine Iodzahl im Bereich von 1.250 mg/g bis 2.100 mg/g, insbesondere im Bereich von 1.300 mg/g bis 2.000 mg/g, vorzugsweise im Bereich von 1.400 mg/g bis 1.900 mg/g, bevorzugt im Bereich von 1.425 mg/g bis 1.850 mg/g, aufweisen. Die Iodzahl kann insbesondere gemäß der ASTM D4607-94/99 bestimmt werden. Die Iodzahl kann als ein Maß für diejenige verfügbare Oberfläche gewertet werden, welche überwiegend auch durch kleine Mesoporen bereitgestellt wird; die vorgenannten Werte der Iodzahl zeigen, dass die erfindungsgemäß eingesetzten Aktivkohlen insbesondere über eine hohe Mesoporosität verfügen können.

Weiterhin kann die in Verfahrensschritt (a) bereitgestellte bzw. hergestellte Aktivkohle (d.h. Ausgangsaktivkohle) einen Methylenblauwert von mindestens 17 ml, insbesondere mindestens 18 ml, vorzugsweise mindestens 19 ml, bevorzugt mindestens 19,5 ml, aufweist und/oder wobei die in Verfahrensschritt (a) bereitgestellte und/oder hergestellte Aktivkohle einen Methylenblauwert im Bereich von 17 ml bis 65 ml, insbesondere im Bereich von 18 ml bis 55 ml, vorzugsweise im Bereich von 19 ml bis 50 ml, bevorzugt im Bereich von 19,5 ml bis 47,5 ml, aufweisen.

Insbesondere kann die in Verfahrensschritt (a) bereitgestellte bzw. hergestellte Aktivkohle (d.h. Ausgangsaktivkohle) eine Melassezahl von mindestens 255, insbesondere mindestens 310, vorzugsweise mindestens 375, bevorzugt mindestens 510, aufweist und/oder wobei die in Verfahrensschritt (a) bereitgestellte und/oder hergestellte Aktivkohle eine Melassezahl im Bereich von 255 bis 1.500, insbesondere im Bereich von 310 bis 1.400, vorzugsweise im Bereich von 375 bis 1.300, bevorzugt im Bereich von 510 bis 1.250, aufweisen.

Aufgrund der hohen Meso- und Makroporosität weist die erfindungsgemäße Aktivkohle somit gleichermaßen hohe Methylenblau- und Melasseadsorptionszahlen auf, welche gemeinsam als Maß für diejenige verfügbare Oberfläche gewertet werden können, die überwiegend durch Meso- und Makroporen bereitgestellt wird. So bezieht sich die Methylenblauzahl bzw. der Methylenblauadsorption, welche die Menge an pro definierter Menge der Adsorbentien adsorbiertem Methylenblau unter definierten Bedingungen bezeichnet (d. h. das Volumen bzw. die Anzahl an Millilitern (ml) einer Methylenblaustandardlösung, die durch eine definierte Menge trockener und pulverisierter Adsorbentien entfärbt werden), auf tendenziell kleinere Mesoporen und gibt einen Hinweis auf die Adsorptionskapazität der erfindungsgemäßen Aktivkohle in Bezug auf Moleküle, welche eine vergleichbare Größe wie Methylenblau besitzen. Weiterhin ist die Melassezahl als Maß für die Meso- und Makroporosität zu werten ist und bezeichnet die Menge an Adsorbentien, welche erforderlich ist, um eine Standardmelasselösung zu entfärben, so dass die Melassezahl einen Hinweis auf die Adsorptionskapazität der erfindungsgemäßen Aktivkohle in Bezug auf Moleküle gibt, welche eine vergleichbare Größe wie Melasse (im allgemeinen Zuckerrübenmelasse) besitzen. Zusammen können die Methylenblau- und Melassezahl somit als Maß für die Meso- und Makroporosität, insbesondere Mesoporosität, der erfindungsgemäßen Aktivkohle gewertet werden.

Die dimensionslose Melassezahl kann grundsätzlich entweder nach der Norit-Methode (Norit N.V., Amersfoort, Niederlande, Norit-Standardmethode NSTM 2.19 *"Molasses Number (Europe)"*) oder alternativ nach der PACS-Methode (PACS = Professional Analytical and Consulting Services Inc., Coraopolis Pennsylvania, USA) bestimmt werden. Im Rahmen der vorliegenden Erfindung werden die Werte für die Melassezahl nach der PACS-Methode ermittelt. Bei der Bestimmung der Melassezahl nach der Norit- oder PACS-Methode wird diejenige Menge an pulverisierter Aktivkohle bestimmt, welche erforderlich ist, um eine Standardmelasselösung zu entfärben. Die Bestimmung erfolgt photometrisch, wobei die Einstellung der Melassestandardlösung gegen eine standardisierte Aktivkohle mit einer Melassezahl von 245 und/oder 350 erfolgt. Für weitergehende diesbezügliche Einzelheiten kann auf die beiden vorgenannten Vorschriften verwiesen werden.

Der Methylenblauwert kann gemäß der Methode gemäß CEFIC (Conseil Européen des Fédérations des l'Industrie Chimique, Avenue Louise 250, Bte 71, B - 1050 Brüssel, November 1986, European Council of Chemical Manufacturers' Federations, Testmethoden für Aktivkohlen, Ziffer 2.4 "Methylenblauwert", Seiten 27/28) bestimmt werden.

Der Methylenblauwert nach der vorgenannten CEFIC-Methode ist somit definiert als die Anzahl von ml einer Methylenblaustandardlösung, welche durch 0,1 g trockener und pulverisierter Aktivkohle entfärbt werden. Für die Durchführung dieser Methode wird ein Glasgefäß mit Schliffstopfen, ein Filter sowie eine Methylenblaustandardlösung benötigt, welche wie folgt hergestellt wird: Eine Menge von 1.200 mg reinen Farbstoffes Methylenblau (entsprechend ca. 1,5 g Methylenblau nach DAB VI [Deutsches Arzneibuch, 6. Ausgabe] oder gleichwertiges Produkt) werden in Wasser in einem 1.000-ml-Meßkolben gelöst, und man lässt die Lösung mehrere Stunden oder über Nacht stehen; zur Überprüfung werden 5,0 ml der Lösung mit 0,25 % (Volumenanteile) Essigsäure in einem Messkolben auf 1,0 l aufgefüllt, und danach wird die Extinktion bei 620 nm und 1 cm Schichtdicke gemessen, wobei sie (0,840 $\pm$ 0,010) betragen muss. Ist die Extinktion höher, wird mit der berechneten Wassermenge verdünnt; falls sie niedriger liegt, wird die Lösung verworfen und neu angesetzt. Zur Probenvorbereitung wird die Aktivkohle pulverisiert (< 0,1 mm) und dann bei 150 °C zur Gewichtskonstanz getrocknet. Exakt 0,1 g der Kugelkohle werden mit 25 ml (5 ml) der Methylenblaustandardlösung in einem Glasschliffkolben zusammengebracht (es wird in einem Vortest ermittelt, ob eine Anfangszugabe von 25 ml Methylenblaustandardlösung mit 5 ml-Zugaben oder eine Anfangszugabe von 5 ml Methylenblaustandardlösung mit 1-ml-Zugaben verwendet werden kann). Es wird geschüttelt, bis Entfärbung eintritt. Dann werden weitere 5 ml (1 ml) der Methylenblaustandardlösung zugegeben, und es wird bis zur Entfärbung geschüttelt. Die Zugabe von Methylenblaustandardlösung wird in 5-ml-Mengen (1-ml-Mengen) so lange wiederholt, wie innerhalb von 5 Minuten noch Entfärbung eintritt. Das gesamte Volumen der Testlösung, die durch die Probe entfärbt wurde, wird notiert. Man wiederholt den Test, um die erhaltenen Ergebnisse zu bestätigen. Das Volumen der Methylenblaustandardlösung in ml, die gerade noch entfärbt werden, ist der Methylenblauwert der Aktivkohle. Es ist in diesem Zusammenhang darauf hinzuweisen, dass der Farbstoff Methylenblau nicht getrocknet werden darf, da er wärmeempfindlich ist; der Wassergehalt muss vielmehr rein rechnerisch korrigiert werden.

Erfindungsgemäß kann die in Verfahrensschritt (a) bereitgestellte bzw. hergestellte Aktivkohle (d.h. Ausgangsaktivkohle) zudem ein gewichtsbezogenes adsorbiertes $N_2$-Volumen $V_{ads\ (gew)}$, bestimmt bei einem Partialdruck $p/p_0$ von 0,25, von mindestens 250 cm$^3$/g, insbesondere mindestens 300 cm$^3$/g, vorzugsweise mindestens 350 cm$^3$/g, bevorzugt mindestens 375 cm$^3$/g, aufweisen. In diesem Zusammenhang kann die in Verfahrensschritt (a) bereitgestellte und/oder hergestellte Aktivkohle ein gewichtsbezogenes adsorbiertes $N_2$-Volumen $V_{ads\ (gew)}$, bestimmt bei einem Partialdruck $p/p_0$ von 0,25, im Bereich von 250 cm$^3$/g bis 850 cm$^3$/g, insbesondere im Bereich von 300 cm$^3$/g bis 700 cm$^3$/g, vorzugsweise im Bereich von 350 cm$^3$/g bis 650 cm$^3$/g, bevorzugt im Bereich von 375 cm$^3$/g bis 625 cm$^3$/g, aufweisen.

Im Allgemeinen kann die in Verfahrensschritt (a) bereitgestellte und/oder hergestellte Aktivkohle (d.h. Ausgangsaktivkohle) ein volumenbezogenes adsorbiertes N2-Volumen Vads (vol.), bestimmt bei einem Partialdruck p/p0 von 0,25, von mindestens 50 cm$^3$/cm$^3$, insbesondere mindestens 100 cm$^3$/cm$^3$, vorzugsweise mindestens 110 cm$^3$/cm$^3$ aufweisen. Diesbezüglich kann es insbesondere vorgesehen sein, dass die in Verfahrensschritt (a) bereitgestellte bzw. hergestellte Aktivkohle ein volumenbezogenes adsorbiertes N2-Volumen Vads (vol.), bestimmt bei einem Partialdruck p/p0 von 0,25, im Bereich von 50 cm$^3$/cm$^3$ bis 300 cm$^3$/cm$^3$, insbesondere im Bereich von 80 cm$^3$/cm$^3$ bis 275 cm$^3$/cm$^3$, vorzugsweise im Bereich von 90 cm$^3$/cm$^3$ bis 250 cm$^3$/cm$^3$, bevorzugt im Bereich von 95 cm$^3$/cm$^3$ bis 225 cm$^3$/cm$^3$, aufweist.

Gleichermaßen kann es erfindungsgemäß vorgesehen sein, dass die in Verfahrensschritt (a) bereitgestellte bzw. hergestellte Aktivkohle (d.h. Ausgangsaktivkohle) ein gewichtsbezogenes adsorbiertes $N_2$-Volumen $V_{ads\ (gew.)}$, bestimmt bei einem Partialdruck $p/p_0$ von 0,995, von mindestens 300 cm$^3$/g, insbesondere mindestens 450 cm$^3$/g, vorzugsweise mindestens 475 cm$^3$/g, aufweist. Insbesondere kann die in Verfahrensschritt (a) bereitgestellte bzw. hergestellte Aktivkohle ein gewichtsbezogenes adsorbiertes $N_2$-Volumen $V_{ads\ (gew.)}$, bestimmt bei einem Partialdruck $p/p_0$ von 0,995, im Bereich von 300 cm$^3$/g bis 2.300 cm$^3$/g, insbesondere im Bereich von 400 cm$^3$/g bis 2.200 cm$^3$/g, vorzugsweise im Bereich von 450 cm$^3$/g bis 2.100 cm$^3$/g, bevorzugt im Bereich von 475 cm$^3$/g bis 2.100 cm$^3$/g, aufweisen.

Zudem kann die in Verfahrensschritt (a) bereitgestellte bzw. hergestellte Aktivkohle (d.h. Ausgangsaktivkohle) ein volumenbezogenes adsorbiertes $N_2$-Volumen $V_{ads\ (vol.)}$, bestimmt bei einem Partialdruck $p/p_0$ von 0,995, von mindestens 200 cm$^3$/cm$^3$, insbesondere mindestens 250 cm$^3$/cm$^3$, vorzugsweise mindestens 275 cm$^3$/cm$^3$, bevorzugt mindestens 295 cm$^3$/cm$^3$, aufweisen. Erfindungsgemäß kann es zudem vorgesehen sein, dass die in Verfahrensschritt (a) bereitgestellte bzw. hergestellte Aktivkohle ein volumenbezogenes adsorbiertes $N_2$-Volumen $V_{ads\ (vol.)}$, bestimmt bei

einem Partialdruck $p/p_0$ von 0,995, im Bereich von 200 $cm^3/cm^3$ bis 500 $cm^3/cm^3$, insbesondere im Bereich von 250 $cm^3/cm^3$ bis 400 $cm^3/cm^3$, vorzugsweise im Bereich von 275 $cm^3/cm^3$ bis 380 $cm^3/cm^3$, bevorzugt im Bereich von 295 $cm^3/cm^3$ bis 375 $cm^3/cm^3$, aufweist.

Folglich ist das gewichts- und volumenbezogene Volumen $V_{ads}$ ($N_2$) der erfindungsgemäßen Aktivkohle bei unterschiedlichen Partialdrücken $p/p_0$ sehr groß, was gleichermaßen als Beleg für die hervorragenden Adsorptionseigenschaften, einhergehend mit der hervorragenden Eignung als Katalysatorträger, der erfindungsgemäß verwendeten Aktivkohle zu werten ist.

Erfindungsgemäß kann die in Verfahrensschritt (a) bereitgestellte bzw. hergestellte Aktivkohle (d.h. Ausgangsaktivkohle) eine fraktale Dimension der offenen Porosität im Bereich von 2,6 bis 2,99 insbesondere 2,7 bis 2,95, vorzugsweise 2,8 bis 2,95, aufweist und/oder wobei die Aktivkohle eine fraktale Dimension der offenen Porosität von mindestens 2,7, insbesondere mindestens 2,8, vorzugsweise mindestens 2,85, bevorzugt mindestens 2,9, aufweisen. Die fraktale Dimension der offenen Porosität stellt dabei ein Maß für die Mikrorauigkeit der inneren Oberfläche der Aktivkohle dar. Für weitergehende diesbezügliche Einzelheiten insbesondere auch zur Bestimmung der fraktalen Dimension der erfindungsgemäß eingesetzten Aktivkohlen kann auf die Druckschriften DE 102 54 241 A1, WO 2004/046033 A1, EP 1 562 855 B1 sowie auf die zu derselben Patentfamilie gehörende US 2006/148645 A1 verwiesen werden, insbesondere auf das in den jeweiligen Druckschriften angeführte Ausführungsbeispiel 4. Die vorgenannten fraktalen Dimensionen führen zu weiter verbesserten katalytischen Eigenschaften des mit dem erfindungsgemäßen Verfahren hergestellten Katalysatorsystems.

Erfindungsgemäß kann die in Verfahrensschritt (a) bereitgestellte und/oder hergestellte Aktivkohle (d.h. Ausgangsaktivkohle) eine Aktivkohle sein, welche durch Carbonisierung und nachfolgende Aktivierung eines organischen polymerbasierten Ausgangsmaterials erhältlich ist, insbesondere in Form einer polymerbasierten, bevorzugt kugelförmigen (sphärischen) Aktivkohle (PBSAC bzw. *Polymer-based Spherical Activated Carbon*).

Aktivkohle in Form von PBSAC geht dabei insbesondere mit definierten Poreneigenschaften, einer definierten Formgebung sowie einer hohen mechanischen Stabilität einher.

Insbesondere kann das Ausgangsmaterial der in Verfahrensschritt (a) bereitgestellten bzw. hergestellten Aktivkohle (d.h. Ausgangsaktivkohle) in Form eines kugelförmigen Ausgangsmaterials eingesetzt wird und/oder wobei das Ausgangsmaterial der in Verfahrensschritt (a) bereitgestellten und/oder hergestellten Aktivkohle in Kornform und/oder in Kugelform, bevorzugt in Kugelform, eingesetzt werden.

Zudem kann das Ausgangsmaterial der in Verfahrensschritt (a) bereitgestellten bzw. hergestellten Aktivkohle (d.h. Ausgangsaktivkohle) eine Partikelgröße, insbesondere einen einen Teilchendurchmesser, im Bereich von 60 $\mu$m bis 1.000 $\mu$m, insbesondere im Bereich von 70 $\mu$m bis 800 $\mu$m, vorzugsweise im Bereich von 80 $\mu$m bis 600 $\mu$m, bevorzugt im Bereich von 100 $\mu$m bis 400 $\mu$m, besonders bevorzugt im Bereich von 150 $\mu$m bis 375 $\mu$m, ganz besonders bevorzugt im Bereich von 175 $\mu$m bis 250 $\mu$m, aufweisen. In diesem Zusammenhang kann es erfindungsgemäß insbesondere vorgesehen sein, dass mindestens 80 Gew.-%, insbesondere mindestens 90 Gew.-%, vorzugsweise mindestens 95 Gew.-%, der Partikel des Ausgangsmaterials Partikelgrößen, insbesondere Teilchendurchmesser, in den vorgenannten Bereichen aufweisen.

Zudem kann das Ausgangsmaterial der in Verfahrensschritt (a) bereitgestellten bzw. hergestellten Aktivkohle (d.h. Ausgangsaktivkohle) eine mittlere Partikelgröße (D50), insbesondere einen mittleren Teilchendurchmesser (D50), im Bereich von 60 $\mu$m bis 900 $\mu$m, insbesondere im Bereich von 75 $\mu$m bis 750 $\mu$m, vorzugsweise im Bereich von 85 $\mu$m bis 550 $\mu$m, bevorzugt im Bereich von 110 $\mu$m bis 375 $\mu$m, besonders bevorzugt im Bereich von 175 $\mu$m bis 350 $\mu$m, ganz besonders bevorzugt im Bereich von 185 $\mu$m bis 225 $\mu$m, aufweisen.

Insbesondere kann als Ausgangsmaterial der in Verfahrensschritt (a) bereitgestellten und/oder hergestellten Aktivkohle (d.h. Ausgangsaktivkohle) ein Ausgangsmaterial auf Basis von Ionenaustauscherharz-Vorstufen eingesetzt werden.

Weiterhin kann als Ausgangsmaterial der in Verfahrensschritt (a) bereitgestellten und/oder hergestellten Aktivkohle (d.h. Ausgangsaktivkohle) ein Ausgangsmaterial auf Basis von organischen Polymeren, insbesondere auf Basis von divinylbenzolvernetztem Polystyrol, bevorzugt auf Basis von Styrol/Divinylbenzol-Copolymeren, eingesetzt werden. Diesbezüglich kann der Gehalt an Divinylbenzol in dem Ausgangsmaterial im Bereich von 0,1 Gew.-% bis 25 Gew.-%, insbesondere im Bereich von 0,5 Gew.-% bis 20 Gew.-%, vorzugsweise im Bereich von 1 Gew.-% bis 15 Gew.-%, bevorzugt im Bereich von 2 Gew.-% bis 10 Gew.-%, bezogen auf das Ausgangsmaterial, liegen. Hinsichtlich konkret eingesetzter Ausgangsmaterialien kann auf die weiteren Ausführungen zu den Ausführungsbeispielen verwiesen werden.

Erfindungsgemäß kann es insbesondere vorgesehen sein, dass die in Verfahrensschritt (a) bereitgestellte und/oder hergestellte Aktivkohle (d.h. Ausgangsaktivkohle) erhältlich ist durch:

(i) Carbonisierung eines polymeren organischen sulfonierten (sulfonsäuregruppenhaltigen) Ausgangsmaterials, insbesondere eines partikulären, vorzugsweise kugelförmigen, polymeren organischen sulfonierten Ausgangsmaterials; dann

(ii) Aktivierung des in Schritt (i) erhaltenen Carbonisats (carbonisiertes Ausgangsmaterial) insbesondere zum Erhalt der Aktivkohle, insbesondere Aktivkohle wie in einem der vorangehenden Ansprüche definiert.

Zudem kann es in diesem Zusammenhang vorgesehen sein, dass vor dem Verfahrensschritt (i) der Carbonisierung ein Verfahrensschritt der Sulfonierung des polymeren organischen Ausgangsmaterials durchgeführt wird, insbesondere durch Inkontaktbringen des Ausgangsmaterials mit mindestens einem Sulfonierungsmittel. In diesem Zusammenhang kann das Sulfonierungsmittel in flüssiger Form eingesetzt werden.

Insbesondere kann als Sulfonierungsmittel Schwefeltrioxid ($SO_3$), insbesondere in Form von Oleum und/oder vorzugsweise konzentrierter Schwefelsäure, eingesetzt werden. Erfindungsgemäß kann gleichermaßen aber auch von einem bereits sulfonierten Material ausgegangen werden.

Im Allgemeinen kann im Rahmen der vorliegenden Erfindung in dem vorgenannten Verfahrensschritt (i) die Carbonisierung bei Temperaturen im Bereich von 100 °C bis 1.200 °C, insbesondere im Bereich von 120 °C bis 1.100 °C, vorzugsweise im Bereich von 140 °C bis 1.000 °C, bevorzugt im Bereich von 150 °C bis 950 °C, durchgeführt werden.

Erfindungsgemäß kann es in diesem Zusammenhang vorgesehen sein, dass in Verfahrensschritt (i) die Carbonisierung mehrstufig, insbesondere zweistufig, vorzugsweise unter Anwendung eines Temperaturgradienten und/oder eines Temperaturprofils, durchgeführt wird. Diesbezüglich kann in einer ersten Stufe bei Temperaturen im Bereich von 100 °C bis 600 °C, insbesondere im Bereich von 120 °C bis 590 °C, vorzugsweise im Bereich von 140 °C bis 570 °C, bevorzugt bei Temperaturen im Bereich von 150 °C bis 550 °C, verfahren werden. Zudem kann in einer zweiten Stufe bei Temperaturen im Bereich von 500 °C bis 1.200 °C, insbesondere im Bereich von 510 °C bis 1.100 °C, vorzugsweise im Bereich von 530 °C bis 1.000 °C, bevorzugt bei Temperaturen im Bereich von 550 °C bis 950 °C, verfahren werden.

Erfindungsgemäß kann in Verfahrensschritt (i) die Carbonisierung für eine Zeitdauer im Bereich von 0,1 h bis 20 h, insbesondere im Bereich von 0,5 h bis 15 h, vorzugsweise im Bereich von 1 h bis 10 h, bevorzugt im Bereich von 1,5 h bis 8 h, besonders bevorzugt im Bereich von 2 h bis 6 h, durchgeführt werden.

Im Rahmen des erfindungsgemäßen Verfahrens kann in Verfahrensschritt (i) die Carbonisierung insbesondere derart durchgeführt werden, das chemische Gruppen, insbesondere stark saure chemische Gruppen, vorzugsweise Sulfonsäuregruppen, insbesondere unter Ausbildung freier Radikale bzw. unter Ausbildung von Vernetzungen, thermisch zersetzt bzw. von dem insbesondere sulfonierten Ausgangsmaterial abgespalten werden, vorzugsweise so dass es insbesondere zu einem Einsetzen der Carbonisierung bzw. zu einer thermischen Zersetzung des Ausgangsmaterials, vorzugsweise unter Vernetzung der Polymeren des Ausgangsmaterials und/oder unter Bildung von Kohlenstoff, kommt. Zudem kann in Verfahrensschritt (i) die Carbonisierung durchgeführt werden derart, dass insbesondere nach der thermischen Zersetzung bzw. der Abspaltung der chemischen Gruppen, insbesondere der stark sauren chemischen Gruppen, vorzugsweise der Sulfonsäuregruppen, eine insbesondere weitergehende bzw. insbesondere vollständige Carbonisierung des Ausgangsmaterials erfolgt.

Beispielsweise kann in Verfahrensschritt (i) derart verfahren werden, dass die thermische Zersetzung bzw. die Abspaltung der chemischen Gruppen, insbesondere der stark sauren chemischen Gruppen, vorzugsweise der Sulfonsäuregruppen, in der ersten Stufe der Carbonisierung erfolgt. Zudem kann in Verfahrensschritt (i) derart verfahren werden, dass die weitergehende und/oder vollständige Carbonisierung des Ausgangsmaterials in der zweiten Stufe durchgeführt wird bzw. erfolgt.

Im Allgemeinen kann in Verfahrensschritt (i) unter Inertatmosphäre, insbesondere unter Stickstoffatmosphäre, oder allenfalls unter leicht oxidierender Atmosphäre verfahren werden. Erfindungsgemäß kann es gegebenenfalls vorgesehen sein, dass in Verfahrensschritt (i) der Carbonisierungsatmosphäre, insbesondere Inertatmosphäre, während der Carbonisierung Wasser, insbesondere in Form von Wasserdampf und/oder eines Inertgas/Wasserdampf-Gemisches, vorzugsweise Stickstoff/Wasserdampfgemisches, zugegeben wird.

Was weiterhin Verfahrensschritt (ii) anbelangt, so kann die Aktivierung bei Temperaturen im Bereich von 500 bis 1.200 °C, insbesondere im Bereich von 800 °C bis 1.100 °C, vorzugsweise im Bereich von 850 °C bis 1.000 °C, bevorzugt im Bereich von 900 bis 975 °C, durchgeführt werden. Zudem kann in Verfahrensschritt (ii) die Aktivierung für eine Zeitdauer im Bereich von 0,5 h bis 20 h, insbesondere im Bereich von 1 h bis 15 h, vorzugsweise im Bereich von 2 h bis 10 h, durchgeführt werden.

Im Allgemeinen kann in Verfahrensschritt (ii) die Aktivierung in Gegenwart mindestens eines Aktivierungsgases, insbesondere Sauerstoff, vorzugsweise in Form von Luft, Wasserdampf und/oder Kohlendioxid oder Gemischen dieser Aktivierungsgase, und/oder in Gegenwart eines Inertgas/Wasserdampf-Gemisches, vorzugsweise Stickstoff/Wasserdampf-Gemisches, und/oder in Gegenwart von insbesondere reinem Kohlendioxid oder eines Inertgas/Kohlendioxid-Gemisches, insbesondere eines Stickstoff/Kohlendioxid-Gemisches, durchgeführt werden.

Das Grundprinzip der erfindungsgemäß in Verfahrensschritt (ii) vorgesehenen Aktivierung besteht insbesondere darin, einen Teil des bei der Carbonisierung generierten Kohlenstoffs selektiv und gezielt unter geeigneten Bedingungen abzubauen bzw. abzubrennen, wodurch das Porensystem weiterführend ausgebildet bzw. gezielt eingestellt und sozusagen finalisiert werden kann.

Was die in Verfahrensschritt (a) bereitgestellte bzw. hergestellte Aktivkohle im Allgemeinen anbelangt, so ist diese grundsätzlich auch in den vorliegend angegebenen Spezifitäten kommerziell erhältlich, insbesondere auch von der Blücher GmbH. Darüber hinaus kann zu weiterführenden Einzelheiten zu der erfindungsgemäß in Verfahrensschritt (a) bereitgestellten bzw. hergestellten Aktivkohle, und zwar insbesondere auch im Hinblick auf die Verfahrensschritte der Carbonisierung und Aktivierung, verwiesen werden auf die internationale Patentanmeldung WO 98/07655 A1 sowie auf die zu derselben Patentfamilie gehörenden Patentanmeldungen DE 196 53 238 A1, DE 196 50 414 A1, EP 0 952 960 A1 und US 6 300 276 B1, deren jeweilige Offenbarung hiermit durch Bezugnahme vollumfänglich eingeschlossen ist. Darüber hinaus kann verwiesen werden auf die DE 43 04 026 A1 und auf die zu derselben Patentfamilie gehörende US 6 184 177 B1, deren jeweilige Offenbarung hiermit durch Bezugnahme gleichermaßen vollumfänglich eingeschlossen ist. Zudem kann auch verwiesen werden auf die internationale Patentanmeldung WO 2017/097447 A1 sowie auf die parallelen Patentanmeldungen DE 10 2016 101 215 A1, EP 3 362 407 A1 sowie US 2019/177170 A1, deren jeweilige Offenbarung hiermit jeweils durch Bezugnahme gleichermaßen vollumfänglich eingeschlossen ist.

Im Nachfolgenden wird nun Verfahrensschritt (b) mit der Oxidierung der Aktivkohle weiterführend beschrieben: Im Allgemeinen kann es im Rahmen der vorliegenden Erfindung vorgesehen sein, dass die in Verfahrensschritt (b) oxidierte, insbesondere oberflächenoxidierte, Aktivkohle einen Sauerstoffgehalt, insbesondere Oberflächensauerstoffgehalt, bestimmt mittels Röntgenphotoelektronenspektroskopie [XPS *(= X-Ray Photoelectron Spectroscopy)* bzw. ESCA (= *Electron Spectroscopy for Chemical Analysis*)], im Bereich von 4 Atom-% bis 20 Atom-%, insbesondere im Bereich von 5 Atom-% bis 20 Atom-%, vorzugsweise im Bereich von 5,5 Atom-% bis 18 Atom-%, bevorzugt im Bereich von 6 Atom-% bis 15 Atom-%, besonders bevorzugt im Bereich von 7 Atom-% bis 12,5 Atom-%, bezogen auf die Gesamtelementzusammensetzung der oxidierten Aktivkohle, aufweist.

Erfindungsgemäß kann es insbesondere vorgesehen sein, dass die in Verfahrensschritt (b) oxidierte, insbesondere oberflächenoxidierte, Aktivkohle einen Sauerstoffgehalt, insbesondere Oberflächensauerstoffgehalt, bestimmt mittels Röntgenphotoelektronenspektroskopie (XPS bzw. ESCA), von mindestens 5 Atom-%, vorzugsweise mindestens 5,5 Atom-%, bevorzugt mindestens 6 Atom-%, besonders bevorzugt mindestens 7 Atom-%, bezogen auf die Gesamtelementzusammensetzung der oxidierten Aktivkohle, aufweist.

Erfindungsgemäß kann es insbesondere vorgesehen sein, dass die in Verfahrensschritt (b) oxidierte, insbesondere oberflächenoxidierte, Aktivkohle einen Sauerstoffgehalt, insbesondere Oberflächensauerstoffgehalt, bestimmt mittels Röntgenphotoelektronenspektroskopie (XPS bzw. ESCA), von höchstens 20 Atom-%, vorzugsweise höchstens 18 Atom-%, bevorzugt höchstens 15 Atom-%, besonders bevorzugt höchstens 12,5 Atom-%, bezogen auf die Gesamtelementzusammensetzung der oxidierten Aktivkohle, aufweist.

In diesem Zusammenhang ist es erfindungsgemäß bevorzugt, wenn die von Sauerstoff verschiedenen Elemente der in Verfahrensschritt (b) oxidierten, insbesondere oberflächenoxidierten, Aktivkohle zumindest im Wesentlichen von Kohlstoff gebildet werden. In diesem Zusammenhang kann die in Verfahrensschritt (b) oxidierte, insbesondere oberflächenoxidierte, Aktivkohle allenfalls Spuren von Sauerstoff und von Kohlenstoff verschiedenen Elementen, insbesondere Stickstoff, Schwefel und/oder Chlor, aufweisen, bevorzugt in einer Menge von höchstens 2 Atom-%, insbesondere höchstens 1,5 Atom-%, bevorzugt höchstens 1 Atom-%, bezogen auf die Gesamtelementzusammensetzung der oxidierten Aktivkohle und berechnet als Summe der von Sauerstoff und Kohlenstoff verschiedenen Elemente.

Ohne sich auf diese Theorie beschränken bzw. festlegen zu wollen, resultiert auf Basis der erfindungsgemäßen Verfahrensführung mit der durchgeführten (Oberflächen-)Oxidation gewissermaßen eine oxidierte Schicht insbesondere an der (Poren-)Oberfläche der Aktivkohle, welche im Allgemeinen über die nachfolgend noch angeführten sauerstoffhaltigen funktionellen Gruppen verfügt.

Die sich der Oberflächenoxidation anschließende Ausrüstung mit der katalytisch aktiven Komponente erfolgt dann - gleichermaßen ohne sich auf diese Theorie beschränken bzw. festlegen zu wollen - insbesondere im Bereich der oxidierten (Grenz-)Schicht, wobei die sauerstoffhaltigen funktionellen Gruppe die Affinität und insbesondere auch die Wechselwirkung mit der katalytisch aktiven Komponente erhöhen bzw. gewissermaßen als Bindungs- bzw. Ankerstellen für die erfindungsgemäß eingesetzte katalytisch aktive Komponente fungieren.

Durch die sich der Oxidation anschließende Ausrüstung der Aktivkohle mit der katalytisch aktiven Komponente wird im Rahmen des Verfahrens nach der Erfindung somit das erfindungsgemäße Katalysatorsystem als solches mit katalytischen bzw. reaktiven Oberflächen bereitgestellt.

Was die zuvor angeführten Bereichsangaben für den Sauerstoffgehalt der in Verfahrensschritt (b) oxidierten Aktivkohle anbelangt, so gewährleistet die angeführte Untergrenze ein noch ausreichendes Vorhandensein von Anbindungsstellen für die katalytisch aktive Komponente bzw. deren Präkursor. Die angeführte Obergrenze gewährleistet weiterhin, dass in der oxidierten Aktivkohle der Kohlenstoffgehalt noch ausreichend hoch ist, um ein stabiles Gerüst auszubilden, einhergehend mit einer entsprechenden mechanischen Stabilität sowie dem Vorliegen eines weiterhin definierten Porensystems, insbesondere auch im Hinblick auf das entsprechende Gesamtporenvolumen nach Gurvich sowie die spezifische BET-Oberfläche.

Wie zuvor angeführt, wird infolge der ziel- und zweckgerichteten Oxidationsbehandlung in Verfahrensschritt (b) eine relativ hydrophile Aktivkohle erhalten, so dass auf dieser Basis die Ausrüstung mit der katalytisch aktiven Komponente bzw. deren Präkursor verbessert wird.

Vor diesem Hintergrund kann zu der Hydrophilie der Aktivkohle Folgendes angeführt werden:

- Insbesondere kann die in Verfahrensschritt (b) oxidierte, insbesondere oberflächenoxidierte, Aktivkohle eine Hydrophilie, bestimmt als Wasserdampfadsorptionsverhalten, aufweisen derart, dass bei einem Partialdruck $p/p_0$ von 0,6 mindestens 35 %, insbesondere mindestens 40 %, vorzugsweise mindestens 50 %, bevorzugt mindestens 60 %, der maximalen Wasserdampfsättigungsbeladung der Aktivkohle erreicht ist.

- Zudem kann die in Verfahrensschritt (b) oxidierte, insbesondere oberflächenoxidierte, Aktivkohle eine Hydrophilie, bestimmt als Wasserdampfadsorptionsverhalten, aufweisen derart, dass bei einem Partialdruck $p/p_0$ von 0,6 höchstens 100 %, insbesondere höchstens 99 %, vorzugsweise höchstens 98 %, bevorzugt höchstens 95 %, besonders bevorzugt höchstens 90 %, der maximalen Wasserdampfsättigungsbeladung der Aktivkohle erreicht ist.

- Weiterhin kann die in Verfahrensschritt (b) oxidierte, insbesondere oberflächenoxidierte, Aktivkohle eine Hydrophilie, bestimmt als Wasserdampfadsorptionsverhalten, aufweisen derart, dass bei einem Partialdruck $p/p_0$ von 0,6 30 % bis 100 %, insbesondere 35 % bis 99 %, vorzugsweise 40% bis 98 %, bevorzugt 50 % bis 95 %, besonders bevorzugt 60 % bis 90 %, der maximalen Wasserdampfsättigungsbeladung der Aktivkohle erreicht ist.

- Insbesondere kann die in Verfahrensschritt (b) oxidierte, insbesondere oberflächenoxidierte, Aktivkohle eine Hydrophilie, bestimmt als Wasserdampfadsorptionsverhalten, aufweisen derart, dass in einem Partialdruckbereich $p/p_0$ von 0,1 bis 0,6 mindestens 30 %, insbesondere mindestens 35 %, vorzugsweise mindestens 40 %, bevorzugt mindestens 50 %, besonders bevorzugt mindestens 60 %, der maximalen Wasserdampfsättigungsbeladung der Aktivkohle erreicht ist.

- Erfindungsgemäß kann die in Verfahrensschritt (b) oxidierte, insbesondere oberflächenoxidierte, Aktivkohle eine Hydrophilie, bestimmt als Wasserdampfadsorptionsverhalten, aufweisen derart, dass in einem Partialdruckbereich $p/p_0$ von 0,1 bis 0,6 höchstens 100 %, insbesondere höchstens 99 %, vorzugsweise höchstens 98 %, bevorzugt höchstens 95 %, besonders bevorzugt höchstens 90 %, der maximalen Wasserdampfsättigungsbeladung der Aktivkohle erreicht ist.

- Weiterhin kann die in Verfahrensschritt (b) oxidierte, insbesondere oberflächenoxidierte, Aktivkohle eine Hydrophilie, bestimmt als Wasserdampfadsorptionsverhalten, aufweisen derart, dass in einem Partialdruckbereich $p/p_0$ von 0,1 bis 0,6 30 % bis 100 %, insbesondere 35 % bis 99 %, vorzugsweise 40% bis 98 %, bevorzugt 50 % bis 95 %, besonders bevorzugt 60 % bis 90 %, der maximalen Wasserdampfsättigungsbeladung der Aktivkohle erreicht ist.

Weiterführend kann im Speziellen zu der Hydrophilie der in Verfahrensschritt (b) oxidierten Aktivkohle ergänzend noch Folgendes angeführt werden:

- So kann es sich in Bezug auf die in Verfahrensschritt (b) oxidierte Aktivkohle im Rahmen der vorliegenden Erfindung derart verhalten, dass in Verfahrensschritt (b) die Oxidation, insbesondere Oberflächenoxidation, der in Verfahrensschritt (a) bereitgestellten bzw. hergestellten Aktivkohle mit der Maßgabe erfolgt, dass die oxidierte, insbesondere oberflächenoxidierte, Aktivkohle eine Hydrophilie, bestimmt als Wasserdampfadsorptionsverhalten, aufweist derart, dass bei einem Partialdruck $p/p_0$ von 0,6 mindestens 30 % der maximalen Wasserdampfadsorptionskapazität der Aktivkohle erschöpft bzw. genutzt ist.

- Insbesondere kann die in Verfahrensschritt (b) oxidierte, insbesondere oberflächenoxidierte, Aktivkohle eine Hydrophilie, bestimmt als Wasserdampfadsorptionsverhalten, aufweisen derart, dass bei einem Partialdruck $p/p_0$ von 0,6 mindestens mindestens 30 %, insbesondere mindestens 35 %, vorzugsweise mindestens 40 %, bevorzugt mindestens 50 %, besonders bevorzugt mindestens 60 %, der maximalen Wasserdampfadsorptionskapazität der Aktivkohle erschöpft und/oder genutzt ist.

- Zudem kann die in Verfahrensschritt (b) oxidierte, insbesondere oberflächenoxidierte, Aktivkohle eine Hydrophilie, bestimmt als Wasserdampfadsorptionsverhalten, aufweisen derart, dass bei einem Partialdruck $p/p_0$ von 0,6 höchstens 100 %, insbesondere höchstens 99 %, vorzugsweise höchstens 98 %, bevorzugt höchstens 95 %, besonders bevorzugt höchstens 90 %, der maximalen Wasserdampfadsorptionskapazität der Aktivkohle erschöpft und/oder genutzt ist.

- Gleichermaßen kann die in Verfahrensschritt (b) oxidierte, insbesondere oberflächenoxidierte, Aktivkohle eine Hydrophilie, bestimmt als Wasserdampfadsorptionsverhalten, aufweisen derart, dass bei einem Partialdruck $p/p_0$ von 0,6 30 % bis 100 %, insbesondere 35 % bis 99 %, vorzugsweise 40% bis 98 %, bevorzugt 50 % bis 95 %, besonders bevorzugt 60 % bis 90 %, der maximalen Wasserdampfadsorptionskapazität der Aktivkohle erschöpft und/oder genutzt ist.

- Zudem kann die in Verfahrensschritt (b) oxidierte, insbesondere oberflächenoxidierte, Aktivkohle eine Hydrophilie, bestimmt als Wasserdampfadsorptionsverhalten, aufweisen derart, dass in einem Partialdruckbereich $p/p_0$ von 0,1 bis 0,6 mindestens mindestens 30 %, insbesondere mindestens 35 %, vorzugsweise mindestens 40 %, bevorzugt mindestens 50 %, besonders bevorzugt mindestens 60 %, der maximalen Wasserdampfadsorptionskapazität der Aktivkohle erschöpft und/oder genutzt ist.

- Insbesondere kann es erfindungsgemäß vorgesehen sein, dass die in Verfahrensschritt (b) oxidierte, insbesondere oberflächenoxidierte, Aktivkohle eine Hydrophilie, bestimmt als Wasserdampfadsorptionsverhalten, aufweist derart, dass in einem Partialdruckbereich $p/p_0$ von 0,1 bis 0,6 höchstens 100 %, insbesondere höchstens 99 %, vorzugsweise höchstens 98 %, bevorzugt höchstens 95 %, besonders bevorzugt höchstens 90 %, der maximalen Wasserdampfadsorptionskapazität der Aktivkohle erschöpft und/oder genutzt ist.

- Erfindungsgemäß kann die in Verfahrensschritt (b) oxidierte, insbesondere oberflächenoxidierte, Aktivkohle eine Hydrophilie, bestimmt als Wasserdampfadsorptionsverhalten, aufweisen derart, dass in einem Partialdruckbereich $p/p_0$ von 0,1 bis 0,6 30 % bis 100 %, insbesondere 35 % bis 99 %, vorzugsweise 40% bis 98 %, bevorzugt 50 % bis 95 %, besonders bevorzugt 60 % bis 90 %, der maximalen Wasserdampfadsorptionskapazität der Aktivkohle erschöpft und/oder genutzt ist.

Zudem kann die in Verfahrensschritt (b) oxidierte Aktivkohle hinsichtlich der Hydrophilie auch folgende Eigenschaften aufweisen:

- Weiterhin kann die in Verfahrensschritt (b) oxidierte, insbesondere oberflächenoxidierte, Aktivkohle eine Hydrophilie, bestimmt als Wasserdampfadsorptionsverhalten, aufweisen derart, dass bei einem Partialdruck $p/p_0$ von 0,6 die von der Aktivkohle adsorbierte Wasserdampfmenge ($H_2O$-Volumen) $V_{ads(H2O)}$, bezogen auf das Gewicht der Aktivkohle, mindestens 200 $cm^3$/g, insbesondere mindestens 250 $cm^3$/g, vorzugsweise mindestens 300 $cm^3$/g, bevorzugt mindestens 325 $cm^3$/g, besonders bevorzugt mindestens 350 $cm^3$/g, beträgt.

- Zudem kann die in Verfahrensschritt (b) oxidierte, insbesondere oberflächenoxidierte, Aktivkohle eine Hydrophilie, bestimmt als Wasserdampfadsorptionsverhalten, aufweisen derart, dass in einem Partialdruck $p/p_0$ von 0,6 die von der Aktivkohle adsorbierte Wasserdampfmenge ($H_2O$-Volumen) $V_{ads(H2O)}$, bezogen auf das Gewicht der Aktivkohle, höchstens 1.000 $cm^3$/g, insbesondere höchstens 900 $cm^3$/g, vorzugsweise höchstens 800 $cm^3$/g, bevorzugt höchstens 700 $cm^3$/g, besonders bevorzugt höchstens 600 $cm^3$/g, beträgt.

- Erfindungsgemäß kann es insbesondere vorgesehen sein, dass die in Verfahrensschritt (b) oxidierte, insbesondere oberflächenoxidierte, Aktivkohle eine Hydrophilie, bestimmt als Wasserdampfadsorptionsverhalten, aufweist derart, dass in einem Partialdruck $p/p_0$ von 0,6 die von der Aktivkohle adsorbierte Wasserdampfmenge ($H_2O$-Volumen) $V_{ads(H2O)}$, bezogen auf das Gewicht der Aktivkohle, im Bereich von 200 $cm^3$/g bis 1.000 $cm^3$/g, insbesondere 250 $cm^3$/g bis 900 $cm^3$/g, vorzugsweise 300 $cm^3$/g bis 800 $cm^3$/g, bevorzugt 325 $cm^3$/g bis 700 $cm^3$/g, besonders bevorzugt 350 $cm^3$/g bis 600 $cm^3$/g, liegt.

Die vorstehend angeführten Werte des Wasserdampfadsorptionsverhaltens beziehen sich insbesondere auf die zugrundeliegende Wasserdampfadsorptionsisotherme der erfindungsgemäß in Verfahrensschritt (b) erhaltenen Aktivkohle.

Was in diesem Zusammenhang die Bestimmung des Wasserdampfadsorptionsverhaltens anbelangt, so erfolgt diese im Rahmen der vorliegenden Erfindung auf Basis der DIN 66135-1, wobei als zugrundeliegendes Adsorptiv bzw. Adsorbat Wasser bzw. Wasserdampf eingesetzt wird. In diesem Zusammenhang erfolgt die Bestimmung des Wasserdampfadsorptionsverhaltens statisch-volumetrisch bei einer Temperatur von 25 °C (298 Kelvin). Die Bestimmung des dem Wasserdampfadsorptionsverhalten zugrundeliegenden druckabhängigen Volumens an adsorbiertem Wasser bzw. adsorbiertem Wasserdampf $V_{ads}$(STP) erfolgt dabei bei unterschiedlichen bzw. variablen Umgebungsdrücken $p/p_0$ im Bereich von 0,0 bis 1,0, wobei $p_0$ den Druck unter Standardbedingungen (1.013,25 hPa) darstellt. Dabei bezieht sich das erfindungsgemäß herangezogene Wasserdampfadsorptionsverhalten auf die Adsorptionsisotherme der zugrundeliegenden Aktivkohle.

Für weitere Informationen und Ausführungen zur Wasserdampfadsorption kann auch verwiesen werden auf die Dissertationsschrift von *M. Neitsch, "Wasserdampf- und n-Butanadsorption an Aktivkohle - Mechanismus, Gleichgewicht und Dynamik der 1-Komponenten- und der Coadsorption", Fakultät für Maschinenbau, Verfahrens- und Energietechnik, Technische Universität Bergakademie Freiberg,* deren gesamter diesbezüglicher Inhalt, insbesondere im Hinblick auf die Ausführungen zur Adsorption von Wasserdampf bzw. Wasser an Aktivkohlen, hiermit durch Bezugnahme vollumfänglich eingeschlossen ist.

Das Wasserdampfadsorptionsverhalten, wie zuvor spezifiziert, fungiert dabei als Maß für die Hydrophilie bzw. Hydrophobie der erfindungsgemäß eingesetzten Aktivkohle, und zwar dahingehend, dass aufgrund der zuvor angeführten Werteangaben erfindungsgemäß in Verfahrensschritt (b) eine solche Aktivkohle erhalten und in den nachfolgenden Verfahrensschritten eingesetzt wird, welche insgesamt polar bzw. hydrophil (d.h. im Vergleich zur eingesetzten Ausgangsaktivkohle) ausgebildet ist und welche somit nach allgemeinem Sprachgebrauch insgesamt als hydrophil bezeichnet werden kann.

Erfindungsgemäß kann zudem die Oxidation, insbesondere Oberflächenoxidation, der Aktivkohle in Verfahrensschritt (b) durchgeführt werden derart, dass die auf diese Weise erhaltene oxidierte, insbesondere oberflächenoxidierte, Aktivkohle einen Gehalt an sauerstoffhaltigen Gruppen, berechnet und/oder ausgedrückt als Gehalt an flüchtigen Bestandteilen ("fB") und bezogen auf das Trockengewicht der oxidierten Aktivkohle, von mindestens 1 Gew.-%, insbesondere mindestens 2 Gew.-%, vorzugsweise mindestens 3 Gew.-%, bevorzugt mindestens 4 Gew.-% und/oder im Bereich von 1 Gew.-% bis 30 Gew.-%, insbesondere 1,5 Gew.-% bis 25 Gew.-%, vorzugsweise 2 Gew.-% bis 20 Gew.-%, bevorzugt 3 Gew.-% bis 15 Gew.-%, aufweist. In diesem Zusammenhang kann der Gehalt an sauerstoffhaltigen funktionellen Gruppen durch Temperatur und/oder Zeitdauer und/oder Art und/oder Konzentration an Oxidationsmittel eingestellt werden.

In diesem Zusammenhang kann im Rahmen des erfindungsgemäßen Verfahrens somit eine Maßschneiderung auch der Oxidation der Aktivkohle erfolgen, und zwar auch im Hinblick auf die Optimierung der nachfolgenden Ausrüstung mit der katalytisch aktiven Komponente.

Im Rahmen der erfindungsgemäßen Verfahrensführung kann dabei derart vorgegangen werden, dass der Sauerstoffgehalt der an ihrer Oberfläche oxidierten Aktivkohle im Vergleich zu der eingesetzten Ausgangsaktivkohle - welche im Allgemeinen einen Sauerstoffgehalt von weniger als 1 Gew.-%, ausgedrückt als Gehalt an flüchtigen Bestandteilen ("fB") und bezogen auf das Trockengewicht der Ausgangsaktivkohle, aufweist - signifikant erhöht wird. Der angegebene Sauerstoffgehalt bezieht sich dabei insbesondere auf die in Verfahrensschritt (b) oxidierte Aktivkohle vor Durchführung der nachfolgend vorgesehenen Reduktion gemäß Verfahrensschritt (d). Der Gehalt an flüchtigen Bestandteilen ("fB") fungiert dabei im Allgemeinen als Maß für die Oxidation und bezieht sich somit insbesondere auf die durch die Oxidation gebildeten Oberflächenoxide. Insbesondere kann der Gehalt an flüchtigen Bestandteilen auf Basis der ISO 562:1981 bestimmt werden. Insbesondere kann der Gehalt an flüchtigen Bestandteilen ("fB") an einer zuvor getrockneten, an ihrer Oberfläche oxidierten Aktivkohle bei einer entsprechenden Erwärmung für einen Zeitraum von 7 Minuten auf 900 °C unter inerten Bedingungen bestimmt werden.

Durch die zweckgerichtete Bildung und Einstellung des Gehalts an sauerstoffhaltigen funktionellen Gruppen kann die Aufnahmemenge der nachfolgend insbesondere in Verfahrensschritt (c) eingesetzten katalytisch aktiven Komponente bzw. des diesbezüglichen Präkursors vorgegeben bzw. beeinflusst werden. In diesem Zusammenhang ist der Fachmann jederzeit in der Lage, die diesbezüglichen Eigenschaften auszuwählen und derart aufeinander abzustimmen, dass die gewünschte Beladung mit der katalytisch aktiven Komponente im Sinne der vorliegenden Erfindung resultiert.

Im Allgemeinen kann die Oxidation in einer Gasatmosphäre oder nasschemisch (insbesondere bei der Verwendung von Säuren) erfolgen.

Erfindungsgemäß kann in Verfahrensschritt (b) die Oxidation, insbesondere Oberflächenoxidation, der Aktivkohle unter Verwendung mindestens eines Oxidationsmittels durchgeführt werden. Dabei kann das Oxidationsmittel ausgewählt werden aus der Gruppe von Sauerstoff, Ozon, anorganischen oder organischen Oxiden und Peroxiden, insbesondere Wasserstoffperoxid, anorganischen oder organischen Säuren und Persäuren, insbesondere Mineralsäuren, und deren Kombinationen.

Insbesondere ist das Oxidationsmittel ausgewählt aus der Gruppe von Sauerstoff, Wasserstoffperoxid ($H_2O_2$), Stickoxiden (bevorzugt NO und/oder $NO_2$), Salzsäure (HCl), Salpetersäure ($HNO_3$), Schwefelsäure ($H_2SO_4$), Perchlorsäure ($HClO_4$), Phosphorsäure ($H_3PO_4$) und deren Kombinationen.

Weiterhin bevorzugt ist das Oxidationsmittel ausgewählt aus der Gruppe von Sauerstoff ($O_2$), Salzsäure (HCl), Salpetersäure ($HNO_3$), Schwefelsäure ($H_2SO_4$), Perchlorsäure ($HClO_4$), Phosphorsäure ($H_3PO_4$), Wasserstoffperoxid ($H_2O_2$) und deren Kombinationen, besonders bevorzugt aus der Gruppe von Sauerstoff ($O_2$), Salzsäure (HCl) und Salpetersäure ($HNO_3$) und deren Kombinationen, ganz besonders bevorzugt aus der Gruppe von Sauerstoff ($O_2$) und Salpetersäure ($HNO_3$) und deren Kombinationen.

In Bezug auf die Verwendung von Sauerstoff kann insbesondere auf Luftsauerstoff bzw. synthetische Luft zurückgegriffen werden.

Im Allgemeinen kann im Rahmen der vorliegenden Erfindung in Verfahrensschritt (b) die Oxidation, insbesondere Oberflächenoxidation, der Aktivkohle unter Erwärmen erfolgen, insbesondere wobei die Oberflächenoxidation bei solchen Temperaturen erfolgen kann, dass eine Reaktion des Oxidationsmittels mit der Aktivkohle unter Ausbildung von sauerstoffhaltigen funktionellen Gruppen an der Oberfläche der Aktivkohle erfolgt. Die Oxidation, insbesondere Oberflächenoxidation, der Aktivkohle kann dabei bei einer Temperatur im Bereich von -20 °C bis 1.000 °C, insbesondere im Bereich von 0 °C bis 800 °C, vorzugsweise im Bereich von 5 °C bis 700 °C, bevorzugt im Bereich von 10 °C bis 600 °C, besonders bevorzugt im Bereich von 20 °C bis 550 °C, durchgeführt werden. In diesem Zusammenhang kann die Oxidation, insbesondere Oberflächenoxidation, der Aktivkohle auch für eine Zeitdauer von bis zu 48 h, insbesondere bis zu 24 h, bevorzugt bis zu 12 h, durchgeführt werden. Erfindungsgemäß kann die Oxidation, insbesondere Oberflächenoxidation, der Aktivkohle beispielsweise für eine Zeitdauer im Bereich von 1 Minute bis 1.000 Minuten, insbesondere im Bereich von 5 Minuten bis 800 Minuten, bevorzugt im Bereich von 10 Minuten bis 600 Minuten, durchgeführt werden.

Erfindungsgemäß kann die Oxidation, insbesondere Oberflächenoxidation, der Aktivkohle unter Ausbildung einer hydrophilen Oberfläche der Aktivkohle durchgeführt werden. Dabei kann die Oxidation, insbesondere Oberflächenoxidation, der Aktivkohle unter Ausbildung von sauerstoffhaltigen funktionellen Gruppen an der Oberfläche der Aktivkohle durchgeführt werden. Zudem kann die Oxidation, insbesondere Oberflächenoxidation, der Aktivkohle zu einer Ausbildung von sauerstoffhaltigen funktionellen Gruppen insbesondere an der Oberfläche der Aktivkohle führen. In diesem Zusammenhang können die sauerstoffhaltigen funktionellen Gruppen ausgewählt sein aus sauren und basischen sauerstoffhaltigen funktionellen Gruppen sowie deren Kombinationen, insbesondere sauren und basischen Oberflächenoxiden. Insbesondere können die sauerstoffhaltigen funktionellen Gruppen ausgewählt sein aus Hydroxyl-, Carboxyl-, Carbonyl-, Anhydrid-, Lacton-, Chinon-, Pyron-, Chromen- und Ethergruppen sowie deren Kombinationen, insbesondere aus der Gruppe von Hydroxyl-, Carboxyl-, Carbonyl- und Ethergruppen sowie deren Kombinationen.

Gemäß einer ersten Ausführungsform der vorliegenden Erfindung kann in Verfahrensschritt (b) die Oxidation, insbesondere Oberflächenoxidation, der Aktivkohle unter Verwendung eines Oxidationsmittels in Form von Sauerstoff ($O_2$) durchgeführt werden. Somit kann in Verfahrensschritt (b) die Oxidation, insbesondere Oberflächenoxidation, unter Verwendung von Sauerstoff ($O_2$) als Oxidationsmittel durchgeführt werden. In diesem Zusammenhang kann die Oxidation, insbesondere Oberflächenoxidation, der Aktivkohle bei einer Temperatur im Bereich von 100 °C bis 1.000 °C, insbesondere im Bereich von 200 °C bis 800 °C, vorzugsweise im Bereich von 300 °C bis 700 °C, bevorzugt im Bereich von 350 °C bis 600 °C, besonders bevorzugt im Bereich von 400 °C bis 550 °C, durchgeführt werden. Insbesondere kann die Oxidation, insbesondere Oberflächenoxidation, der Aktivkohle für eine Zeitdauer von bis zu 10 h, insbesondere bis zu 8 h, bevorzugt bis zu 6 h, durchgeführt werden, wobei die Oxidation, insbesondere Oberflächenoxidation, der Aktivkohle für eine Zeitdauer im Bereich von 30 Minuten bis 1.000 Minuten, insbesondere im Bereich von 60 Minuten bis 800 Minuten, bevorzugt im Bereich von 100 Minuten bis 600 Minuten, durchgeführt wird. Diesbezüglich kann insbesondere im Rahmen einer Luftoxidation bzw. Oxidation in Gasatmosphäre vorgegangen werden.

Demgegenüber kann erfindungsgemäß gemäß einer weiteren Ausführungsform auch derart vorgegangen werden, dass in Verfahrensschritt (b) die Oxidation, insbesondere Oberflächenoxidation, der Aktivkohle unter Verwendung eines Oxidationsmittels durchgeführt wird, wobei das Oxidationsmittel eine Mineralsäure, wie z.B. Salpetersäure ($HNO_3$), ist. Diesbezüglich kann insbesondere nasschemisch verfahren werden. In diesem Zusammenhang kann es erfindungsgemäß somit vorgesehen sein, dass in Verfahrensschritt (b) die Oxidation, insbesondere Oberflächenoxidation, unter Verwendung einer Mineralsäure, insbesondere Salpetersäure ($HNO_3$), als Oxidationsmittel durchgeführt wird. Diesbezüglich kann die Oxidation, insbesondere Oberflächenoxidation, der Aktivkohle bei einer Temperatur im Bereich von -20 °C bis 250 °C, insbesondere im Bereich von 0 °C bis 200 °C, vorzugsweise im Bereich von 5 °C bis 175 °C, bevorzugt im Bereich von 10 °C bis 150 °C, besonders bevorzugt im Bereich von 15 °C bis 125 °C, durchgeführt werden. Zudem kann die Oxidation, insbesondere Oberflächenoxidation, der Aktivkohle für eine Zeitdauer von bis zu 6 h, insbesondere bis zu 5 h, bevorzugt bis zu 4 h, durchgeführt werden. Gleichermaßen kann die Oxidation, insbesondere Oberflächenoxidation, der Aktivkohle für eine Zeitdauer im Bereich von 5 Minuten bis 500 Minuten, insbesondere im Bereich von 10 Minuten bis 400 Minuten, bevorzugt im Bereich von 20 Minuten bis 300 Minuten, durchgeführt werden.

Gemäß dieser Ausführungsform der vorliegenden Erfindung kann die Mineralsäure, insbesondere Salpetersäure ($HNO_3$), eine 10%ige (Vol.-%) bis 75%ige, insbesondere 15%ige bis 60%ige, vorzugsweise 20%ige bis 55%ige, bevorzugt eine etwa 25%ige, besonders bevorzugt eine etwa 50%ige, Säure sein.

Zudem kann es erfindungsgemäß vorgesehen sein, dass in Verfahrensschritt (b) im Anschluss an die Oxidation, insbesondere Oberflächenoxidation, und insbesondere vor Verfahrensschritt (c) eine Aufreinigung und/oder Trocknung der oxidierten Aktivkohle erfolgt. Dabei kann die Aufreinigung mittels mindestens eines Waschvorgangs in einer Flüssigkeit, insbesondere Wasser, erfolgen. Zudem kann die Trocknung unter Erwärmung der oxidierten, insbesondere oberflächenoxidierten, Aktivkohle, insbesondere auf Temperaturen im Bereich von 40 °C bis 200 °C, insbesondere 50 °C bis 150 °C, vorzugsweise 60 °C bis 120 °C, erfolgen. Insbesondere kann die Trocknung unter reduziertem (Luft-)Druck und/oder im Vakuum durchgeführt werden und/oder insbesondere wobei die Trocknung bei einem (Luft-)Druck im Bereich von 0,01 Pa bis 100 Pa, insbesondere 0,1 Pa bis 10 Pa, erfolgt.

Im Folgenden wird nunmehr Verfahrensschritt (c) mit der Ausrüstung der zuvor oxidierten Aktivkohle mit der katalytisch aktiven Komponente bzw. mit dem diesbezüglichen Präkursor weiterführend beschrieben:

Im Allgemeinen kann in Verfahrensschritt (c) die Ausrüstung der in Verfahrensschritt (b) oxidierten, insbesondere oberflächenoxidierten, Aktivkohle bzw. des Katalysatorträgers durch Aufbringen und/oder Inkontaktbringen, vorzugsweise Fixierung, der katalytisch aktiven Komponente auf dem Katalysatorträger erfolgen.

Im Allgemeinen kann die katalytisch aktive Komponente mindestens ein Metall, insbesondere in Form einer Metallverbindung, vorzugsweise in Form einer ionischen Metallverbindung, und/oder insbesondere in elementarer Form, aufweisen bzw. hieraus bestehen.

Erfindungsgemäß ist es vorgesehen, dass die katalytisch aktive Komponente mindestens ein Metall, ausgewählt aus der Gruppe von Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd und Pt, insbesondere Fe, Bi, V, Cu, Pb, Zn, Ag, Sn, Pd, Pt, Ru und Ni, vorzugsweise Fe, Bi, V, Cu, Pt, Ru und Pb, bevorzugt Pd, Pt und Ru, besonders bevorzugt Pd und Pt, aufweist. Die katalytisch aktive Komponente kann in Verfahrensschritt (c), insbesondere in Form eines Präkursors (Vorstufe), eingesetzt werden.

Insbesondere kann es erfindungsgemäß vorgesehen sein, dass der Präkursor der katalytisch aktiven Komponente derart ausgebildet bzw. beschaffen ist, dass der Präkursor durch die in Verfahrensschritt (d) durchgeführte Reduktion in die katalytisch aktive Komponente überführt bzw. umgewandelt wird. Insbesondere kann der Präkursor der katalytisch aktiven Komponente eine oxidierte Form der katalytisch aktiven Komponente darstellen bzw. hiervon gebildet sein.

Im Allgemeinen kann der Präkursor der katalytisch aktiven Komponente mindestens eine vorzugsweise in einem insbesondere wässrigen und/oder insbesondere wässrig-basierten Löse- und/oder Dispergiermittel lösbare und/oder dissoziierbare Metallverbindung, vorzugsweise auf Basis mindestens eines zuvor definierten Metalls, aufweisen.

Zudem kann der Präkursor der katalytisch aktiven Komponente mindestens eine anorganische oder organische Metallverbindung, vorzugsweise auf Basis mindestens eines zuvor definierten Metalls, insbesondere ein Metallsalz oder Metalloxid, vorzugsweise ein Metallsalz, aufweisen.

Insbesondere kann der Präkursor der katalytisch aktiven Komponente mindestens ein organisches oder anorganisches Metallsalz aufweisen, vorzugsweise auf Basis mindestens eines zuvor definierten Metalls, wobei das Salz ausgewählt ist aus der Gruppe von Halogenidsalzen, Hydroxiden, Aminen, Sulfaten, Sulfiden, Sulfiten, Nitraten, Nitriten, Phosphaten, Phosphiden, Phosphiten, Carbamaten, Alkoholaten und Carbonsäuresalzen, insbesondere Halogenidsalzen, Nitraten, Hydroxiden und Carbonsäuresalzen.

Zudem kann der Präkursor der katalytisch aktiven Komponente mindestens ein Metallhalogenid, vorzugsweise auf Basis mindestens eines zuvor definierten Metalls, insbesondere ein Fluorid, Chlorid, Bromid oder Iodid, vorzugsweise Chlorid, und/oder mindestens ein Carbonsäuresalz eines Metalls, vorzugsweise auf Basis mindestens eines zuvor definierten Metalls, insbesondere Acetat, aufweisen.

Im Allgemeinen kann der Präkursor der katalytisch aktiven Komponente mindestens eine Metallverbindung, ausgewählt aus der Gruppe von Palladiumchlorid, Palladiumnitrat, Hexachlorplatinsäure, Platinnitrat, Tetraaminoplatindihydroxid, Rutheniumchlorid, Kupferchlorid, Eisenchlorid, Vanadiumchlorid und Bleichlorid, insbesondere Palladiumchlorid, Palladiumnitrat, Hexachlorplatinsäure, Platinnitrat und Tetraaminoplatindihydroxid, aufweisen.

Insbesondere kann der Präkursor Palladiumchlorid, Palladiumnitrat, Hexachlorplatinsäure, Platinnitrat und/oder Tetraaminplatindihydroxid aufweisen bzw. hieraus bestehen.

Erfindungsgemäß kann als Präkursor in bevorzugter Weise $H_2PdCl_4$ und/oder $Pd(NO_3)_2$ eingesetzt werden (Palladiumpräkursor). Erfindungsgemäß kann als Präkursor gleichermaßen in bevorzugter Weise $H_2(PtCl_e)$, $(NH_3)_4Pt(OH)_2$ und/oder $Pt(NO_3)_2$ eingesetzt werden (Platinpräkursor).

Insbesondere kann der Präkursor der katalytisch aktiven Komponente in Form einer insbesondere wässrigen und/oder insbesondere wässrig-basierten Lösung und/oder in Dispersionsform (Dispersion) eingesetzt werden, insbesondere zu Zwecken der Ausrüstung und/oder Beladung und/oder Beschichtung und/oder Imprägnierung der oxidierten, insbesondere oberflächenoxidierten, Aktivkohle.

In diesem Zusammenhang kann die Lösung bzw. Dispersionsform (Dispersion) als Löse- bzw. Dispergiermittel Wasser umfassen. Zudem kann die Lösung bzw. Dispersionsform (Dispersion) mindestens eine organische oder anorganische Säure oder Base, vorzugsweise Salzsäure, enthalten.

Zudem kann der Präkursor der katalytisch aktiven Komponente in der Lösung bzw. Dispersionsform (Dispersion) zumindest im Wesentlichen kristall- und/oder kristallitfrei vorliegen. Insbesondere kann der Präkursor der katalytisch aktiven Komponente in der Lösung bzw. Dispersionsform (Dispersion) zumindest im Wesentlichen gelöst, insbesondere zumindest im Wesentlichen dissoziiert, sein.

Im Allgemeinen kann die Lösung bzw. Dispersionsform (Dispersion) den Präkursor der katalytisch aktiven Komponente in Mengen im Bereich von 0,01 Gew.-% bis 80 Gew.-%, insbesondere 0,1 Gew.-% bis 60 Gew.-%, vorzugsweise 1 Gew.-% bis 50 Gew.-%, bevorzugt 2 Gew.-% bis 40 Gew.-%, bezogen auf die Lösung und/oder Dispersionsform (Dispersion) und berechnet als Metall, enthalten.

Der Begriff "Lösung" bzw. "Dispersionsform (Dispersion)", wie er in diesem Zusammenhang im Rahmen der vorliegenden Erfindung verwendet wird, ist dabei insbesondere derart zu verstehen, dass bei den zugrundeliegenden Mengen bzw. Konzentrationen der Präkursor der katalytisch aktiven Komponente zumindest im Wesentlichen vollständig in dem zugrundeliegenden Löse- bzw. Dispergiermittel gelöst bzw. dissoziiert bzw. dispergiert vorliegt. Beispielsweise kann es im Rahmen der vorliegenden Erfindung zu Zwecken der Ausrüstung bzw. Beladung der Aktivkohle mit der katalytisch aktiven Komponente vorgesehen sein, dass die erfindungsgemäß eingesetzte Aktivkohle mit bzw. in einer entsprechenden Lösung bzw. Dispersion (des Präkursors) der katalytisch aktiven Komponente eingetaucht bzw. getränkt wird. Auf diese Weise wird erfindungsgemäß insbesondere gewährleistet, dass die zugrundeliegende Lösung bzw. Dispersionsform (Dispersion) zumindest im Wesentlichen das gesamte Porensystem der Aktivkohle ausfüllt, was zu einer homogenen Beladung der Aktivkohle mit der katalytisch aktiven Komponente führt.

Im Allgemeinen kann erfindungsgemäß in Verfahrensschritt (c) die Ausrüstung der oxidierten, insbesondere oberflächenoxidierten, Aktivkohle mit der katalytisch aktiven Komponente, insbesondere mit dem Präkursor der katalytisch aktiven Komponente, ein Aufbringen und/oder Inkontaktbringen, vorzugsweise eine Fixierung, der oxidierten, insbesondere oberflächenoxidierten, Aktivkohle mit der katalytisch aktiven Komponente, insbesondere mit dem Präkursor der katalytisch aktiven Komponente, umfassen. Insbesondere kann das Aufbringen bzw. Inkontaktbringen, vorzugsweise die Fixierung, durch Eintauchen und/oder Tränken und/oder Benetzen und/oder Bedecken und/oder Beschichten und/oder Auf- und/oder Besprühen der oxidierten, insbesondere oberflächenoxidierten, Aktivkohle in bzw. mit der katalytisch aktiven Komponente, insbesondere in bzw. mit dem Präkursor der katalytisch aktiven Komponente, erfolgen. Das Aufbringen und/oder Inkontaktbringen kann dabei unter Energieeintrag, insbesondere mittels Rütteln und/oder mittels Ultraschalleintrag, erfolgen. In diesem Zusammenhang kann die katalytisch aktive Komponente, insbesondere der Präkursor der katalytisch aktiven Komponente, in Form einer Lösung und/oder Dispersionsform (Dispersion) eingesetzt werden, wie zuvor angeführt.

Zudem kann es insbesondere im Anschluss an das Aufbringen und/oder Inkontaktbringen und/oder insbesondere zu Zwecken der Ausrüstung der oxidierten, insbesondere oberflächenoxidierten, Aktivkohle mit der katalytisch aktiven Komponente, insbesondere mit dem Präkursor der katalytisch aktiven Komponente, vorgesehen sein, dass überschüssige Mengen an katalytisch aktiver Komponente, insbesondere überschüssige Mengen des Präkursors der katalytisch aktiven Komponente, vorzugsweise überschüssige Mengen an Lösung und/oder Dispersionsform (Dispersion) der katalytisch aktiven Komponente, bevorzugt überschüssige Mengen an Lösung und/oder Dispersionsform (Dispersion) des Präkursors der katalytisch aktiven Komponente, von der Aktivkohle bzw. dem Katalysatorsystem entfernt und/oder abgetrennt werden.

In diesem Zusammenhang kann insbesondere im Anschluss an das Aufbringen bzw. Inkontaktbringen und/oder insbesondere zu Zwecken der Ausrüstung der oxidierten, insbesondere oberflächenoxidierten, Aktivkohle mit der katalytisch aktiven Komponente, insbesondere mit dem Präkursor der katalytisch aktiven Komponente, eine Aufreinigung und/oder Trocknung der erhaltenen Aktivkohle erfolgen. In diesem Zusammenhang kann die Aufreinigung bzw. Trocknung mittels mindestens eines Waschvorgangs in einer Flüssigkeit, insbesondere Wasser, erfolgen. Zudem kann die Aufreinigung bzw. Trocknung unter Erwärmung der mit der katalytischen Komponente ausgerüsteten Aktivkohle, insbesondere auf Temperaturen im Bereich von 40 °C bis 200 °C, insbesondere 50 °C bis 150 °C, vorzugsweise 60 °C bis 120 °C, erfolgen. Zudem kann die Aufreinigung bzw. Trocknung unter reduziertem (Luft-)Druck und/oder im Vakuum durchgeführt werden. Zudem kann die Aufreinigung und/oder Trocknung bei einem (Luft-)Druck im Bereich von 100 Pa bis 0,01 Pa, insbesondere 10 Pa bis 0,1 Pa, durchgeführt werden. Die Entfernung von Löse- bzw. Dispergiermittel bzw. das Trocknen der Aktivkohle führt insbesondere zur Ausbildung einer getrockneten bzw. partikulären Form des Präkursors der katalytisch aktiven Komponente, welche dann insbesondere in kristalliner Form an bzw. auf den Oberflächen der als Katalysatorträger eingesetzten Aktivkohle vorliegt.

Im Allgemeinen ist es im Rahmen des erfindungsgemäßen Verfahrens vorgesehen, dass in Verfahrensschritt (c) sowohl die äußeren als auch die inneren Oberflächen, insbesondere die Mikro-, Meso- und/oder Makroporen, der oxidierten, insbesondere oberflächenoxidierten, Aktivkohle mit der katalytisch aktiven Komponente ausgerüstet, insbesondere beladen und/oder beschichtet und/oder imprägniert, werden, und zwar insbesondere in Form des entsprechenden Präkursors. Hierdurch kann eine hohe Beladungsmenge der katalytisch aktiven Komponente realisiert werden.

Nachfolgend wird Verfahrensschritt (d) mit der Reduktion der in Verfahrensschritt (c) erhaltenen und mit der katalytisch aktiven Komponente, insbesondere mit dem Präkursor der katalytisch aktiven Komponente, ausgerüsteten oxidierten, insbesondere oberflächenoxidierten, Aktivkohle näher beschrieben:

Was die erfindungsgemäß in Verfahrensschritt (d) durchgeführte Reduktion der in Verfahrensschritt (c) erhaltenen und mit der katalytisch aktiven Komponente, insbesondere mit dem Präkursor der katalytisch aktiven Komponente, ausgerüsteten, oxidierten, insbesondere oberflächenoxidierten, Aktivkohle anbelangt, so führt diese - ohne sich auf diese Theorie beschränken zu wollen - zum einen insbesondere zu einer zumindest teilweisen Reduktion der in der Aktivkohle ein- bzw. aufgebrachten katalytisch aktiven Komponente bzw. des diesbezüglichen Präkursors. Insbesondere kann auf diese Weise die katalytisch aktive Komponente bzw. der diesbezügliche Präkursor bzw. die zugrundeliegende Metallverbindung bzw. das zugrundeliegende Metall reduziert werden, insbesondere sofern die katalytisch aktive Komponente bzw. der diesbezügliche Präkursor in oxidierter Form bzw. in Form von Salzen, Ionen oder dergleichen vorliegt. Die Reduktionsbehandlung kann somit allgemein auch vor dem Hintergrund einer Katalysatoraktivierung und/oder Überführung des Katalysators bzw. der katalytisch aktiven Komponente bzw. des diesbezüglichen Präkursors in eine aktive Form durchgeführt werden, insbesondere durch Veränderung und/oder Verringerung der Oxidationszahl des Metalls der katalytisch aktiven Komponente. Die Reduktionsbehandlung kann somit insbesondere vor dem Hintergrund der Aktivierung der katalytisch aktiven Komponente bzw. des diesbezüglichen Präkursors durchgeführt werden.

Die Reduktionsbehandlung gemäß Verfahrensschritt (d) kann insbesondere im Hinblick auf ein Metall, insbesondere Edelmetall, der katalytisch aktiven Komponente bzw. des diesbezüglichen Präkursors, welches beispielsweise bei der Ausrüstung der Aktivkohle mit der katalytisch aktiven Komponente bzw. dem diesbezüglichen Präkursor in Verfahrensschritt (c) nicht in der Oxidationsstufe Null bzw. in Form einer Verbindung, insbesondere in Form eines Salzes, eingesetzt wird bzw. vorliegt, durchgeführt werden derart, dass eine entsprechende Überführung des Metalls bzw. Edelmetalls in die elementare Form bzw. in die Oxidationsstufe Null erfolgt, insbesondere so dass auf diese Weise eine Katalysatoraktivierung bzw. eine Überführung in die katalytisch aktive Form realisiert bzw. durchgeführt wird.

Weiterhin kann die Reduktionsbehandlung gemäß Verfahrensschritt (d) - ohne sich auf diese Theorie beschränken zu wollen - zu einer zumindest teilweisen Entfernung bzw. Reduktion der insbesondere sauerstoffhaltigen funktionellen Gruppen auf der Oberfläche der Aktivkohle bzw. des diesbezüglichen Porensystems der Aktivkohle (Oberflächenreduktion) führen. In Verfahrensschritt (d) kann somit insbesondere eine Oberflächenreduktion der mit der katalytisch aktiven Komponente bzw. dem diesbezüglichen Präkursor ausgerüsteten oxidierten Aktivkohle durchgeführt werden. Hierdurch kann eine neutrale Oberfläche bzw. eine Neutralisierung des Katalysatorträgers bzw. der diesbezüglichen Aktivkohle und somit des Katalysatorsystems durchgeführt werden.

Das auf diese Weise behandelte Katalysatorsystem nach der Erfindung bzw. die diesbezügliche Aktivkohle weist folglich insbesondere auch eine verringerte Eigenreaktion infolge des mit der Reduktionsbehandlung einhergehenden verringerten Gehalts an funktionellen Gruppen an der diesbezüglichen Oberfläche auf, was der katalytischen Eigenschaft insgesamt zuträglich ist.

Gleichermaßen wird - ohne sich auf diese Theorie beschränken zu wollen - auf Basis der durchgeführten Reduktionsbehandlung die Hydrophilie der Aktivkohle und somit des Katalysatorsystems insgesamt verringert bzw. der Gehalt an polaren Gruppen vermindert, was das Eindring- bzw. Diffusionsverhalten von insbesondere hydrophoben bzw. apolaren Edukten bzw. aus der katalytischen Reaktion entstammenden Produkten insgesamt verbessert.

Im Allgemeinen wird in Verfahrensschritt (d) die Reduktion als Gasphasenreduktion durchgeführt.

Insbesondere kann es erfindungsgemäß vorgesehen sein, dass in Verfahrensschritt (d) die Reduktion bei einer Temperatur im Bereich von 120 °C bis 150 °C, weiter bevorzugt im Bereich von 130 °C bis 145 °C, durchgeführt wird.

Erfindungsgemäß kann in Verfahrensschritt (d) die Reduktion für eine Zeitdauer im Bereich von 0,05 h bis 48 h, insbesondere im Bereich von 0,1 h bis 36 h, vorzugsweise im Bereich von 0,5 h bis 24 h, bevorzugt im Bereich von 1 h bis 12 h, durchgeführt werden.

Nachfolgend wird nunmehr die Reduktionsbehandlung unter Verwendung eines gasförmigen Reduktionsmittels weiterführend beschrieben, wobei diese Ausführungsform erfindungsgemäß bevorzugt ist.

- In diesem Zusammenhang kann es erfindungsgemäß vorgesehen sein, dass in Verfahrensschritt (d) die Reduktion des Katalysatorsystems unter Verwendung mindestens eines gasförmigen Reduktionsmittels, insbesondere gasförmigen Reduktionsmittel, vorzugsweise Wasserstoff, erfolgt.

- Diesbezüglich kann in Verfahrensschritt (d) die Reduktion in einer das Reduktionsmittel, insbesondere Wasserstoff, enthaltenden Atmosphäre, insbesondere Inertatmosphäre, vorzugsweise Stickstoffatmosphäre, erfolgen. In diesem Zusammenhang kann die Atmosphäre das Reduktionsmittel, insbesondere Wasserstoff, in Mengen im Bereich von 0,1 Vol.-% bis 20 Vol.-%, insbesondere im Bereich von 0,5 Vol.-% bis 10 Vol.-%, vorzugsweise im Bereich von 2 Vol.-% bis 8 Vol.-%, bezogen auf das Volumen der Atmosphäre, enthalten.

- Weiterhin kann in Verfahrensschritt (d) die Reduktion bei einer Temperatur im Bereich von im Bereich von 50 °C bis 300 °C, insbesondere im Bereich von 100 °C bis 250 °C, vorzugsweise im Bereich von 110 °C bis 200 °C, bevorzugt im Bereich von 115 °C bis 160 °C, besonders bevorzugt im Bereich von 120 °C bis 150 °C, ganz besonders bevorzugt im Bereich von 130 °C bis 145 °C, durchgeführt werden.

- Weiterhin kann in Verfahrensschritt (d) die Reduktion bei einem Volumenstrom der das Reduktionsmittel enthaltenden Atmosphäre im Bereich von 5 l/h bis 1.000 l/h, insbesondere im Bereich von 10 l/h bis 500 l/h, vorzugsweise im Bereich von 50 l/h bis 300 l/h, erfolgen.

- Erfindungsgemäß kann es in diesem Zusammenhang auch vorgesehen sein, dass in Verfahrensschritt (d) die Reduktion unter Verwendung eines gasförmigen Reduktionsmittels für eine Zeitdauer im Bereich von 0,1 h bis 36 h, insbesondere im Bereich von 0,2 h bis 24 h, vorzugsweise im Bereich von 0,5 h bis 12 h, durchgeführt wird.

Im Rahmen der vorliegenden Erfindung erfolgt die in Verfahrensschritt (d) durchgeführte Reduktion somit unter Verwendung mindestens eines gasförmigen Reduktionsmittels.

Insgesamt wird in bzw. nach Durchführung von Verfahrensschritt (d) insbesondere auch ein solches erfindungsgemäßes Katalysatorsystem erhalten, wie es nachfolgend in dem zweiten Aspekt der vorliegenden Erfindung beschrieben bzw. definiert ist, so dass die dortigen Ausführungen für den vorliegenden Aspekt entsprechend gelten.

Insgesamt kann in Verfahrensschritt (d) ein Katalysatorsystem nach der Erfindung erhalten werden, wobei das Katalysatorsystem mindestens eine an einem Katalysatorträger aufgebrachte und/oder fixierte katalytisch aktive Komponente aufweist, wobei die katalytisch aktive Komponente mindestens ein Metall umfasst und/oder hieraus besteht und wobei der Katalysatorträger in Form von und/oder auf Basis von Aktivkohle ausgebildet ist, wobei der Katalysatorträger in Form einer kugelförmigen Aktivkohle vorliegt, wobei die Aktivkohle (d.h. die den Katalysatorträger ausbildende Aktivkohle)

(i) ein Gesamtporenvolumen $V_{total}$ nach Gurvich im Bereich von 0,8 cm$^3$/g bis 3,9 cm$^3$/g aufweist, wobei mindestens 50 % des Gesamtporenvolumens nach Gurvich durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind, und

(ii) eine spezifische BET-Oberfläche $S_{BET}$ im Bereich von 1.000 m$^2$/g bis 3.000 m$^2$/g aufweist, jedoch mit der Maßgabe, dass das Verhältnis (Quotient; Q) von Gesamtporenvolumen $V_{total}$ nach Gurvich zu spezifischer BET-Oberfläche $S_{BET}$ entsprechend der Gleichung $Q = V_{total} / S_{BET}$ mindestens $0,5 \cdot 10^{-9}$ m beträgt.

Im Rahmen der vorliegenden Erfindung wird in Verfahrensschritt (d) das Katalysatorsystem erhalten, wobei das Katalysatorsystem mindestens eine an einem Katalysatorträger aufgebrachte bzw. fixierte katalytisch aktive Komponente aufweist, wobei die katalytisch aktive Komponente mindestens ein Metall umfasst und/oder hieraus besteht und wobei der Katalysatorträger in Form von bzw. auf Basis von Aktivkohle ausgebildet ist, wobei der Katalysatorträger in Form einer kugelförmigen Aktivkohle vorliegt.

Erfindungsgemäß weist das Katalysatorsystem eine Aktivität, bestimmt als prozentualer Dispersionsgrad (Dispersionsgrad D, Metalldispersität) der katalytisch aktiven Komponente, insbesondere des Metalls der katalytisch aktiven Komponente, auf dem Katalysatorträger, gemessen durch Chemisorption mittels dynamischem Strömungsverfahren gemäß DIN 66136-3:2007-01, im Bereich von 15 % bis 90 %, insbesondere im Bereich von 20 % bis 80 %, vorzugsweise im Bereich von 25 % bis 70 %, bevorzugt im Bereich von 28 % bis 60 %, aufweisen.

Das Katalysatorsystem weist die katalytisch aktive Komponente, insbesondere das Metall der katalytisch aktiven Komponente, mit einer mittleren Kristallitgröße (mittlere Kristallitgröße $d_{Me}$), bestimmt gemäß DIN 66136, von höchstens 80 Å (Angström), insbesondere höchstens 70 Å, vorzugsweise höchstens 60 Å, bevorzugt höchstens 58 Å, besonders bevorzugt höchstens 45 Å, ganz besonders bevorzugt höchstens 40 Å, noch weiter bevorzugt höchstens 38 Å, und/oder im Bereich von 5 Å (Angström) bis 80 Å, insbesondere im Bereich von 7 Å bis 70 Å, vorzugsweise im Bereich von 10 Å bis 60 Å, bevorzugt im Bereich von 15 Å bis 58 Å, besonders bevorzugt im Bereich von 17 Å bis 45 Å, ganz besonders bevorzugt im Bereich von 18 Å bis 40 Å, noch weiter bevorzugt im Bereich von 20 Å bis 38 Å, aufweisen.

In diesem Zusammenhang ist es somit erfindungsgemäß im Allgemeinen vorgesehen, dass das in Verfahrensschritt (d) erhaltene Katalysatorsystem eine Aktivität, bestimmt als prozentualer Dispersionsgrad der katalytisch aktiven Komponente, insbesondere des Metalls der katalytisch aktiven Komponente, auf dem Katalysatorträger, gemessen durch Chemisorption mittels dynamischem Strömungsverfahren gemäß DIN 66136-3:2007-01, im Bereich von 15 % bis 90 %, insbesondere im Bereich von 20 % bis 80 %, vorzugsweise im Bereich von 25 % bis 70 %, bevorzugt im Bereich von 28 % bis 60 %, aufweist.

Zudem kann es in diesem Zusammenhang im Rahmen der vorliegenden Erfindung gleichermaßen vorgesehen sein, dass das in Verfahrensschritt (d) erhaltene Katalysatorsystem die katalytisch aktive Komponente, insbesondere das Metall der katalytisch aktiven Komponente, mit einer mittleren Kristallitgröße, vorzugsweise bestimmt gemäß DIN 66136, von höchstens 70 Å (Angström), vorzugsweise höchstens 60 Å, bevorzugt höchstens 58 Å, besonders bevorzugt höchstens 45 Å, ganz besonders bevorzugt höchstens 40 Å, noch weiter bevorzugt höchstens 38 Å, und/oder im Bereich von 5 Å (Angström) bis 80 Å, insbesondere im Bereich von 7 Å bis 70 Å, vorzugsweise im Bereich von 10 Å bis 60 Å, bevorzugt im Bereich von 15 Å bis 58 Å, besonders bevorzugt im Bereich von 17 Å bis 45 Å, ganz besonders bevorzugt im Bereich von 18 Å bis 40 Å, noch weiter bevorzugt im Bereich von 20 Å bis 38 Å, aufweist.

Erfindungsgemäß kann somit insbesondere ein Katalysatorsystem nach der Erfindung erhalten werden, welches neben einem definierten prozentualen Dispersionsgrad der katalytisch aktiven Komponente bzw. des diesbezüglichen Metalls auch eine definierte Kristallitgröße im Hinblick auf die katalytisch aktive Komponente bzw. das diesbezügliche Metall aufweist, wobei die zuvor angeführten Eigenschaften des speziellen prozentualen Dispersionsgrades sowie der speziellen Kristallitgröße die hervorragenden katalytischen Eigenschaften des erfindungsgemäßen Katalysatorsystems charakterisieren, und zwar insbesondere im Hinblick auf die Bereitstellung großer katalytisch aktiver Oberflächen bei optimaler Ausrüstung bzw. Belegung des Porensystems der Aktivkohle mit der katalytisch aktiven Komponente.

Der Dispersionsgrad der katalytisch aktiven Komponente bzw. die Metalldispersion beschreibt somit auch die katalytische Aktivität des Katalysatorsystems bzw. des Trägerkatalysators nach der Erfindung. Insbesondere wird die katalytische Aktivität auch durch die Dispersion der katalytisch aktiven Komponente bzw. des Metalls der katalytisch aktiven Komponente auf dem Katalysatorträgermaterial charakterisiert, und zwar vor dem Hintergrund, dass maßgeblich die Oberflächenatome der katalytisch aktiven Komponente am der katalytischen Umsetzung teilnehmen bzw. diese ermöglichen. Erfindungsgemäß wird der Begriff "Dispersionsgrad" (auch als "Dispersionsgrad D" bezeichnet) synonym zu dem Begriff "Metalldispersität" bzw. "Metalldispersität D" verwendet. Der prozentuale Dispersionsgrad basiert dabei insbesondere auf dem Verhältnis der sich tatsächlich an der Oberfläche befindlichen Atome bzw. Moleküle der katalytisch aktiven Komponente zu der theoretisch möglichen Größe der sich an der Oberfläche befindlichen Atome bzw. Moleküle der katalytisch aktiven Komponente. Mit anderen Worten beschreibt der prozentuale Dispersionsgrad insbesondere das Verhältnis aus der Anzahl der Oberflächenatome bzw. -moleküle der katalytisch aktiven Komponente (wie sie z.B. mittels Chemisorption eines Messgases unter Heranziehung der für das Messgas zugänglichen Atome bzw. Moleküle der katalytisch aktiven Komponente bestimmt werden kann) zur Gesamtanzahl der Atome bzw. Moleküle der katalytisch aktiven Komponente (d. h. zu der theoretisch vorliegenden bzw. eingesetzten Gesamtanzahl der Atome bzw. Moleküle der katalytisch aktiven Komponente bzw. zu der in dem Katalysatorträger vorliegenden Gesamtanzahl der Atome bzw. Moleküle der katalytisch aktiven Komponente). Die Bestimmung kann dabei insbesondere mittels Chemisorption erfolgen. Insbesondere kann Kohlenmonoxid (CO) als Messgas eingesetzt werden. Der Dispersionsgrad bzw. die Metalldispersität kann somit insbesondere mittels Kohlenmonoxid-Chemisorption gemessen werden.

Der prozentuale Dispersionsgrad (D) der katalytisch aktiven Komponente, insbesondere des Metalls der katalytisch aktiven Komponente, auf dem Katalysatorträger bzw. der Aktivkohle kann dabei insbesondere auf Basis der folgenden Formel (I) berechnet werden:

$$D = \frac{n_m \cdot M}{W \cdot x} \cdot 100$$

Die mittlere Kristallitgröße (synonym auch als mittlere Kristallitgröße $d_{Me}$ bezeichnet) kann insbesondere auf Basis der folgenden Formel (II) berechnet werden:

$$d_{Me} = \frac{f \cdot W}{S_{ME} \cdot \rho_{Me}}$$

Im Hinblick auf die zuvor angeführten Formeln (I) und (II) gelten die nachfolgend angegebenen Formelzeichen:

| Formelzeichen | Benennung | Einheit |
|---|---|---|
| D: | Prozentualer Dispersionsgrad bzw. prozentuale Metalldispersität D | % |
| $n_m$: | Monoschichtkapazität | mol/kg |
| M: | Molmasse des Metalls bzw. der katalytisch aktiven Komponente | kg/mol |
| W: | Metallanteil bzw. Anteil der katalytisch aktiven Komponente im Katalysator (Massenanteil bezogen auf die Probenmasse) | |
| x: | Stöchiometriefaktor der Chemisorption | |
| $d_{Me}$: | Mittlere Kristallitgröße des Metalls bzw. der katalytisch aktiven Komponente | m |
| f: | Formfaktor zur Berechnung der mittleren Kristallitgröße des Metalls bzw. der katalytisch aktiven Komponente | |
| $S_{Me}$: | Spezifische Oberfläche des Metalls bzw. der katalytisch aktiven Komponente | $m^2/kg$ |
| $\rho_{Me}$: | Dichte des Metalls | $kg/m^3$ |

Was die erfindungsgemäß angeführte mittlere Kristallitgröße anbelangt, so charakterisiert auch diese die katalytische Aktivität, und zwar insbesondere auch vor dem Hintergrund des Vorliegens einer verbesserten Zugänglichkeit der katalytisch aktiven Komponente für umzusetzende Edukte. Insbesondere verhält es sich für die erfindungsgemäß vorliegenden mittleren Kristallitgrößen auch derart, dass auf dieser Basis diese ein optimiertes Verhältnis von Oberfläche der die Kristallite ausbildenden katalytischen aktiven Komponente zu dem diesbezüglichen Volumen aufweisen, was gleichermaßen zu einer Verbesserung der katalytischen Aktivität führt.

Insbesondere verhält es sich erfindungsgemäß derart, dass der mittlere Dispersionsgrad einerseits und die mittlere Kristallitgröße andererseits im Hinblick auf die insgesamt bereitgestellte verbesserte katalytische Aktivität ineinandergreifen und sich gegenseitig über die Summe der jeweiligen Einzelwirkungen hinausgehend verstärken, so dass diesbezüglich auch ein synergistischer Effekt in Bezug auf die verbesserte katalytische Aktivität der erfindungsgemäßen Katalysatorsysteme, insbesondere auch im Hinblick auf höhere Umsätze bzw. eine verbesserte Raum/Zeit-Ausbeute, vorliegt.

Auf Basis des erfindungsgemäßen Verfahrens kann die Menge bzw. der Gehalt an katalytisch aktiver Komponente in Bezug auf das erfindungsgemäße Katalysatorsystem gezielt eingestellt bzw. maßgeschneidert werden, so dass auch von daher die katalytische Aktivität des erhaltenen Katalysatorsystems nach der Erfindung gezielt vorgegeben werden kann.

So kann es erfindungsgemäß vorgesehen sein, dass das in Verfahrensschritt (d) erhaltene Katalysatorsystem die katalytisch aktive Komponente in Mengen von mindestens 0,05 Gew.-%, insbesondere mindestens 0,1 Gew.-%, vorzugsweise mindestens 0,2 Gew.-%, bevorzugt mindestens 0,5 Gew.-%, besonders bevorzugt mindestens 0,6 Gew.-%, ganz besonders bevorzugt mindestens 1 Gew.-%, weiter bevorzugt mindestens 1,5 Gew.-%, berechnet als Metall und bezogen auf das Gesamtgewicht des Katalysatorsystems, aufweist. Die Untergrenzen gewährleisten dabei die Bereitstellung einer definierten katalytischen Aktivität.

Zudem kann es erfindungsgemäß insbesondere vorgesehen sein, dass das in Verfahrensschritt (d) erhaltene Katalysatorsystem die katalytisch aktive Komponente in Mengen von höchstens 25 Gew.-%, insbesondere höchstens 20 Gew.-%, vorzugsweise höchstens 15 Gew.-%, bevorzugt höchstens 10 Gew.-%, besonders bevorzugt höchstens 8 Gew.-%, ganz besonders bevorzugt höchstens 7 Gew.-%, berechnet als Metall und bezogen auf das Gesamtgewicht des Katalysatorsystems, aufweist. Durch die Obergrenze wird insbesondere eine gute Zugänglichkeit zu der katalytisch aktiven Komponente gewährleistet, insbesondere wird ein Verstopfen von Poren vermieden.

In diesem Zusammenhang kann es sich im Rahmen der vorliegenden Erfindung insbesondere derart verhalten, dass das in Verfahrensschritt (d) erhaltene Katalysatorsystem die katalytisch aktive Komponente in Mengen im Bereich von 0,05 Gew.-% bis 25 Gew.-%, insbesondere im Bereich von 0,1 Gew.-% bis 25 Gew.-%, vorzugsweise im Bereich von 0,2 Gew.-% bis 20 Gew.-%, bevorzugt im Bereich von 0,5 Gew.-% bis 15 Gew.-%, besonders bevorzugt im Bereich von 0,6 Gew.-% bis 10 Gew.-%, ganz besonders bevorzugt im Bereich von 1 Gew.-% bis 8 Gew.-%, weiter bevorzugt im Bereich von 1,5 Gew.-% bis 7 Gew.-%, berechnet als Metall und bezogen auf das Gesamtgewicht des Katalysatorsystems, aufweist.

Weiterhin kann es sich für die katalytisch aktive Komponente des in Verfahrensschritt (d) erhaltenen Katalysatorsystems nach der Erfindung wie folgt verhalten:
Insbesondere kann die katalytisch aktive Komponente des in Verfahrensschritt (d) erhaltenen Katalysatorsystems mindestens ein Metall, insbesondere in Form einer Metallverbindung, vorzugsweise in Form einer ionischen Metallverbindung, und/oder insbesondere in elementarer Form, aufweisen bzw. hieraus bestehen.

Erfindungsgemäß weist die katalytisch aktive Komponente des in Verfahrensschritt (d) erhaltenen Katalysatorsystems mindestens ein Metall, ausgewählt aus der Gruppe von Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd und Pt, insbesondere Fe, Bi, V, Cu, Pb, Zn, Ag, Sn, Pd, Pt, Ru und Ni, vorzugsweise Fe, Bi, V, Cu, Pt, Ru und Pb, bevorzugt Pd, Pt und Ru, besonders bevorzugt Pd und Pt, auf.

Denn mit den vorgenannten Metallen werden besonders hohe katalytische Aktivitäten im Hinblick auf zugrundeliegende katalytische Prozesse, wie Hydrierungsreaktionen oder dergleichen, erreicht.

Was die in dem Katalysatorsystem vorliegende Aktivkohle anbelangt, so kann die auf Aktivkohlen der nachfolgenden Art zurückgehen bzw. basieren, wobei die diesbezüglichen Eigenschaften gleichermaßen zu einer verbesserten Leistungsfähigkeit des erfindungsgemäßen Katalysatorsystems führen (beispielsweise durch eine verbesserte Ausrüstung mit bzw. Ausbildung der katalytisch aktiven Komponente):

- So kann die ((oberflächen-)reduzierte) Aktivkohle des in Verfahrensschritt (d) erhaltenen Katalysatorsystems (d.h. die den Katalysatorträger ausbildende Aktivkohle) vor dem Aufbringen und/oder Fixieren der katalytisch aktiven Komponente, insbesondere an ihrer Oberfläche oxidiert worden sein, insbesondere wobei die Oxidation, insbesondere Oberflächenoxidation, der Aktivkohle unter Verwendung und/oder in Gegenwart mindestens eines Oxidationsmittels erfolgt ist. Hierzu kann auch auf die obigen Ausführungen insbesondere zu Verfahrensschritt (c) verwiesen werden.

- Gleichermaßen kann es sich im Rahmen der vorliegenden Erfindung insbesondere derart verhalten, dass die Aktivkohle nach dem Ausrüsten mit der katalytisch aktiven Komponente insbesondere an ihrer Oberfläche reduziert worden ist, insbesondere wobei die Reduktion der Aktivkohle unter Verwendung und/oder in Gegenwart mindestens eines Reduktionsmittels erfolgt ist. Insbesondere verhält es sich derart, dass die Aktivkohle, insbesondere nach dem Ausrüsten mit der katalytisch aktiven Komponente und/oder nach Durchführung der Reduktion, eine reduzierte, insbesondere oberflächenreduzierte, Aktivkohle ist. Insbesondere verhält es sich erfindungsgemäß vor allem derart, dass der Präkursor der katalytisch aktiven Komponente im Rahmen der Reduktionsbehandlung in die aktive Form bzw. in die katalytisch aktive Komponente überführt wird, insbesondere wobei die zugrundeliegende Metallkomponente in die elementare Form überführt wird

- Zudem kann die Aktivkohle (d.h. die den Katalysatorträger ausbildende Aktivkohle) erhältlich sein durch Carbonisierung und nachfolgende Aktivierung eines Ausgangsmaterials auf Basis organischer Polymere, gefolgt von einer Oxidation(sbehandlung), wobei die Oxidation(sbehandlung) vor dem Ausrüsten mit der katalytisch aktiven Komponente erfolgt, und gefolgt von einer Reduktion(sbehandlung), wobei die Reduktion(sbehandlung) nach dem Ausrüsten mit der katalytisch aktiven Komponente erfolgt. Diesbezüglich kann auch auf obigen Ausführungen verwiesen werden.

- Gleichermaßen kann die Aktivkohle (d.h. die den Katalysatorträger ausbildende Aktivkohle) eine Aktivkohle sein, welche auf einer Aktivkohle basiert, die durch Carbonisierung und nachfolgende Aktivierung eines organischen polymerbasierten Ausgangsmaterials erhältlich ist, und/oder welche auf einer Aktivkohle in Form einer polymerbasierten, bevorzugt kugelförmigen (sphärischen), Aktivkohle (PBSAC bzw. *Polymer-based Spherical Activated Carbon*) basiert.

- Zudem kann die Aktivkohle des in Verfahrensschritt (d) erhaltenen Katalysatorsystems (d.h. die den Katalysatorträger ausbildende Aktivkohle) eine auf ein vorliegend beschriebenes Ausgangsmaterial (vgl. auch Anspruch 21) zurückgehende bzw. hierauf basierende Aktivkohle sein. Insbesondere kann die Aktivkohle des in Verfahrensschritt (d) erhaltenen Katalysatorsystems auf eine Aktivkohle, welche gemäß dem vorliegend beschriebenen Herstellungsverfahren für die Aktivkohle (vgl. Patentansprüche 22 bis 25) bzw. gemäß dem vorliegend beschriebenen Oxidationsverfahren gemäß Verfahrensschritt (b) (vgl. auch Ansprüche 30 bis 34) erhalten ist, zurückgehende bzw. hierauf basierende Aktivkohle sein.

Weiterhin kann es sich vorliegend auch derart verhalten, dass die katalytisch aktive Komponente des erhaltenen Katalysatorsystem nach der Erfindung derart ausgestaltet ist, dass diese auf einen insbesondere in Verfahrensschritt (d) reduzierten Präkursor der katalytisch aktiven Komponente basiert bzw. zurückgeht.

Insbesondere kann es sich im Rahmen der vorliegenden Erfindung derart verhalten, dass das in Verfahrensschritt (d) erhaltende Katalysatorsystem ein insbesondere an seiner Oberfläche reduziertes Katalysatorsystem ist (was insbesondere eine entsprechende Oxidation des Katalysatorträgers und somit der diesbezüglichen Aktivkohle als auch der katalytisch aktiven Komponente bzw. des diesbezüglichen Präkursors beinhaltet).

Darüber hinaus kann für weitere Ausführungen zu dem in Verfahrensschritt (d) erhaltenen Katalysatorsystem nach der Erfindung auf die nachfolgenden Ausführungen gemäß dem zweiten Aspekt der vorliegenden Erfindung mit dem Katalysatorsystem verwiesen werden, wobei die diesbezüglichen Ausführungen entsprechend gelten.

Was den vorliegenden ersten Aspekt der vorliegenden Erfindung weiterhin anbelangt, so betrifft die vorliegende Erfindung auch ein Verfahren zur Herstellung eines mindestens eine katalytisch aktive Komponente aufweisenden Katalysatorsystems in Form eines geträgerten Katalysators, vorzugsweise zur Verwendung in der heterogenen Katalyse, insbesondere ein wie vorliegend definiertes Verfahren,

wobei mindestens eine katalytisch aktive Komponente an einem Katalysatorträger aufgebracht und/oder fixiert wird, wobei die katalytisch aktive Komponente mindestens ein Metall umfasst und/oder hieraus besteht, wobei das Metall ausgewählt wird aus der Gruppe von Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd und Pt,

wobei das Verfahren die folgenden Schritte in der nachstehend spezifizierten Abfolge (a) bis (d) umfasst:

(a) Bereitstellung und/oder Herstellung einer als Katalysatorträger eingesetzten kugelförmigen Aktivkohle (= Ausgangsaktivkohle),
wobei die Aktivkohle (d.h. Ausgangsaktivkohle)

(i) ein Gesamtporenvolumen $V_{total}$ nach Gurvich im Bereich von 0,8 cm$^3$/g bis 3,9 cm$^3$/g, aufweist, wobei mindestens 50 % des Gesamtporenvolumens nach Gurvich der Aktivkohle durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind,
(ii) eine spezifische BET-Oberfläche $S_{BET}$ im Bereich von 1.000 m$^2$/g bis 3.000 m$^2$/g aufweist, jedoch mit der Maßgabe, dass das Verhältnis Q von Gesamtporenvolumen $V_{total}$ nach Gurvich zu spezifischer BET-Oberfläche $S_{BET}$ entsprechend der Gleichung $Q = V_{total} / S_{BET}$ mindestens $0,5 \cdot 10^{-9}$ m beträgt, und
(iii) einen mittleren Porenduchmesser im Bereich von 15 nm bis 100 nm, insbesondere im Bereich von 16 nm bis 90 nm, vorzugsweise im Bereich von 17 nm bis 85 nm, bevorzugt im Bereich von 18 nm bis 80 nm, besonders bevorzugt im Bereich von 20 nm bis 70 nm, ganz besonders bevorzugt im Bereich von 22 nm bis 60 nm, weiter bevorzugt im Bereich von 25 nm bis 50 nm, aufweist;

dann

(b) Oxidation, insbesondere Oberflächenoxidation, der in Verfahrensschritt (a) bereitgestellten und/oder hergestellten Aktivkohle mit der Maßgabe, dass die oxidierte, insbesondere oberflächenoxidierte, Aktivkohle einen Sauerstoffgehalt, insbesondere Oberflächensauerstoffgehalt, bestimmt mittels Röntgenphotoelektronenspektroskopie (XPS bzw. ESCA), von mindestens 4 Atom-%, bezogen auf die Gesamtelementzusammensetzung der oxidierten Aktivkohle, aufweist, und/oder mit der Maßgabe, dass die oxidierte, insbesondere oberflächenoxidierte, Aktivkohle eine Hydrophilie, bestimmt als Wasserdampfadsorptionsverhalten, aufweist derart, dass bei einem Partialdruck $p/p_0$ von 0,6 mindestens 30 % der maximalen Wasserdampfsättigungsbeladung der Aktivkohle erreicht ist;
dann

(c) Ausrüstung, insbesondere Beladung und/oder Beschichtung und/oder Imprägnierung, der in Verfahrensschritt (b) oxidierten, insbesondere oberflächenoxidierten, Aktivkohle mit der katalytisch aktiven Komponente, insbesondere mit mindestens einem Präkursor der katalytisch aktiven Komponente;
dann

(d) Reduktion der in Verfahrensschritt (c) erhaltenen, mit der katalytisch aktiven Komponente, insbesondere mit dem Präkursor der katalytisch aktiven Komponente, ausgerüsteten oxidierten, insbesondere oberflächenoxidierten, Aktivkohle, insbesondere zur Überführung des Präkursors der katalytisch aktiven Komponente in die katalytisch aktive Komponente, so dass das mindestens eine katalytisch aktive Komponente aufweisende Katalysatorsystem erhalten wird;

wobei in Verfahrensschritt (d) die Reduktion als Gasphasenreduktion durchgeführt wird, wobei in Verfahrensschritt (d) die Reduktion bei einer Temperatur im Bereich von 115 °C bis 160 °C durchgeführt wird;

wobei in Verfahrensschritt (d) das Katalysatorsystem erhalten wird, wobei das Katalysatorsystem mindestens eine an einem Katalysatorträger aufgebrachte und/oder fixierte katalytisch aktive Komponente aufweist, wobei die katalytisch aktive Komponente mindestens ein Metall umfasst und/oder hieraus besteht und wobei der Katalysatorträger in Form von Aktivkohle ausgebildet ist, wobei der Katalysatorträger in Form einer kugelförmigen Aktivkohle vorliegt; und

wobei das Katalysatorsystem eine Aktivität, bestimmt als prozentualer Dispersionsgrad der katalytisch aktiven Komponente auf dem Katalysatorträger, gemessen durch Chemisorption mittels dynamischem Strömungsverfahren gemäß DIN 66136-3:2007-01, im Bereich von 15 % bis 90 % aufweist; und

wobei das Katalysatorsystem die katalytisch aktive Komponente mit einer mittleren Kristallitgröße, bestimmt gemäß DIN 66136, von höchstens 80 Å (Angström), aufweist.

In diesem Zusammenhang betrifft die vorliegende Erfindung gleichermaßen gemäß dem vorliegenden ersten Aspekt auch ein Verfahren zur Herstellung eines mindestens eine katalytisch aktive Komponente aufweisenden Katalysatorsystems in Form eines geträgerten Katalysators, vorzugsweise zur Verwendung in der heterogenen Katalyse, insbesondere wie zuvor definiert,

wobei mindestens eine katalytisch aktive Komponente an einem Katalysatorträger aufgebracht und/oder fixiert wird, wobei die katalytisch aktive Komponente mindestens ein Metall umfasst und/oder hieraus besteht, wobei das Metall ausgewählt wird aus der Gruppe von Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd und Pt,

wobei das Verfahren die folgenden Schritte in der nachstehend spezifizierten Abfolge (a) bis (d) umfasst:

(a) Bereitstellung und/oder Herstellung einer als Katalysatorträger eingesetzten kugelförmigen Aktivkohle (= Ausgangsaktivkohle),
wobei die Aktivkohle (d.h. Ausgangsaktivkohle)

(i) ein Gesamtporenvolumen ($V_{total}$), insbesondere ein Gesamtporenvolumen nach Gurvich, im Bereich von 0,8 cm$^3$/g bis 3,9 cm$^3$/g, aufweist, wobei mindestens 50 % des Gesamtporenvolumens, insbesondere des Gesamtporenvolumens nach Gurvich, der Aktivkohle durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind,

(ii) eine spezifische BET-Oberfläche $S_{BET}$ im Bereich von 1.000 m$^2$/g bis 3.000 m$^2$/g aufweist, jedoch mit der Maßgabe, dass das Verhältnis Q von Gesamtporenvolumen $V_{total}$ nach Gurvich zu spezifischer BET-Oberfläche $S_{BET}$ entsprechend der Gleichung $Q = V_{total} / S_{BET}$ mindestens $0,5 \cdot 10^{-9}$ m beträgt,

(iii) einen mittleren Porenduchmesser im Bereich von 15 nm bis 100 nm, insbesondere im Bereich von 16 nm bis 90 nm, vorzugsweise im Bereich von 17 nm bis 85 nm, bevorzugt im Bereich von 18 nm bis 80 nm, besonders bevorzugt im Bereich von 20 nm bis 70 nm, ganz besonders bevorzugt im Bereich von 22 nm bis 60 nm, weiter bevorzugt im Bereich von 25 nm bis 50 nm, aufweist und

(iv) eine Partikelgröße, insbesondere einen Teilchendurchmesser, im Bereich von 60 μm bis 1.000 μm, insbesondere im Bereich von 70 μm bis 800 μm, vorzugsweise im Bereich von 80 μm bis 600 μm, bevorzugt im Bereich von 100 μm bis 400 μm, besonders bevorzugt im Bereich von 150 μm bis 375 μm, ganz besonders bevorzugt im Bereich von 175 μm bis 250 μm, aufweist, insbesondere wobei mindestens 80 Gew.-%, insbesondere mindestens 90 Gew.-%, vorzugsweise mindestens 95 Gew.-%, der Aktivkohlepartikel, insbesondere Aktivkohleteilchen, Partikelgrößen, insbesondere Teilchendurchmesser, in den vorgenannten Bereichen aufweisen; und/oder eine mittlere Partikelgröße (D50), insbesondere einen mittleren Teilchendurchmesser (D50), im Bereich von 60 μm bis 900 μm, insbesondere im Bereich von 75 μm bis 750 μm, vorzugsweise im Bereich von 85 μm bis 550 μm, bevorzugt im Bereich von 110 μm bis 375 μm, besonders bevorzugt im Bereich von 175 μm bis 350 μm, ganz besonders bevorzugt im Bereich von 185 μm bis 225 μm, aufweist;

dann

(b) Oxidation, insbesondere Oberflächenoxidation, der in Verfahrensschritt (a) bereitgestellten und/oder hergestellten Aktivkohle mit der Maßgabe, dass die oxidierte, insbesondere oberflächenoxidierte, Aktivkohle einen Sauerstoffgehalt, insbesondere Oberflächensauerstoffgehalt, bestimmt mittels Röntgenphotoelektronenspektroskopie (XPS bzw. ESCA), von mindestens 4 Atom-%, bezogen auf die Gesamtelementzusammensetzung der oxidierten Aktivkohle, aufweist, und/oder mit der Maßgabe, dass die oxidierte, insbesondere oberflächenoxidierte, Aktivkohle eine Hydrophilie, bestimmt als Wasserdampfadsorptionsverhalten, aufweist derart, dass bei einem Partialdruck $p/p_0$ von 0,6 mindestens 30 % der maximalen Wasserdampfsättigungsbeladung der Aktivkohle erreicht ist;

dann

(c) Ausrüstung, insbesondere Beladung und/oder Beschichtung und/oder Imprägnierung, der in Verfahrensschritt (b) oxidierten, insbesondere oberflächenoxidierten, Aktivkohle mit der katalytisch aktiven Komponente, insbesondere mit mindestens einem Präkursor der katalytisch aktiven Komponente;

dann

(d) Reduktion der in Verfahrensschritt (c) erhaltenen, mit der katalytisch aktiven Komponente, insbesondere mit dem Präkursor der katalytisch aktiven Komponente, ausgerüsteten oxidierten, insbesondere oberflächenoxidierten, Aktivkohle, insbesondere zur Überführung des Präkursors der katalytisch aktiven Komponente in die katalytisch aktive Komponente, so dass das mindestens eine katalytisch aktive Komponente aufweisende Katalysatorsystem, insbesondere der geträgerte Katalysator, erhalten wird;

wobei in Verfahrensschritt (d) die Reduktion als Gasphasenreduktion durchgeführt wird, wobei in Verfahrensschritt (d) die Reduktion bei einer Temperatur im Bereich von 115 °C bis 160 °C durchgeführt wird;

wobei in Verfahrensschritt (d) das Katalysatorsystem erhalten wird, wobei das Katalysatorsystem mindestens eine an einem Katalysatorträger aufgebrachte und/oder fixierte katalytisch aktive Komponente aufweist, wobei die katalytisch aktive Komponente mindestens ein Metall umfasst und/oder hieraus besteht und wobei der Katalysatorträger in Form von Aktivkohle ausgebildet ist, wobei der Katalysatorträger in Form einer kugelförmigen Aktivkohle vorliegt; und

wobei das Katalysatorsystem eine Aktivität, bestimmt als prozentualer Dispersionsgrad der katalytisch aktiven Komponente auf dem Katalysatorträger, gemessen durch Chemisorption mittels dynamischem Strömungsverfahren gemäß DIN 66136-3:2007-01, im Bereich von 15 % bis 90 % aufweist; und

wobei das Katalysatorsystem die katalytisch aktive Komponente mit einer mittleren Kristallitgröße, bestimmt gemäß DIN 66136, von höchstens 80 Å (Angström), aufweist.

Insbesondere betrifft die vorliegende Erfindung gemäß dem ersten Aspekt der vorliegenden Erfindung gleichermaßen auch ein Verfahren zur Herstellung eines mindestens eine katalytisch aktive Komponente aufweisenden Katalysatorsystems in Form eines geträgerten Katalysators, vorzugsweise zur Verwendung in der heterogenen Katalyse, insbesondere Verfahren wie vorliegend definiert,

wobei mindestens eine katalytisch aktive Komponente an einem Katalysatorträger aufgebracht und/oder fixiert wird, wobei die katalytisch aktive Komponente mindestens ein Metall umfasst und/oder hieraus besteht, wobei das Metall ausgewählt wird aus der Gruppe von Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd und Pt,

wobei das Verfahren die folgenden Schritte in der nachstehend spezifizierten Abfolge (a) bis (d) umfasst:

(a) Bereitstellung und/oder Herstellung einer als Katalysatorträger eingesetzten kugelförmigen Aktivkohle (= Ausgangsaktivkohle),
wobei die Aktivkohle (d.h. Ausgangsaktivkohle)

(i) ein Gesamtporenvolumen $V_{total}$ nach Gurvich im Bereich von 0,8 cm$^3$/g bis 3,9 cm$^3$/g, aufweist, wobei mindestens 50 % des Gesamtporenvolumens, insbesondere des Gesamtporenvolumens nach Gurvich, der Aktivkohle durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind,

(ii) eine spezifische BET-Oberfläche $S_{BET}$ im Bereich von 1.000 m$^2$/g bis 3.000 m$^2$/g aufweist, jedoch mit der Maßgabe, dass das Verhältnis Q von Gesamtporenvolumen $V_{total}$ nach Gurvich zu spezifischer BET-Oberfläche $S_{BET}$ entsprechend der Gleichung $Q = V_{total} / S_{BET}$ mindestens 0,5 · 10$^{-9}$ m beträgt, und

(iii) einen mittleren Porenduchmesser im Bereich von 15 nm bis 100 nm, insbesondere im Bereich von 16 nm bis 90 nm, vorzugsweise im Bereich von 17 nm bis 85 nm, bevorzugt im Bereich von 18 nm bis 80 nm, besonders bevorzugt im Bereich von 20 nm bis 70 nm, ganz besonders bevorzugt im Bereich von 22 nm bis 60 nm, weiter bevorzugt im Bereich von 25 nm bis 50 nm, aufweist,

(iv) eine Partikelgröße, insbesondere einen Teilchendurchmesser, im Bereich von 60 μm bis 1.000 μm, insbesondere im Bereich von 70 μm bis 800 μm, vorzugsweise im Bereich von 80 μm bis 600 μm, bevorzugt im Bereich von 100 μm bis 400 μm, besonders bevorzugt im Bereich von 150 μm bis 375 μm, ganz besonders bevorzugt im Bereich von 175 μm bis 250 μm, aufweist, insbesondere wobei mindestens 80 Gew.-%, insbesondere mindestens 90 Gew.-%, vorzugsweise mindestens 95 Gew.-%, der Aktivkohlepartikel, insbesondere Aktivkohleteilchen, Partikelgrößen, insbesondere Teilchendurchmesser, in den vorgenannten Bereichen aufweisen; und/oder eine mittlere Partikelgröße (D50), insbesondere einen mittleren Teilchendurchmesser (D50), im Bereich von 60 μm bis 900 μm, insbesondere im Bereich von 75 μm bis 750 μm, vorzugsweise im Bereich von 85 μm bis 550 μm, bevorzugt im Bereich von 110 μm bis 375 μm, besonders bevorzugt im Bereich von 175 μm bis 350 μm, ganz besonders bevorzugt im Bereich von 185 μm bis 225 μm, aufweist,

(v) gegebenenfalls eine Abriebfestigkeit (*ball pan hardness*) und/oder Abriebhärte von mindestens 90 %, insbesondere mindestens 95 %, vorzugsweise mindestens 97 %, bevorzugt mindestens 98 %, besonders bevorzugt mindestens 99 %, ganz besonders bevorzugt mindestens 99,5 %, weiter bevorzugt mindestens 99,8 %, aufweist,

(vi) gegebenenfalls eine Rüttel- bzw. Stampfdichte im Bereich von 100 g/l bis 1.500 g/l, insbesondere 125 g/l bis 1.000 g/l, vorzugsweise 150 g/l bis 800 g/l, bevorzugt 200 g/l bis 600 g/l, besonders bevorzugt 225 g/l bis 500 g/l, ganz besonders bevorzugt 250 g/l bis 400 g/l, weiter bevorzugt 255 g/l bis 395 g/l, aufweist und/oder eine Schüttdichte (*bulk density*) im Bereich von 150 g/l bis 1.000 g/l, insbesondere von 250 g/l bis 700 g/l, vorzugsweise 300 g/l bis 600 g/l, bevorzugt 300 g/l bis 550 g/l, aufweist,

(vii) gegebenenfalls eine Butanadsorption im Bereich von 35 % bis 90 %, insbesondere im Bereich von 40 % bis 85 %, vorzugsweise im Bereich von 45 % bis 80 %, bevorzugt im Bereich von 47,5 % bis 75 %, aufweist,

(viii) gegebenenfalls eine Iodzahl im Bereich von 1.250 mg/g bis 2.100 mg/g, insbesondere im Bereich von 1.300 mg/g bis 2.000 mg/g, vorzugsweise im Bereich von 1.400 mg/g bis 1.900 mg/g, bevorzugt im Bereich von 1.425 mg/g bis 1.850 mg/g, aufweist,

(ix) gegebenenfalls einen Methylenblauwert im Bereich von 17 ml bis 65 ml, insbesondere im Bereich von 18 ml bis 55 ml, vorzugsweise im Bereich von 19 ml bis 50 ml, bevorzugt im Bereich von 19,5 ml bis 47,5 ml, aufweist,

(x) gegebenenfalls eine Melassezahl im Bereich von 255 bis 1.500, insbesondere im Bereich von 310 bis 1.400, vorzugsweise im Bereich von 375 bis 1.300, bevorzugt im Bereich von 510 bis 1.250, aufweist,

(xi) gegebenenfalls ein gewichtsbezogenes adsorbiertes $N_2$-Volumen $V_{ads\ (gew)}$, bestimmt bei einem Partialdruck $p/p_0$ von 0,25, im Bereich von 250 $cm^3$/g bis 850 $cm^3$/g, insbesondere im Bereich von 300 $cm^3$/g bis 700 $cm^3$/g, vorzugsweise im Bereich von 350 $cm^3$/g bis 650 $cm^3$/g, bevorzugt im Bereich von 375 $cm^3$/g bis 625 $cm^3$/g, aufweist,

(xii) gegebenenfalls ein volumenbezogenes adsorbiertes $N_2$-Volumen $V_{ads\ (vol.)}$, bestimmt bei einem Partialdruck $p/p_0$ von 0,25, im Bereich von 50 $cm^3$/$cm^3$ bis 300 $cm^3$/$cm^3$, insbesondere im Bereich von 80 $cm^3$/$cm^3$ bis 275 $cm^3$/$cm^3$, vorzugsweise im Bereich von 90 $cm^3$/$cm^3$ bis 250 $cm^3$/$cm^3$, bevorzugt im Bereich von 95 $cm^3$/$cm^3$ bis 225 $cm^3$/$cm^3$, aufweist,

(xiii) gegebenenfalls ein gewichtsbezogenes adsorbiertes $N_2$-Volumen $V_{ads\ (gew.)}$, bestimmt bei einem Partialdruck $p/p_0$ von 0,995, im Bereich von 300 $cm^3$/g bis 2.300 $cm^3$/g, insbesondere im Bereich von 400 $cm^3$/g bis 2.200 $cm^3$/g, vorzugsweise im Bereich von 450 $cm^3$/g bis 2.100 $cm^3$/g, bevorzugt im Bereich von 475 $cm^3$/g bis 2.100 $cm^3$/g, aufweist,

(xiv) gegebenenfalls ein volumenbezogenes adsorbiertes $N_2$-Volumen $V_{ads\ (vol.)}$, bestimmt bei einem Partialdruck $p/p_0$ von 0,995, im Bereich von 200 $cm^3$/$cm^3$ bis 500 $cm^3$/$cm^3$, insbesondere im Bereich von 250 $cm^3$/$cm^3$ bis 400 $cm^3$/$cm^3$, vorzugsweise im Bereich von 275 $cm^3$/$cm^3$ bis 380 $cm^3$/$cm^3$, bevorzugt im Bereich von 295 $cm^3$/$cm^3$ bis 375 $cm^3$/$cm^3$, aufweist und

(xv) gegebenenfalls eine fraktale Dimension der offenen Porosität im Bereich von 2,6 bis 2,99, insbesondere 2,7 bis 2,95, vorzugsweise 2,8 bis 2,95, aufweist und/oder wobei die Aktivkohle eine fraktale Dimension der offenen Porosität von mindestens 2,7, insbesondere mindestens 2,8, vorzugsweise mindestens 2,85, bevorzugt mindestens 2,9, aufweist;

dann

(b) Oxidation, insbesondere Oberflächenoxidation, der in Verfahrensschritt (a) bereitgestellten und/oder hergestellten Aktivkohle mit der Maßgabe, dass die oxidierte, insbesondere oberflächenoxidierte, Aktivkohle einen Sauerstoffgehalt, insbesondere Oberflächensauerstoffgehalt, bestimmt mittels Röntgenphotoelektronenspektroskopie (XPS bzw. ESCA), von mindestens 4 Atom-%, bezogen auf die Gesamtelementzusammensetzung der oxidierten Aktivkohle, aufweist, und/oder mit der Maßgabe, dass die oxidierte, insbesondere oberflächenoxidierte, Aktivkohle eine Hydrophilie, bestimmt als Wasserdampfadsorptionsverhalten, aufweist derart, dass bei einem Partialdruck $p/p_0$ von 0,6 mindestens 30 % der maximalen Wasserdampfsättigungsbeladung der Aktivkohle erreicht ist;

dann

(c) Ausrüstung, insbesondere Beladung und/oder Beschichtung und/oder Imprägnierung, der in Verfahrensschritt (b) oxidierten, insbesondere oberflächenoxidierten, Aktivkohle mit der katalytisch aktiven Komponente, insbesondere mit mindestens einem Präkursor der katalytisch aktiven Komponente;

dann

(d) Reduktion der in Verfahrensschritt (c) erhaltenen, mit der katalytisch aktiven Komponente, insbesondere mit dem Präkursor der katalytisch aktiven Komponente, ausgerüsteten oxidierten, insbesondere oberflächenoxidierten, Aktivkohle, insbesondere zur Überführung des Präkursors der katalytisch aktiven Komponente in die katalytisch aktive Komponente, so dass das mindestens eine katalytisch aktive Komponente aufweisende Katalysatorsystem, insbesondere der geträgerte Katalysator, erhalten wird;

wobei in Verfahrensschritt (d) die Reduktion als Gasphasenreduktion durchgeführt wird, wobei in Verfahrensschritt (d) die Reduktion bei einer Temperatur im Bereich von 115 °C bis 160 °C durchgeführt wird;

wobei in Verfahrensschritt (d) das Katalysatorsystem erhalten wird, wobei das Katalysatorsystem mindestens eine an einem Katalysatorträger aufgebrachte und/oder fixierte katalytisch aktive Komponente aufweist, wobei die katalytisch aktive Komponente mindestens ein Metall umfasst und/oder hieraus besteht und wobei der Katalysatorträger in Form von Aktivkohle ausgebildet ist, wobei der Katalysatorträger in Form einer kugelförmigen Aktivkohle vorliegt; und

wobei das Katalysatorsystem eine Aktivität, bestimmt als prozentualer Dispersionsgrad der katalytisch aktiven Komponente auf dem Katalysatorträger, gemessen durch Chemisorption mittels dynamischem Strömungsverfahren gemäß DIN 66136-3:2007-01, im Bereich von 15 % bis 90 % aufweist; und

wobei das Katalysatorsystem die katalytisch aktive Komponente mit einer mittleren Kristallitgröße, bestimmt gemäß DIN 66136, von höchstens 80 Å (Angström), aufweist.

Zudem betrifft die vorliegende Erfindung gemäß dem ersten Aspekt der vorliegenden Erfindung weiterhin auch ein Verfahren zur Herstellung eines mindestens eine katalytisch aktive Komponente aufweisenden Katalysatorsystems in Form eines geträgerten Katalysators, vorzugsweise zur Verwendung in der heterogenen Katalyse, insbesondere Verfahren wie zuvor definiert,

wobei mindestens eine katalytisch aktive Komponente an einem Katalysatorträger aufgebracht und/oder fixiert wird, wobei die katalytisch aktive Komponente mindestens ein Metall umfasst und/oder hieraus besteht, wobei das Metall ausgewählt wird aus der Gruppe von Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd und Pt,

wobei das Verfahren die folgenden Schritte in der nachstehend spezifizierten Abfolge (a) bis (d) umfasst:

(a) Bereitstellung und/oder Herstellung einer als Katalysatorträger eingesetzten kugelförmigen Aktivkohle (= Ausgangsaktivkohle),
wobei die Aktivkohle (d.h. Ausgangsaktivkohle)

(i) ein Gesamtporenvolumen $V_{total}$ nach Gurvich im Bereich von 0,8 cm$^3$/g bis 3,9 cm$^3$/g, aufweist, wobei mindestens 50 % des Gesamtporenvolumens, insbesondere des Gesamtporenvolumens nach Gurvich, der Aktivkohle durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind,

(ii) eine spezifische BET-Oberfläche $S_{BET}$ im Bereich von 1.000 m$^2$/g bis 3.000 m$^2$/g aufweist, jedoch mit der Maßgabe, dass das Verhältnis Q von Gesamtporenvolumen $V_{total}$ nach Gurvich zu spezifischer BET-Oberfläche $S_{BET}$ entsprechend der Gleichung $Q = V_{total} / S_{BET}$ mindestens $0,5 \cdot 10^{-9}$ m beträgt, und

(iii) einen mittleren Porenduchmesser im Bereich von 15 nm bis 100 nm, insbesondere im Bereich von 16 nm bis 90 nm, vorzugsweise im Bereich von 17 nm bis 85 nm, bevorzugt im Bereich von 18 nm bis 80 nm, besonders bevorzugt im Bereich von 20 nm bis 70 nm, ganz besonders bevorzugt im Bereich von 22 nm bis 60 nm, weiter bevorzugt im Bereich von 25 nm bis 50 nm, aufweist,

(iv) eine Partikelgröße, insbesondere einen Teilchendurchmesser, im Bereich von 60 $\mu$m bis 1.000 $\mu$m, insbesondere im Bereich von 70 $\mu$m bis 800 $\mu$m, vorzugsweise im Bereich von 80 $\mu$m bis 600 $\mu$m, bevorzugt im Bereich von 100 $\mu$m bis 400 $\mu$m, besonders bevorzugt im Bereich von 150 $\mu$m bis 375 $\mu$m, ganz besonders bevorzugt im Bereich von 175 $\mu$m bis 250 $\mu$m, aufweist, insbesondere wobei mindestens 80 Gew.-%, insbesondere mindestens 90 Gew.-%, vorzugsweise mindestens 95 Gew.-%, der Aktivkohlepartikel, insbesondere Aktivkohleteilchen, Partikelgrößen, insbesondere Teilchendurchmesser, in den vorgenannten Bereichen aufweisen; und/oder eine mittlere Partikelgröße (D50), insbesondere einen mittleren Teilchendurchmesser (D50), im Bereich von 60 $\mu$m bis 900 $\mu$m, insbesondere im Bereich von 75 $\mu$m bis 750 $\mu$m, vorzugsweise im Bereich von 85 $\mu$m bis 550 $\mu$m, bevorzugt im Bereich von 110 $\mu$m bis 375 $\mu$m, besonders bevorzugt im Bereich von 175 $\mu$m bis 350 $\mu$m, ganz besonders bevorzugt im Bereich von 185 $\mu$m bis 225 $\mu$m, aufweist,

(v) eine Abriebfestigkeit (*ball pan hardness*) und/oder Abriebhärte von mindestens 90 %, insbesondere mindestens 95 %, vorzugsweise mindestens 97 %, bevorzugt mindestens 98 %, besonders bevorzugt mindestens 99 %, ganz besonders bevorzugt mindestens 99,5 %, weiter bevorzugt mindestens 99,8 %, aufweist,

(vi) eine Rüttel- bzw. Stampfdichte im Bereich von 100 g/l bis 1.500 g/l, insbesondere 125 g/l bis 1.000 g/l, vorzugsweise 150 g/l bis 800 g/l, bevorzugt 200 g/l bis 600 g/l, besonders bevorzugt 225 g/l bis 500 g/l, ganz besonders bevorzugt 250 g/l bis 400 g/l, weiter bevorzugt 255 g/l bis 395 g/l, aufweist und/oder eine Schüttdichte (*bulk density*) im Bereich von 150 g/l bis 1.000 g/l, insbesondere von 250 g/l bis 700 g/l, vorzugsweise 300 g/l bis 600 g/l, bevorzugt 300 g/l bis 550 g/l, aufweist,

(vii) eine Butanadsorption im Bereich von 35 % bis 90 %, insbesondere im Bereich von 40 % bis 85 %, vorzugsweise im Bereich von 45 % bis 80 %, bevorzugt im Bereich von 47,5 % bis 75 %, aufweist,

(viii) eine Iodzahl im Bereich von 1.250 mg/g bis 2.100 mg/g, insbesondere im Bereich von 1.300 mg/g bis 2.000 mg/g, vorzugsweise im Bereich von 1.400 mg/g bis 1.900 mg/g, bevorzugt im Bereich von 1.425 mg/g bis 1.850 mg/g, aufweist,

(ix) einen Methylenblauwert im Bereich von 17 ml bis 65 ml, insbesondere im Bereich von 18 ml bis 55 ml, vorzugsweise im Bereich von 19 ml bis 50 ml, bevorzugt im Bereich von 19,5 ml bis 47,5 ml, aufweist,

(x) eine Melassezahl im Bereich von 255 bis 1.500, insbesondere im Bereich von 310 bis 1.400, vorzugsweise im Bereich von 375 bis 1.300, bevorzugt im Bereich von 510 bis 1.250, aufweist,

(xi) ein gewichtsbezogenes adsorbiertes $N_2$-Volumen $V_{ads\ (gew)}$, bestimmt bei einem Partialdruck $p/p_0$ von 0,25, im Bereich von 250 $cm^3/g$ bis 850 $cm^3/g$, insbesondere im Bereich von 300 $cm^3/g$ bis 700 $cm^3/g$, vorzugsweise im Bereich von 350 $cm^3/g$ bis 650 $cm^3/g$, bevorzugt im Bereich von 375 $cm^3/g$ bis 625 $cm^3/g$, aufweist,

(xii) ein volumenbezogenes adsorbiertes $N_2$-Volumen $V_{ads\ (vol.)}$, bestimmt bei einem Partialdruck $p/p_0$ von 0,25, im Bereich von 50 $cm^3/cm^3$ bis 300 $cm^3/cm^3$, insbesondere im Bereich von 80 $cm^3/cm^3$ bis 275 $cm^3/cm^3$, vorzugsweise im Bereich von 90 $cm^3/cm^3$ bis 250 $cm^3/cm^3$, bevorzugt im Bereich von 95 $cm^3/cm^3$ bis 225 $cm^3/cm^3$, aufweist,

(xiii) ein gewichtsbezogenes adsorbiertes $N_2$-Volumen $V_{ads\ (gew.)}$, bestimmt bei einem Partialdruck $p/p_0$ von 0,995, im Bereich von 300 $cm^3/g$ bis 2.300 $cm^3/g$, insbesondere im Bereich von 400 $cm^3/g$ bis 2.200 $cm^3/g$, vorzugsweise im Bereich von 450 $cm^3/g$ bis 2.100 $cm^3/g$, bevorzugt im Bereich von 475 $cm^3/g$ bis 2.100 $cm^3/g$, aufweist,

(xiv) ein volumenbezogenes adsorbiertes $N_2$-Volumen $V_{ads\ (vol.)}$, bestimmt bei einem Partialdruck $p/p_0$ von 0,995, im Bereich von 200 $cm^3/cm^3$ bis 500 $cm^3/cm^3$, insbesondere im Bereich von 250 $cm^3/cm^3$ bis 400 $cm^3/cm^3$, vorzugsweise im Bereich von 275 $cm^3/cm^3$ bis 380 $cm^3/cm^3$, bevorzugt im Bereich von 295 $cm^3/cm^3$ bis 375 $cm^3/cm^3$, aufweist und

(xv) eine fraktale Dimension der offenen Porosität im Bereich von 2,6 bis 2,99, insbesondere 2,7 bis 2,95, vorzugsweise 2,8 bis 2,95, aufweist und/oder wobei die Aktivkohle eine fraktale Dimension der offenen Porosität von mindestens 2,7, insbesondere mindestens 2,8, vorzugsweise mindestens 2,85, bevorzugt mindestens 2,9, aufweist;

dann

(b) Oxidation, insbesondere Oberflächenoxidation, der in Verfahrensschritt (a) bereitgestellten und/oder hergestellten Aktivkohle mit der Maßgabe, dass die oxidierte, insbesondere oberflächenoxidierte, Aktivkohle einen Sauerstoffgehalt, insbesondere Oberflächensauerstoffgehalt, bestimmt mittels Röntgenphotoelektronenspektroskopie (XPS bzw. ESCA), von mindestens 4 Atom-%, bezogen auf die Gesamtelementzusammensetzung der oxidierten Aktivkohle, aufweist, und/oder mit der Maßgabe, dass die oxidierte, insbesondere oberflächenoxidierte, Aktivkohle eine Hydrophilie, bestimmt als Wasserdampfadsorptionsverhalten, aufweist derart, dass bei einem Partialdruck $p/p_0$ von 0,6 mindestens 30 % der maximalen Wasserdampfsättigungsbeladung der Aktivkohle erreicht ist;
dann

(c) Ausrüstung, insbesondere Beladung und/oder Beschichtung und/oder Imprägnierung, der in Verfahrensschritt (b) oxidierten, insbesondere oberflächenoxidierten, Aktivkohle mit der katalytisch aktiven Komponente, insbesondere mit mindestens einem Präkursor der katalytisch aktiven Komponente;
dann

(d) Reduktion der in Verfahrensschritt (c) erhaltenen, mit der katalytisch aktiven Komponente, insbesondere mit dem Präkursor der katalytisch aktiven Komponente, ausgerüsteten oxidierten, insbesondere oberflächenoxidierten, Aktivkohle, insbesondere zur Überführung des Präkursors der katalytisch aktiven Komponente in die katalytisch aktive Komponente, so dass das mindestens eine katalytisch aktive Komponente aufweisende Katalysatorsystem, insbesondere der geträgerte Katalysator, erhalten wird;

wobei in Verfahrensschritt (d) die Reduktion als Gasphasenreduktion durchgeführt wird, wobei in Verfahrensschritt (d) die Reduktion bei einer Temperatur im Bereich von 115 °C bis 160 °C durchgeführt wird;

wobei in Verfahrensschritt (d) das Katalysatorsystem erhalten wird, wobei das Katalysatorsystem mindestens eine an einem Katalysatorträger aufgebrachte und/oder fixierte katalytisch aktive Komponente aufweist, wobei die katalytisch aktive Komponente mindestens ein Metall umfasst und/oder hieraus besteht und wobei der Katalysatorträger in Form von Aktivkohle ausgebildet ist, wobei der Katalysatorträger in Form einer kugelförmigen Aktivkohle vorliegt; und

wobei das Katalysatorsystem eine Aktivität, bestimmt als prozentualer Dispersionsgrad der katalytisch aktiven Komponente auf dem Katalysatorträger, gemessen durch Chemisorption mittels dynamischem Strömungsverfahren gemäß DIN 66136-3:2007-01, im Bereich von 15 % bis 90 % aufweist; und

wobei das Katalysatorsystem die katalytisch aktive Komponente mit einer mittleren Kristallitgröße, bestimmt gemäß DIN 66136, von höchstens 80 Å (Angström), aufweist.

Insgesamt wird im Rahmen der vorliegenden Erfindung ein leistungsfähiges Verfahren zur Herstellung eines Katalysatorsystems nach der Erfindung mit hoher katalytischer Leistungsfähigkeit bereitgestellt, wobei bei gleichzeitig vereinfachter Verfahrensführung ein insbesondere hinsichtlich seiner katalytischen Aktivität gezielt einstellbares bzw. maßgeschneidertes Katalysatorsystem bereitgestellt wird, welches insgesamt über eine hohe katalytische Aktivität verfügt, wie insbesondere auch anhand des mittleren Dispersionsgrads sowie der mittleren Kristallitgröße der katalytisch aktiven Komponente dargelegt.

Die Bereitstellung des leistungsfähigen Katalysatorsystems nach der Erfindung wird dabei durch die gezielte Abfolge und Abstimmung der jeweiligen Verfahrensschritte, wie zuvor definiert, gewährleistet. Dabei kommt auch der Verwendung einer speziellen Aktivkohle als Katalysatorträger mit definiertem Porensystem bzw. der Durchführung einer speziellen Oxidation eine große Bedeutung zu, und zwar insbesondere auch im Hinblick auf die Bereitstellung einer höheren Beladung mit der katalytisch aktiven Komponente sowie eine bessere Zugänglichkeit für Edukte bzw. Produkte.

Das erfindungsgemäße Verfahren sowie das damit erhältliche Katalysatorsystem nach der Erfindung sind somit mit einer Vielzahl von Vorteilen und speziellen Eigenschaften verbunden, wie sie bereits zuvor angeführt sind. Aufgrund der herausragenden katalytischen Eigenschaften des mit dem erfindungsgemäßen Verfahren erhaltenen Katalysatorsystems nach der Erfindung ist ein breites Einsatz- bzw. Verwendungsspektrum möglich, wobei im Rahmen des Einsatzes für katalytische Anwendungen auch entsprechend hohe katalytische Umsätze und hohe Raum/Zeit-Ausbeuten gewährleistet werden.

Hinsichtlich des erfindungsgemäßen Verfahrens kann in Ergänzung auch auf die Ausführungen zu den weiteren Aspekten der vorliegenden Erfindung verwiesen werden, welche vorliegend entsprechend gelten.

Weiterer Gegenstand der vorliegenden Erfindung - gemäß einem **zweiten** Aspekt der vorliegenden Erfindung - ist zudem auch das erfindungsgemäße Katalysatorsystem in Form eines geträgerten Katalysators, vorzugsweise zur Verwendung in der heterogenen Katalyse, wobei das erfindungsgemäße Katalysatorsystem bzw. der diesbezügliche geträgerte Katalysator gemäß dem zuvor beschriebenen Verfahren nach der Erfindung erhältlich ist bzw. erhalten ist.

In diesem Zusammenhang betrifft die Erfindung gemäß dem zweiten Aspekt insbesondere das wie zuvor definierte Katalysatorsystem,

wobei das Katalysatorsystem mindestens eine an einem Katalysatorträger aufgebrachte und/oder fixierte katalytisch aktive Komponente aufweist, wobei die katalytisch aktive Komponente mindestens ein Metall umfasst und/oder hieraus besteht, wobei das Metall ausgewählt wird aus der Gruppe von Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd und Pt, und wobei der Katalysatorträger in Form von Aktivkohle ausgebildet ist, wobei der Katalysatorträger in Form einer kugelförmigen Aktivkohle vorliegt,

wobei die Aktivkohle (d.h. die den Katalysatorträger ausbildende Aktivkohle)

(i) ein Gesamtporenvolumen $V_{total}$ nach Gurvich im Bereich von 0,8 cm$^3$/g bis 3,9 cm$^3$/g aufweist, wobei mindestens 50 % des Gesamtporenvolumens, insbesondere des Gesamtporenvolumens nach Gurvich, durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind, und

(ii) eine spezifische BET-Oberfläche $S_{BET}$ im Bereich von 1.000 m$^2$/g bis 3.000 m$^2$/g aufweist, jedoch mit der Maßgabe, dass das Verhältnis Q von Gesamtporenvolumen $V_{total}$ nach Gurvich zu spezifischer BET-Oberfläche $S_{BET}$ entsprechend der Gleichung Q = $V_{total}$ / $S_{BET}$ mindestens $0{,}5 \cdot 10^{-9}$ m beträgt; und

wobei das Katalysatorsystem eine Aktivität, bestimmt als prozentualer Dispersionsgrad der katalytisch aktiven Komponente, insbesondere des Metalls der katalytisch aktiven Komponente, auf dem Katalysatorträger, gemessen durch Chemisorption mittels dynamischem Strömungsverfahren gemäß DIN 66136-3:2007-01, im Bereich von 15 % bis 90 %, insbesondere im Bereich von 20 % bis 80 %, vorzugsweise im Bereich von 25 % bis 70 %, bevorzugt im Bereich von 28 % bis 60 %, aufweist; und wobei das Katalysatorsystem die katalytisch aktive Komponente mit einer mittleren Kristallitgröße, bestimmt gemäß DIN 66136, von höchstens 80 Å (Angström), insbesondere höchstens 70 Å, vorzugsweise höchstens 60 Å, bevorzugt höchstens 58 Å, besonders bevorzugt höchstens 45 Å, ganz besonders bevorzugt höchstens 40 Å, noch weiter bevorzugt höchstens 38 Å, und/oder im Bereich von 5 Å (Angström) bis 80 Å, insbesondere im Bereich von 7 Å bis 70 Å, vorzugsweise im Bereich von 10 Å bis 60 Å, bevorzugt im Bereich von 15 Å bis 58 Å, besonders bevorzugt im Bereich von 17 Å bis 45 Å, ganz besonders bevorzugt im Bereich von 18 Å bis 40 Å, noch weiter bevorzugt im Bereich von 20 Å bis 38 Å, aufweist.

Das erfindungsgemäße Katalysatorsystem zeichnet sich somit durch einen definierten prozentualen Dispersionsgrad sowie eine definierte mittlere Kristallitgröße der zugrundeliegenden katalytisch aktiven Komponente aus, so dass insgesamt hervorragende katalytische Eigenschaften resultieren. Zudem werden durch den Einsatz einer speziellen Aktivkohle als Katalysatorträger mit definiertem Porensystem die Transporteigenschaften im Hinblick auf Edukte sowie aus der katalytischen Reaktion resultierende Produkte verbessert, was zu insgesamt äußerst leistungsfähigen Katalysatorsystemen führt, und zwar auch im Hinblick auf die Bereitstellung hoher Umsätze bei gleichzeitig hoher Raum/Zeit-Ausbeute im Hinblick auf die Verwendung in der heterogenen Katalyse.

Erfindungsgemäß ist es vorgesehen, dass das Katalysatorsystem nach der Erfindung eine Aktivität, bestimmt als prozentualer Dispersionsgrad der katalytisch aktiven Komponente, insbesondere des Metalls der katalytisch aktiven Komponente, auf dem Katalysatorträger, gemessen durch Chemisorption mittels dynamischem Strömungsverfahren gemäß DIN 66136-3:2007-01, im Bereich von 15 % bis 90 %, insbesondere im Bereich von 20 % bis 80 %, vorzugsweise im Bereich von 25 % bis 70 %, bevorzugt im Bereich von 28 % bis 60 %, aufweist.

Zudem ist es erfindungsgemäß vorgesehen, dass das Katalysatorsystem die katalytisch aktive Komponente, insbesondere das Metall der katalytisch aktiven Komponente, mit einer mittleren Kristallitgröße, bestimmt gemäß DIN 66136, von höchstens 80 Å (Angström), insbesondere höchstens 70 Å, vorzugsweise höchstens 60 Å, bevorzugt höchstens 58 Å, besonders bevorzugt höchstens 45 Å, ganz besonders bevorzugt höchstens 40 Å, noch weiter bevorzugt höchstens 38 Å, und/oder im Bereich von 5 Å (Angström) bis 80 Å, insbesondere im Bereich von 7 Å bis 70 Å, vorzugsweise im Bereich von 10 Å bis 60 Å, bevorzugt im Bereich von 15 Å bis 58 Å, besonders bevorzugt im Bereich von 17 Å bis 45 Å, ganz besonders bevorzugt im Bereich von 18 Å bis 40 Å, noch weiter bevorzugt im Bereich von 20 Å bis 38 Å, aufweist.

Darüber hinaus weist das erfindungsgemäße Katalysatorsystem definierte Mengen an katalytisch aktiver Komponente auf, so dass auch von daher die katalytische Aktivität gezielt vorgegeben werden kann. Insbesondere kann auch auf dieser Basis insgesamt eine hohe katalytische Aktivität mit gleichzeitig guter Zugänglichkeit der katalytisch aktiven Komponente gewährleistet werden.

So kann es erfindungsgemäß vorgesehen sein, dass das Katalysatorsystem die katalytisch aktive Komponente in Mengen von mindestens 0,05 Gew.-%, insbesondere mindestens 0,1 Gew.-%, vorzugsweise mindestens 0,2 Gew.-%, bevorzugt mindestens 0,5 Gew.-%, besonders bevorzugt mindestens 0,6 Gew.-%, ganz besonders bevorzugt mindestens 1 Gew.-%, weiter bevorzugt mindestens 1,5 Gew.-%, berechnet als Metall und bezogen auf das Gesamtgewicht des Katalysatorsystems, aufweist.

Insbesondere kann das Katalysatorsystem die katalytisch aktive Komponente in Mengen von höchstens 25 Gew.-%, insbesondere höchstens 20 Gew.-%, vorzugsweise höchstens 15 Gew.-%, bevorzugt höchstens 10 Gew.-%, besonders bevorzugt höchstens 8 Gew.-%, ganz besonders bevorzugt höchstens 7 Gew.-%, berechnet als Metall und bezogen auf das Gesamtgewicht des Katalysatorsystems, aufweisen.

Somit kann es erfindungsgemäß insgesamt vorgesehen sein, dass das Katalysatorsystem die katalytisch aktive Komponente in Mengen im Bereich von 0,05 Gew.-% bis 25 Gew.-%, insbesondere im Bereich von 0,1 Gew.-% bis 25 Gew.-%, vorzugsweise im Bereich von 0,2 Gew.-% bis 20 Gew.-%, bevorzugt im Bereich von 0,5 Gew.-% bis 15 Gew.-%, besonders bevorzugt im Bereich von 0,6 Gew.-% bis 10 Gew.-%, ganz besonders bevorzugt im Bereich von 1 Gew.-% bis 8 Gew.-%, weiter bevorzugt im Bereich von 1,5 Gew.-% bis 7 Gew.-%, berechnet als Metall und bezogen auf das Gesamtgewicht des Katalysatorsystems, aufweist.

Was das erfindungsgemäße Katalysatorsystem weiterhin anbelangt, so kann die katalytisch aktive Komponente mindestens ein Metall, insbesondere in Form einer Metallverbindung, vorzugsweise in Form einer ionischen Metallverbindung, und/oder insbesondere in elementarer Form, aufweisen bzw. hieraus bestehen.

In diesem Zusammenhang ist es erfindungsgemäß vorgesehen, dass die katalytisch aktive Komponente mindestens ein Metall, ausgewählt aus der Gruppe von Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd und Pt, insbesondere Fe, Bi, V, Cu, Pb, Zn, Ag, Sn, Pd, Pt, Ru und Ni, vorzugsweise Fe, Bi, V, Cu, Pt, Ru und Pb, bevorzugt Pd, Pt und Ru, besonders bevorzugt Pd und Pt, aufweist. Mit den vorgenannten Metallen können besonders hohe katalytische Aktivitäten bereitgestellt werden.

Im Hinblick auf das erfindungsgemäße Katalysatorsystem verhält es sich zudem insbesondere derart, dass sowohl die äußeren als auch die inneren Oberflächen, insbesondere die Mikro-, Meso- und/oder Makroporen, der Aktivkohle mit der katalytisch aktiven Komponente ausgerüstet sind.

Wie zuvor angeführt, ist es im Rahmen der vorliegenden Erfindung insbesondere vorgesehen sein, dass das Katalysatorsystem eine Aktivität, bestimmt als prozentualer Dispersionsgrad der katalytisch aktiven Komponente, insbesondere des Metalls der katalytisch aktiven Komponente, auf dem Katalysatorträger, gemessen durch Chemisorption mittels dynamischem Strömungsverfahren gemäß DIN 66136-3:2007-01, im Bereich von 15 % bis 90 %, insbesondere im Bereich von 20 % bis 80 %, vorzugsweise im Bereich von 25 % bis 70 %, bevorzugt im Bereich von 28 % bis 60 %, aufweist.

Erfindungsgemäß ist es vorgesehen, dass das Katalysatorsystem die katalytisch aktive Komponente mit einer mittleren Kristallitgröße, bestimmt gemäß DIN 66136, von höchstens 80 Å (Angström), insbesondere höchstens 70 Å, vorzugsweise höchstens 60 Å, bevorzugt höchstens 58 Å, besonders bevorzugt höchstens 45 Å, ganz besonders bevorzugt höchstens 40 Å, noch weiter bevorzugt höchstens 38 Å, und/oder im Bereich von 5 Å (Angström) bis 80 Å, insbesondere im Bereich von 7 Å bis 70 Å, vorzugsweise im Bereich von 10 Å bis 60 Å, bevorzugt im Bereich von 15 Å bis 58 Å, besonders bevorzugt im Bereich von 17 Å bis 45 Å, ganz besonders bevorzugt im Bereich von 18 Å bis 40 Å, noch weiter bevorzugt im Bereich von 20 Å bis 38 Å, aufweist.

Erfindungsgemäß ist es vorgesehen, dass die Aktivkohle (d.h. die den Katalysatorträger ausbildende Aktivkohle) auf einer Aktivkohle basiert, welche vor dem Aufbringen und/oder Fixieren der katalytisch aktiven Komponente oxidiert, insbesondere oberflächenoxidiert, worden ist und welche nach dem Aufbringen und/oder Fixieren der katalytisch aktiven Komponente insbesondere an ihrer Oberfläche reduziert worden ist. Hierdurch wird im Hinblick auf das Katalysatorsystem nach der Erfindung eine besonders gute Ausrüstung mit der katalytisch aktiven Komponente erreicht, wie zuvor angeführt. Insbesondere werden hierdurch entsprechend gute Dispersionsgrade sowie Kristallitgrößen erreicht, so dass eine derartige Aktivkohle ihren Niederschlag in den verbesserten Eigenschaften das resultierenden Produkts in Form des Katalysatorsystems nach der Erfindung findet. Wie gleichermaßen zuvor angeführt, kann durch die vorgenommene Reduktion auch der Gehalt an sauerstoffhaltigen funktionellen Gruppen und die Hydrophilie der Aktivkohle reduziert werden, was insbesondere auch in Hinblick auf die Transporteigenschaften von Edukten bzw. Produkten in dem Aktivkohlesystem als Katalysatorträger von Vorteil sein kann.

Im Allgemeinen kann es erfindungsgemäß zudem vorgesehen sein, dass die Aktivkohle (d.h. die den Katalysatorträger ausbildende Aktivkohle) auf einer Aktivkohle basiert, welche erhältlich ist durch Carbonisierung und nachfolgende Aktivierung eines Ausgangsmaterials auf Basis organischer Polymere, gefolgt von einer Oxidation(sbehandlung), wobei die Oxidation(sbehandlung) vor dem Aufbringen und/oder Fixieren der katalytisch aktiven Komponente erfolgt ist, und gefolgt von einer Reduktion(sbehandlung), wobei die Reduktion(sbehandlung) nach dem Aufbringen und/oder Fixieren der katalytisch aktiven Komponente erfolgt ist.

Insbesondere kann die Aktivkohle (d.h. die den Katalysatorträger ausbildende Aktivkohle) auf einer Aktivkohle basiert, welche durch Carbonisierung und nachfolgende Aktivierung eines organischen polymerbasierten Ausgangsmaterials erhältlich ist, bzw. welche in Form einer polymerbasierten, bevorzugt kugelförmigen (sphärischen) Aktivkohle (PBSAC bzw. *Polymer-based Spherical Activated Carbon*) vorliegt.

Derartige Aktivkohlen weisen besonders definierte Eigenschaften hinsichtlich des Porensystems auf. Zudem handelt es sich hierbei um Aktivkohle mit hoher mechanischer Stabilität, was beispielsweise mit einer hohen Abriebfestigkeit oder dergleichen einhergeht.

Im Allgemeinen kann die Aktivkohle eine auf ein zuvor beschriebenes Ausgangsmaterial zurückgehende bzw. hierauf basierende Aktivkohle sein. Insbesondere kann die Aktivkohle eine auf eine Aktivkohle, welche gemäß einem zuvor beschriebenen Herstellungsverfahren erhalten ist, zurückgehende bzw. hierauf basierende Aktivkohle sein.

Zudem kann das Katalysatorsystem ein insbesondere oberflächenreduziertes Katalysatorsystem sein.

Im Nachfolgenden werden weitere Eigenschaften der den Katalysatorträger des erfindungsgemäßen Katalysatorsystems ausbildenden Aktivkohle angegeben:

Insbesondere kann die Aktivkohle ein definiertes Gesamtporenvolumen aufweisen:

- So kann die Aktivkohle (d.h. die den Katalysatorträger ausbildende Aktivkohle) ein Gesamtporenvolumen $V_{total}$ nach Gurvich im Bereich von 0,9 cm$^3$/g bis 3,4 cm$^3$/g, insbesondere im Bereich von 1 cm$^3$/g bis 2,9 cm$^3$/g, vorzugsweise im Bereich von 1,1 cm$^3$/g bis 2,4 cm$^3$/g, bevorzugt im Bereich von 1,2 cm$^3$/g bis 1,9 cm$^3$/g, besonders bevorzugt im Bereich von 1,5 cm$^3$/g bis 1,9 cm$^3$/g, aufweisen.

- Zudem kann es sich in diesem Zusammenhang derart verhalten, dass 50 % bis 90 %, insbesondere 52,5 % bis 87,5 %, vorzugsweise 55 % bis 85 %, bevorzugt 57,5 % bis 82,5 %, besonders bevorzugt 60 % bis 80 %, des Gesamtporenvolumens, insbesondere des Gesamtporenvolumens nach Gurvich, der Aktivkohle (d.h. die den Katalysatorträger ausbildende Aktivkohle) durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind.

- Zudem kann die Aktivkohle (d.h. die den Katalysatorträger ausbildende Aktivkohle) ein Gesamtporenvolumen $V_{total}$ nach Gurvich im Bereich von 0,8 cm$^3$/g bis 3,9 cm$^3$/g, insbesondere im Bereich von 0,9 cm$^3$/g bis 3,4 cm$^3$/g, vorzugsweise im Bereich von 1 cm$^3$/g bis 2,9 cm$^3$/g, bevorzugt im Bereich von 1,1 cm$^3$/g bis 2,4 cm$^3$/g, besonders bevorzugt im Bereich von 1,2 cm$^3$/g bis 1,9 cm$^3$/g, ganz besonders bevorzugt im Bereich von 1,5 cm$^3$/g bis 1,9 cm$^3$/g, aufweisen, wobei 50 % bis 90 %, insbesondere 52,5 % bis 87,5 %, vorzugsweise 55 % bis 85 %, bevorzugt 57,5 % bis 82,5 %, besonders bevorzugt 60 % bis 80 %, des Gesamtporenvolumens, insbesondere des Gesamtporenvolumens nach Gurvich, der Aktivkohle durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind.

Darüber hinaus kann die den Katalysatorträger ausbildende Aktivkohle auch folgende Eigenschaften aufweisen:

- Insbesondere kann die Aktivkohle (d.h. die den Katalysatorträger ausbildende Aktivkohle) eine spezifische BET-Oberfläche $S_{BET}$ im Bereich von 1.100 m$^2$/g bis 2.600 m$^2$/g, insbesondere im Bereich von 1.200 m$^2$/g bis 2.400 m$^2$/g, vorzugsweise im Bereich von 1.300 m$^2$/g bis 2.200 m$^2$/g, bevorzugt im Bereich von 1.350 m$^2$/g bis 1.950 m$^2$/g, besonders bevorzugt im Bereich von 1.375 m$^2$/g bis 1.900 m$^2$/g, aufweisen.

- Weiterhin kann für die Aktivkohle (d.h. die den Katalysatorträger ausbildende Aktivkohle) das Verhältnis (Q) von Gesamtporenvolumen $V_{total}$ nach Gurvich zu spezifischer BET-Oberfläche $S_{BET}$ entsprechend der Gleichung Q = $V_{total}$ / $S_{BET}$ im Bereich von $0{,}5 \cdot 10^{-9}$ m bis $1{,}9 \cdot 10^{-9}$ m, insbesondere im Bereich von $0{,}55 - 10^{-9}$ m bis $1{,}9 \cdot 10^{-9}$ m, vorzugsweise im Bereich von $0{,}6 \cdot 10^{-9}$ m bis $1{,}8 \cdot 10^{-9}$ m, bevorzugt im Bereich von $0{,}65 \cdot 10^{-9}$ m bis $1{,}7 \cdot 10^{-9}$ m, besonders bevorzugt im Bereich von $0{,}65 \cdot 10^{-9}$ m bis $1{,}6 \cdot 10^{-9}$ m, ganz besonders bevorzugt im Bereich von $0{,}7 - 10^{-9}$ m bis $1{,}5 \cdot 10^{-9}$ m, weiter bevorzugt im Bereich von $0{,}75 - 10^{-9}$ m bis $1{,}4 \cdot 10^{-9}$ m, noch weiter bevorzugt im Bereich von $0{,}8 \cdot 10^{-9}$ m bis $1{,}3 \cdot 10^{-9}$ m, liegen.

- Zudem kann die Aktivkohle (d.h. die den Katalysatorträger ausbildende Aktivkohle) eine spezifische BET-Oberfläche $S_{SET}$ im Bereich von 1.000 m$^2$/g bis 3.000 m$^2$/g, insbesondere im Bereich von 1.100 m$^2$/g bis 2.600 m$^2$/g, vorzugsweise im Bereich von 1.200 m$^2$/g bis 2.400 m$^2$/g, bevorzugt im Bereich von 1.300 m$^2$/g bis 2.200 m$^2$/g, besonders bevorzugt im Bereich von 1.350 m$^2$/g bis 1.950 m$^2$/g, ganz besonders bevorzugt im Bereich von 1.375 m$^2$/g bis 1.900 m$^2$/g, aufweisen, wobei das Verhältnis (Q) von Gesamtporenvolumen $V_{total}$ nach Gurvich zu spezifischer BET-Oberfläche $S_{BET}$ entsprechend der Gleichung Q = $V_{total}$ / $S_{BET}$ im Bereich von $0{,}5 \cdot 10^{-9}$ m bis $1{,}9 \cdot 10^{-9}$ m, insbesondere im Bereich von $0{,}55 - 10^{-9}$ m bis $1{,}9 \cdot 10^{-9}$ m, vorzugsweise im Bereich von $0{,}6 \cdot 10^{-9}$ m bis $1{,}8 - 10^{-9}$ m, bevorzugt im Bereich von $0{,}65 \cdot 10^{-9}$ m bis $1{,}7 \cdot 10^{-9}$ m, besonders bevorzugt im Bereich von $0{,}65 \cdot 10^{-9}$ m bis $1{,}6 \cdot 10^{-9}$ m, ganz besonders bevorzugt im Bereich von $0{,}7 \cdot 10^{-9}$ m bis $1{,}5 \cdot 10^{-9}$ m, weiter bevorzugt im Bereich von $0{,}75 \cdot 10^{-9}$ m bis $1{,}4 \cdot 10^{-9}$ m, noch weiter bevorzugt im Bereich von $0{,}8 \cdot 10^{-9}$ m bis $1{,}3 \cdot 10^{-9}$ m, liegt.

Weiterhin kann die als Katalysatorträger eingesetzte Aktivkohle auch folgende Eigenschaften aufweisen:

- So kann die Aktivkohle (d.h. die den Katalysatorträger ausbildende Aktivkohle) einen mittleren Porenduchmesser von mindestens 15 nm aufweist und/oder einen mittleren Porenduchmesser von höchstens 100 nm aufweisen.

- In diesem Zusammenhang kann die Aktivkohle (d.h. die den Katalysatorträger ausbildende Aktivkohle) einen mittleren Porenduchmesser im Bereich von 15 nm bis 100 nm, insbesondere im Bereich von 16 nm bis 90 nm, vorzugsweise im Bereich von 17 nm bis 85 nm, bevorzugt im Bereich von 18 nm bis 80 nm, besonders bevorzugt im Bereich von 20 nm bis 70 nm, ganz besonders bevorzugt im Bereich von 22 nm bis 60 nm, weiter bevorzugt im Bereich von 25 nm bis 50 nm, aufweisen.

- Im Rahmen der vorliegenden Erfindung kann die Aktivkohle (d.h. die den Katalysatorträger ausbildende Aktivkohle) kugelförmig sein. Insbesondere kann die Aktivkohle in Form einer kugelförmigen Aktivkohle eingesetzt sein.

- Zudem kann die Aktivkohle (d.h. die den Katalysatorträger ausbildende Aktivkohle) eine Partikelgröße, insbesondere einen Teilchendurchmesser, im Bereich von 60 $\mu$m bis 1.000 $\mu$m, insbesondere im Bereich von 70 $\mu$m bis 800 $\mu$m, vorzugsweise im Bereich von 80 $\mu$m bis 600 $\mu$m, bevorzugt im Bereich von 100 $\mu$m bis 400 $\mu$m, besonders bevorzugt im Bereich von 150 $\mu$m bis 375 $\mu$m, ganz besonders bevorzugt im Bereich von 175 $\mu$m bis 250 $\mu$m, aufweisen. Insbesondere kann es in diesem Zusammenhang vorgesehen sein, dass mindestens 80 Gew.-%, insbesondere mindestens 90 Gew.-%, vorzugsweise mindestens 95 Gew.-%, der Aktivkohlepartikel, insbesondere Aktivkohleteilchen, Partikelgrößen, insbesondere Teilchendurchmesser, in den vorgenannten Bereichen aufweisen.

- Insbesondere kann die Aktivkohle (d.h. die den Katalysatorträger ausbildende Aktivkohle) eine mittlere Partikelgröße (D50), insbesondere einen mittleren Teilchendurchmesser (D50), im Bereich von 60 $\mu$m bis 900 $\mu$m, insbesondere im Bereich von 75 $\mu$m bis 750 $\mu$m, vorzugsweise im Bereich von 85 $\mu$m bis 550 $\mu$m, bevorzugt im Bereich von 110 $\mu$m bis 375 $\mu$m, besonders bevorzugt im Bereich von 175 $\mu$m bis 350 $\mu$m, ganz besonders bevorzugt im Bereich von 185 $\mu$m bis 225 $\mu$m, aufweisen.

- Zudem kann die Aktivkohle (d.h. die den Katalysatorträger ausbildende Aktivkohle) eine Abriebfestigkeit (*ball pan hardness*) und/oder Abriebhärte von mindestens 90 %, insbesondere mindestens 95 %, vorzugsweise mindestens 97 %, bevorzugt mindestens 98 %, besonders bevorzugt mindestens 99 %, ganz besonders bevorzugt mindestens 99,5 %, weiter bevorzugt mindestens 99,8 %, aufweisen.

- Darüber hinaus kann die Aktivkohle (d.h. die den Katalysatorträger ausbildende Aktivkohle) eine Druck- und/oder Berstfestigkeit (Gewichtsbelastbarkeit) pro Aktivkohlekorn, insbesondere pro Aktivkohlekügelchen, von mindestens 5 Newton, insbesondere mindestens 10 Newton, vorzugsweise mindestens 15 Newton, bevorzugt mindestens 20 Newton, besonders bevorzugt mindestens 22,5 Newton, aufweisen.

- Insbesondere kann die Aktivkohle (d.h. die den Katalysatorträger ausbildende Aktivkohle) eine Druck- und/oder Berstfestigkeit (Gewichtsbelastbarkeit) pro Aktivkohlekorn, insbesondere pro Aktivkohlekügelchen, im Bereich von 5 bis 50 Newton, insbesondere 10 bis 45 Newton, vorzugsweise 15 bis 40 Newton, bevorzugt 17,5 bis 35 Newton, aufweisen.

- Gleichermaßen kann die Aktivkohle (d.h. die den Katalysatorträger ausbildende Aktivkohle) eine Rüttel- bzw. Stampfdichte im Bereich von 100 g/l bis 1.500 g/l, insbesondere 125 g/l bis 1.000 g/l, vorzugsweise 150 g/l bis 800 g/l, bevorzugt 200 g/l bis 600 g/l, besonders bevorzugt 225 g/l bis 500 g/l, ganz besonders bevorzugt 250 g/l bis 400 g/l, weiter bevorzugt 255 g/l bis 395 g/l, aufweisen.

- Zudem kann die Aktivkohle (d.h. die den Katalysatorträger ausbildende Aktivkohle) eine Schüttdichte (*bulk density*) im Bereich von 150 g/l bis 1.000 g/l, insbesondere von 250 g/l bis 700 g/l, vorzugsweise 300 g/l bis 600 g/l, bevorzugt 300 g/l bis 550 g/l, aufweisen.

Nochmals weitergehend kann die den Katalysatorträger ausbildende Aktivkohle folgende Eigenschaften aufweisen:

- So kann die Aktivkohle (d.h. die den Katalysatorträger ausbildende Aktivkohle) eine Butanadsorption von mindestens 35 %, insbesondere mindestens 40 %, vorzugsweise mindestens 45 %, bevorzugt mindestens 47,5 %, aufweist und/oder wobei die Aktivkohle eine Butanadsorption im Bereich von 35 % bis 90 %, insbesondere im Bereich von 40 % bis 85 %, vorzugsweise im Bereich von 45 % bis 80 %, bevorzugt im Bereich von 47,5 % bis 75 %, aufweisen.

- Zudem kann die Aktivkohle (d.h. die den Katalysatorträger ausbildende Aktivkohle) eine Iodzahl von mindestens 1.250 mg/g, insbesondere mindestens 1.300 mg/g, vorzugsweise mindestens 1.400 mg/g, bevorzugt mindestens 1.425 mg/g, aufweist und/oder wobei die Aktivkohle eine Iodzahl im Bereich von 1.250 mg/g bis 2.100 mg/g, insbesondere im Bereich von 1.300 mg/g bis 2.000 mg/g, vorzugsweise im Bereich von 1.400 mg/g bis 1.900 mg/g, bevorzugt im Bereich von 1.425 mg/g bis 1.850 mg/g, aufweisen.

- Weiterhin kann die Aktivkohle (d.h. die den Katalysatorträger ausbildende Aktivkohle) einen Methylenblauwert von mindestens 17 ml, insbesondere mindestens 18 ml, vorzugsweise mindestens 19 ml, bevorzugt mindestens 19,5 ml, aufweist und/oder wobei die Aktivkohle einen Methylenblauwert im Bereich von 17 ml bis 65 ml, insbesondere im Bereich von 18 ml bis 55 ml, vorzugsweise im Bereich von 19 ml bis 50 ml, bevorzugt im Bereich von 19,5 ml bis 47,5 ml, aufweisen.

- Zudem kann die Aktivkohle (d.h. die den Katalysatorträger ausbildende Aktivkohle) eine Melassezahl von mindestens 255, insbesondere mindestens 310, vorzugsweise mindestens 375, bevorzugt mindestens 510, aufweist und/oder wobei die Aktivkohle eine Melassezahl im Bereich von 255 bis 1.500, insbesondere im Bereich von 310 bis 1.400, vorzugsweise im Bereich von 375 bis 1.300, bevorzugt im Bereich von 510 bis 1.250, aufweisen.

- Darüber hinaus kann die Aktivkohle (d.h. die den Katalysatorträger ausbildende Aktivkohle) einen Methylenblauwert von mindestens 17 ml, insbesondere mindestens 18 ml, vorzugsweise mindestens 19 ml, bevorzugt mindestens 20 ml, aufweisen.

- Weiterhin kann Aktivkohle einen Methylenblauwert im Bereich von 17 ml bis 65 ml, insbesondere im Bereich von 18 ml bis 55 ml, vorzugsweise im Bereich von 19 ml bis 50 ml, bevorzugt im Bereich von 20 ml bis 47,5 ml, aufweisen.

- Zudem kann die Aktivkohle (d.h. die den Katalysatorträger ausbildende Aktivkohle) ein gewichtsbezogenes adsorbiertes $N_2$-Volumen $V_{ads\ (gew)}$, bestimmt bei einem Partialdruck $p/p_0$ von 0,25, von mindestens 250 $cm^3/g$, insbesondere mindestens 300 $cm^3/g$, vorzugsweise mindestens 350 $cm^3/g$, bevorzugt mindestens 375 $cm^3/g$, aufweisen. In diesem Zusammenhang kann die Aktivkohle ein gewichtsbezogenes adsorbiertes $N_2$-Volumen $V_{ads\ (gew)}$, bestimmt bei einem Partialdruck $p/p_0$ von 0,25, im Bereich von 250 $cm^3/g$ bis 850 $cm^3/g$, insbesondere im Bereich von 300 $cm^3/g$ bis 700 $cm^3/g$, vorzugsweise im Bereich von 350 $cm^3/g$ bis 650 $cm^3/g$, bevorzugt im Bereich von 375 $cm^3/g$ bis 625 $cm^3/g$, aufweisen.

- Gleichermaßen kann die Aktivkohle (d.h. die den Katalysatorträger ausbildende Aktivkohle) ein volumenbezogenes adsorbiertes $N_2$-Volumen $V_{ads\ (vol.)}$, bestimmt bei einem Partialdruck $p/p_0$ von 0,25, von mindestens 50 $cm^3/cm^3$, insbesondere mindestens 100 $cm^3/cm^3$, vorzugsweise mindestens 110 $cm^3/cm^3$ aufweisen. In diesem Zusammenhang kann die Aktivkohle ein volumenbezogenes adsorbiertes $N_2$-Volumen $V_{ads\ (vol.)}$, bestimmt bei einem Partialdruck $p/p_0$ von 0,25, im Bereich von 50 $cm^3/cm^3$ bis 300 $cm^3/cm^3$, insbesondere im Bereich von 80 $cm^3/cm^3$ bis 275 $cm^3/cm^3$, vorzugsweise im Bereich von 90 $cm^3/cm^3$ bis 250 $cm^3/cm^3$, bevorzugt im Bereich von 95 $cm^3/cm^3$ bis 225 $cm^3/cm^3$, aufweisen.

- Zudem kann die Aktivkohle (d.h. die den Katalysatorträger ausbildende Aktivkohle) ein gewichtsbezogenes adsorbiertes $N_2$-Volumen $V_{ads\ (gew.)}$, bestimmt bei einem Partialdruck $p/p_0$ von 0,995, von mindestens 300 $cm^3/g$, insbesondere mindestens 450 $cm^3/g$, vorzugsweise mindestens 475 $cm^3/g$, aufweisen. In diesem Zusammenhang kann die Aktivkohle ein gewichtsbezogenes adsorbiertes $N_2$-Volumen $V_{ads\ (gew.)}$, bestimmt bei einem Partialdruck $p/p_0$ von 0,995, im Bereich von 300 $cm^3/g$ bis 2.300 $cm^3/g$, insbesondere im Bereich von 400 $cm^3/g$ bis 2.200 $cm^3/g$, vorzugsweise im Bereich von 450 $cm^3/g$ bis 2.100 $cm^3/g$, bevorzugt im Bereich von 475 $cm^3/g$ bis 2.100 $cm^3/g$, aufweisen.

- Insbesondere kann die Aktivkohle (d.h. die den Katalysatorträger ausbildende Aktivkohle) ein volumenbezogenes adsorbiertes $N_2$-Volumen $V_{ads\ (vol.)}$, bestimmt bei einem Partialdruck $p/p_0$ von 0,995, von mindestens 200 $cm^3/cm^3$, insbesondere mindestens 250 $cm^3/cm^3$, vorzugsweise mindestens 275 $cm^3/cm^3$, bevorzugt mindestens 295 $cm^3/cm^3$, aufweisen. In diesem Zusammenhang kann die Aktivkohle ein volumenbezogenes adsorbiertes $N_2$-Volumen $V_{ads\ (vol.)}$, bestimmt bei einem Partialdruck $p/p_0$ von 0,995, im Bereich von 200 $cm^3/cm^3$ bis 500 $cm^3/cm^3$, insbesondere im Bereich von 250 $cm^3/cm^3$ bis 400 $cm^3/cm^3$, vorzugsweise im Bereich von 275 $cm^3/cm^3$ bis 380 $cm^3/cm^3$, bevorzugt im Bereich von 295 $cm^3/cm^3$ bis 375 $cm^3/cm^3$, aufweisen.

- Was die erfindungsgemäß eingesetzte Aktivkohle weiterhin anbelangt, so kann die Aktivkohle (d.h. die den Katalysatorträger ausbildende Aktivkohle) eine fraktale Dimension der offenen Porosität im Bereich von 2,6 bis 2,99 insbesondere 2,7 bis 2,95, vorzugsweise 2,8 bis 2,95, aufweist und/oder wobei die Aktivkohle eine fraktale Dimension der offenen Porosität von mindestens 2,7, insbesondere mindestens 2,8, vorzugsweise mindestens 2,85, bevorzugt mindestens 2,9, aufweisen.

Im Rahmen der vorliegenden Erfindung wird somit insgesamt ein leistungsfähiges Katalysatorsystem bereitgestellt, welches über insgesamt verbesserte katalytische Eigenschaften verfügt, wie zuvor angeführt. Auch von daher führen die erfindungsgemäßen Katalysatorsysteme beispielsweise zu einer erheblichen Verkürzung der einer Katalyse zugrundeliegenden Prozesszeit, insbesondere auch im Hinblick auf diskontinuierliche Katalyseprozesse, wobei entsprechend hohe Stand- bzw. Einsatzzeiten vorliegen, und zwar auch aufgrund der hervorragenden mechanischen Stabilität des erfindungsgemäßen Katalysatorsystems. Zudem geht der Einsatz des erfindungsgemäßen Katalysatorsystems mit einer vereinfachten Dosierung und mit einem deutlich geringeren Reinigungsaufwand der zugrundeliegenden Apparaturen, minimierten Materialverlusten sowie im Allgemeinen mit einer vereinfachten Handhabung einher. Darüber hinaus können die erfindungsgemäßen Katalysatorsysteme nach einer entsprechenden Reaktivierung des Katalysators in einfacher Weise wiederverwendet bzw. rezykliert werden. Insbesondere führt das definierte Porensystem der erfindungsgemäß als Trägermaterial eingesetzten Aktivkohle zu einer signifikanten Verbesserung der Aktivität, und zwar sowohl im Hinblick auf eine Verbesserung der Transportprozesse von Edukten bzw. Produkten als auch hinsichtlich der Ausrüstung mit der katalytisch aktiven Komponente. Die Eigenschaften des erfindungsgemäßen Katalysatorsystems sind insgesamt auch vor dem Hintergrund der Kostenintensivität von Katalysatoren von großer Bedeutung, da die erfindungsgemäßen Katalysatorsysteme aufgrund ihrer Eigenschaften mit einer erheblichen Kostenersparnis einhergehen können.

Das Katalysatorsystem nach der Erfindung eignet sich neben der Verwendung in diskontinuierlichen Prozessen auch in hervorragender Weise zum Einsatz in kontinuierlichen katalytischen Anwendungen, wobei die Katalysatorsysteme nach der Erfindung beispielsweise in entsprechende Reaktionsgefäße bzw. Reaktoren gefüllt und kontinuierlich mit einem Edukte bzw. Reaktanden enthaltenden Medium durchströmt werden können, wobei im Rahmen der Verwendung nur geringe Druckverluste mit entsprechend hohen Durchströmungsgeschwindigkeiten realisiert werden können.

Das erfindungsgemäße Katalysatorsystem weist ein breites Anwendungsspektrum auf: Neben seiner Verwendung in der Katalyse, insbesondere im (groß-) industriellen Maßstab, eignet sich das erfindungsgemäße Katalysatorsystem insbesondere aufgrund seiner kombinierten Eigenschaften von Chemisorption einerseits und Physisorption andererseits auch für (ad-)sorptive Einsatzzwecke, beispielsweise zur Entfernung von toxischen Substanzen, wie Schad- oder Giftstoffen.

Aufgrund der insbesondere sphärischen Form, der herausragenden mechanischen Eigenschaften des zugrundeliegenden Aktivkohlematerials in Form von PBSAC und der vorliegenden regulierbaren Einstellung der Porosität, insbesondere im Hinblick auf die Bereitstellung einer hohen Meso- und Makroporosität, sind die erfindungsgemäßen Katalysatorsysteme insbesondere auch für die kontinuierliche Katalyse (d.h. für die kontinuierliche Reaktionsführung in der Katalyse) von hoher Bedeutung.

Bei den erfindungsgemäßen Katalysatorsystemen handelt es sich insbesondere um geträgerte Edelmetallkatalysatoren bzw. um Aktivkohle geträgerte Metallkatalysatoren. Wie zuvor angeführt, dienen als Basis hierfür insbesondere polymerbasierte sphärische Hochleistungsadsorbentien, welche im Allgemeinen zu mehr als 99 Gew.-% aus Kohlenstoff bestehen können, wobei die Aktivkohle dabei als Katalysatorträger dient. Wie zuvor im Hinblick auf das erfindungsgemäße Verfahren beschrieben, wird der Katalysatorträger durch einen oxidativen Prozess (vor Ausrüstung mit der katalytisch aktiven Komponente) vorbehandelt. Dabei können die Anteile an flüchtigen Bestandteilen in einem Bereich von 0,1 Gew.-% bis 15 Gew.-% variieren. Im Hinblick auf das zuvor beschriebene erfindungsgemäße Verfahren kann in einem weiteren Verarbeitungsschritt der Katalysatorträger insbesondere mittels verschiedener Imprägniertechnologien vorzugsweise mit Edelmetallen als katalytisch aktive Komponente beladen werden. Die Imprägnierhöhe kann dabei beispielsweise in einem Bereich von 0,05 Gew.-% bis 20 Gew.-% variieren. Nach der Immobilisierung der katalytisch aktiven Komponente bzw. der diesbezüglichen Edelmetallionen auf der Oberfläche des Katalysatorträgers können die Metallionen in einem reduktiven Schritt umgewandelt werden. Die Reduktion, welche auch zu einer Oberflächenreduktion der Aktivkohle führen kann, erfolgt in der Gasphase. Auf dieser Basis können somit die zuvor beschriebenen erfindungsgemäßen Katalysatorsysteme erhalten werden.

In Bezug auf die Ausgestaltung des erfindungsgemäßen Katalysatorsystems gemäß dem vorliegenden Aspekt kann auch auf die Ausführungen zu den weiteren erfindungsgemäßen Aspekten verwiesen werden, welche entsprechend gelten.

Weiterer Gegenstand der vorliegenden Erfindung - gemäß einem **dritten** Aspekt der vorliegenden Erfindung - sind zudem die erfindungsgemäßen Verwendungen des Katalysatorsystems nach der Erfindung:

So kann das Katalysatorsystem nach der Erfindung insbesondere als Katalysator oder Katalysatorträger verwendet werden. Zudem kann das erfindungsgemäße Katalysatorsystem insbesondere für die chemische Katalyse, insbesondere für die heterogene Katalyse, und/oder für die diskontinuierliche Katalyse oder für die kontinuierliche Katalyse (d.h. kontinuierliche Reaktionsführung in der Katalyse) verwendet werden.

Gleichermaßen kann das erfindungsgemäße Katalysatorsystem zur Katalyse chemischer Prozesse und Reaktionen, insbesondere Hydrierungsreaktionen oder Oligomerisations- und Polymerisationsreaktionen, vorzugsweise von Olefinen, verwendet werden. Bevorzugt kann das erfindungsgemäße Katalysatorsystem zur Katalyse von Hydrierungsreaktionen verwendet werden. Das erfindungsgemäße Katalysatorsystem kann insbesondere zur Hydrierung verschiedener funktioneller Gruppen verwendet werden. Beispielsweise kann das Katalysatorsystem nach der Erfindung zur katalytischen Umwandlung bzw. Umsetzung von Nitrogruppen zu Amingruppen verwendet werden. Weiterhin kann das Katalysatorsystem nach der Erfindung zur Schutzgruppenabspaltung verwendet werden.

Darüber hinaus kann das Katalysatorsystem gemäß dem vorliegenden Aspekt auch zur Herstellung von Filtern und Filtermaterialien, insbesondere zur Entfernung von Schad-, Geruchs- und Giftstoffen, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich, verwendet werden.

Zudem kann das Katalysatorsystem nach der Erfindung als Sorptionsspeicher für Gase oder Flüssigkeiten verwendet werden.

Gleichermaßen kann das Katalysatorsystem in oder als Gassensoren oder in Brennstoffzellen verwendet werden.

Zudem kann das Katalysatorsystem nach der Erfindung für sorptive Anwendungen, insbesondere adsorptive bzw. chemisorptive Anwendungen, vorzugsweise chemisorptive Anwendungen, insbesondere als vorzugsweise reaktives und/oder katalytisches Adsorbens, verwendet werden.

Weiterhin kann das Katalysatorsystem nach der Erfindung für die Gasreinigung und/oder die Gasaufbereitung verwendet werden.

Weiterhin kann das erfindungsgemäße Katalysatorsystem für die Entfernung von Schadstoffen, insbesondere gasförmigen Schadstoffen, oder von umweltschädlichen, gesundheitsschädlichen oder toxischen Substanzen oder Gasen verwendet werden.

Darüber hinaus kann das erfindungsgemäße Katalysatorsystem zur Aufbereitung und/oder Bereitstellung von Reinraumatmosphären, insbesondere für die Elektroindustrie, insbesondere für die Halbleiter- oder Chipherstellung verwendet werden.

Weiterhin betrifft die vorliegende Erfindung - gemäß einem **vierten** Aspekt der vorliegenden Erfindung - Schutzmaterialien, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung, sowie Schutzabdeckungen, vorzugsweise alle vorgenannten Schutzmaterialien für den ABC-Einsatz, welche unter Verwendung des Katalysatorsystems nach der Erfindung hergestellt sind bzw. welche das Katalysatorsystem nach der Erfindung aufweisen.

Darüber hinaus sind weiterer Gegenstand der vorliegenden Erfindung - gemäß einem **fünften** Aspekt der vorliegenden Erfindung - Filter, insbesondere zur Entfernung von Schad-, Geruchs- und Giftstoffen aller Art, insbesondere aus Luft- bzw. Gasströmen, wie ABC-Schutzmaskenfilter, Geruchsfilter, Flächenfilter, Luftfilter, insbesondere Filter für die Raumluftreinigung, adsorptionsfähige und/oder chemisorptionsfähige Trägerstrukturen und Filter für den medizinischen Bereich, hergestellt unter Verwendung des zuvor definierten Katalysatorsystems nach der Erfindung bzw. aufweisend das zuvor definierte Katalysatorsystem nach der Erfindung.

Was die erfindungsgemäßen Filter anbelangt, so kann das diesbezüglich eingesetzte Katalysatorsystem selbsttragend sein bzw. in Form einer insbesondere losen Schüttung vorliegen. Zudem kann das Katalysatorsystem auf einem Trägermaterial aufgebracht sein.

Was die Ausführungen zu dem dritten bis fünften Aspekt der vorliegenden Erfindung anbelangt, so kann diesbezüglich auch auf die weiteren Ausführungen gemäß dem ersten und dem zweiten Aspekt der vorliegenden Erfindung verwiesen werden, wobei die diesbezüglichen Ausführungen entsprechend gelten.

Die vorliegende Erfindung wird auch anhand von weiterführenden Zeichnungen bzw. Figurendarstellungen beschrieben, wobei die diesbezüglichen Ausführungen für sämtliche erfindungsgemäßen Aspekte gelten und wobei die diesbezüglichen Ausführungen keinesfalls beschränkend sind. Zu den Zeichnungen bzw. Figurendarstellungen kann auch auf die nachfolgenden Ausführungen in den Ausführungsbeispielen verwiesen werden.

In den Figurendarstellungen zeigt:

Fig. 1     eine Diagrammdarstellung der Stickstoffisothermen verschiedener Katalysatorträger bzw. diesbezüglich eingesetzter Aktivkohlen zur Bestimmung der Porosität;

Fig. 2     eine Diagrammdarstellung der Quecksilberintrusionskurven verschiedener Katalysatorträger bzw. diesbezüglich verwendeter Aktivkohlen zur weiterführenden Bestimmung der Porosität;

Fig. 3     eine Diagrammdarstellung der für verschiedene Katalysatorsysteme ermittelten Werte für die Dispersion sowie die Kristallitgröße der katalytisch aktiven Komponente bzw. des diesbezüglichen Metalls (5 Gew.-% Palladium-Katalysator);

Fig. 4     eine Schemadarstellung der einer heterogenen Katalyse zugrundeliegenden Kinetik auf Basis von Teilschritten mit dem ersten Schritt (1) der Diffusion von Edukten (E) zur Oberfläche des Katalysators (K) durch die stationäre Grenzschicht (G); mit dem zweiten Schritt (2) der Diffusion der Edukte (E) in die Poren des Katalysators (K) zum katalytisch aktiven Zentrum bzw. zur katalytisch aktiven Komponente; mit dem dritten Schritt (3) der Adsorption der Edukte (E) am aktiven Zentrum; mit dem vierten Schritt (4) der Reaktion der Edukte (E) am aktiven Zentrum zum Erhalt diesbezüglicher Produkte (P); mit dem fünften Schritt (5) der Desorption der Produkte (P) vom aktiven Zentrum; mit dem sechsten Schritt (6) der Diffusion der Produkte (P) durch das Porensystem des Katalysators (K) sowie mit dem siebten Schritt (7) der Diffusion der Produkte (P) durch die Grenzschicht (G) in den Außenbereich und dem Abtransport der Produkte (P);

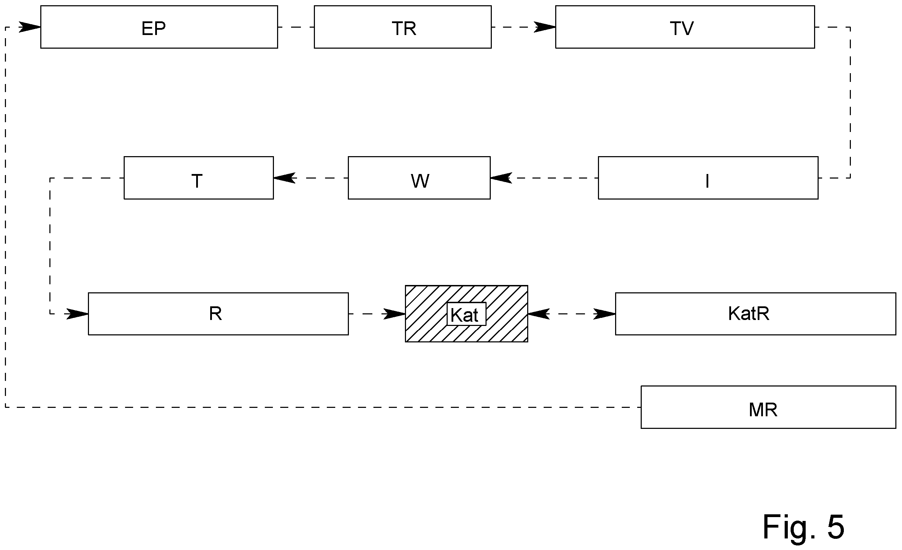

Fig. 5     eine schematische Darstellung eines erfindungsgemäßen Verfahrensablaufs gemäß einer Ausführungsform der vorliegenden Erfindung [mit EP = Edelmetall-Präkursor, TR = PBSAC-Träger, TV = Trägervorbehandlung (z.B. Oxidation mit Mineralsäuren bzw. Luftoxidation), I = Imprägnierung (z.B. Tauchimprägnierung bzw. Sprühimprägnierung), W = Waschung, T = Trocknung, R = Reduktion (Gasphasenreduktion), Kat = Katalysator, KatR = Katalysatorreaktivierung, MR = Metallrückgewinnung];

Fig. 6     eine schematische Darstellung einer zur heterogenen Katalyse, insbesondere Hydrierung, eingesetzten Vorrichtung auf Basis eines Festbettreaktors;

Fig. 7A    eine der Hydrierung von Zimtsäure unter Einsatz des erfindungsgemäßen Katalysatorsystems zugrundeliegende Umsetzung;

Fig. 7B    eine Diagrammdarstellung mit dem zeitlichen Verlauf der katalytischen Umsetzung (Hydrierung) von Zimtsäure als Edukt mittels verschiedener erfindungsgemäßer Katalysatorsysteme unter Verwendung von Aktivkohle als Katalysatorträger mit hohem Meso- und Makroporenanteil am Gesamtporenvolumen der Aktivkohle (meso- und makroporöse Aktivkohle);

Fig. 7C    eine Diagrammdarstellung mit dem zeitlichen Verlauf der katalytischen Umsetzung (Hydrierung) von Zimtsäure mittels verschiedener Katalysatorsysteme unter Verwendung von Aktivkohle als Katalysatorträger mit hohem Mikroporenanteil am Gesamtporenvolumen der diesbezüglichen Aktivkohle (mikroporöse Aktivkohle).

Weitere Ausgestaltungen, Abwandlungen und Variationen sowie Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die folgenden Ausführungsbeispiele dienen lediglich der Veranschaulichung der vorliegenden Erfindung, jedoch ohne die vorliegende Erfindung hierauf zu beschränken.

**AUSFÜHRUNGSBEISPIELE:**

**1. Einleitung:**

Die Verwendung von speziellen polymerbasierten sphärischen Aktivkohlen (sphärische bzw. kugelförmige PBSAC) mit definierter Porosität, insbesondere im Hinblick auf eine hohe Meso- bzw. Makroporosität bei gleichzeitig definiertem Mikroporenanteil, als Katalysatorträgermaterial bietet im Rahmen der erfindungsgemäßen Konzeption den Vorteil, dass zum einen optimale Transportprozesse für Edukte/Produkte und zum anderen optimale Ausrüstungen der Aktivkohle mit katalytisch aktiven Komponenten ermöglicht werden, so dass insgesamt für die erfindungsgemäßen Katalysatorsysteme eine hohe katalytische Aktivität, insbesondere einhergehend mit hohen Umsätzen und hohen Raum/Zeit-Ausbeuten, vorliegt. Zudem können durch die bevorzugte Kugelform im Vergleich zu Adsorbentien gleicher Größe, aber anderer Form die niedrigsten Druckverluste realisiert werden. Außerdem wird aufgrund des geringen Staubanteils und der hohen mechanischen Belastbarkeit der PBSAC die Wahrscheinlichkeit minimiert, dass Metall beladener Staub oder Bruchstücke während der Anwendung in der Festbettschüttung im Produktfluss ausgetragen werden.

**2. Herstellung der Katalysatorträger**

a) Stark mikroporöse Katalysatorträger (nicht erfindungsgemäß)

Die polymerbasierten, sphärischen Aktivkohlen (PBSAC) werden in einem dreistufigen Batchprozess hergestellt. Der Prozess enthält einen Sulfonierungsschritt zur thermischen Stabilisierung des verwendeten polymeren Rohstoffs, einen Carbonisierungschritt zur Entfernung flüchtiger Bestandteile und einen Aktivierungsschritt zur Ausbildung des inneren Porensystems mittels Wasser als Oxidationsmittel. Für die notwendigen Prozessschritte wird ein Drehrohrreaktor verwendet. Der Reaktor wird in einem Drehrohrofen indirekt elektrisch beheizt.

Als Rohstoff bzw. Ausgangsmaterial für die Herstellung der stark mikroporösen PBSAC wird ein vernetztes Styrol-Divinylbenzol-Polymer (Geltyp in der H$^+$-Form) der Firma Lanxess eingesetzt (Lewapol D60). Es handelt sich um Polystyrol mit 4 Gew.-% Divinylbenzol als Vernetzer. Der polymere Rohstoff besitzt bereits eine sphärische Morphologie, welche auf die resultierenden PBSAC übertragen wird. Der Rohstoff zeigt eine Partikeldurchmesserverteilung im Bereich von 0,08 mm bis 0,7 mm.

Die Sulfonierung stellt den Schritt der Stabilisierung des Polymers zur anschließenden Carbonisierung dar. Das Polystyrol wird dazu mit einer Mischung aus Oleum (Schwefelsäure rauchend, 25% freies SO$_3$) und Schwefelsäure (96 Vol.-%) im Massenverhältnis von 2:1 bei Raumtemperatur versetzt und auf die Sulfonierungstemperatur von 423 K erhitzt.

Beim zweiten Schritt der Herstellung der Aktivkohle, nämlich der Carbonisierung, werden flüchtige Bestandteile in einem Temperaturbereich von 423 K bis 1223 K ausgetrieben. Die Carbonisierung kann in zwei Schritte unterteilt werden. Im Temperaturbereich bis 823 K werden neben weiteren flüchtigen Bestandteilen, im Besonderen Wasser und Schwefelverbindungen ausgetrieben. Im Temperaturbereich bis 1223 K werden vor allem Kohlenwasserstoffe und Wasserstoff ausgetrieben (390 min Aktivierungsdauer). Partikelform und Partikeldurchmesser ändern sich nach der Carbonisierung nicht mehr und entsprechen denjenigen der resultierenden PBSAC.

Beim dritten Schritt der Herstellung der Aktivkohle, nämlich der Aktivierung, wird das Carbonisat bei etwa 1223 K in einer Wasserdampfatmosphäre (120 kg flüssiges Wasser und zwei Normkubikmeter Stickstoff pro Stunde) aktiviert.

b) Meso- und makroporöser Katalysatorträger (erfindungsgemäß)

Für die Herstellung der meso- und makroporösen PBSAC wird analog den Verfahrensschritten, welche zuvor in Abschnitt 2.a) beschrieben sind, vorgegangen. Als Rohstoff bzw. Ausgangsmaterial für die Herstellung der meso-/makroporösen PBSAC wird gleichermaßen Lewapol D60 der Firma Lanxess eingesetzt. Die Sulfonierung des vernetzten Styrol-Divinylbenzol-Polymers erfolgt jedoch ausschließlich mit Schwefelsäure (96 Vol.-%). Das Verhältnis von Polymer zu Sulfonierungsmittel wird dabei konstant gehalten. Der Katalysatorträger wird 450 min aktiviert. Die resultierenden PBSAC weisen einen erhöhten Mesoporenanteil von größer 25 % auf. Die texturellen Daten können der Tabelle 1

46

entnommen werden.

c) <u>Meso- und makroporöser Katalysatorträger auf Basis makroporöser sulfonierter Ionenaustauscher mit hoher Makroporosität (erfindungsgemäß)</u>

Für die Herstellung der PBSAC auf Basis der makroporösen Ionenaustauscher wird in Anlehnung der Verfahrensschritte, welche in Abschnitt 2.a) beschrieben sind, vorgegangen. Als Rohstoff bzw. Ausgangsmaterial für die Herstellung der PBSAC auf Basis der makroporösen Ionenaustauscher wird ein sulfoniertes vernetztes Styrol-Divinylbenzol-Polymer ($H^+$-Form) der Firma Finex Oy eingesetzt (Finex CS16GC). Da die sauren, makroporösen Ionenaustauscher bereits geschützt sind, kann auf den Sulfonierungsschritt verzichtet werden (150 min Aktivierungsdauer). Die resultierenden PBSAC weisen einen hohen Mesoporenanteil, sowie einen definierten Anteil an Makroporen auf. Die texturellen Daten können der Tabelle 1 entnommen werden. Alternativ kann auch von entsprechenden unsulfonierten Rohstoffen bzw. Ausgangsmaterialien ausgegangen werden. In diesem Fall kann beispielsweise ein vernetztes Styrol-Divinylbenzol-Polymer der Firma Finex Oy eingesetzt werden (Finex PS08G). Die Sulfonierung kann dabei in Anlehnung an die Ausführungen in Abschnitt 2.a) durchgeführt werden.

### 3. Charakterisierung der Katalysatorträger bzw. Katalysatorsysteme

a) <u>Stickstoffisothermen zur Ermittlung der texturellen Daten im Mikroporenbereich</u>

Zur Bestimmung der texturellen Daten der Katalysatorträger werden Stickstoffisothermen an den verschiedenen Katalysatorträgern aufgenommen. Dies erfolgt mit einem Quadrasorb der Firma Quantachrome. Die Ermittlung der spezifischen inneren Oberfläche erfolgt mit einem mathematischen Modell nach Brunauer-Emmett-Teller (BET). Das totale Porenvolumen bzw. Gesamtporenvolumen wird mithilfe der Gurvich-Regel berechnet und das Mikroporenvolumen anhand der Carbon Black Methode bestimmt.

Zur Messvorbereitung werden die Katalysatorträger bei 200 °C im Vakuum insbesondere zu Zwecken der Entfernung etwaiger adsorbierter Moleküle vorbehandelt.

b) <u>Quecksilberintrusion zur Bestimmung der texturellen Daten im Meso- und Makroporenbereich</u>

Die Proben werden für 2 h bei 150 °C im Trockenschrank getrocknet und anschließend an einem Poremaster-60GT der Firma Quantachrome vermessen. Zur Umrechnung des Drucks in die Porengröße wird mit dem Literaturwert für den Kontaktwinkel von Quecksilber auf Kohlenstoff gerechnet (155°).

c) <u>Bestimmung der Elementarzusammensetzung der Katalysatorträger mittels Photoelektronenspektroskopie (XPS)</u>

Die Proben werden ohne Vorbehandlung mittels Photoelektronenspektroskopie (ESCA/XPS) analysiert. Für die XPS-Analyse wird die Messung mit einem Gerät Typ K-Alpha der Firma Thermo VG Scientific durchgeführt. Für die Anregung wird monochromatische AlK$\alpha$-Röntgenstrahlung verwendet (typischerweise ~75 W, 400 $\mu$m Spotgröße). Die Transmissionsfunktion sowie die Energielage wird in Anlehnung an ISO 15472:2001 und ISO 21270:2004 an Kupfer-, Silber- und Gold- Referenzproben bestimmt. Für die Messung der Spektren werden folgende Einstellungen verwendet: Übersichtsspektren mit einer Pass-Energie von 80eV, Hochauflösungsspektren mit 30 eV. Quantitative Angaben über die Oberflächenzusammensetzung werden mittels Scofield-Faktoren an Übersichtsmessungen unter der Annahme berechnet, dass das analysierte Volumen homogen ist. Der Fehler kann mit etwa 10 % abgeschätzt werden.

d) <u>Bestimmung Dispersionsgrad und Größe der aktiven Zentren mittels CO-Chemisorption (Bestimmung der spezifischen Metalloberfläche bzw. Dispersion und der Kristallitgröße der katalytisch aktiven Komponente)</u>

Bestimmung der Monoschichtkapazität, Dispersionsgrad, aktive Oberfläche nach DIN 66136-1, DIN 66136-3: Strömungsverfahren (dynamisch), Messgase z.B. $H_2$, CO, $CO_2$; vorgesehenes Versuchsprogramm: $H_2$-Treatment 10 K/min bis 80 °C, 4 h isotherm; CO-Titration bei 50 °C, dann TPR 5 Kmin-1 bis 250 °C mit 5 % $H_2$/Ar; abschließend CO-Titration bei 50 °C.

Insbesondere kann wie folgt vorgegangen werden:
Normative Grundlage: DIN 66136-1 (Grundlagen) und DIN 66136-2 (Volumetrisches Verfahren)

Zur Probenvorbereitung und Reduktion der Probenoberfläche werden die folgenden Schritte empfohlen bzw. durchgeführt:

(i) Evakuieren bei 100 °C für 30 min;

(ii) Sauerstoffstrom bei 100 °C für 5 min

(iii) Sauerstoffstrom und Temperaturerhöhung mit 10 °C/min auf 350 °C;

(iv) Sauerstoffstrom bei 350 °C für 30 min;

(v) Evakuieren bei 350 °C für 15 min;

(vi) Evakuieren bei 100 °C für 15 min;

(vii) Wasserstoffstrom bei 100 °C für 5 min;

(viii)Wasserstoffstrom und Temperaturerhöhung mit 10 °C/min auf 350 °C;

(ix) Wasserstoffstrom bei 350 °C für 120 min;

(x) Evakuieren bei 350 °C für 30 min;

(xi) Evakuieren bei 100 °C für 15 min

Anschließend erfolgt die Messung einer CO-Isotherme bei 40 °C nach einem statisch-volumetrischen Verfahren zur Bestimmung der aktiven Metalloberfläche bzw. Metalldispersion.

Die erste nach Schritt (xi) gemessene Isotherme kann eine Überlagerung von sowohl stark als auch schwach chemisorbierten Gasanteilen darstellen (*Combined Chemisorption*). Wenn es notwendig sein sollte, zwischen beiden Anteilen zu unterscheiden, empfiehlt sich folgendes Verfahren bzw. wird wie folgt vorgegangen: Nachdem der letzte Isothermenpunkt gemessen wurde, kann die Messzelle bei der Analysentemperatur (40 °C) für 60 Minuten evakuiert werden. Hierdurch wird der schwach gebundene Anteil entfernt, wohingegen der stark chemisorbierte Anteil auf der Probenoberfläche verbleibt. Eine anschließende Wiederholung der Isothermenmessung lässt den schwach chemisorbierten Anteil ermitteln (Weak Chemisorption). Die Differenz beider Isothermen ergibt die Menge an stark chemisorbiertem CO.

Unter der Annahme, dass ein CO-Molekül an genau einem oberflächenexponierten Metallatom (Palladiumatom) der katalytisch aktiven Komponente chemisorbiert (Stöchiometrie = 1), kann aus der Menge des chemisorbierten CO auf die Anzahl der oberflächenexponierten Palladiumatome bzw. Metallatome geschlossen werden.

Damit ist eine Angabe über die Größe der aktiven Metalloberfläche in $m^2$ pro g ($m^2$/g) (Probenmasse) möglich.

Unter Heranziehung der Metallbeladung (*Loading*) der Probe, bekannt als Masse Palladium in g / g Probe, lassen sich weitere Charakteristika bzw. Eigenschaften berechnen:

- Aktive Metalloberfläche in $m^2$/g (Metall);
- Dispersität des Metalls in %; sowie
- Mittlerer Kristallit-Durchmesser der Metall-Cluster.

In entsprechender Weise kann für weitere Metalle vorgegangen werden.

## 4. Eigenschaften der Katalysatorträger

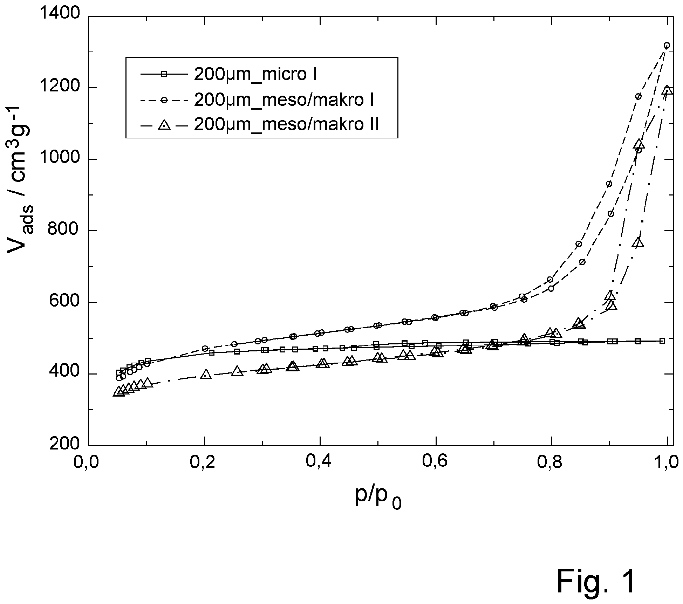

Die Eigenschaften der jeweiligen Katalysatorträger unterscheiden sich weitestgehend hinsichtlich ihrer texturellen Ausprägung. Zur Ermittlung der texturellen Daten werden Stickstoffisothermen der jeweiligen PBSAC aufgenommen. Die diesbezüglich erhaltenen Ergebnisse sind in Figur 1 dargestellt, wobei sich in der Legende die jeweilige Angabe "200 µm" auf den mittleren Teilchendurchmesser der jeweils untersuchten Aktivkohle bezieht. Die Diagrammdarstellung gemäß Figur 1 zeigt die Stickstoffadsorption $V_{ads}$ in Abhängigkeit vom relativen Druck p/p$_0$ für die untersuchten Aktivkohlen.

Charakteristisch für stark mikroporöse Materialien ist ein starker Anstieg der Isotherme, verbunden mit einer hohen Volumenaufnahme an Stickstoff, bei geringen relativen Drücken. Die Isotherme verläuft, wie in Figur 1 gezeigt, im weiteren relativen Druckbereich nahezu flach und zeigt keine ausgeprägte Hystereseschleife. Die Isotherme des Materials "200 µm_micro I" (Katalysatorträger bzw. Aktivkohle A1, nicht erfindungsgemäß) zeigt einen derartigen Verlauf, so dass das diesbezügliche Material als stark mikroporös bezeichnet werden kann. Zudem ist der Anteil des Mikroporenvolumens am Gesamtvolumen mit 89 % sehr hoch.

Die Isotherme des Materials "200 µm_meso/makro I" (Katalysatorträger bzw. Aktivkohle B1, erfindungsgemäß) zeigt gemäß Figur 1 einen starken Anstieg bei einem relativen Druck von 0,75. Des Weiteren weist die Isotherme eine ausgeprägte Hystereseschleife auf. Diese beiden Eigenschaften und der Mikroporenanteil von nur 61 % belegen den hohen Meso- bzw. Makroporenanteil.

Bei der Verwendung von makroporösen Ionenaustauscher zur Herstellung der PBSAC wird ein Teil der Makroporosität des Polymers auf die resultierende Aktivkohle übertragen. Dies kann anhand der Stickstoffisotherme des Materials "200 µm_meso/makro II" (Katalysatorträger bzw. Aktivkohle B2, erfindungsgemäß) erkannt werden; erst bei einem relativen Druck von 0,85 steigt die Isotherme und somit die Stickstoffaufnahme stark an (Figur 1). Eine ausgeprägte Hystereseschleife und der Anteil am Mikroporenvolumen von nur 25 % belegen das Vorhandensein von Poren größer als 2 nm und damit von Meso- und Makroporen.

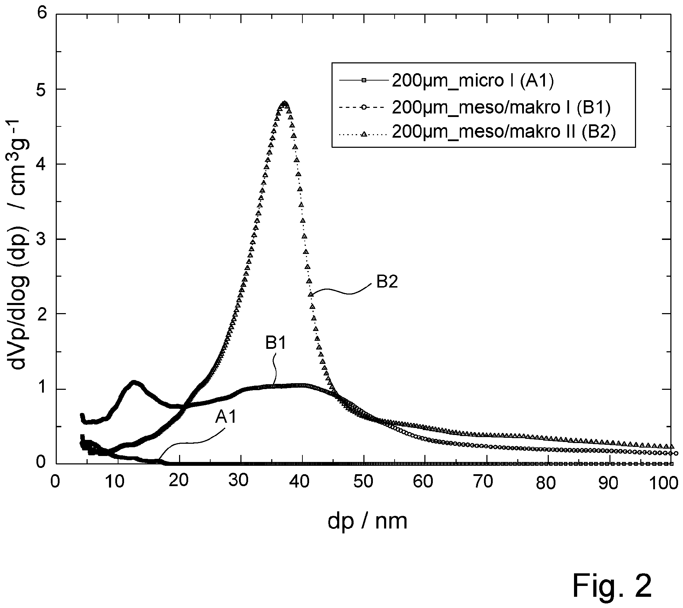

Die Charakterisierung von Poren größer als 2 nm lässt sich mittels Quecksilberintrusion realisieren. Figur 2 zeigt die Quecksilber-Intrusionskurven der Katalysatorträger. Die Diagrammdarstellung gemäß Figur 2 zeigt die Quecksilberintrusion dVp / dlog (dp) für den zugrundeliegenden Porendurchmesser dp der untersuchten Aktivkohlen.

Hierbei wird deutlich, dass der mikroporöse Katalysatorträger bzw. die Aktivkohle A1 ("200 µm_micro I") kein Porenvolumen oberhalb von 2 nm aufweist. Der meso-/makroporöse Katalysatorträger bzw. die Aktivkohle B1 ("200 µm_meso/makro I") zeigt ein signifikantes Porenvolumen im Bereich von 10 nm bis 20 nm. Der weitere meso-/makroporöse Katalysatorträger bzw. die Aktivkohle B2 ("200 µm_meso/makro II") weist zudem einen sehr großen Anteil an Mesoporen und einen signifikanten Anteil an Makroporen auf. Die texturellen Daten können der Tabelle 2 entnommen werden.

Die chemische Zusammensetzung und die diesbezüglich vorliegende die hohe Reinheit der Aktivkohlen in Form von PBSAC bleibt erhalten und ist in allen Fällen vergleichbar. Ebenfalls bleibt die hohe mechanische Stabilität der Aktivkohlen in Form von PBSAC erhalten, und dies auch bei hoher Porosität und hohem Anteil an Poren größer als 2 nm (vgl. "200 µm_meso/makro I" (B1) und "200 µm_meso/makro II" (B2)). Die hohe mechanische Stabilität wird durch die hohe Abriebhärten der Materialien von über 98 % verdeutlicht (vgl. Tabelle 1).

Die nachfolgende Tabelle 1 veranschaulicht die entsprechenden Eigenschaften der untersuchten Aktivkohlen bzw. Katalysatorträger.

**Tabelle 1:** Eigenschaften der Katalysatorträger.

| | A1 200 µm mikro I* | B1 200 µm meso/ makro I | B2 200 µm meso/ makro II | C1 Aktivkohle 1 ** | C2 Aktivkohle 2 ** |
|---|---|---|---|---|---|
| Verhältnis (Quotient Q) $V_{total}$ / $S_{BET}$ | $0,44 \cdot 10^{-9}$ | $0,85 \cdot 10^{-9}$ | $1,24 \cdot 10^{-9}$ | $0,45 \cdot 10^{-9}$ | $0,57 \cdot 10^{-9}$ |
| Spezifische Oberfläche (BET) / $m^2$ $g^{-1}$ | 1.747 | 1.881 | 1.478 | 1.162 | 1.074 |
| Porenvolumen (Gurvich) / $cm^3$ $g^{-1}$ | 0,76 | 1,59 | 1,84 | 0,52 | 0,61 |
| Mikroporenvolumen / % | 89 | 38 | 25 | 90 | 69 |
| Iodzahl (CEFIC) / mg $g^{-1}$ | 1.650 | 1.652 | 1.441 | - | - |
| Rütteldichte / g $L^{-1}$ | 562 | 319 | 282 | - | - |
| Abriebhärte / % | 99,8 | 99,9 | 98,8 | - | - |
| Porenvolumen pro 1000 $m^2$ Oberfläche / $cm^3$ | 0,43 | 0,85 | 1,24 | 0,48 | 0,57 |

\* A1: nicht erfindungsgemäß
\*\* C1, C2: kommerziell erhältliche Aktivkohlen auf Kokosnussschalenbasis; (nicht erfindungsgemäß)

**Tabelle 2:** Texturelle Eigenschaften (Hg-Intrusion, Auswertebereich 0,01 µm bis 20 µm)

| | A1 200 µm mikro I* | B1 200 µm meso/ makro I | B2 200 µm meso/ makro II |
|---|---|---|---|
| Spezifisches Porenvolumen / $cm^3$ $g^{-1}$ | 0,005 | 0,81 | 1,17 |
| Mittlerer Porendurchmesser / nm | 1,8 | 29 | 36 |

In entsprechender Weise werden weitere Katalysatorträger bzw. Aktivkohlen bereitgestellt, nämlich die nicht erfindungsgemäßen Katalysatorträger bzw. Aktivkohle A2 (200 µm mikro II; mittlerer Teilchendurchmasser 200 µm) und A3 (370 µm mikro III; mittlerer Teilchendurchmasser 370 µm), welche hinsichtlich ihrer jeweiligen Eigenschaften in Form der in Tabelle 1 und 2 angeführten Parameter im Wesentlichen vergleichbar zu dem Katalysatorträger A1 sind. Zudem werden nochmals weitere Katalysatorträger bzw. Aktivkohlen bereitgestellt, nämlich die erfindungsgemäß eingesetzten Katalysatorträger B3 ("370 µm meso/makro III"; mittlerer Teilchendurchmasser 370 µm) und B4 ("470 µm meso/makro III"; mittlerer Teilchendurchmasser 470 µm), welche hinsichtlich ihrer sonstigen Eigenschaften in Form der in Tabelle 1 und 2 angeführten Parameter im Wesentlichen vergleichbar zu dem Katalysatorträger B1 bzw. B2 sind.

## 5. Oxidative Vorbehandlung der Katalysatorträger

Die oxidative Vorbehandlung der Materialien in Form der Katalysatorträger bzw. Aktivkohlen dient zur Schaffung von Sauerstoffzentren auf der Oberfläche der jeweiligen PBSAC. Diese wechselwirken im Anschluss mit den Metallionen der Salzlösung. Durch die elektrostatische Wechselwirkung der Oberflächenoxide mit den Metallionen werden diese auf der Oberfläche immobilisiert und wandern bevorzugt in die Poren der PBSAC, anstatt in der überstehenden Lösung zu verbleiben.

a) Oxidation mit Sauerstoff

Für die Oxidation der PBSAC wird synthetische Luft durch einen beheizbaren, gasdichten Quarzglasreaktor geleitet. Für die Oberflächenmodifizierung wird typischerweise 250 g PBSAC in das Quarzglasrohr verbracht, das Rohr in den Ofen installiert und alle Gasanschlüsse angebracht. Typischerweise wird der Ofen mit einer Rampe von 10 K min$^{-1}$ auf die Reaktionstemperatur aufgeheizt. Die Reaktionstemperatur befindet sich dabei in einem Fenster von 350 °C bis 550 °C. Die Reaktionszeit variiert in einem Bereich von 120 min bis 600 min.

b) Oxidation mit Mineralsäuren und Wasserstoffperoxid

Die Oxidation mit Mineralsäuren erfolgt auf nasschemischen Wege. Bei den Mineralsäuren handelt es sich vorwiegend um Salzsäure (HCl), Salpetersäure (HNO$_3$) und Schwefelsäure (H$_2$SO$_4$). Des Weiteren finden Perchlorsäure (HClO$_4$), Phosphorsäure (H$_3$PO$_4$) und Wasserstoffperoxid (H$_2$O$_2$) Anwendung. Diese Säuren werden im gesamten Konzentrationsbereich bei Temperaturen von 20 °C bis 100 °C verwendet.

Typischerweise werden 500 g eines polymerbasierten sphärischen Adsorbenz mit 1000 g Mineralsäure für 30 min bis 240 min gerührt. Anschließend wird überschüssige Mineralsäure dekantiert und das oxidierte Basisadsorbenz mit destilliertem Wasser gewaschen und getrocknet.

c) Eigenschaften der oxidierten Katalysatorträger

Die strukturellen Eigenschaften verändern sich durch die Oberflächenmodifizierung zumindest im Wesentlich nicht oder allenfalls nur in einem sehr geringen Maß. Die Eigenschaften der erfindungsgemäß eingesetzten bzw. analysierten oxidierten Katalysatorträger können der Tabelle 3 entnommen werden. Die mechanische Stabilität der oxidierten Katalysatorträger bleibt mit sehr hohen Abriebhärten erhalten. Zur Charakterisierung der Oberflächenoxide kann die Bestimmung der flüchtigen Bestandteile herangezogen werden. Dabei werden die Materialien analog der ISO 562-1981 bei 900 °C für 7 min belassen und im Anschluss der Gewichtsverlust gravimetrisch ermittelt.

Diese Methode sagt jedoch noch nichts über die Art der Sauerstoffspezies auf der Oberfläche der PBSAC aus. Um diese zu ermitteln, werden Photoelektronenspektren der jeweiligen Katalysatorträger aufgenommen. Aus diesen Spektren können die Elementzusammensetzungen bestimmt werden. Diese können der Tabelle 4 entnommen werden. Man kann erkennen, dass die Werte aus der Bestimmung der flüchtigen Bestandteile mit der atomaren Zusammensetzung, welche mittels Photoelektronenspektroskopie ermittelt wurden, korrelieren. Den mit 4,0 Atom-% niedrigsten Sauerstoffgehalt weist dabei die mit Salzsäure oxidierte (90 min) Probe auf. Die Oxidation des Katalysatorträgers mit 50 Vol.-% Salpetersäure führt mit 11,8 Atom-% zum höchsten Sauerstoffgehalt auf der Oberfläche.

**Tabelle 3:** Eigenschaften der oxidierten Katalysatorträger bzw. Aktivkohlen

| Beschreibung | Säure | | | | | | | | | |
|---|---|---|---|---|---|---|---|---|---|---|
| | Menge/ mL | Gehalt / Vol.-% | T/ °C | flüchtige Bestandteile / % | QS $V_{tot}$ / cm$^3$ g$^{-1}$ | QS Meso / Makro / % | HS Vol. ads. / cm$^3$g$^{-1}$ | Bruch % | Abrieb / % | Rütteldichte / gL$^{-1}$ |
| Oxidation mit 37 % Salzsäure [70 °C] | 688 | 37 | 70 | 2,8 | 0,79 | 14,6 | 784 | 1,1 | 100,0 | 545 |
| Oxidation mit 37 % Salzsäure [70 °C] | 688 | 37 | 70 | 3,1 | 0,78 | 14,9 | 794 | 1,5 | 99,8 | 546 |
| Oxidation mit 25 % Salpetersäure [70 °C] | 600 | 25 | 70 | 11,4 | 0,73 | 14,5 | 723 | 0,3 | 100,0 | 583 |

(fortgesetzt)

| Beschreibung | Säure | | T/ °C | flüchtige Bestandteile / % | QS $V_{tot}$ / cm$^3$ g$^{-1}$ | QS Meso / Makro / % | HS Vol. ads. / cm$^3$g$^{-1}$ | Bruch % | Abrieb / % | Rütteldichte / gL$^{-1}$ |
|---|---|---|---|---|---|---|---|---|---|---|
| | Menge/ mL | Gehalt / Vol.-% | | | | | | | | |
| Oxidation mit 50 % Salpetersäure [70 °C] | 600 | 50 | 70 | 13,3 | 0,72 | 14,9 | 736 | 1,3 | 99,9 | 583 |
| Luftoxidation 450 °C / 240 min | | | 450 | 7,1 | 0,87 | 15,8 | 839 | 4,1 | 100,0 | 533 |
| Luftoxidation 500 °C / 240 min | | | 500 | 7,0 | 0,85 | 17,5 | 865 | 0,6 | 100,0 | 535 |

**Tabelle 4:** Elementzusammensetzungen aus Übersichtsspektren (Angaben in Atom-%)

| Probe | C | O | N | S | Cl |
|---|---|---|---|---|---|
| Oxidation mit 37 Vol-% Salzsäure, 180 min | 94,9 | 4,2 | 0,0 | 0,7 | 0,2 |
| Oxidation mit 25 Vol-% Salpetersäure | 87,9 | 10,4 | 1,2 | 0,5 | 0,0 |
| Oxidation mit 50 Vol-% Salpetersäure | 86,7 | 11,8 | 1,1 | 0,5 | 0,0 |
| Oxidation mit 37 Vol-% Salzsäure, 90 min | 95,1 | 4,0 | 0,0 | 0,7 | 0,2 |
| Luftoxidation 450 °C | 92,0 | 7,9 | 0,0 | 0,2 | 0,0 |
| Luftoxidation 500 °C | 91,5 | 8,4 | 0,0 | 0,1 | 0,0 |

Um die Sauerstoffspezies zu charakterisieren, werden zusätzlich die Bindungsanteile aus den Hochauflösungs-Sauerstoff-Spektren ermittelt. Diese können der Tabelle 5 entnommen werden. Es wird ersichtlich, dass über die Hälfte der Sauerstoffspezies in Form von Alkoholsauerstoff auf der Oberfläche vorliegt. Etwa 35 % bis 40 % der Sauerstoffatome sind in Form von Carbonylsauerstoff auf der Oberfläche gebunden. Die unterschiedlich oxidierten Katalysatorträger unterscheiden sich hinsichtlich der Anteile der Sauerstoffspezies nur geringfügig voneinander.

**Tabelle 5:** Bindungsanteile aus Hochauflösungs-Sauerstoff-Spektren

| Probe | O1 | O2 | O3 | O total |
|---|---|---|---|---|
| Oxidation mit 37 Vol.-% Salzsäure, 180 min | 38 | 53 | 10 | 4,2 |
| Oxidation mit 25 Vol.-% Salpetersäure | 40 | 52 | 8 | 10,4 |
| Oxidation mit 25 Vol.-% Salpetersäure | 40 | 52 | 8 | 11,8 |
| Oxidation mit 37 Vol.-% Salzsäure, 90 min | 39 | 52 | 10 | 4,0 |
| Luftoxidation 450 °C | 35 | 51 | 13 | 7,9 |
| Luftoxidation 500 °C | 38 | 51 | 11 | 8,4 |
| O1: Carbonylsauerstoff (RC=O / R-CO=O*); O2: Alkoholsauerstoff (R-OH / R-O-R / R-CO-O*); O3: pi-pi* | | | | |

## 6. Imprägnierung der Katalysatorträger

Die oxidierten Katalysatorträger bzw. Aktivkohlen werden wie folgt mit einer katalytisch aktiven Komponente bzw. einem diesbezüglichen Präkursor zum Erhalt entsprechender imprägnierten Katalysatorsysteme ausgerüstet.

a) Palladium-Beladung der PBSAC

Wasser und eine Säurelösung (HCl, HNO$_3$) werden in einem Rundkolben vorlegt. Anschließend erfolgt die Zugabe eines Palladiumprecurssors (typischerweise H$_2$PdCl$_4$, Pd(NO$_3$)$_2$). Die trübe Suspension wird mit einem Magnetrührfisch für mindestens 30 min stark verrührt, bis eine klare, bräunliche Lösung entsteht. Unter starkem Rühren wird der oxidierte Katalysatorträger, wie zuvor angeführt, schnell zugeben. Das System wird bei niedriger Geschwindigkeit (50 rpm) für 24 h gerührt. Anschließend wird der Feststoff mit einem Büchnertrichter und Saugflasche abgetrennt. Danach wird der Katalysator mit Reinstwasser ausgiebig gespült. Zur Trocknung wird das Material in einen Trockenschrank überführt und bei 80 °C für 12 h getrocknet.

b) Platin-Beladung sphärischer Adsorbentien

Wasser und eine Säurelösung (HCl, HNO$_3$) werden in einem Rundkolben vorlegt. Anschließend erfolgt die Zugabe eines Platinprecurssors (typischerweise H$_2$[PtCl$_6$], (NH$_3$)$_4$Pt(OH)$_2$, Pt(NO$_3$)$_2$). Die trübe Suspension wird mit einem Magnetrührfisch für mindestens 30 min stark verrührt, bis eine klare, bräunliche Lösung entsteht. Unter starkem Rühren wird der oxidierte Katalysatorträger schnell zugeben. Das System wird bei niedriger Geschwindigkeit (50 rpm) für 24 h rühren gelassen. Anschließend wird der Feststoff mit einem Büchnertrichter und Saugflasche abgetrennt. Danach wird der Katalysator mit Reinstwasser ausgiebig gespült. Zur Trocknung wird das Material in einen Trockenschrank überführt und bei 80 °C für 12 h getrocknet.

## 7. Reduktion der Katalysatoren bzw. zum Erhalt der Katalysatorsysteme

Die vorgenannten imprägnierten Katalysatorsysteme werden wie folgt mittels Reduktion zum Erhalt entsprechender Katalysatorsysteme behandelt.

a) Gasphasenreduktion

Die Gasphasenreduktion des Katalysatormaterials wird in einem horizontalen, beheizbaren Strömungsrohr mit 5 Vol.-% Wasserstoff in Stickstoff bei einer Temperatur von 50 °C bis 300 °C für 1 h bis 10 h durchgeführt.

b) Flüssigphasenreduktion (Vergleich)

Der Flüssigphasenreduktion geht eine Fixierung der Aktivkomponente mit Kaliumhydroxid (KOH) voraus. Die Base wird, stöchiometrisch zur Imprägnierlösung, bei Raumtemperatur hinzugegeben. Im Anschluss wird Kaliumformiat (KHCOO) im 10fachen stöchiometrischen Überschuss hinzugegeben und die Lösung für 1 h bis 5 h bei 50 °C bis 120 °C belassen.

## 8. Eigenschaften der Palladium-Katalysatoren

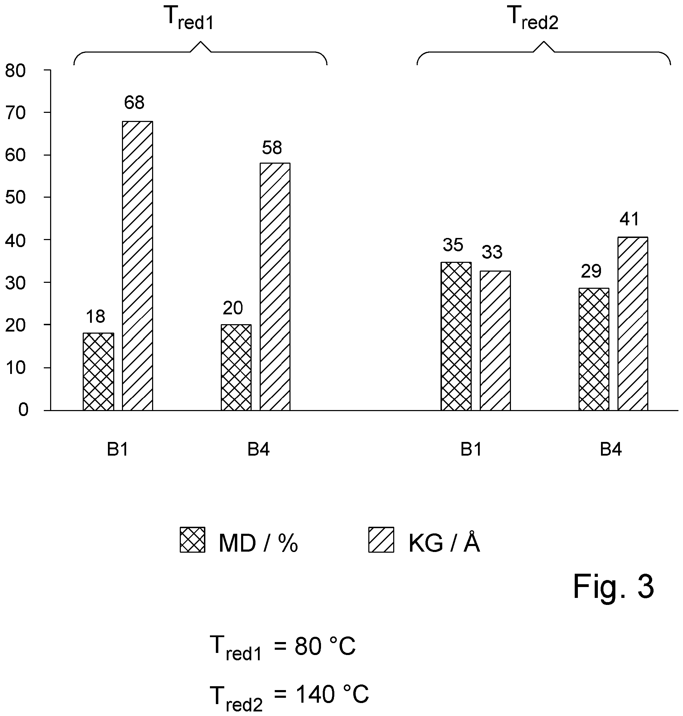

In Abhängigkeit der gewählten Reduktionsmethode und der Reaktionsparameter kann die Ausprägung der metallischen Aktivzentren hinsichtlich Größe und Verteilung gesteuert werden. Dabei kann der Dispersionsgrad im Bereich von 15 % bis 35 % eingestellt werden. Die Clustergrößen der Metallzentren variieren dabei in einem Bereich von 33 Å bis 76 Å. Hierzu kann auch auf Figur 3 verwiesen werden, welche die ermittelten Werte für die Metalldispersion (MD) und Metall-Kristallitgröße (KG) von 5 Gew-% Palladium-Katalysatoren (auf Basis der Katalysatorträger B1 bzw. B4) wiedergibt. Figur 3 verdeutlicht auch, dass bei erfindungsgemäß optimierter Reduktionstemperatur T$_{red2}$ (vorliegend 140 °C) im Vergleich zu der in Figur 3 erfindungsgemäß (und somit ausdrücklich zur Erfindung gehörend) als sogenannte Standardtemperatur bezeichneten Reduktionstemperatur T$_{red1}$ (vorliegend 80 °C) nochmals verbesserte Eigenschaften hinsichtlich der Metalldispersion und der mittleren Kristallitgröße resultieren, was entsprechend auch zu einer nochmals verbesserten katalytischen Leistungsfähigkeit der erfindungsgemäßen Katalysatorsysteme führt. Entsprechendes gilt auch für Platin- sowie Ruthenium-Katalysatoren.

## 9. Allgemeine Ausführungen zur Hydrierung im Festbettreaktor

Die erfindungsgemäßen Katalysatorsysteme können insbesondere großtechnisch beispielsweise zur Katalyse von Hydrierungsreaktionen eingesetzt werden. Hydrierungen gehören zu den Standardreaktionen der technischen Chemie und werden sowohl in großtechnischen Prozessen, wie Petrochemie, z.B. zu Entschwefelung von Erdölfraktionen, als auch als Synthesestufen für Feinchemikalien eingesetzt. Außer ungesättigten Verbindungen werden auch andere Stoffgruppen hydriert, wie Aldehyde und Ketone zu Alkoholen und Nitroverbindungen und Nitrile zu Aminen. Bei den meisten Hydrierungen liegt das Edukt in flüssiger Phase vor; nur niedrig siedende Stoffe wie die Butyraldehyde aus der Hydroformylierung werden in der Gasphase hydriert.

Als Hydrierkatalysatoren dienen beispielsweise Nickel und bestimmte Edelmetalle wir Platin, Ruthenium und Palladium meist in Form von Trägerkatalysatoren. Sie werden entweder als feinkörniges Material in der Reaktionsflüssigkeit suspendiert oder als Festbett eingesetzt. Im letzteren Fall benutzt man für die Dreiphasenreaktion (Reaktionsflüssigkeit, gasförmiger Wasserstoff, Feststoffkatalysator) Rieselbettreaktoren ("*trickle bed reactor*"), d.h. Festbettreaktoren, deren Katalysatorpackung mit der Reaktionsflüssigkeit berieselt wird. Die Größe der Katalysatorformkörper (Kugeln, Zylinder, Extrudate, etc.) kann beispielsweise zwischen 1 und 7 mm liegen.

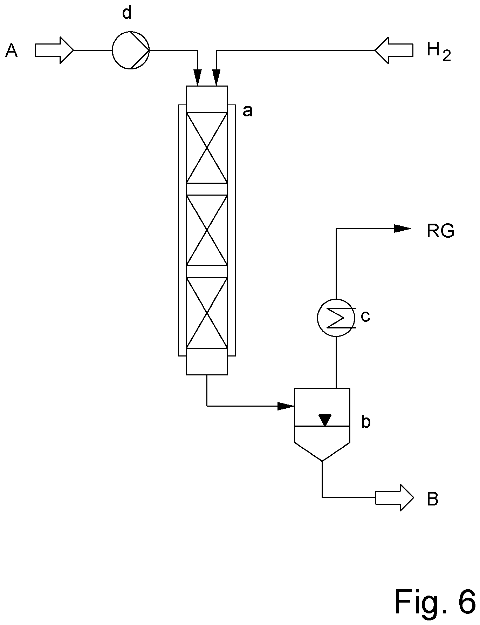

Eine entsprechende Hydriervorrichtung ist Figur 6 zu entnehmen, anhand derer auch eine Prozessführung beispielhaft beschrieben werden kann: Das Edukt A wird dem Rohrreaktor (a) von oben zugeführt und durchströmt den Reaktor mit der Katalysatorschüttung im Gleich- oder Gegenstrom mit dem Wasserstoff $H_2$. Die Gasphase stellt, auf das Volumen bezogen, im Vergleich zur Flüssigphase die Hauptphase dar und umspült die mit der Flüssigphase benetzte Katalysatorschüttung. Eine breite technische Anwendung finden jedoch nur im Gleichstrom arbeitende Reaktoren. Der Fluss wird durch die Schwerkraft oder den externen Druck angetrieben. Zur Temperierung ist der Reaktor mit einem Doppelmantel versehen. An seinem unteren Ende wird das hydrierte Produkt B entnommen und abschließend im Abscheider (b) entgast. Dabei kann Restgas RG über die Einrichtung (c) abgeführt werden.

In einem Rieselbettreaktor sind der Umsatz und die Selektivität nicht nur von der Reaktionskinetik, dem Druck und der Temperatur, sondern auch von der Hydrodynamik des Reaktors abhängig. Die Hydrodynamik hat einen großen Einfluss auf die Flüssigkeitsverteilung innerhalb des Reaktors und wirkt sich unmittelbar auf den Katalysator-Ausnutzungsgrad aus. Durch eine ungleichmäßige Flüssigkeitsverteilung kann es zu einer unvollständigen Benetzung der Katalysatorschüttung kommen. Dadurch kann der Katalysator-Ausnutzungsgrad negativ beeinflusst werden.

Ferner kann durch nicht optimierte technische Größen, wie z.B. das Verhältnis von Höhe zu Durchmesser des Reaktors sowie von Reaktorinnenzu Katalysatorpartikeldurchmesser, die Benetzung der Katalysatorschüttung gestört werden. Um diese Effekte von nicht benetzten Reaktorinnen- und/oder Katalysatorbereichen zu verhindern, ist das Design des Flüssigkeitsverteilers sowie das Einhalten der entsprechenden Größenverhältnisse von entsprechender Bedeutung.

Daher wird bei der Auslegung von Rieselbettreaktoren auf Kenngrößen wie den *Liquid Holdup* (ein Maß für die in der gesamten Katalysatorschüttung vorhandene Flüssigkeit), den Druckverlust über die Schüttung, die Verteilung der Gas- und Flüssigphase oder die Masse- und Wärmeübergangskoeffizienten zurückgegriffen. Die eingesetzten industriellen Reaktoren sind zwischen 5 und 30 m hoch; in diesen liegt die Katalysatorschüttung entweder in mehreren oder in einem einzigen Bett vor. Der Durchmesser des Reaktors wird durch die gleichmäßige Verteilung der Flüssigkeit über den Reaktorquerschnitt limitiert und überschreitet meist nicht einen Wert von 4 bis 5 m. Damit liegt das Verhältnis von Höhe zu Durchmesser des Reaktors (Hr/Di) im Allgemeinen zwischen 5 und 25. Die Rieselbettreaktoren, die im Labormaßstab eingesetzt werden, haben einen Durchmesser von 0,03 bis 0,2 m und können eine Länge von mehreren Metern erreichen. In diesen Maßstäben kann das Verhältnis von Reaktorinnen- zu Katalysatordurchmesser (Di/dk) nicht vernachlässigt werden und sollte über einem Wert von Di/dk = 10 liegen (üblicherweise Di/dk > 15). Wenn dies nicht gegeben ist, kann es aufgrund des Unterschiedes der Struktur der Packung in Nähe der Reaktorwand im Vergleich zum Kern der Packung zu Randgängigkeit der Flüssigkeit kommen, was sich dann in geringeren Umsätzen widerspiegelt. In den industriell genutzten Reaktoren liegt das Verhältnis von Reaktorinnen- zu Katalysatordurchmesser meist zwischen 100 und 1000, um hier die Effekte der Randgängigkeit der Flüssigkeit sicher ausschließen zu können.

Konventionelle Rieselbettreaktoren mit einem Durchmesser ab 0,2 m kommen wegen des erforderlichen Mindestdurchsatzes für die Produktion von Feinchemikalien im Allgemeinen weniger in Frage. Mit der Entwicklung der *Miniplant*-Technik ist es jedoch möglich geworden, kontinuierliche Verfahren auch bei sehr niedrigen Durchsätzen (1 kg/h und darunter) zu betreiben. *Miniplants* werden bisher vor allem in der Verfahrensentwicklung eingesetzt. Sie eignen sich aber auch für die Produktion und insbesondere für die Herstellung kleiner Produktmengen von konstanter Qualität wie Feinchemikalien und von Pharma- und Pflanzenschutzwirkstoffen.

Für weitere Ausführungen kann insbesondere verwiesen auf die folgende Literatur werden: Technische Chemie, Manfred Baerns, et al., 2. Auflage, Wiley-VCH Verlag & Co. KGaA, 2013; Kapitel "Three-Phase Trickle-Bed Reactors", Ullmann's Encyclopedia of Industrial Chemistry, Vol. 7 Online Ed., 2008; sowie Kapitel "Reactor Types and Their Industrial Application", Ullmann's Encyclopedia of Industrial Chemistry, Vol. 7 Online Ed., 2008.

## 10. Katalytische Testung (Hydrierung von Zimsäure)

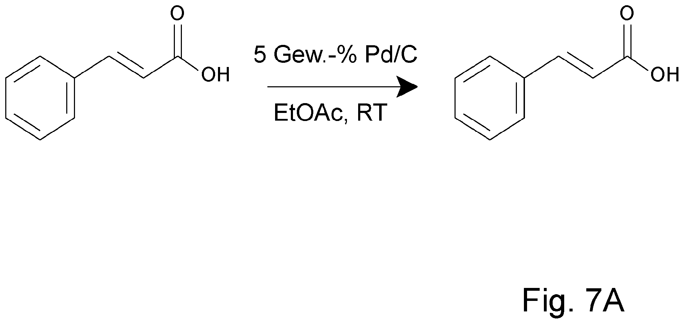

Die katalytische Leistungsfähigkeit der erfindungsgemäßen Katalysatorsysteme auch im Vergleich zu nicht erfindungsgemäßen Systemen kann anhand von Hydrierungen bzw. katalytisch gesteuerten Hydrierungsreaktionen, wie der Hydrierung von Zimsäure als Edukt zu Hydrozimtsäure als Produkt untersucht werden. Hierzu kann auch auf Figur 7A verwiesen werden.

Ein 100 ml-Dreihalskolben, ausgestattet mit einem Rührstab, einem $N_2$-Einlass und einem $H_2$-Einlass wird mit

Zimtsäure (1) (2 g, 13,5 mmol) und 144 mg Katalysator beschickt. Der Dreihalskolben wird mit einem Gummiseptum verschlossen, evakuiert und wieder mit Stickstoff gefüllt (dreimal). Ethylacetat (14 ml) wird hinzugefügt, die Mischung (700 U/min) gerührt, bis das Edukt vollständig gelöst ist. Der Kolben wird evakuiert und mit Wasserstoff nachgefüllt (dreimal). Es werden periodisch nach 1 h, 2 h, 3 h, 5 h, 7 h, 10 h und 16 h Proben entnommen und diese mittels Gaschromatographie, gekoppelt mit einem Massenspektrometer, analytisch untersucht. Es werden Katalysatorsysteme auf Basis der Katalysatorträger A1, A2 und A3 (nicht erfindungsgemäß) sowie Katalysatorsysteme auf Basis der Katalysatorträger B1, B2 und B3 (erfindungsgemäß) untersucht.

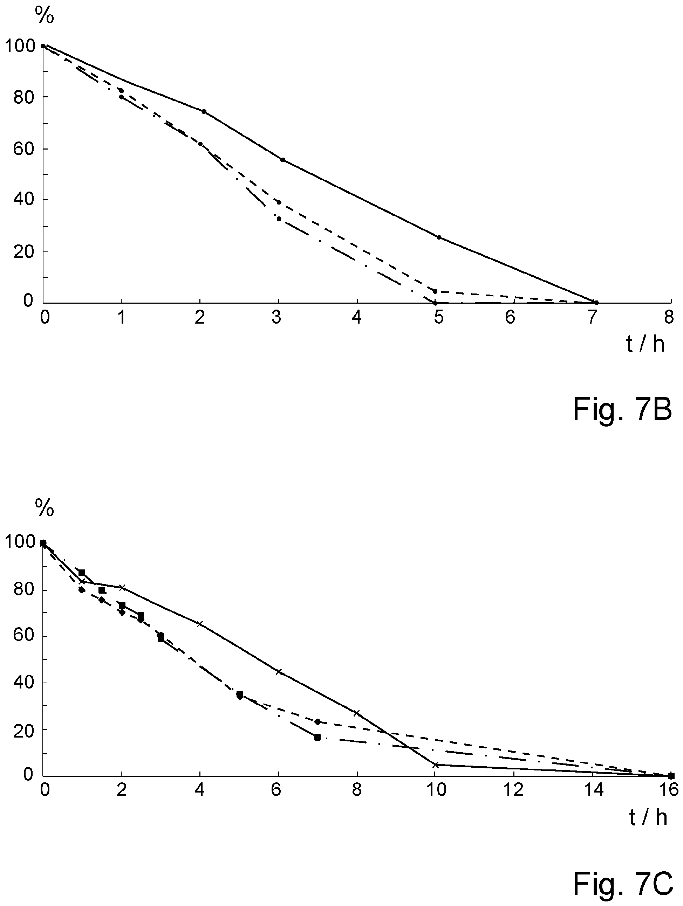

Die Ergebnisse sind in den Figuren 7B und 7C angeführt. Die Figuren zeigen die katalytische Umsetzung (Hydrierung) von Zimtsäure als Edukt bzw. Ausgangsmaterial mit der Menge an Zimtsäure im zeitlichen Verlauf (bestimmt mittels GC-MS; % Fläche), wobei zum Zeitpunkt t = 0 100 % der nichtumgesetzten Zimtsäure als Ausgangsmaterial vorliegen.

Figur 7B zeigt die Ergebnisse für die erfindungsgemäßen Katalysatorsysteme auf Basis der Katalysatorträger B1, B2 und B3 (wobei für t = 4 h die obere Linie das Katalysatorsystem B3, die mittlere Linie das Katalysatorsystem B1 und die untere Linie das Katalysatorsystem B2 zeigt). Figur 7C zeigt die Ergebnisse für die nicht erfindungsgemäßen Katalysatorsysteme auf Basis der Katalysatorträger A1, A2 und A3 (wobei für t = 7 h die obere Linie das Katalysatorsystem A3, und die unteren Linien das Katalysatorsystem A1 bzw. A2 zeigen).

Ein Vergleich der in den Figuren 7B und 7C dargestellten Linienverläufe zeigt die deutlich höhere katalytische Leistungsfähigkeit der erfindungsgemäßen Katalysatorsysteme auf Basis der Katalysatorträger B1, B2 und B3 gegenüber den nicht erfindungsgemäßen Systemen auf Basis der Katalysatorträger A1, A2 und A3. So ist die Umsetzung bzw. Hydrierung des Ausgangsmaterials in Form der Zimtsäure bei den erfindungsgemäßen Systemen deutlich schneller abgeschlossen als für die nicht erfindungsgemäßen Systeme, so dass für die erfindungsgemäßen Systeme höhere Umsatzraten vorliegen.

Die erfindungsgemäßen Katalysatorsysteme auf Basis der Katalysatorträger B1, B2 und B3 weisen somit insgesamt eine höhere katalytische Leistungsfähigkeit auf, insbesondere einhergehend mit größeren Umsätzen und einer verbesserten Raum/Zeit-Ausbeute. Entsprechendes gilt auch für hierzu korrespondierende Platin- bzw. Ruthenium-Katalysatorsysteme.

Wie zuvor angeführt, kommt in diesem Zusammenhang dem speziellen Porensystem mit der hohen Meso- und Makroporosität der als Katalysatorträger eingesetzten Aktivkohle eine große Bedeutung zu, insbesondere auch im Hinblick auf eine Verbesserung der Transportvorgänge für Edukte und Produkte.

Zudem ist bei den erfindungsgemäßen Katalysatorsystemen die Ausrüstung mit der katalytisch aktiven Komponente insgesamt verbessert, und zwar auch bedingt durch die spezielle Verfahrensführung zur Herstellung der erfindungsgemäßen Katalysatorsysteme mit der ziel- und zweckgerichteten Oxidation der Aktivkohle vor Beladung mit der katalytisch aktiven Komponente bzw. dem diesbezüglichen Präkursor, gefolgt von einer Reduktion zum Erhalt des Katalysatorsystems. Insbesondere führt die spezielle Porenstruktur der Aktivkohle, wie es insbesondere auch in Form des speziellen Verhältnisses (Quotient Q) von Gesamtporenvolumen zu spezifischer BET-Oberflächen beschrieben ist, zu den verbesserten Eigenschaften hinsichtlich der katalytischen Aktivität der Katalysatorsysteme nach der Erfindung.

Dabei führt insbesondere die Gesamtheit der erfindungsgemäßen Maßnahmen in ihrer speziellen Kombination, wie zuvor angeführt, in ihrer ziel- und zweckgerichteten Kombination zu den erfindungsgemäßen Vorteilen und Eigenschaften der erfindungsgemäßen Katalysatorsysteme.

Im Ergebnis zeigen die zugrundeliegenden Untersuchungen somit insgesamt, dass die mit dem erfindungsgemäßen Verfahren erhaltenen Katalysatorsysteme nach der Erfindung gegenüber Systemen des Standes der Technik über signifikant verbesserte Eigenschaften verfügen.

**Patentansprüche**

1. Verfahren zur Herstellung eines mindestens eine katalytisch aktive Komponente aufweisenden Katalysatorsystems in Form eines geträgerten Katalysators, vorzugsweise zur Verwendung in der heterogenen Katalyse,

   wobei mindestens eine katalytisch aktive Komponente an einem Katalysatorträger aufgebracht und/oder fixiert wird, wobei die katalytisch aktive Komponente mindestens ein Metall umfasst und/oder hieraus besteht, wobei das Metall ausgewählt wird aus der Gruppe von Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd und Pt,
   wobei das Verfahren die folgenden Schritte in der nachstehend spezifizierten Abfolge (a) bis (d) umfasst:

   (a) Bereitstellung und/oder Herstellung einer als Katalysatorträger eingesetzten kugelförmigen Aktivkohle (= Ausgangsaktivkohle),
   wobei die Aktivkohle (d.h. die Ausgangsaktivkohle)

(i) ein Gesamtporenvolumen $V_{total}$ nach Gurvich im Bereich von 0,8 cm$^3$/g bis 3,9 cm$^3$/g, aufweist, wobei mindestens 50 % des Gesamtporenvolumens nach Gurvich der Aktivkohle durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind, und

(ii) eine spezifische BET-Oberfläche $S_{BET}$ im Bereich von 1.000 m$^2$/g bis 3.000 m$^2$/g aufweist, jedoch mit der Maßgabe, dass das Verhältnis Q von Gesamtporenvolumen $V_{total}$ nach Gurvich zu spezifischer BET-Oberfläche $S_{BET}$ entsprechend der Gleichung Q = $V_{total}$ / $S_{BET}$ mindestens 0,5 · 10$^{-9}$ m beträgt;

dann

(b) Oxidation, insbesondere Oberflächenoxidation, der in Verfahrensschritt (a) bereitgestellten und/oder hergestellten Aktivkohle, mit der Maßgabe, dass die oxidierte, insbesondere oberflächenoxidierte, Aktivkohle einen Sauerstoffgehalt, insbesondere Oberflächensauerstoffgehalt, bestimmt mittels Röntgenphotoelektronenspektroskopie (XPS bzw. ESCA), von mindestens 4 Atom-%, bezogen auf die Gesamtelementzusammensetzung der oxidierten Aktivkohle, aufweist, und/oder mit der Maßgabe, dass die oxidierte, insbesondere oberflächenoxidierte, Aktivkohle eine Hydrophilie, bestimmt als Wasserdampfadsorptionsverhalten, aufweist derart, dass bei einem Partialdruck p/p$_0$ von 0,6 mindestens 30 % der maximalen Wasserdampfsättigungsbeladung der Aktivkohle erreicht ist;
dann

(c) Ausrüstung, insbesondere Beladung und/oder Beschichtung und/oder Imprägnierung, der in Verfahrensschritt (b) oxidierten, insbesondere oberflächenoxidierten, Aktivkohle mit der katalytisch aktiven Komponente, insbesondere mit mindestens einem Präkursor der katalytisch aktiven Komponente;
dann

(d) Reduktion der in Verfahrensschritt (c) erhaltenen, mit der katalytisch aktiven Komponente, insbesondere mit dem Präkursor der katalytisch aktiven Komponente, ausgerüsteten oxidierten, insbesondere oberflächenoxidierten, Aktivkohle, insbesondere zur Überführung des Präkursors der katalytisch aktiven Komponente in die katalytisch aktive Komponente, so dass das mindestens eine katalytisch aktive Komponente aufweisende Katalysatorsystem erhalten wird;

wobei in Verfahrensschritt (d) die Reduktion als Gasphasenreduktion durchgeführt wird, wobei in Verfahrensschritt (d) die Reduktion bei einer Temperatur im Bereich von 115 °C bis 160 °C durchgeführt wird;

wobei in Verfahrensschritt (d) das Katalysatorsystem erhalten wird, wobei das Katalysatorsystem mindestens eine an einem Katalysatorträger aufgebrachte und/oder fixierte katalytisch aktive Komponente aufweist, wobei die katalytisch aktive Komponente mindestens ein Metall umfasst und/oder hieraus besteht und wobei der Katalysatorträger in Form von Aktivkohle ausgebildet ist, wobei der Katalysatorträger in Form einer kugelförmigen Aktivkohle vorliegt; und

wobei das Katalysatorsystem eine Aktivität, bestimmt als prozentualer Dispersionsgrad der katalytisch aktiven Komponente auf dem Katalysatorträger, gemessen durch Chemisorption mittels dynamischem Strömungsverfahren gemäß DIN 66136-3:2007-01, im Bereich von 15 % bis 90 % aufweist; und

wobei das Katalysatorsystem die katalytisch aktive Komponente mit einer mittleren Kristallitgröße, bestimmt gemäß DIN 66136, von höchstens 80 Å (Angström), aufweist.

2. Verfahren nach Anspruch 1,

wobei die in Verfahrensschritt (a) bereitgestellte und/oder hergestellte Aktivkohle (d.h. Ausgangsaktivkohle) ein Gesamtporenvolumen $V_{total}$ nach Gurvich im Bereich von 0,8 cm$^3$/g bis 3,9 cm$^3$/g, insbesondere im Bereich von 0,9 cm$^3$/g bis 3,4 cm$^3$/g, vorzugsweise im Bereich von 1 cm$^3$/g bis 2,9 cm$^3$/g, bevorzugt im Bereich von 1,1 cm$^3$/g bis 2,4 cm$^3$/g, besonders bevorzugt im Bereich von 1,2 cm$^3$/g bis 1,9 cm$^3$/g, ganz besonders bevorzugt im Bereich von 1,5 cm$^3$/g bis 1,9 cm$^3$/g, aufweist, wobei 50 % bis 90 %, insbesondere 52,5 % bis 87,5 %, vorzugsweise 55 % bis 85 %, bevorzugt 57,5 % bis 82,5 %, besonders bevorzugt 60 % bis 80 %, des Gesamtporenvolumens nach Gurvich der Aktivkohle durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind; und/oder

wobei die in Verfahrensschritt (a) bereitgestellte und/oder hergestellte Aktivkohle (d.h. Ausgangsaktivkohle) eine spezifische BET-Oberfläche $S_{BET}$ im Bereich von 1.100 m$^2$/g bis 2.600 m$^2$/g, insbesondere im Bereich von 1.200 m$^2$/g bis 2.400 m$^2$/g, vorzugsweise im Bereich von 1.300 m$^2$/g bis 2.200 m$^2$/g, bevorzugt im Bereich von 1.350 m$^2$/g bis 1.950 m$^2$/g, besonders bevorzugt im Bereich von 1.375 m$^2$/g bis 1.900 m$^2$/g, aufweist; und/oder

wobei für die in Verfahrensschritt (a) bereitgestellte und/oder hergestellte Aktivkohle (d.h. Ausgangsaktivkohle) das Verhältnis Q von Gesamtporenvolumen $V_{total}$ nach Gurvich zu spezifischer BET-Oberfläche $S_{BET}$, ent-

sprechend der Gleichung $Q = V_{total} / S_{BET}$, im Bereich von $0,5 \cdot 10^{-9}$ m bis $1,9 \cdot 10^{-9}$ m, insbesondere im Bereich von $0,55 \cdot 10^{-9}$ m bis $1,9 \cdot 10^{-9}$ m, vorzugsweise im Bereich von $0,6 \cdot 10^{-9}$ m bis $1,8 \cdot 10^{-9}$ m, bevorzugt im Bereich von $0,65 \cdot 10^{-9}$ m bis $1,7 \cdot 10^{-9}$ m, besonders bevorzugt im Bereich von $0,65 \cdot 10^{-9}$ m bis $1,6 \cdot 10^{-9}$ m, ganz besonders bevorzugt im Bereich von $0,7 \cdot 10^{-9}$ m bis $1,5 \cdot 10^{-9}$ m, weiter bevorzugt im Bereich von $0,75 \cdot 10^{-9}$ m bis $1,4 \cdot 10^{-9}$ m, noch weiter bevorzugt im Bereich von $0,8 \cdot 10^{-9}$ m bis $1,3 \cdot 10^{-9}$ m, liegt.

3. Verfahren nach Anspruch 1 oder 2,

wobei die in Verfahrensschritt (b) oxidierte, insbesondere oberflächenoxidierte, Aktivkohle einen Sauerstoffgehalt, insbesondere Oberflächensauerstoffgehalt, bestimmt mittels Röntgenphotoelektronenspektroskopie (XPS bzw. ESCA), im Bereich von 4 Atom-% bis 20 Atom-%, insbesondere im Bereich von 5 Atom-% bis 20 Atom-%, vorzugsweise im Bereich von 5,5 Atom-% bis 18 Atom-%, bevorzugt im Bereich von 6 Atom-% bis 15 Atom-%, besonders bevorzugt im Bereich von 7 Atom-% bis 12,5 Atom-%, bezogen auf die Gesamtelementzusammensetzung der oxidierten Aktivkohle, aufweist,

insbesondere wobei die von Sauerstoff verschiedenen Elemente der in Verfahrensschritt (b) oxidierten, insbesondere oberflächenoxidierten, Aktivkohle zumindest im Wesentlichen von Kohlstoff gebildet werden, insbesondere wobei die in Verfahrensschritt (b) oxidierte, insbesondere oberflächenoxidierte, Aktivkohle allenfalls Spuren von von Sauerstoff und von Kohlenstoff verschiedenen Elementen, insbesondere Stickstoff, Schwefel und/oder Chlor, aufweist, bevorzugt in einer Menge von höchstens 2 Atom-%, insbesondere höchstens 1,5 Atom-%, bevorzugt höchstens 1 Atom-%, bezogen auf die Gesamtelementzusammensetzung der oxidierten Aktivkohle und berechnet als Summe der von Sauerstoff und Kohlenstoff verschiedenen Elemente, aufweist.

4. Verfahren nach einem der vorangehenden Ansprüche,

wobei die in Verfahrensschritt (b) oxidierte, insbesondere oberflächenoxidierte, Aktivkohle eine Hydrophilie, bestimmt als Wasserdampfadsorptionsverhalten, aufweist derart, dass bei einem Partialdruck $p/p_0$ von 0,6 mindestens 35 %, insbesondere mindestens 40 %, vorzugsweise mindestens 50 %, bevorzugt mindestens 60 %, der maximalen Wasserdampfsättigungsbeladung der Aktivkohle erreicht ist; und/oder

wobei die in Verfahrensschritt (b) oxidierte, insbesondere oberflächenoxidierte, Aktivkohle eine Hydrophilie, bestimmt als Wasserdampfadsorptionsverhalten, aufweist derart, dass bei einem Partialdruck $p/p_0$ von 0,6 höchstens 100 %, insbesondere höchstens 99 %, vorzugsweise höchstens 98 %, bevorzugt höchstens 95 %, besonders bevorzugt höchstens 90 %, der maximalen Wasserdampfsättigungsbeladung der Aktivkohle erreicht ist; und/oder

wobei die in Verfahrensschritt (b) oxidierte, insbesondere oberflächenoxidierte, Aktivkohle eine Hydrophilie, bestimmt als Wasserdampfadsorptionsverhalten, aufweist derart, dass bei einem Partialdruck $p/p_0$ von 0,6 30 % bis 100 %, insbesondere 35 % bis 99 %, vorzugsweise 40% bis 98 %, bevorzugt 50 % bis 95 %, besonders bevorzugt 60 % bis 90 %, der maximalen Wasserdampfsättigungsbeladung der Aktivkohle erreicht ist; und/oder

wobei die in Verfahrensschritt (b) oxidierte, insbesondere oberflächenoxidierte, Aktivkohle eine Hydrophilie, bestimmt als Wasserdampfadsorptionsverhalten, aufweist derart, dass in einem Partialdruckbereich $p/p_0$ von 0,1 bis 0,6 mindestens 30 %, insbesondere mindestens 35 %, vorzugsweise mindestens 40 %, bevorzugt mindestens 50 %, besonders bevorzugt mindestens 60 %, der maximalen Wasserdampfsättigungsbeladung der Aktivkohle erreicht ist; und/oder

wobei die in Verfahrensschritt (b) oxidierte, insbesondere oberflächenoxidierte, Aktivkohle eine Hydrophilie, bestimmt als Wasserdampfadsorptionsverhalten, aufweist derart, dass in einem Partialdruckbereich $p/p_0$ von 0,1 bis 0,6 höchstens 100 %, insbesondere höchstens 99 %, vorzugsweise höchstens 98 %, bevorzugt höchstens 95 %, besonders bevorzugt höchstens 90 %, der maximalen Wasserdampfsättigungsbeladung der Aktivkohle erreicht ist; und/oder

wobei die in Verfahrensschritt (b) oxidierte, insbesondere oberflächenoxidierte, Aktivkohle eine Hydrophilie, bestimmt als Wasserdampfadsorptionsverhalten, aufweist derart, dass in einem Partialdruckbereich $p/p_0$ von 0,1 bis 0,6 30 % bis 100 %, insbesondere 35 % bis 99 %, vorzugsweise 40% bis 98 %, bevorzugt 50 % bis 95 %, besonders bevorzugt 60 % bis 90 %, der maximalen Wasserdampfsättigungsbeladung der Aktivkohle erreicht ist.

5. Verfahren nach einem der vorangehenden Ansprüche,

wobei in Verfahrensschritt (b) die Oxidation, insbesondere Oberflächenoxidation, der in Verfahrensschritt (a) bereitgestellten und/oder hergestellten Aktivkohle mit der Maßgabe erfolgt, dass die oxidierte, insbesondere oberflächenoxidierte, Aktivkohle eine Hydrophilie, bestimmt als Wasserdampfadsorptionsverhalten, aufweist derart, dass bei einem Partialdruck $p/p_0$ von 0,6 mindestens 30 % der maximalen Wasserdampfadsorptionskapazität der Aktivkohle erschöpft und/oder genutzt ist; und/oder

wobei die in Verfahrensschritt (b) oxidierte, insbesondere oberflächenoxidierte, Aktivkohle eine Hydrophilie, bestimmt als Wasserdampfadsorptionsverhalten, aufweist derart, dass bei einem Partialdruck $p/p_0$ von 0,6 mindestens mindestens 30 %, insbesondere mindestens 35 %, vorzugsweise mindestens 40 %, bevorzugt mindestens 50 %, besonders bevorzugt mindestens 60 %, der maximalen Wasserdampfadsorptionskapazität der Aktivkohle erschöpft und/oder genutzt ist; und/oder

wobei die in Verfahrensschritt (b) oxidierte, insbesondere oberflächenoxidierte, Aktivkohle eine Hydrophilie, bestimmt als Wasserdampfadsorptionsverhalten, aufweist derart, dass bei einem Partialdruck $p/p_0$ von 0,6 höchstens 100 %, insbesondere höchstens 99 %, vorzugsweise höchstens 98 %, bevorzugt höchstens 95 %, besonders bevorzugt höchstens 90 %, der maximalen Wasserdampfadsorptionskapazität der Aktivkohle erschöpft und/oder genutzt ist; und/oder

wobei die in Verfahrensschritt (b) oxidierte, insbesondere oberflächenoxidierte, Aktivkohle eine Hydrophilie, bestimmt als Wasserdampfadsorptionsverhalten, aufweist derart, dass bei einem Partialdruck $p/p_0$ von 0,6 30 % bis 100 %, insbesondere 35 % bis 99 %, vorzugsweise 40% bis 98 %, bevorzugt 50 % bis 95 %, besonders bevorzugt 60 % bis 90 %, der maximalen Wasserdampfadsorptionskapazität der Aktivkohle erschöpft und/oder genutzt ist; und/oder

wobei die in Verfahrensschritt (b) oxidierte, insbesondere oberflächenoxidierte, Aktivkohle eine Hydrophilie, bestimmt als Wasserdampfadsorptionsverhalten, aufweist derart, dass in einem Partialdruckbereich $p/p_0$ von 0,1 bis 0,6 mindestens mindestens 30 %, insbesondere mindestens 35 %, vorzugsweise mindestens 40 %, bevorzugt mindestens 50 %, besonders bevorzugt mindestens 60 %, der maximalen Wasserdampfadsorptionskapazität der Aktivkohle erschöpft und/oder genutzt ist; und/oder

wobei die in Verfahrensschritt (b) oxidierte, insbesondere oberflächenoxidierte, Aktivkohle eine Hydrophilie, bestimmt als Wasserdampfadsorptionsverhalten, aufweist derart, dass in einem Partialdruckbereich $p/p_0$ von 0,1 bis 0,6 höchstens 100 %, insbesondere höchstens 99 %, vorzugsweise höchstens 98 %, bevorzugt höchstens 95 %, besonders bevorzugt höchstens 90 %, der maximalen Wasserdampfadsorptionskapazität der Aktivkohle erschöpft und/oder genutzt ist; und/oder

wobei die in Verfahrensschritt (b) oxidierte, insbesondere oberflächenoxidierte, Aktivkohle eine Hydrophilie, bestimmt als Wasserdampfadsorptionsverhalten, aufweist derart, dass in einem Partialdruckbereich $p/p_0$ von 0,1 bis 0,6 30 % bis 100 %, insbesondere 35 % bis 99 %, vorzugsweise 40% bis 98 %, bevorzugt 50 % bis 95 %, besonders bevorzugt 60 % bis 90 %, der maximalen Wasserdampfadsorptionskapazität der Aktivkohle erschöpft und/oder genutzt ist.

6. Verfahren nach einem der vorangehenden Ansprüche,

wobei die katalytisch aktive Komponente mindestens ein Metall, ausgewählt aus der Gruppe von Fe, Bi, V, Cu, Pb, Zn, Ag, Sn, Pd, Pt, Ru und Ni, vorzugsweise Fe, Bi, V, Cu, Pt, Ru und Pb, bevorzugt Pd, Pt und Ru, besonders bevorzugt Pd und Pt, aufweist; und/oder

wobei der Präkursor der katalytisch aktiven Komponente derart ausgebildet und/oder beschaffen ist, dass der Präkursor durch die in Verfahrensschritt (d) durchgeführte Reduktion in die katalytisch aktive Komponente überführt und/oder umgewandelt wird; und/oder

wobei der Präkursor der katalytisch aktiven Komponente eine oxidierte Form der katalytisch aktiven Komponente darstellt oder hiervon gebildet ist.

7. Verfahren nach einem der vorangehenden Ansprüche,

wobei in Verfahrensschritt (c) die Ausrüstung der oxidierten, insbesondere oberflächenoxidierten, Aktivkohle mit der katalytisch aktiven Komponente, insbesondere mit dem Präkursor der katalytisch aktiven Komponente, ein Aufbringen und/oder Inkontaktbringen, vorzugsweise eine Fixierung, der oxidierten, insbesondere oberflächenoxidierten, Aktivkohle mit der katalytisch aktiven Komponente, insbesondere mit dem Präkursor der katalytisch aktiven Komponente, umfasst, insbesondere wobei das Aufbringen und/oder Inkontaktbringen, vorzugsweise die Fixierung, durch Eintauchen und/oder Tränken und/oder Benetzen und/oder Bedecken und/oder Beschichten und/oder Auf- und/oder Besprühen der oxidierten, insbesondere oberflächenoxidierten, Aktivkohle in und/oder mit der katalytisch aktiven Komponente, insbesondere in und/oder mit dem Präkursor der katalytisch aktiven Komponente, erfolgt, insbesondere wobei das Aufbringen und/oder Inkontaktbringen unter Energieeintrag, insbesondere mittels Rütteln und/oder mittels Ultraschalleintrag, erfolgt, und/oder insbesondere wobei die katalytisch aktive Komponente, insbesondere der Präkursor der katalytisch aktiven Komponente, in Form einer Lösung und/oder in Dispersionsform (Dispersion), insbesondere wie in Anspruch 39 definiert, eingesetzt wird; und/oder

wobei insbesondere im Anschluss an das Aufbringen und/oder Inkontaktbringen und/oder insbesondere zu Zwecken der Ausrüstung der oxidierten, insbesondere oberflächenoxidierten, Aktivkohle mit der katalytisch aktiven Komponente, insbesondere mit dem Präkursor der katalytisch aktiven Komponente, überschüssige Mengen an katalytisch aktiver Komponente, insbesondere überschüssige Mengen des Präkursors der katalytisch aktiven Komponente, vorzugsweise überschüssige Mengen an Lösung und/oder Dispersionsform (Dispersion) der katalytisch aktiven Komponente, bevorzugt überschüssige Mengen an Lösung und/oder Dispersionsform (Dispersion) des Präkursors der katalytisch aktiven Komponente, von der Aktivkohle und/oder dem Katalysatorsystem entfernt und/oder abgetrennt werden; und/oder

wobei insbesondere im Anschluss an das Aufbringen und/oder Inkontaktbringen und/oder insbesondere zu Zwecken der Ausrüstung der oxidierten, insbesondere oberflächenoxidierten, Aktivkohle mit der katalytisch aktiven Komponente, insbesondere mit dem Präkursor der katalytisch aktiven Komponente, eine Aufreinigung und/oder Trocknung der erhaltenen Aktivkohle erfolgt, insbesondere wobei die Aufreinigung und/oder Trocknung mittels mindestens eines Waschvorgangs in einer Flüssigkeit, insbesondere Wasser, erfolgt und/oder insbesondere wobei die Aufreinigung und/oder Trocknung unter Erwärmung der mit der katalytischen Komponente ausgerüsteten Aktivkohle, insbesondere auf Temperaturen im Bereich von 40 °C bis 200 °C, insbesondere 50 °C bis 150 °C, vorzugsweise 60 °C bis 120 °C, erfolgt und/oder insbesondere wobei die Aufreinigung und/oder Trocknung unter reduziertem (Luft-)Druck und/oder im Vakuum durchgeführt wird und/oder insbesondere wobei die Aufreinigung und/oder Trocknung bei einem (Luft-) Druck im Bereich von 100 Pa bis 0,01 Pa, insbesondere 10 Pa bis 0,1 Pa, erfolgt.

8. Verfahren nach einem der vorangehenden Ansprüche,

wobei in Verfahrensschritt (d) die Reduktion bei einer Temperatur im Bereich von 120 °C bis 150 °C, weiter bevorzugt im Bereich von 130 °C bis 145 °C, durchgeführt wird; und/oder

wobei in Verfahrensschritt (d) die Reduktion für eine Zeitdauer im Bereich von 0,05 h bis 48 h, insbesondere im Bereich von 0,1 h bis 36 h, vorzugsweise im Bereich von 0,5 h bis 24 h, bevorzugt im Bereich von 1 h bis 12 h, durchgeführt wird.

9. Verfahren nach einem der vorangehenden Ansprüche,

wobei das Katalysatorsystem eine Aktivität, bestimmt als prozentualer Dispersionsgrad der katalytisch aktiven Komponente auf dem Katalysatorträger, gemessen durch Chemisorption mittels dynamischem Strömungsverfahren gemäß DIN 66136-3:2007-01, im Bereich von 20 % bis 80 %, vorzugsweise im Bereich von 25 % bis 70 %, bevorzugt im Bereich von 28 % bis 60 %, aufweist; und/oder

wobei das Katalysatorsystem die katalytisch aktive Komponente mit einer mittleren Kristallitgröße, bestimmt gemäß DIN 66136, von höchstens 70 Å, vorzugsweise höchstens 60 Å, bevorzugt höchstens 58 Å, besonders bevorzugt höchstens 45 Å, ganz besonders bevorzugt höchstens 40 Å, noch weiter bevorzugt höchstens 38 Å, und/oder im Bereich von 5 Å (Angström) bis 80 Å, insbesondere im Bereich von 7 Å bis 70 Å, vorzugsweise im Bereich von 10 Å bis 60 Å, bevorzugt im Bereich von 15 Å bis 58 Å, besonders bevorzugt im Bereich von 17 Å bis 45 Å, ganz besonders bevorzugt im Bereich von 18 Å bis 40 Å, noch weiter bevorzugt im Bereich von 20 Å bis 38 Å, aufweist.

10. Katalysatorsystem in Form eines geträgerten Katalysators, vorzugsweise zur Verwendung in der heterogenen Katalyse, erhältlich und/oder erhalten gemäß einem Verfahren nach einem der vorangehenden Ansprüche.

11. Katalysatorsystem nach Anspruch 10,

wobei das Katalysatorsystem mindestens eine an einem Katalysatorträger aufgebrachte und/oder fixierte katalytisch aktive Komponente aufweist, wobei die katalytisch aktive Komponente mindestens ein Metall umfasst und/oder hieraus besteht, wobei das Metall ausgewählt ist aus der Gruppe von Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd und Pt, und wobei der Katalysatorträger in Form von Aktivkohle ausgebildet ist, wobei der Katalysatorträger in Form einer kugelförmigen Aktivkohle vorliegt, wobei die Aktivkohle (d.h. die den Katalysatorträger ausbildende Aktivkohle)

(i) ein Gesamtporenvolumen $V_{total}$ nach Gurvich im Bereich von 0,8 cm$^3$/g bis 3,9 cm$^3$/g, wobei mindestens 50 % des Gesamtporenvolumens nach Gurvich durch Poren mit Porendurchmessern von mindestens 2 nm, insbesondere durch Poren mit Porendurchmessern im Bereich von 2 nm bis 500 nm, vorzugsweise durch Meso- und Makroporen, gebildet sind, und

(ii) eine spezifische BET-Oberfläche $S_{BET}$ im Bereich von 1.000 m²/g bis 3.000 m²/g aufweist, jedoch mit der Maßgabe, dass das Verhältnis Q von Gesamtporenvolumen $V_{total}$ nach Gurvich zu spezifischer BET-Oberfläche $S_{BET}$ entsprechend der Gleichung $Q = V_{total} / S_{BET}$ mindestens $0,5 \cdot 10^{-9}$ m beträgt; und

wobei das Katalysatorsystem eine Aktivität, bestimmt als prozentualer Dispersionsgrad der katalytisch aktiven Komponente auf dem Katalysatorträger, gemessen durch Chemisorption mittels dynamischem Strömungsverfahren gemäß DIN 66136-3:2007-01, im Bereich von 15 % bis 90 % aufweist; und wobei das Katalysatorsystem die katalytisch aktive Komponente mit einer mittleren Kristallitgröße, bestimmt gemäß DIN 66136, von höchstens 80 Å (Angström) aufweist.

**12.** Verwendung eines Katalysatorsystems nach Anspruch 10 oder 11,

als Katalysator oder Katalysatorträger; oder
für die chemische Katalyse, insbesondere für die heterogene Katalyse, und/oder für die diskontinuierliche oder kontinuierliche Katalyse; oder
zur Katalyse chemischer Prozesse und Reaktionen, insbesondere Hydrierungsreaktionen oder Oligomerisations- und Polymerisations-reaktionen, vorzugsweise von Olefinen, bevorzugt Hydrierungsreaktionen.

**13.** Verwendung eines Katalysatorsystems nach Anspruch 10 oder 11,

zur Herstellung von Filtern und Filtermaterialien, insbesondere zur Entfernung von Schad-, Geruchs- und Giftstoffen, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich; oder
als Sorptionsspeicher für Gase oder Flüssigkeiten; oder
in oder als Gassensoren oder in Brennstoffzellen; oder
für sorptive Anwendungen, insbesondere adsorptive und/oder chemisorptive Anwendungen, vorzugsweise chemisorptive Anwendungen, insbesondere als vorzugsweise reaktives und/oder katalytisches Adsorbens; oder
für die Gasreinigung und/oder die Gasaufbereitung; oder
für die Entfernung von Schadstoffen, insbesondere gasförmigen Schadstoffen, oder von umweltschädlichen, gesundheitsschädlichen oder toxischen Substanzen oder Gasen und/oder
zur Aufbereitung und/oder Bereitstellung von Reinraumatmosphären, insbesondere für die Elektroindustrie, insbesondere für die Halbleiter- oder Chipherstellung.

**14.** Schutzmaterialien, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung, sowie Schutzabdeckungen, vorzugsweise alle vorgenannten Schutzmaterialien für den ABC-Einsatz, hergestellt unter Verwendung eines Katalysatorsystems nach Anspruch 10 oder 11 und/oder aufweisend ein Katalysatorsystem nach Anspruch 10 oder 11.

**15.** Filter, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige und/oder chemisorptionsfähige Trägerstrukturen und Filter für den medizinischen Bereich, hergestellt unter Verwendung eines Katalysatorsystems nach Anspruch 10 oder 11 und/oder aufweisend ein Katalysatorsystem nach Anspruch 10 oder 11.

**Claims**

**1.** Method for preparing a catalyst system comprising at least one catalytically active component in the form of a supported catalyst, preferentially for use in heterogeneous catalysis,

wherein at least one catalytically active component is applied and/or fixed to a catalyst support, wherein the catalytically active component comprises and/or consists of at least one metal, wherein the metal is selected from the group of Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd and Pt, wherein the method comprises the following steps in the sequence (a) to (d) specified below:

(a) providing and/or preparing a spherical activated carbon (=starting activated carbon) used as catalyst support,
wherein the activated carbon (i.e. the starting activated carbon)

(i) has a total pore volume Vtotal according to Gurvich in the range of from 0.8 cm$^3$/g to 3.9 cm$^3$/g, wherein at least 50 % of the total pore volume according to Gurvich of the activated carbon is formed by pores having pore diameters of at least 2 nm, especially by pores having pore diameters in the range from 2 nm to 500 nm, preferentially by meso- and macropores, and
(ii) has a specific BET surface area SBET in the range from 1,000 m$^2$/g to 3,000 m$^2$/g, however, with the proviso that the ratio Q of total pore volume Vtotal according to Gurvich to specific BET surface area SBET according to the equation Q=Vtotal /SBET is at least $0.5 \cdot 10^{-9}$ m;

then
(b) oxidation, especially surface oxidation, of the activated carbon provided and/or prepared in process step (a), with the proviso that the oxidized, especially surface-oxidized, activated carbon has an oxygen content, especially surface oxygen content, determined by means of X-ray photoelectron spectroscopy (XPS or ESCA), of at least 4 atom %, based on the total element composition of the oxidized activated carbon, and/or with the proviso that the oxidized, especially surface-oxidized, activated carbon has a hydrophilicity, determined as water vapor adsorption behavior, such that at a partial pressure $p/p_0$ of 0.6 at least 30 % of the maximum water vapor saturation loading of the activated carbon is achieved;
then
(c) equipping, especially loading and/or coating and/or impregnating, of the activated carbon oxidized, especially surface-oxidized, in process step (b) with the catalytically active component, especially with at least one precursor of the catalytically active component;
then
(d) reducing the oxidized, especially surface-oxidized, activated carbon obtained in process step (c) and equipped with the catalytically active component, especially with the precursor of the catalytically active component, especially for converting the precursor of the catalytically active component into the catalytically active component, so that the catalyst system comprising at least one catalytically active component is obtained;

wherein in process step (d) the reduction is carried out as a gas phase reduction, wherein in process step (d) the reduction is carried out at a temperature in the range of from 115 °C to 160 °C;
wherein in process step (d) the catalyst system is obtained, wherein the catalyst system comprises at least one catalytically active component applied and/or fixed to a catalyst support, wherein the catalytically active component comprises and/or consists of at least one metal and wherein the catalyst support is formed in the form of activated carbon, wherein the catalyst support is present in the form of a spherical activated carbon; and wherein the catalyst system has an activity, determined as a percentage degree of dispersion of the catalytically active component on the catalyst support, measured by chemisorption by means of dynamic flow method according to DIN 66136-3:2007-01, in the range of from 15 % to 90 %; and
wherein the catalyst system comprises the catalytically active component with an average crystallite size, determined according to DIN 66136, of at most 80 Å (Angstrom).

2. The method according to claim 1,

wherein the activated carbon (i.e. starting activated carbon) provided and/or prepared in process step (a) has a total pore volume $V_{total}$ according to Gurvich in the range of from 0.8 cm$^3$/g to 3.9 cm$^3$/g, especially in the range of from 0.9 cm$^3$/g to 3.4 cm$^3$/g, preferentially in the range of from 1 cm$^3$/g to 2.9 cm$^3$/g, preferably in the range of from 1.1 cm$^3$/g to 2.4 cm$^3$/g, more preferably in the range of from 1.2 cm$^3$/g to 1.9 cm$^3$/g, even more preferably in the range of from 1.5 cm$^3$/g to 1.9 cm$^3$/g, wherein 50 % to 90 %, especially 52.5 % to 87.5 %, preferentially 55 % to 85 %, preferably 57.5 % to 82.5 %, more preferably 60 % to 80 %, of the total pore volume according to Gurvich of the activated carbon is formed by pores having pore diameters of at least 2 nm, especially by pores having pore diameters in the range of from 2 nm to 500 nm, preferentially by meso- and macropores; and/or
wherein the activated carbon (i.e. starting activated carbon) provided and/or prepared in process step (a) has a specific BET surface area $S_{BET}$ in the range of from 1,100 m$^2$/g to 2,600 m$^2$/g, especially in the range of from 1,200 m$^2$/g to 2,400 m$^2$/g, preferentially in the range of from 1,300 m$^2$/g to 2,200 m$^2$/g, preferably in the range of from 1,350 m$^2$/g to 1,950 m$^2$/g, more preferably in the range of from 1,375 m$^2$/g to 1,900 m$^2$/g; and/or
wherein for the activated carbon (i.e. starting activated carbon) provided and/or prepared in process step (a) the ratio Q of total pore volume Vtotal according to Gurvich to specific BET surface area SBET, according to the equation Q=Vtotal /SBET, is in the range of from $0.5 \cdot 10^{-9}$ m to $1.9 \cdot 10^{-9}$ m, especially in the range of from $0.55 \cdot 10^{-9}$ m to $1.9 \cdot 10^{-9}$ m, preferentially in the range of from $0.6 \cdot 10^{-9}$ m to $1.8 \cdot 10^{-9}$ m, preferably in the range of from $0.65 \cdot 10^{-9}$ m to $1.7 \cdot 10^{-9}$ m, more preferably in the range of from $0.65 \cdot 10^{-9}$ m to $1.6 \cdot 10^{-9}$ m, even more preferably in the range of from $0.7 \cdot 10^{-9}$ m to $1.5 \cdot 10^{-9}$ m, further preferably in the range of from $0.75 \cdot 10^{-9}$ m to $1.4 \cdot 10^{-9}$ m, even further preferably in the range of from $0.8 \cdot 10^{-9}$ m to $1.3 \cdot 10^{-9}$ m.

3. The method according to claim 1 or 2,

wherein the activated carbon oxidized, especially surface-oxidized, in process step (b) has an oxygen content, especially surface oxygen content, determined by means of X-ray photoelectron spectroscopy (XPS or ESCA), in the range of from 4 atom % to 20 atom %, especially in the range of from 5 atom % to 20 atom %, preferentially in the range of from 5.5 atom % to 18 atom %, preferably in the range of from 6 atom % to 15 atom %, more preferably in the range of from 7 atom % to 12.5 atom %, based on the total element composition of the oxidized activated carbon,

especially wherein the elements other than oxygen of the activated carbon oxidized, especially surface-oxidized, in process step (b) are formed at least substantially by carbon, especially wherein the activated carbon oxidized, especially surface-oxidized, in process step (b) comprises at most traces of elements other than oxygen and carbon, especially nitrogen, sulfur and/or chlorine, preferably in an amount of at most 2 atom %, especially at most 1.5 atom %, preferably at most 1 atom %, based on the total element composition of the oxidized activated carbon and calculated as the sum of the elements other than oxygen and carbon.

4. The method according to any of the preceding claims,

wherein the activated carbon oxidized, especially surface-oxidized, in process step (b) has a hydrophilicity, determined as water vapor adsorption behavior, such that at a partial pressure $p/p_0$ of 0.6 at least 35 %, especially at least 40 %, preferentially at least 50 %, preferably at least 60 %, of the maximum water vapor saturation loading of the activated carbon is achieved; and/or

wherein the activated carbon oxidized, especially surface-oxidized, in process step (b) has a hydrophilicity, determined as water vapor adsorption behavior, such that at a partial pressure $p/p_0$ of 0.6 at most 100 %, especially at most 99 %, preferentially at most 98 %, preferably at most 95 %, more preferably at most 90 %, of the maximum water vapor saturation loading of the activated carbon is achieved; and/or

wherein the activated carbon oxidized, especially surface-oxidized, in process step (b) has a hydrophilicity, determined as water vapor adsorption behavior, such that at a partial pressure $p/p_0$ of 0.6 30 % to 100 %, especially 35 % to 99 %, preferentially 40 % to 98 %, preferably 50 % to 95 %, more preferably 60 % to 90 %, of the maximum water vapor saturation loading of the activated carbon is achieved; and/or

wherein the activated carbon oxidized, especially surface-oxidized, in process step (b) has a hydrophilicity, determined as water vapor adsorption behavior, such that in a partial pressure range $p/p_0$ of 0.1 to 0.6 at least 30 %, especially at least 35 %, preferentially at least 40 %, preferably at least 50 %, more preferably at least 60 %, of the maximum water vapor saturation loading of the activated carbon is achieved; and/or

wherein the activated carbon oxidized, especially surface-oxidized, in process step (b) has a hydrophilicity, determined as water vapor adsorption behavior, such that in a partial pressure range $p/p_0$ of 0.1 to 0.6 at most 100 %, especially at most 99 %, preferentially at most 98 %, preferably at most 95 %, more preferably at most 90 %, of the maximum water vapor saturation loading of the activated carbon is achieved; and/or

wherein the activated carbon oxidized, especially surface-oxidized, in process step (b) has a hydrophilicity, determined as water vapor adsorption behavior, such that in a partial pressure range $p/p_0$ of 0.1 to 0.6 30 % to 100 %, especially 35 % to 99 %, preferentially 40 % to 98 %, preferably 50 % to 95 %, more preferably 60 % to 90 %, of the maximum water vapor saturation loading of the activated carbon is achieved.

5. The method according to any of the preceding claims,

wherein in process step (b) the oxidation, especially surface oxidation, of the activated carbon provided and/or prepared in process step (a) takes place with the proviso that the oxidized, especially surface-oxidized, activated carbon has a hydrophilicity, determined as water vapor adsorption behavior, such that at a partial pressure $p/p_0$ of 0.6 at least 30 % of the maximum water vapor adsorption capacity of the activated carbon is exhausted and/or utilized; and/or

wherein the activated carbon oxidized, especially surface-oxidized, in process step (b) has a hydrophilicity, determined as water vapor adsorption behavior, such that at a partial pressure $p/p_0$ of 0.6 at least 30 %, especially at least 35 %, preferentially at least 40 %, preferably at least 50 %, more preferably at least 60 %, of the maximum water vapor adsorption capacity of the activated carbon is exhausted and/or utilized; and/or

wherein the activated carbon oxidized, especially surface-oxidized, in process step (b) has a hydrophilicity, determined as water vapor adsorption behavior, such that at a partial pressure $p/p_0$ of 0.6 at most 100 %, especially at most 99 %, preferentially at most 98 %, preferably at most 95 %, more preferably at most 90 %, of the maximum water vapor adsorption capacity of the activated carbon is exhausted and/or utilized; and/or

wherein the activated carbon oxidized, especially surface-oxidized, in process step (b) has a hydrophilicity, determined as water vapor adsorption behavior, such that at a partial pressure $p/p_0$ of 0.6 30 % to 100 %, especially 35 % to 99 %, preferentially 40 % to 98 %, preferably 50 % to 95 %, more preferably 60 % to 90 %, of the maximum water vapor adsorption capacity of the activated carbon is exhausted and/or utilized; and/or

wherein the activated carbon oxidized, especially surface-oxidized, in process step (b) has a hydrophilicity, determined as water vapor adsorption behavior, such that in a partial pressure range $p/p_0$ of 0.1 to 0.6 at least 30 %, especially at least 35 %, preferentially at least 40 %, preferably at least 50 %, more preferably at least 60 %, of the maximum water vapor adsorption capacity of the activated carbon is exhausted and/or utilized; and/or

wherein the activated carbon oxidized, especially surface-oxidized, in process step (b) has a hydrophilicity, determined as water vapor adsorption behavior, such that in a partial pressure range $p/p_0$ of 0.1 to 0.6 at most 100 %, especially at most 99 %, preferentially at most 98 %, preferably at most 95 %, more preferably at most 90 %, of the maximum water vapor adsorption capacity of the activated carbon is exhausted and/or utilized; and/or

wherein the activated carbon oxidized, especially surface-oxidized, in process step (b) has a hydrophilicity, determined as water vapor adsorption behavior, such that in a partial pressure range $p/p_0$ of 0.1 to 0.6 30 % to 100 %, especially 35 % to 99 %, preferentially 40 % to 98 %, preferably 50 % to 95 %, more preferably 60 % to 90 %, of the maximum water vapor adsorption capacity of the activated carbon is exhausted and/or utilized.

6. The method according to any of the preceding claims,

wherein the catalytically active component comprises at least one metal selected from the group of Fe, Bi, V, Cu, Pb, Zn, Ag, Sn, Pd, Pt, Ru and Ni, preferably Fe, Bi, V, Cu, Pt, Ru and Pb, preferably Pd, Pt and Ru, more preferably Pd and Pt; and/or

wherein the precursor of the catalytically active component is formed and/or constituted such that the precursor is converted and/or transformed into the catalytically active component by the reduction carried out in process step (d); and/or

wherein the precursor of the catalytically active component is an oxidized form of the catalytically active component or is formed therefrom.

7. The method according to any of the preceding claims,

wherein in process step (c) the equipping of the oxidized, especially surface-oxidized, activated carbon with the catalytically active component, especially with the precursor of the catalytically active component, comprises an application and/or contacting, preferably a fixing, of the oxidized, especially surface-oxidized, activated carbon with the catalytically active component, especially with the precursor of the catalytically active component, especially wherein the application and/or contacting, preferably the fixing, is carried out by dipping and/or soaking and/or wetting and/or covering and/or coating and/or spraying on and/or spraying the oxidized, especially surface-oxidized, activated carbon in and/or with the catalytically active component, especially in and/or with the precursor of the catalytically active component, especially wherein the application and/or contacting is carried out with energy input, especially by means of shaking and/or by means of ultrasound input, and/or especially wherein the catalytically active component, especially the precursor of the catalytically active component, is used in the form of a solution and/or in dispersion form (dispersion), especially as defined in claim 39; and/or

wherein especially subsequent to the application and/or contacting and/or especially for the purposes of equipping the oxidized, especially surface-oxidized, activated carbon with the catalytically active component, especially with the precursor of the catalytically active component, excess amounts of catalytically active component, especially excess amounts of the precursor of the catalytically active component, preferentially excess amounts of solution and/or dispersion form (dispersion) of the catalytically active component, preferentially excess amounts of solution and/or dispersion form (dispersion) of the precursor of the catalytically active component, are removed and/or separated from the activated carbon and/or the catalyst system; and/or

wherein especially subsequent to the application and/or contacting and/or especially for the purposes of equipping the oxidized, especially surface-oxidized, activated carbon with the catalytically active component, especially with the precursor of the catalytically active component, a purification and/or drying of the activated carbon obtained is carried out, especially wherein the purification and/or drying is carried out by means of at least one washing operation in a liquid, especially water, and/or especially wherein the purification and/or drying is carried out by heating the activated carbon equipped with the catalytic component, especially to temperatures in the range of from 40 °C to 200 °C, especially 50 °C to 150 °C, preferentially 60 °C to 120 °C, and/or especially wherein the purification and/or drying is carried out under reduced (air) pressure and/or in a vacuum, and/or especially wherein the purification and/or drying is carried out at an (air) pressure in the range of from 100 Pa to 0.01 Pa, especially 10 Pa to 0.1 Pa.

8. The method according to any of the preceding claims,

   wherein in process step (d) the reduction is carried out at a temperature in the range of from 120 °C to 150 °C, more preferably in the range of from 130 °C to 145 °C; and/or
   wherein in process step (d) the reduction is carried out for a period in the range of from 0.05 h to 48 h, especially in the range of from 0.1 h to 36 h, preferentially in the range of from 0.5 h to 24 h, preferably in the range of from 1 h to 12 h.

9. The method according to any of the preceding claims,

   wherein the catalyst system has an activity, determined as a percentage degree of dispersion of the catalytically active component on the catalyst support, measured by chemisorption by means of dynamic flow method according to DIN 66136-3:2007-01, in the range of from 20 % to 80 %, preferentially in the range of from 25 % to 70 %, preferably in the range of from 28 % to 60 %; and/or
   wherein the catalyst system comprises the catalytically active component with an average crystallite size, determined according to DIN 66136, of at most 70 Å, preferentially at most 60 Å, preferably at most 58 Å, more preferably at most 45 Å, most preferably at most 40 Å, even more preferably at most 38 Å, and/or in the range of from 5 Å (Angstrom) to 80 Å, especially in the range of from 7 Å to 70 Å, preferentially in the range of from 10 Å to 60 Å, preferably in the range of from 15 Å to 58 Å, more preferably in the range of from 17 Å to 45 Å, most preferably in the range of from 18 Å to 40 Å, even more preferably in the range of from 20 Å to 38 Å.

10. A catalyst system in the form of a supported catalyst, preferentially for use in heterogeneous catalysis, obtainable and/or obtained according to a method according to any of the preceding claims.

11. The catalyst system according to claim 10,

    wherein the catalyst system comprises at least one catalytically active component applied and/or fixed to a catalyst support, wherein the catalytically active component comprises and/or consists of at least one metal, wherein the metal is selected from the group of Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd and Pt, and wherein the catalyst support is formed in the form of activated carbon, wherein the catalyst support is present in the form of a spherical activated carbon, wherein the activated carbon (i.e. the activated carbon forming the catalyst support)

    (i) has a total pore volume $V_{total}$ according to Gurvich in the range of from 0.8 cm$^3$/g to 3.9 cm$^3$/g, wherein at least 50 % of the total pore volume according to Gurvich is formed by pores having pore diameters of at least 2 nm, especially by pores having pore diameters in the range of from 2 nm to 500 nm, preferentially by meso- and macropores, and
    (ii) has a specific BET surface area $S_{BET}$ in the range of from 1,000 m$^2$/g to 3,000 m$^2$/g, however, with the proviso that the ratio Q of total pore volume $V_{total}$ according to Gurvich to specific BET surface area $S_{BET}$ according to the equation $Q=V_{total}/S_{BET}$ is at least $0.5 \cdot 10^{-9}$ m; and

    wherein the catalyst system has an activity, determined as a percentage degree of dispersion of the catalytically active component on the catalyst support, measured by chemisorption by means of dynamic flow method according to DIN 66136-3:2007-01, in the range of from 15 % to 90 %; and wherein the catalyst system comprises the catalytically active component with an average crystallite size, determined according to DIN 66136, of at most 80 Å (Angstrom).

12. Use of a catalyst system according to claim 10 or 11,

    as a catalyst or catalyst support; or
    for the chemical catalysis, especially for the heterogeneous catalysis, and/or for the discontinuous or continuous catalysis; or

for the catalysis of chemical processes and reactions, especially hydrogenation reactions or oligomerization and polymerization reactions, preferentially of olefins, preferably hydrogenation reactions.

13. Use of a catalyst system according to claim 10 or 11,

    for the production of filters and filter materials, especially for the removal of noxious, odorous and toxic substances, especially from air and/or gas streams, such as ABC protective mask filters, odor filters, surface filters, air filters, especially filters for room air purification, adsorption-capable support structures and filters for the medical sector; or

    as adsorption reservoirs for gases or liquids; or

    in or as gas sensors or in fuel cells; or

    for sorptive applications, especially adsorptive and/or chemisorptive applications, preferentially chemisorptive applications, especially as preferentially reactive and/or catalytic adsorbent; or

    for gas purification and/or gas treatment; or

    for the removal of noxious substances, especially gaseous noxious substances, or of environmentally harmful, health-harmful or toxic substances or gases and/or for the treatment and/or provision of clean room atmospheres, especially for the electrical industry, especially for semiconductor or chip production.

14. Protective materials, especially for the civil or military sector, especially protective clothing, such as protective suits, protective gloves, protective footwear, protective socks, protective head protection, as well as protective coverings, preferentially all aforementioned protective materials for ABC use, prepared using a catalyst system according to claim 10 or 11 and/or comprising a catalyst system according to claim 10 or 11.

15. A filter, especially for the removal of noxious, odorous and toxic substances of all kinds, especially from air and/or gas streams, such as ABC protective mask filters, odor filters, surface filters, air filters, especially filters for room air purification, adsorption-capable and/or chemisorption-capable support structures and filters for the medical sector, prepared using a catalyst system according to claim 10 or 11 and/or comprising a catalyst system according to claim 10 or 11.

## Revendications

1. Procédé de préparation d'un système catalytique présentant au moins un composant catalytiquement actif sous la forme d'un catalyseur supporté, de préférence destiné à être utilisé dans la catalyse hétérogène,

    où au moins un composant catalytiquement actif est appliqué et/ou fixé sur un support de catalyseur, où le composant catalytiquement actif comprend au moins un métal et/ou est constitué de celui-ci, le métal étant choisi dans le groupe de Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd et Pt, le procédé comprenant les étapes suivantes dans l'ordre (a) à (d) spécifié ci-dessous :

    (a) préparation et/ou fabrication d'un charbon actif sphérique utilisé comme support de catalyseur (= charbon actif de départ),

    le charbon actif (c'est-à-dire le charbon actif de départ) étant

        (i) présente un volume total de pores $V_{total}$ selon Gurvich dans la plage de 0,8 cm$^3$/g à 3,9 cm$^3$/g, au moins 50 % du volume total de pores selon Gurvich du charbon actif étant formés par des pores ayant des diamètres de pores d'au moins 2 nm, en particulier par des pores ayant des diamètres de pores dans la plage de 2 nm à 500 nm, de préférence par des méso- et macropores, et

        (ii) présente une surface spécifique BET $S_{BET}$ dans la plage de 1 000 m$^2$/g à 3 000 m$^2$/g, à condition toutefois que le rapport Q du volume total de pores $V_{total}$ selon Gurvich à la surface spécifique BET $S_{BET}$ soit d'au moins 0,5 · 10$^{-9}$ m conformément à l'équation $Q = V_{total} / S_{BET}$;

    puis

    (b) oxydation, en particulier oxydation de surface, du charbon actif mis à disposition et/ou fabriqué dans l'étape de procédé (a), à condition que le charbon actif oxydé, en particulier oxydé en surface, présente une teneur en oxygène, en particulier une teneur en oxygène de surface, déterminée par spectroscopie photoélectronique aux rayons X (XPS ou ESCA), d'au moins 10 %. ESCA) d'au moins 4 % atomique, par rapport à la composition totale en éléments du charbon actif oxydé, et/ou à condition que le charbon actif oxydé, en particulier oxydé en surface, présente une hydrophilie, déterminée comme comportement d'adsorption de la vapeur d'eau, de telle sorte qu'à une pression partielle $p/p_0$ de 0,6, au moins 30 % de la charge maximale de saturation en vapeur d'eau du charbon actif soit atteint;
puis

(c) traitement, en particulier chargement et/ou revêtement et/ou imprégnation, du charbon actif oxydé dans l'étape de procédé (b), en particulier oxydé en surface, avec le composant catalytiquement actif, en particulier avec au moins un précurseur du composant catalytiquement actif;
puis

(d) réduction du charbon actif oxydé, en particulier oxydé en surface, obtenu dans l'étape de procédé (c), équipé du composant catalytiquement actif, en particulier du précurseur du composant catalytiquement actif, en particulier pour la conversion du précurseur du composant catalytiquement actif en le composant catalytiquement actif, de sorte que le système catalytique présentant au moins un composant catalytiquement actif est obtenu;

où, dans l'étape de procédé (d), la réduction est réalisée sous forme de réduction en phase gazeuse, où, dans l'étape de procédé (d), la réduction est réalisée à une température dans la plage de 115 °C à 160 °C;
le système catalytique étant obtenu dans l'étape de procédé (d), le système catalytique présentant au moins un composant catalytiquement actif appliqué et/ou fixé sur un support de catalyseur, le composant catalytiquement actif comprenant au moins un métal et/ou étant constitué de celui-ci et le support de catalyseur étant réalisé sous forme de charbon actif, le support de catalyseur se présentant sous forme d'un charbon actif sphérique; et
le système catalytique ayant une activité, déterminée en tant que degré de dispersion en pourcentage du composant catalytiquement actif sur le support de catalyseur, mesuré par chimisorption au moyen d'un procédé d'écoulement dynamique selon DIN 66136-3:2007-01, dans la plage de 15 % à 90 %; et
le système catalytique comprenant le composant catalytiquement actif ayant une taille moyenne de cristallite, déterminée selon la norme DIN 66136, d'au plus 80 Å (angströms).

2.  Procédé selon la revendication 1,

le charbon actif préparé et/ou fabriqué dans l'étape de procédé (a) (c'est-à-dire le charbon actif de départ) ayant un volume de paroi de 1,5 à 2,5 %. charbon actif de départ) a un volume total de pores $V_{total}$ selon Gurvich dans la plage de 0,8 cm$^3$/g à 3,9 cm$^3$/g, en particulier dans la plage de 0,9 cm$^3$/g à 3,4 cm$^3$/g, de préférence dans la plage de 1 cm$^3$/g à 2,9 cm$^3$/g, de préférence dans la plage de 1,1 cm$^3$/g à 2,4 cm$^3$/g, de manière particulièrement préférée dans la plage de 1,2 cm$^3$/g à 1,9 cm$^3$/g, de manière tout à fait préférée dans la plage de 1,5 cm$^3$/g à 1,9 cm$^3$/g, où 50 % à 90 %, en particulier 52,5 % à 87,5 %, de préférence 55 % à 85 %, de préférence 57,5 % à 82,5 %, de manière particulièrement préférée 60 % à 80 %, du volume total des pores selon Gurvich du charbon actif sont formés par des pores ayant des diamètres de pores d'au moins 2 nm, en particulier par des pores ayant des diamètres de pores dans la plage de 2 nm à 500 nm, de préférence par des méso- et macropores; et/ou
le charbon actif préparé et/ou fabriqué dans l'étape de procédé (a) (c'est-à-dire le charbon actif de départ) présentant une surface spécifique BET $S_{BET}$ dans la plage de 1 100 m$^2$/g à 2 600 m$^2$/g, en particulier dans la plage de 1 200 m$^2$/g à 2 400 m$^2$/g, de préférence dans la plage de 1 300 m$^2$/g à 2200 m$^2$/g, de préférence dans la plage de 1 350 m$^2$/g à 1 950 m$^2$/g, de manière particulièrement préférée dans la plage de 1 375 m$^2$/g à 1 900 m$^2$/g; et/ou
où, pour le charbon actif préparé et/ou fabriqué dans l'étape (a) du procédé (c'est-à-dire pour le charbon actif de départ), le rapport Q entre le volume total des pores $V_{total}$ selon Gurvich et la surface spécifique BET $S_{BET}$, selon l'équation $Q = V_{total} / S_{BET}$, se situe dans la plage de $0,5 \cdot 10^{-9}$ m à $1,9 \cdot 10^{-9}$ m, en particulier dans la plage de $0,55 \cdot 10^{-9}$ m à $1,9 \cdot 10^{-9}$ m, de préférence dans la plage de $0,6 \cdot 10^{-9}$ m à $1,8 \cdot 10^{-9}$ m, de préférence dans la plage de $0,65 \cdot 10^{-9}$ m à $1,7 \cdot 10^{-9}$ m, de préférence dans la plage de $0,65 \cdot 10^{-9}$ m à $1,6 \cdot 10^{-9}$ m, de préférence encore dans la plage de $0,7 \cdot 10^{-9}$ m à $1,5 \cdot 10^{-9}$ m, de préférence encore dans la plage de $0,75 \cdot 10^{-9}$ m à $1,4 \cdot 10^{-9}$ m, de préférence encore dans la plage de $0,8 \cdot 10^{-9}$ m à $1,3 \cdot 10^{-9}$ m.

3.  Procédé selon la revendication 1 ou 2,

le charbon actif oxydé dans l'étape de procédé (b), en particulier oxydé en surface, présentant une teneur en oxygène, en particulier une teneur en oxygène de surface, déterminée par spectroscopie photoélectronique aux rayons X (XPS ou ESCA). ESCA), dans la plage de 4 % atomique à 20 % atomique, en particulier dans la plage de 5 % atomique à 20 % atomique, de préférence dans la plage de 5,5 % atomique à 18 % atomique, de préférence dans la plage de 6 % atomique à 15 % atomique, de manière particulièrement préférée dans la plage de 7 % atomique à 12,5 % atomique, par rapport à la composition totale en éléments du charbon actif oxydé,
en particulier, les éléments autres que l'oxygène du charbon actif oxydé dans l'étape (b) du procédé, en particulier

EP 4 196 263 B1

oxydé en surface, étant formés au moins essentiellement par du carbone, en particulier, le charbon actif oxydé dans l'étape (b) du procédé, en particulier oxydé en surface, contenant tout au plus des traces d'éléments autres que l'oxygène et le carbone, en particulier de l'azote, du soufre et/ou du chlore, de préférence en une quantité d'au plus 2 % en atomes, en particulier d'au plus 1,5 % en atomes, de préférence d'au plus 1 % en atomes, par rapport à la composition totale en éléments du charbon actif oxydé et calculée comme somme des éléments autres que l'oxygène et le carbone.

4.   Procédé selon l'une quelconque des revendications précédentes,

le charbon actif oxydé dans l'étape de procédé (b), en particulier oxydé en surface, présentant une hydrophilie, déterminée comme comportement d'adsorption de vapeur d'eau, telle que, pour une pression partielle $p/p_0$ de 0,6, au moins 35 %, en particulier au moins 40 %, de préférence au moins 50 %, de préférence au moins 60 %, de la charge maximale de saturation en vapeur d'eau du charbon actif est atteint; et/ou
le charbon actif oxydé dans l'étape de procédé (b), en particulier oxydé en surface, présentant une hydrophilie, déterminée comme comportement d'adsorption de vapeur d'eau, telle que, pour une pression partielle $p/p_0$ de 0,6, on obtient au maximum 100 %, en particulier au maximum 99 %, de préférence au maximum 98 %, de préférence au maximum 95 %, de manière particulièrement préférée au maximum 90 %, de la charge maximale de saturation en vapeur d'eau du charbon actif; et/ou
le charbon actif oxydé dans l'étape de procédé (b), en particulier oxydé en surface, présentant une hydrophilie, déterminée comme comportement d'adsorption de la vapeur d'eau, telle que, pour une pression partielle $p/p_0$ de 0,6, 30 % à 100 %, en particulier 35 % à 99 %, de préférence 40 % à 98 %, de préférence 50 % à 95 %, de manière particulièrement préférée 60 % à 90 %, de la charge maximale de saturation en vapeur d'eau du charbon actif est atteinte; et/ou
le charbon actif oxydé dans l'étape de procédé (b), en particulier oxydé en surface, présentant une hydrophilie, déterminée comme comportement d'adsorption de vapeur d'eau, telle que, dans une plage de pression partielle $p/p_0$ de 0,1 à 0,6, au moins 30 %, en particulier au moins 35 %, de préférence au moins 40 %, de préférence au moins 50 %, de manière particulièrement préférée au moins 60 %, de la charge maximale de saturation en vapeur d'eau du charbon actif est atteint; et/ou
le charbon actif oxydé dans l'étape de procédé (b), en particulier oxydé en surface, présentant une hydrophilie, déterminée comme comportement d'adsorption de vapeur d'eau, telle que, dans une plage de pression partielle $p/p_0$ de 0,1 à 0,6, on obtient au maximum 100 %, en particulier au maximum 99 %, de préférence au maximum 98 %, de préférence au maximum 95 %, de manière particulièrement préférée au maximum 90 %, de la charge maximale de saturation en vapeur d'eau du charbon actif; et/ou
le charbon actif oxydé dans l'étape de procédé (b), en particulier oxydé en surface, présentant une hydrophilie, déterminée comme comportement d'adsorption de vapeur d'eau, telle que, dans une plage de pression partielle $p/p_0$ de 0,1 à 0,6, 30 % à 100 %, en particulier 35 % à 99 %, de préférence 40 % à 98 %, de préférence 50 % à 95 %, de manière particulièrement préférée 60 % à 90 %, de la charge maximale de saturation en vapeur d'eau du charbon actif est atteinte.

5.   Procédé selon l'une quelconque des revendications précédentes,

l'oxydation, en particulier l'oxydation superficielle, du charbon actif mis à disposition et/ou fabriqué dans l'étape de procédé (a) étant effectuée dans l'étape de procédé (b) avec la condition que le charbon actif oxydé, en particulier oxydé en surface, présente une hydrophilie, déterminée comme comportement d'adsorption de la vapeur d'eau, de telle sorte qu'à une pression partielle $p/p_0$ de 0,6, au moins 30 % de la capacité maximale d'adsorption de la vapeur d'eau du charbon actif soit épuisée et/ou utilisée; et/ou
le charbon actif oxydé dans l'étape de procédé (b), en particulier oxydé en surface, présentant une hydrophilie, déterminée comme comportement d'adsorption de vapeur d'eau, telle que, pour une pression partielle $p/p_0$ de 0,6, au moins 30 %, en particulier au moins 35 %, de préférence au moins 40 %, de préférence au moins 50 %, de manière particulièrement préférée au moins 60 %, de la capacité maximale d'adsorption de vapeur d'eau du charbon actif est épuisée et/ou utilisée; et/ou
le charbon actif oxydé dans l'étape de procédé (b), en particulier oxydé en surface, présentant une hydrophilie, déterminée comme comportement d'adsorption de vapeur d'eau, telle que, pour une pression partielle $p/p_0$ de 0,6, au maximum 100 %, en particulier au maximum 99 %, de préférence au maximum 98 %, de préférence au maximum 95 %, de manière particulièrement préférée au maximum 90 %, de la capacité maximale d'adsorption de vapeur d'eau du charbon actif est épuisée et/ou utilisée; et/ou
le charbon actif oxydé dans l'étape de procédé (b), en particulier oxydé en surface, présentant une hydrophilie, déterminée comme comportement d'adsorption de vapeur d'eau, telle que, pour une pression partielle $p/p_0$ de

0,6, 30 % à 100 %, en particulier 35 % à 99 %, de préférence 40 % à 98 %, de préférence 50 % à 95 %, de manière particulièrement préférée 60 % à 90 %, de la capacité maximale d'adsorption de vapeur d'eau du charbon actif est épuisée et/ou utilisée; et/ou le charbon actif oxydé dans l'étape de procédé (b), en particulier oxydé en surface, présentant une hydrophilie, déterminée comme comportement d'adsorption de vapeur d'eau, telle que, dans une plage de pressions partielles $p/p_0$ de 0,1 à 0,6, au moins 30 %, en particulier au moins 35 %, de préférence au moins 40 %, de préférence au moins 50 %, de manière particulièrement préférée au moins 60 %, de la capacité maximale d'adsorption de vapeur d'eau du charbon actif est épuisée et/ou utilisée; et/ou

le charbon actif oxydé dans l'étape de procédé (b), en particulier oxydé en surface, présentant une hydrophilie, déterminée comme comportement d'adsorption de vapeur d'eau, telle que, dans une plage de pression partielle $p/p_0$ de 0,1 à 0,6, au maximum 100 %, en particulier au maximum 99 %, de préférence au maximum 98 %, de préférence au maximum 95 %, de manière particulièrement préférée au maximum 90 % de la capacité maximale d'adsorption de vapeur d'eau du charbon actif est épuisée et/ou utilisée; et/ou

le charbon actif oxydé dans l'étape de procédé (b), en particulier oxydé en surface, présentant une hydrophilie, déterminée comme comportement d'adsorption de vapeur d'eau, telle que, dans une plage de pression partielle $p/p_0$ de 0,1 à 0,6, 30 % à 100 %, en particulier 35 % à 99 %, de préférence 40 % à 98 %, de préférence 50 % à 95 %, de manière particulièrement préférée 60 % à 90 %, de la capacité maximale d'adsorption de vapeur d'eau du charbon actif est épuisée et/ou utilisée.

6. Procédé selon l'une quelconque des revendications précédentes,

où le composant catalytiquement actif comprend au moins un métal choisi dans le groupe de Fe, Bi, V, Cu, Pb, Zn, Ag, Sn, Pd, Pt, Ru et Ni, de préférence Fe, Bi, V, Cu, Pt, Ru et Pb, de préférence Pd, Pt et Ru, de manière particulièrement préférée Pd et Pt; et/ou
où le précurseur du composant catalytiquement actif est conçu et/ou réalisé de telle sorte que le précurseur est transformé et/ou converti en le composant catalytiquement actif par la réduction effectuée dans l'étape de procédé (d); et/ou
où le précurseur du composant catalytiquement actif est une forme oxydée du composant catalytiquement actif ou est formé à partir de celle-ci.

7. Procédé selon l'une quelconque des revendications précédentes,

où, dans l'étape (c) du procédé, l'équipement du charbon actif oxydé, en particulier oxydé en surface, avec le composant catalytiquement actif, en particulier avec le précurseur du composant catalytiquement actif, comprend une application et/ou une mise en contact, de préférence une fixation, du charbon actif oxydé, en particulier oxydé en surface, avec le composant catalytiquement actif, en particulier avec le précurseur du composant catalytiquement actif, en particulier où l'application et/ou la mise en contact, de préférence la fixation, est réalisée par immersion et/ou imprégnation et/ou mouillage et/ou recouvrement et/ou enduction et/ou pulvérisation sur et/ou sur le charbon actif oxydé, en particulier oxydé en surface, dans et/ou avec le composant catalytiquement actif, en particulier dans et/ou avec le précurseur du composant catalytiquement actif, en particulier où l'application et/ou la mise en contact s'effectue avec apport d'énergie, en particulier au moyen de vibrations et/ou au moyen d'un apport d'ultrasons, et/ou en particulier où le composant catalytiquement actif, en particulier le précurseur du composant catalytiquement actif, est utilisé sous forme de solution et/ou sous forme de dispersion (dispersion), en particulier comme défini dans la revendication 39; et/ou
où, en particulier à la suite de l'application et/ou de la mise en contact et/ou en particulier à des fins d'équipement du charbon actif oxydé, en particulier oxydé en surface, avec le composant catalytiquement actif, en particulier avec le précurseur du composant catalytiquement actif, des quantités excédentaires de composant catalytiquement actif, en particulier des quantités excédentaires du précurseur du composant catalytiquement actif, de préférence des quantités excédentaires de solution et/ou de forme de dispersion (dispersion) du composant catalytiquement actif, de préférence des quantités excédentaires de solution et/ou de forme de dispersion (dispersion) du précurseur du composant catalytiquement actif, sont éliminées et/ou séparées du charbon actif et/ou du système catalytique; et/ou
où, en particulier à la suite de l'application et/ou de la mise en contact et/ou en particulier à des fins d'équipement du charbon actif oxydé, en particulier oxydé en surface, avec le composant catalytiquement actif, en particulier avec le précurseur du composant catalytiquement actif, on effectue une purification et/ou un séchage du charbon actif obtenu, en particulier où la purification et/ou le séchage s'effectuent au moyen d'au moins un processus de lavage dans un liquide, en particulier de l'eau, et/ou en particulier où la purification et/ou le séchage s'effectuent en chauffant le charbon actif équipé du composant catalytique, en particulier à des températures de l'ordre de 40°C à 200°C, en particulier de 50°C à 150°C, de préférence de 60°C à 120°C, et/ou en particulier où la purification et/ou le séchage sont effectués sous pression (d'air) réduite et/ou sous vide et/ou en particulier où la purification et/ou le séchage s'effectuent à une pression (d'air) de l'ordre de 100 Pa à 0,01 Pa, en particulier de 10 Pa à 0,1 Pa.

**8.** Procédé selon l'une quelconque des revendications précédentes,

où, dans l'étape de procédé (d), la réduction est effectuée à une température dans la plage de 120°C à 150°C, de préférence encore dans la plage de 130°C à 145°C; et/ou
la réduction étant effectuée dans l'étape de procédé (d) pendant une durée dans la plage de 0,05 h à 48 h, en particulier dans la plage de 0,1 h à 36 h, de préférence dans la plage de 0,5 h à 24 h, de préférence dans la plage de 1 h à 12 h.

**9.** Procédé selon l'une quelconque des revendications précédentes,

le système catalytique ayant une activité, déterminée en tant que degré de dispersion en pourcentage du composant catalytiquement actif sur le support de catalyseur, mesurée par chimisorption au moyen d'un procédé d'écoulement dynamique selon DIN 66136-3:2007-01, dans la plage de 20 % à 80 %, de préférence dans la plage de 25 % à 70 %, de préférence dans la plage de 28 % à 60 %; et/ou
le système catalytique comprenant le composant catalytiquement actif ayant une taille moyenne de cristallite, déterminée selon la norme DIN 66136, d'au plus 70 Å, de préférence d'au plus 60 Å, de préférence d'au plus 58 Å, de manière particulièrement préférée d'au plus 45 Å, de manière tout particulièrement préférée d'au plus 40 Å, de manière encore plus préférée d'au plus 38 Å, et/ou dans la plage de 5 Å (angström) à 80 Å, en particulier dans la plage de 7 Å à 70 Å, de préférence dans la plage de 10 Å à 60 Å, de préférence dans la plage de 15 Å à 58 Å, de manière particulièrement préférée dans la plage de 17 Å à 45 Å, de manière tout à fait préférée dans la plage de 18 Å à 40 Å, de manière encore plus préférée dans la plage de 20 Å à 38 Å.

**10.** Système catalytique sous forme de catalyseur supporté, de préférence pour une utilisation en catalyse hétérogène, pouvant être obtenu et/ou obtenu selon un procédé selon l'une quelconque des revendications précédentes.

**11.** Système catalytique selon la revendication 10,

le système catalytique présentant au moins un composant catalytiquement actif déposé et/ou fixé sur un support de catalyseur, le composant catalytiquement actif comprenant au moins un métal et/ou étant constitué de celui-ci, le métal étant choisi dans le groupe de Cu, Ag, Au, Zn, Hg, Sn, Ce, Ti, Zr, V, Nb, Cr, Mo, W, Mn, Fe, Bi, Ru, Os, Co, Rh, Re, Ir, Ni, Pd et Pt, et où le support de catalyseur est réalisé sous forme de charbon actif, le support de catalyseur se présentant sous forme de charbon actif sphérique,
le charbon actif (c'est-à-dire le charbon actif formant le support de catalyseur) étant

(i) un volume total de pores $V_{total}$ selon Gurvich dans la plage de 0,8 cm$^3$/g à 3,9 cm$^3$/g, au moins 50 % du volume total de pores selon Gurvich étant formés par des pores ayant des diamètres de pores d'au moins 2 nm, en particulier par des pores ayant des diamètres de pores dans la plage de 2 nm à 500 nm, de préférence par des méso- et macropores, et
(ii) présente une surface spécifique BET $S_{BET}$ dans la plage de 1 000 m$^2$/g à 3 000 m$^2$/g, à condition toutefois que le rapport Q du volume total de pores $V_{total}$ selon Gurvich à la surface spécifique BET $S_{BET}$ soit d'au moins 0,5 • 10$^{-9}$ m conformément à l'équation $Q = V_{total} / S_{BET}$; et

où le système de catalyseur a une activité, déterminée en tant que pourcentage de dispersion du composant catalytiquement actif sur le support de catalyseur, mesurée par chimisorption au moyen d'un procédé d'écoulement dynamique selon DIN 66136-3:2007-01, dans la plage de 15 % à 90 %; et où le système de catalyseur comprend le composant catalytiquement actif ayant une taille moyenne de cristallite, déterminée selon DIN 66136, d'au plus 80 Å (Angström).

**12.** Utilisation d'un système catalytique selon la revendication 10 ou 11,

comme catalyseur ou support de catalyseur; ou
pour la catalyse chimique, en particulier pour la catalyse hétérogène, et/ou pour la catalyse discontinue ou continue; ou
pour la catalyse de processus et de réactions chimiques, en particulier des réactions d'hydrogénation ou des réactions d'oligomérisation et de polymérisation, de préférence d'oléfines, de préférence des réactions d'hydrogénation.

13. Utilisation d'un système catalytique selon la revendication 10 ou 11,

pour la fabrication de filtres et de matériaux filtrants, en particulier pour l'élimination de substances nocives, odorantes et toxiques, notamment dans des flux d'air et/ou de gaz, tels que des filtres de masques de protection ABC, des filtres anti-odeurs, des filtres de surface, des filtres à air, en particulier des filtres pour la purification de l'air ambiant, des structures de support adsorbantes et des filtres pour le domaine médical; ou
comme réservoir de sorption pour les gaz ou les liquides; ou
dans ou comme capteurs de gaz ou dans des piles à combustible; ou
pour des applications sorbantes, en particulier des applications adsorbantes et/ou chimiosorbantes, de préférence des applications chimiosorbantes, notamment en tant qu'adsorbant de préférence réactif et/ou catalytique; ou
pour l'épuration des gaz et/ou le traitement des gaz; ou
pour l'élimination de polluants, en particulier de polluants gazeux, ou de substances ou de gaz nocifs pour l'environnement, la santé ou toxiques, et/ou
pour la préparation et/ou la mise à disposition d'atmosphères de salles blanches, en particulier pour l'industrie électrique, notamment pour la fabrication de semi-conducteurs ou de puces.

14. Matériaux de protection, en particulier pour le domaine civil ou militaire, en particulier vêtements de protection, tels que des combinaisons de protection, des gants de protection, des chaussures de protection, des chaussettes de protection, des vêtements de protection de la tête, ainsi que des couvertures de protection, de préférence tous les matériaux de protection précités pour l'utilisation ABC, fabriqués en utilisant un système catalytique selon la revendication 10 ou 11 et/ou présentant un système catalytique selon la revendication 10 ou 11.

15. Filtre, en particulier pour l'élimination de substances nocives, odorantes et toxiques de toutes sortes, en particulier de flux d'air et/ou de gaz, comme des filtres de masques de protection ABC, des filtres anti-odeurs, des filtres de surface, des filtres à air, en particulier des filtres pour l'épuration de l'air ambiant, des structures de support adsorbantes et/ou chimisorbantes et des filtres pour le domaine médical, fabriqué en utilisant un système catalytique selon la revendication 10 ou 11 et/ou présentant un système catalytique selon la revendication 10 ou 11.

Fig. 1

Fig. 2

Fig. 3

$$T_{red1} = 80\ °C$$

$$T_{red2} = 140\ °C$$

Fig. 4

Fig. 5

Fig. 6

Fig. 7A

Fig. 7B

Fig. 7C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202014101137 U1
- DE 202016100320 U1
- DE 2936362 C2
- DE 10254241 A1
- WO 2004046033 A1
- EP 1562855 B1
- US 2006148645 A1
- WO 9807655 A1
- DE 19653238 A1
- DE 19650414 A1
- EP 0952960 A1
- US 6300276 B1
- DE 4304026 A1
- US 6184177 B1
- WO 2017097447 A1
- DE 102016101215 A1
- EP 3362407 A1
- US 2019177170 A1

**In der Beschreibung aufgeführte Nicht-Patentliteratur**

- **GELDER et al.** A Study of Nitrobenzene Hydrogenation over Palladium/Carbon Catalysts. *Catalysis Letters*, December 2002, vol. 84 (3-4), 205-206
- Römpp Chemielexikon. Georg Thieme Verlag
- **STICHWORT**. *BET-Methode*
- Winnacker-Küchler, vol. 7, 93
- *Z. Anal. Chem.*, 1968, vol. 238, 187-193
- **MANFRED BAERNS et al.** Technische Chemie. Wiley-VCH Verlag & Co. KGaA, 2013
- Three-Phase Trickle-Bed Reactors. Ullmann's Encyclopedia of Industrial Chemistry. 2008, vol. 7
- Reactor Types and Their Industrial Application. Ullmann's Encyclopedia of Industrial Chemistry. 2008, vol. 7